# EUROPEAN PATENT APPLICATION

(11) **EP 4 412 053 A1**
(43) Date of publication of application: **07.08.2024**
(21) Application number: 22872970.3
(22) Date of filing: 22.09.2022
(51) Int. Cl.: H02K 3/52, H02K 21/24

(54) **ROTARY ELECTRIC MACHINE**

(30) Priority: 27.09.2021 JP 2021156823; 30.03.2022 JP 2022055613
(71) Applicant: DENSO CORPORATION, Kariya-city, Aichi-pref. 448-8661 (JP)
(72) Inventor: NIWA, Wataru, Kariya-city, Aichi-pref. 448-8661 (JP)
(74) Representative: Winter, Brandl - Partnerschaft mbB
(86) International application number: PCT/JP2022/035349
(87) International publication number: WO 2023/048219

(57) **Abstract**

A motor device (60) includes a first rotor (300a), a coil (211), and an electric power lead-out wire (212). The electric power lead-out wire (212) is led out from the coil (211), extends in an axial direction (AD) through an outer peripheral side of the first rotor (300a), and is electrically connected to an electric power busbar (261). The first rotor (300a) includes a holder main body (321) and a holder rib (323). The holder main body (321) extends in a plate shape in a direction orthogonal to the axial direction (AD). The holder rib (323) protrudes from the holder main body (321) toward the electric power busbar (261) in the axial direction (AD). The holder rib (323) extends along the holder main body (321) in a radial direction (RD), and rotates together with the holder main body (321) to send a gas toward the electric power lead-out wire (212).

## Description

### CROSS REFERENCE TO RELATED APPLICATION

The present application is based on Japanese Patent Applications No. 2021-156823 filed on September 27, 2021 and No. 2022-055613 filed on March 30, 2022. The entire disclosures of all of the above applications are incorporated herein by reference.

### TECHNICAL FIELD

The present disclosure relates to a rotary electric machine.

### BACKGROUND ART

Patent Literature 1 describes an axial gap-type motor. In the axial gap-type motor, a rotor and a stator are aligned in an axial direction. In the motor, the rotor and the stator are accommodated in a motor housing, and a coil lead-out wire is led out from a coil of the stator.

### PRIOR ART LITERATURES

### PATENT LITERATURE

Patent Literature 1: JP2016-96705A

### SUMMARY OF INVENTION

However, in Patent Literature 1, when heat is generated from the coil lead-out wire due to energizing of the coil lead-out wire, there is a concern that a temperature of the motor increases due to the heat.

A main object of the present disclosure is to provide a rotary electric machine capable of enhancing a cooling effect that is based on a rotor.

Multiple aspects disclosed in the description adopt different technical means to achieve respective objects. Reference numerals in parentheses in the claims and the section are an example indicating a correspondence relationship with specific means described in an embodiment to be described later as one aspect, and do not limit the technical scope.

In order to achieve the above object, according to an aspect of the present disclosure, a rotary electric machine is to be driven by supply of electric power. The rotary electric machine comprises:
a stator including coils of a plurality of phases;
a rotor configured to rotate about a rotation axis and aligned with the stator in an axial direction in which the rotation axis extends; and
a coil lead-out wire led out from a corresponding one of the coils, extending in the axial direction through an outer peripheral side of the rotor, and electrically connected to a connection target provided on an opposite side of the rotor from the coil in the axial direction.

The rotor includes a rotor plate portion in a plate shape and extending along the stator in a direction orthogonal to the axial direction, and a rotor rib protruding from the rotor plate portion toward the connection target in the axial direction, extending along the rotor plate portion in a radial direction of the rotation axis, and configured to rotate together with the rotor plate portion to send a gas toward the coil lead-out wire.

According to the above aspect, the rotor rib rotates together with the rotor plate portion to blow air toward the coil lead-out wire. In the configuration, the gas sent by the rotor rib can be applied as cooling air to the coil lead-out wire in which heat is generated due to energizing of the coil lead-out wire. Therefore, by generating the cooling air by the rotor rib by utilizing the rotation of the rotor, the coil lead-out wire can be actively cooled by the cooling air. Therefore, the cooling effect of the rotary electric machine can be enhanced by the rotor.

### BRIEF DESCRIPTION OF THE DRAWINGS

FIG. 1 is a diagram showing a configuration of a driving system according to a first embodiment.
FIG. 2 is a front view of a motor device unit.
FIG. 3 is a vertical cross-sectional view of the motor device unit.
FIG. 4 is an exploded perspective view of the motor device unit.
FIG. 5 is a perspective view of a motor device.
FIG. 6 is a vertical cross-sectional view of the motor device.
FIG. 7 is a top view of the motor device in a configuration group Aa.
FIG. 8 is a vertical cross-sectional view of the motor device.
FIG. 9 is a top view of an electric power busbar.
FIG. 10 is a top view of a stator showing a configuration of a coil unit.
FIG. 11 is a perspective view of a neutral point unit.
FIG. 12 is a vertical cross-sectional view of a rotor and a shaft in a configuration group Ab.
FIG. 13 is a perspective view of a coil wire.
FIG. 14 is a top view of a stator and a motor housing in a configuration group Ac.
FIG. 15 is a perspective view of a neutral point unit.
FIG. 16 is a perspective view of a motor device in a configuration group Ad.
FIG. 17 is a top view of the motor device.
FIG. 18 is a vertical cross-sectional view of a periphery of a relay terminal in the motor device.
FIG. 19 is a top view of a motor device in a configuration group Ae.
FIG. 20 is a vertical cross-sectional view of a periphery of a relay terminal in a motor device in a configuration group Af.
FIG. 21 is a top view of the motor device.
FIG. 22 is a vertical cross-sectional view of a motor device in a configuration group Ag.
FIG. 23 is a top view of the motor device.
FIG. 24 is a vertical cross-sectional view of a rotor and a shaft in a configuration group Ba.
FIG. 25 is a top view of the rotor viewed from a first rotor surface side.
FIG. 26 is a top view of the rotor viewed from a second rotor surface side.
FIG. 27 is a diagram showing an array of magnets in the motor.
FIG. 28 is a vertical cross-sectional view of a rotor and a shaft in a configuration group Bb.
FIG. 29 is a vertical cross-sectional view of a periphery of the magnet in the rotor.
FIG. 30 is a vertical cross-sectional perspective view of the periphery of the magnet in the rotor.
FIG. 31 is a top view of the rotor viewed from a first rotor surface side.
FIG. 32 is a top view of a magnet unit.
FIG. 33 is a vertical cross-sectional perspective view of a periphery of a magnet of a rotor in a configuration group Bc.
FIG. 34 is a top view of inclined magnet units and parallel magnet units.
FIG. 35 is a top view of the rotor viewed from a first rotor surface side.
FIG. 36 is a vertical cross-sectional view of a rotor and a shaft in a configuration group Bd.
FIG. 37 is a top view of the rotor viewed from a second rotor surface side.
FIG. 38 is a top view of the rotor viewed from a first rotor surface side.
FIG. 39 is a perspective view of the shaft.
FIG. 40 is a vertical cross-sectional view of a rotor and a shaft in a configuration group Be.
FIG. 41 is a vertical cross-sectional perspective view of a first rotor and a second rotor.
FIG. 42 is a vertical cross-sectional view of a rotor and a shaft in a configuration group Bf.
FIG. 43 is a diagram showing a positional relationship between a first holder fixing tool and a second holder fixing tool.
FIG. 44 is a perspective view of a motor viewed from a first rotor side.
FIG. 45 is a top view of the shaft.
FIG. 46 is a vertical cross-sectional perspective view of a motor housing and a coil protection portion in a configuration group Ca.
FIG. 47 is a vertical cross-sectional perspective view of the motor housing.
FIG. 48 is a schematic vertical cross-sectional view of the motor housing and the coil protection portion.
FIG. 49 is a schematic horizontal cross-sectional view of the motor housing and the coil protection portion.
FIG. 50 is a vertical cross-sectional perspective view of a motor housing in a configuration group Cb.
FIG. 51 is a vertical cross-sectional view of a periphery of a grommet in a motor device in a configuration group Cc.
FIG. 52 is a vertical cross-sectional perspective view of a motor housing and a coil protection portion.
FIG. 53 is a vertical cross-sectional perspective view of the motor housing.
FIG. 54 is a perspective view of a core unit in a configuration group Cd.
FIG. 55 is a perspective view of a core unit in a configuration group Ce.
FIG. 56 is a vertical cross-sectional perspective view of a motor housing and a coil protection portion.
FIG. 57 is a perspective view of a core unit in a configuration group Cf.
FIG. 58 is a perspective view of a core.
FIG. 59 is a horizontal cross-sectional view of the core.
FIG. 60 is a perspective view of a core forming plate member.
FIG. 61 is a perspective view of a core unit in a configuration group Cg.
FIG. 62 is a perspective view of the core unit viewed from a flange recess portion side.
FIG. 63 is a side view of the core unit viewed from the flange recess portion side.
FIG. 64 is a front view of the core unit viewed from a radially inner side.
FIG. 65 is a perspective view of a neutral point unit.
FIG. 66 is a vertical cross-sectional view of a motor device unit in a configuration group Da.
FIG. 67 is a top view of a stator and a motor housing.
FIG. 68 is a vertical cross-sectional view of a rotor and a stator in a configuration group Db.
FIG. 69 is a perspective view of a shaft viewed from a lower side of FIG. 68.
FIG. 70 is a top view of the shaft viewed from the lower side of FIG. 68.
FIG. 71 is a front view of the shaft.
FIG. 72 is a cross-sectional view taken along a line LXXII-LXXII in FIG. 71.
FIG. 73 is a vertical cross-sectional view of a rotor and a stator in a configuration group Dc.
FIG. 74 is a top view of the rotor viewed from a second rotor surface side.
FIG. 75 is a top view of a motor device in a configuration group Dd.
FIG. 76 is a perspective view of a neutral point unit.
FIG. 77 is a top view of a motor device in a configuration group De.
FIG. 78 is a perspective view of a motor device in a configuration group Df.
FIG. 79 is a top view of a motor housing and a stator.
FIG. 80 is a top view of the motor housing viewed from a second rotor side.
FIG. 81 is a perspective view of a motor device in a configuration group Dg.
FIG. 82 is a top view of the motor device viewed from a drive frame side.
FIG. 83 is a vertical cross-sectional view of a motor device unit.
FIG. 84 is a vertical cross-sectional view of a periphery of a grommet in a motor device in a configuration group E.
FIG. 85 is a vertical cross-sectional perspective view of a motor housing and a coil protection portion.
FIG. 86 is an enlarged perspective view of a periphery of the grommet in the motor device.
FIG. 87 is a schematic vertical cross-sectional view showing a positional relationship between an outer grommet portion and an outer peripheral lead-out portion.
FIG. 88 is an enlarged perspective view of a periphery of the grommet in the motor device.
FIG. 89 is a vertical cross-sectional view of a periphery of a rotor rib in a motor device in a configuration group F.
FIG. 90 is a top view of a rotor viewed from a second rotor surface side.
FIG. 91 is a vertical cross-sectional view of a periphery of a magnet in the rotor.
FIG. 92 is a top view of the motor device.
FIG. 93 is a schematic vertical cross-sectional view of a periphery of the rotor rib in the motor device.
FIG. 94 is a schematic vertical cross-sectional view of the periphery of the rotor rib in the motor device.
FIG. 95 is a vertical cross-sectional view of a periphery of a fixing block in a motor device in a configuration group G.
FIG. 96 is a vertical cross-sectional view of a periphery of the fixing block in a rotor.
FIG. 97 is a top view of the rotor viewed from a first rotor surface.
FIG. 98 is a schematic cross-sectional view of the rotor in a direction orthogonal to a circumferential direction.
FIG. 99 is a perspective view of a magnet holder.
FIG. 100 is a perspective view of the fixing block.
FIG. 101 is a top view of inclined magnet units and parallel magnet units viewed from a first unit surface.
FIG. 102 is a top view of the inclined magnet units and the parallel magnet units viewed from a second unit surface.
FIG. 103 is a top view of a periphery of a magnet protrusion on the magnet holder.
FIG. 104 is a vertical cross-sectional view of a periphery of a grommet and a coil protection portion in a motor device in a configuration group H.
FIG. 105 is a vertical cross-sectional view of a periphery of the grommet in the motor device.
FIG. 106 is a schematic vertical cross-sectional view showing configurations of an electric power lead-out wire, the grommet, and the coil protection portion.
FIG. 107 is a front view of the grommet.
FIG. 108 is a side view of the grommet.
FIG. 109 is a view of the periphery of the grommet in the motor device viewed from a radially inner side.
FIG. 110 is a vertical cross-sectional view of a rotor and a shaft in a configuration group I.
FIG. 111 is a view illustrating a shaft base material.
FIG. 112 is a vertical cross-sectional view of a motor device unit in a configuration group K.
FIG. 113 is a vertical cross-sectional view of a periphery of a resolver in a motor device.
FIG. 114 is a top view of inclined magnet units and parallel magnet units in a configuration group L.
FIG. 115 is a diagram showing an array of magnets in a motor.
FIG. 116 is a top view of the inclined magnet unit.
FIG. 117 is a side view of the inclined magnet unit.
FIG. 118 is a vertical cross-sectional view of a periphery of the magnet in a rotor.
FIG. 119 is a diagram showing a procedure of a process of manufacturing the rotor.
FIG. 120 is a view illustrating a sintering process and a strip process.
FIG. 121 is a view illustrating a magnet base material process.
FIG. 122 is a view illustrating a magnet side surface process.
FIG. 123 is a view illustrating a unit base material process.
FIG. 124 is a top view illustrating a first shaping process and a second shaping process.
FIG. 125 is a side view illustrating the first shaping process and the second shaping process.
FIG. 126 is a vertical cross-sectional view of a periphery of an axial gap in a motor device in a configuration group M.
FIG. 127 is a schematic vertical cross-sectional view of the periphery of the axial gap in the motor device.
FIG. 128 is a top view of a rotor viewed from a second rotor surface side.
FIG. 129 is a perspective view of a shaft.
FIG. 130 is a perspective view of a drive frame viewed from a drive frame rib side.
FIG. 131 is a vertical cross-sectional view of a motor device unit in a configuration group N.
FIG. 132 is a schematic vertical cross-sectional view of a periphery of a motor seal portion in a motor device.
FIG. 133 is a schematic vertical cross-sectional view showing a positional relationship between an outer grommet portion and an outer peripheral lead-out portion in the configuration group E and a third embodiment.
FIG. 134 is a schematic vertical cross-sectional view of a periphery of a grommet in a motor device according to a fourth embodiment.
FIG. 135 is a schematic vertical cross-sectional view of a periphery of a grommet in a motor device according to a fifth embodiment.
FIG. 136 is a schematic vertical cross-sectional view of a periphery of a grommet in a motor device according to a sixth embodiment.
FIG. 137 is a schematic vertical cross-sectional view of a periphery of a grommet in a motor device according to a seventh embodiment.
FIG. 138 is a schematic vertical cross-sectional view of a periphery of the rotor rib in the motor device in the configuration group F and an eighth embodiment.
FIG. 139 is a schematic vertical cross-sectional view of a periphery of a rotor rib in a motor device according to a ninth embodiment.
FIG. 140 is a schematic vertical cross-sectional view of a periphery of a rotor rib in a motor device according to a tenth embodiment.
FIG. 141 is a schematic vertical cross-sectional view of a periphery of a rotor rib in a motor device according to an eleventh embodiment.
FIG. 142 is a schematic vertical cross-sectional view of a periphery of a fixing block in a rotor according to a twelfth embodiment.
FIG. 143 is a top view of a rotor viewed from a first rotor surface according to a thirteenth embodiment.
FIG. 144 is a top view of a rotor viewed from a first rotor surface according to a fourteenth embodiment.
FIG. 145 is a front view of the grommet in the configuration group H and a fifteenth embodiment.
FIG. 146 is a side view of the grommet.
FIG. 147 is a view illustrating a first base material and a second base material in the configuration group I and a sixteenth embodiment.
FIG. 148 is an enlarged top view of a periphery of a displacement restriction portion in a motor device in a configuration group J and a seventeenth embodiment.
FIG. 149 is a schematic vertical cross-sectional view of a periphery of the displacement restriction portion in the motor device.
FIG. 150 is an enlarged top view of a periphery of a displacement restriction portion in a motor device according to an eighteenth embodiment.
FIG. 151 is a schematic vertical cross-sectional view of the periphery of the displacement restriction portion in the motor device.
FIG. 152 is an enlarged top view of a periphery of a displacement restriction portion in a motor device according to a nineteenth embodiment.
FIG. 153 is a schematic vertical cross-sectional view of the periphery of the displacement restriction portion in the motor device.
FIG. 154 is a top view of the inclined magnet unit in the configuration group L and a twentieth embodiment.
FIG. 155 is a side view of the inclined magnet unit.
FIG. 156 is a vertical cross-sectional view of a periphery of a magnet in a rotor.
FIG. 157 is a top view of an inclined magnet unit according to a twenty-first embodiment.
FIG. 158 is a diagram showing an array of magnets in a twenty-second embodiment.
FIG. 159 is a top view of an inclined magnet unit according to a twenty-third embodiment.
FIG. 160 is a view showing an array of magnets.
FIG. 161 is a schematic vertical cross-sectional view of a periphery of a motor seal portion in a motor device in a configuration group N and a twenty-fourth embodiment.
FIG. 162 is a schematic vertical cross-sectional view of a periphery of a motor seal portion in a motor device according to a twenty-fifth embodiment.
FIG. 163 is a schematic vertical cross-sectional view of a periphery of a housing seal portion in a motor device according to a twenty-sixth embodiment.
FIG. 164 is a schematic vertical cross-sectional view of a periphery of a housing seal portion in a motor device according to a twenty-seventh embodiment.
FIG. 165 is a schematic vertical cross-sectional view of a periphery of a housing seal portion in a motor device according to a twenty-eighth embodiment.
FIG. 166 is a schematic vertical cross-sectional view of a periphery of a motor seal portion in a motor device according to a twenty-ninth embodiment.
FIG. 167 is a schematic vertical cross-sectional view of a periphery of a housing seal portion in a motor device according to a thirtieth embodiment.
FIG. 168 is a schematic vertical cross-sectional view of a periphery of a housing seal portion in a motor device according to a thirty-first embodiment.

### DESCRIPTION OF EMBODIMENTS

Hereinafter, multiple embodiments for carrying out the present disclosure will be described with reference to the drawings. In each embodiment, the same reference numerals are assigned to portions corresponding to the items described in the preceding embodiments, and a repetitive description thereof may be omitted. In each embodiment, when only a part of the configuration is described, another embodiment previously described can be employed for the other part of the configuration. Not only combinations between portions that are specifically clarified as being able to be used in combination in each embodiment are possible, but also partial combinations between the embodiments whose combination is not specifically clarified are possible as long as no adverse effect is particularly generated on the combination.

### <First Embodiment>

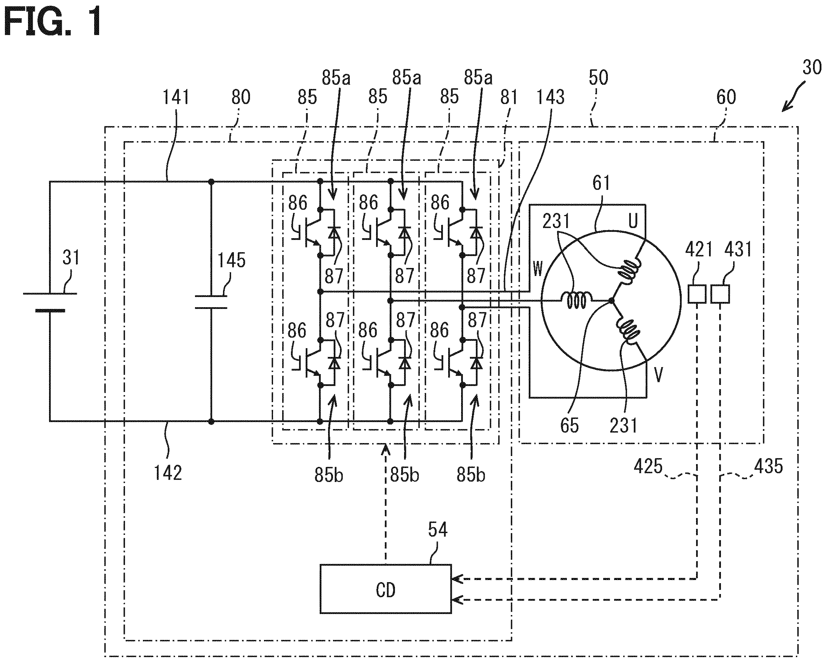

A driving system 30 shown in FIG. 1 is mounted on a moving object such as a vehicle or a flight vehicle. Examples of the vehicle on which the driving system 30 is mounted include an electric vehicle (EV), a hybrid vehicle (HV), and a fuel cell vehicle. An example of the flight vehicle includes an aircraft such as a vertical take-off and landing aircraft, a rotorcraft, and a fixed-wing aircraft. The vertical take-off and landing aircraft includes an eVTOL. The eVTOL is an abbreviation of an electric vertical take-off and landing aircraft.

The driving system 30 is a system that drives the moving object to move. If the moving object is a vehicle, the driving system 30 drives the vehicle to travel, and if the moving object is a flight vehicle, the driving system 30 drives the flight vehicle to fly.

The driving system 30 includes a battery 31 and a motor device unit 50. The battery 31 is electrically connected to the motor device unit 50. The battery 31 is an electric power supply unit that supplies electric power to the motor device unit 50, and corresponds to a power supply unit. The battery 31 is a DC voltage source that applies a DC voltage to the motor device unit 50. The battery 31 includes a rechargeable secondary battery. Examples of the secondary battery include a lithium ion battery and a nickel-hydrogen battery. In addition to or instead of the battery 31, a fuel cell, a generator, or the like may be used as the power supply unit.

The motor device unit 50 is a device that drives the moving object to move, and corresponds to a drive device. The motor device unit 50 includes a motor device 60 and an inverter device 80. The motor device 60 includes a motor 61. The inverter device 80 includes an inverter 81. The battery 31 is electrically connected to the motor 61 via the inverter 81. Electric power is supplied to the motor 61 from the battery 31 via the inverter 81. The motor 61 is driven in response to a voltage and a current supplied from the inverter 81.

The motor 61 is a multi-phase AC motor. The motor 61 is, for example, a three-phase AC motor, and has a U-phase, a V-phase, and a W-phase. The motor 61 is a moving driving source for moving the moving object, and functions as an electric motor. As the motor 61, for example, a brushless motor is used. The motor 61 functions as a generator during regeneration. The motor 61 corresponds to a rotary electric machine, and the motor device unit 50 corresponds to a rotary electric machine unit.

The motor 61 includes coils 211 of multiple phases. The coils 211 are windings and form an armature. The coil 211 is provided for each of the U-phase, the V-phase, and the W-phase. In the motor 61, the coils 211 of multiple phases are star-connected. The star-connection may be referred to as a Y-connection. The motor 61 includes a neutral point 65. The coils 211 of multiple phases are connected to one another by the neutral point 65.

The inverter 81 drives the motor 61 by converting the electric power supplied to the motor 61. The inverter 81 converts the electric power supplied to the motor 61 from a direct current to an alternating current. The inverter 81 is an electric power conversion unit that converts the electric power. The inverter 81 is a multi-phase electric power conversion unit, and performs electric power conversion for each of the multiple phases. The inverter 81 is, for example, a three-phase inverter, and performs the electric power conversion for each of the U-phase, the V-phase, and the W-phase.

The inverter device 80 includes a P-line 141 and an N-line 142. The P-line 141 and the N-line 142 electrically connect the battery 31 and the inverter 81. The P-line 141 is electrically connected to a positive electrode of the battery 31. The N-line 142 is electrically connected to a negative electrode of the battery 31. In the battery 31, the positive electrode is an electrode on a high potential side, and the negative electrode is an electrode on a low potential side. The P-line 141 and the N-line 142 are electric power lines for supplying the electric power. The P-line 141 is the electric power line on the high potential side and may be referred to as a high potential line. The N-line 142 is the electric power line on the low potential side and may be referred to as a low potential line.

The motor device unit 50 includes an output line 143. The output line 143 is an electric power line for supplying the electric power. The output line 143 electrically connects the motor 61 and the inverter 81. The output line 143 is in a state of spanning the motor device 60 and the inverter device 80.

The inverter device 80 includes a smoothing capacitor 145. The smoothing capacitor 145 is a capacitor that smooths the DC voltage supplied from the battery 31. The smoothing capacitor 145 is connected to the P-line 141 and the N-line 142 between the battery 31 and the inverter 81. The smoothing capacitor 145 is connected in parallel to the inverter 81.

The inverter 81 is an electric power conversion circuit, for example, a DC-AC conversion circuit. The inverter 81 includes multi-phase arm circuits 85. For example, the inverter 81 includes the arm circuits 85 respectively for the U-phase, the V-phase, and the W-phase. The arm circuit 85 may be referred to as a leg and an upper and lower arm circuit. Each of the arm circuits 85 includes an upper arm 85a and a lower arm 85b. The upper arm 85a and the lower arm 85b are connected in series to the battery 31. The upper arm 85a is connected to the P-line 141, and the lower arm 85b is connected to the N-line 142.

The output line 143 is connected to the arm circuit 85 for each of the multiple phases. The output line 143 is connected between the upper arm 85a and the lower arm 85b. The output line 143 connects the arm circuit 85 and the coil 211 in each of the multiple phases. The output line 143 is connected to a side of the coil 211 opposite to the neutral point 65.

The arms 85a and 85b each include an arm switch 86 and a diode 87. The arm switch 86 is formed by a switching element such as a semiconductor device. The switching element is, for example, a power element such as an IGBT and a MOSFET. The IGBT is an abbreviation of an insulated gate bipolar transistor. The MOSFET is an abbreviation of a metal-oxide-semiconductor field-effect transistor.

The arms 85a and 85b each include one arm switch 86 and one diode 87. In each of the arms 85a and 85b, the diode 87 is connected in antiparallel to the arm switch 86 for reflux. In the upper arm 85a, a collector of the arm switch 86 is connected to the P-line 141. In the lower arm 85b, an emitter of the arm switch 86 is connected to the N-line 142. The emitter of the arm switch 86 in the upper arm 85a and the collector of the arm switch 86 in the lower arm 85b are connected to each other. An anode of the diode 87 is connected to the emitter of the corresponding arm switch 86, and a cathode of the diode 87 is connected to the collector of the corresponding arm switch 86. The arm switch 86 may also be referred to as a semiconductor switch.

The motor device unit 50 includes a control device 54. The control device 54 is provided in the inverter device 80. The control device 54 is, for example, an ECU, and controls driving of the inverter 81. The ECU is an abbreviation of an electronic control unit. The control device 54 is mainly implemented by a microcomputer including, for example, a processor, a memory, an I/O, and a bus connecting these components. The memory is a non-transitory tangible storage medium that non-temporarily stores computer readable programs and data. The non-transitory tangible storage medium is implemented by a semiconductor memory, a magnetic disk, or the like. In FIG. 1, the control device 54 is illustrated as a CD.

The control device 54 executes various types of processing related to the driving of the inverter 81 by executing a control program stored in the memory. The control device 54 is electrically connected to an external device, the inverter 81, and various sensors. The external device is, for example, a host ECU such as an integrated ECU mounted on the moving object. The various sensors are provided, for example, in the motor device unit 50. The control device 54 controls the inverter 81 by outputting a command signal to the inverter 81. The control device 54 generates a command signal in response to a control signal received from the external device, detection signals received from the various sensors, and the like. In the inverter device 80, the inverter 81 is driven in response to the command signal received from the control device 54, and the electric power conversion is performed by the inverter 81.

The motor device 60 includes a resolver 421 and a temperature sensor 431 as the various sensors. The resolver 421 is a rotation sensor that detects a rotation angle of the motor 61, and corresponds to a rotation detection unit. The resolver 421 outputs a detection signal corresponding to the rotation angle of the motor 61. The detection signal of the resolver 421 includes information on a rotation number of the motor 61, such as a rotation angle. The motor device 60 may include a rotation detection unit different from the resolver 421.

The temperature sensor 431 can detect a temperature of the motor 61, and corresponds to a temperature detection unit. The temperature sensor 431 outputs a detection signal corresponding to the temperature of the motor 61. The temperature sensor 431 detects, for example, a temperature of a stator 200 to be described later, as the temperature of the motor 61. The temperature sensor 431 may detect a temperature of any portion of the motor 61.

The resolver 421 and the temperature sensor 431 are electrically connected to the control device 54. The resolver 421 is connected to the control device 54 via a signal line 425. The detection signal output by the resolver 421 is input to the control device 54 via the signal line 425. The temperature sensor 431 is connected to the control device 54 via a signal line 435. The detection signal output by the temperature sensor 431 is input to the control device 54 via the signal line 435. The signal lines 425 and 435 are provided in the motor device unit 50, and are in a state of spanning the motor device 60 and the inverter device 80.

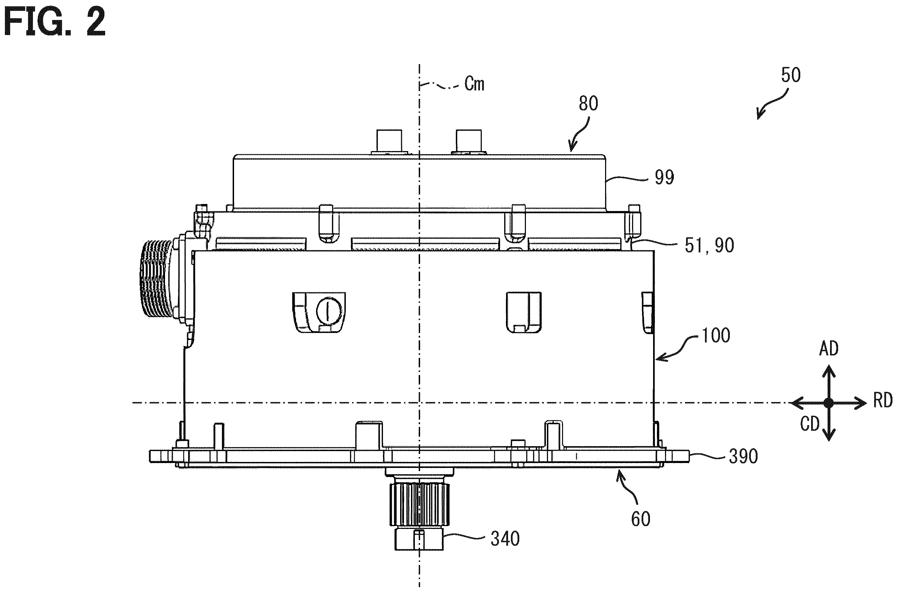

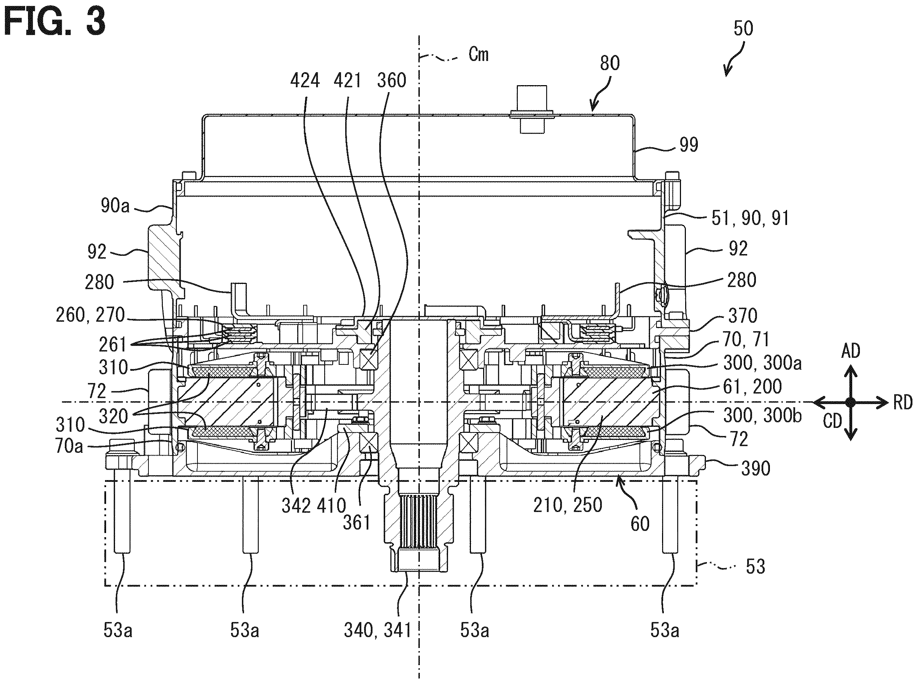

As shown in FIGS. 2 and 3, in the motor device unit 50, the motor device 60 and the inverter device 80 are arranged along a motor axis Cm. The motor device 60 and the inverter device 80 are fixed to each other by fixing tools such as bolts. The motor axis Cm is a virtual line extending linearly. When a direction in which the motor axis Cm extends is referred to as an axial direction AD, the axial direction AD, a radial direction RD, and a circumferential direction CD of the motor axis Cm are orthogonal to one another. An outer side in the radial direction RD may be referred to as a radially outer side, and an inner side in the radial direction RD may be referred to as a radially inner side. FIG. 3 illustrates a vertical cross-section of the motor device unit 50 extending along the motor axis Cm.

The motor device 60 includes a motor housing 70. The motor housing 70 accommodates the motor 61. The motor housing 70 is formed in a tubular shape as a whole and extends along the motor axis Cm. The motor housing 70 is made of a metal material or the like, and has a thermal conduction property. The motor housing 70 has an outer peripheral surface 70a. The outer peripheral surface 70a is included in an outer surface of the motor housing 70 and extends in an annular shape in the circumferential direction CD as a whole.

The motor housing 70 includes a housing main body 71 and motor fins 72. On the housing main body 71, the outer peripheral surface 70a is formed. Each of the motor fin 72 is a radiation fin provided on the outer peripheral surface 70a. The motor fins 72 increase a surface area of the motor housing 70 and enhance a heat radiation effect of the motor housing 70. The motor fin 72 protrudes from the outer peripheral surface 70a toward the radially outer side. The motor fin 72 extends in the axial direction AD along the outer peripheral surface 70a. Multiple motor fins 72 are arranged in the circumferential direction CD.

The inverter device 80 includes an inverter housing 90. The inverter housing 90 accommodates the inverter 81. The inverter housing 90 is formed in a tubular shape as a whole and extends along the motor axis Cm. The inverter housing 90 is made of a metal material or the like and has a thermal conduction property. The inverter housing 90 has an outer peripheral surface 90a. The outer peripheral surface 90a is included in an outer surface of the inverter housing 90 and extends in an annular shape in the circumferential direction CD.

The motor device 60 and the inverter device 80 are air-cooled type devices. The inverter housing 90 includes a housing main body 91 and inverter fins 92. On the housing main body 91, the outer peripheral surface 90a is formed. Each of the inverter fins 92 is a radiation fin provided on the outer peripheral surface 90a. The inverter fins 92 increase a surface area of the inverter housing 90 and enhance a heat radiation effect of the inverter housing 90. The inverter fin 92 protrudes from the outer peripheral surface 90a toward the radially outer side. The inverter fin 92 extends in the axial direction AD along the outer peripheral surface 90a. Multiple inverter fins 92 are arranged in the circumferential direction CD.

As shown in FIG. 2, the motor device unit 50 includes a unit duct 100. The unit duct 100 is made of a resin material or the like. The unit duct 100 accommodates the motor housing 70 and the inverter housing 90. The unit duct 100 is formed in a tubular shape as a whole and extends along the motor axis Cm. The unit duct 100 is in a state of spanning the motor housing 70 and the inverter housing 90 in the axial direction AD. The unit duct 100 is in a state of covering the motor housing 70 and the inverter housing 90 from an outer peripheral side. The unit duct 100 is fixed to at least one of the motor housing 70 and the inverter housing 90. In the unit duct 100, opening portions are formed at both ends in the axial direction AD.

An inner peripheral surface of the unit duct 100 faces the outer peripheral surfaces 70a and 90a with the motor fins 72 and the inverter fins 92 interposed therebetween. The inner peripheral surface of the unit duct 100 is separated from the outer peripheral surfaces 70a and 90a toward the radially outer side. In the motor device unit 50, a duct flow channel is formed between the outer peripheral surfaces 70a and 90a and the inner peripheral surface of the unit duct 100. The duct flow channel is opened in the axial direction AD through the opening portions of the unit duct 100. In the motor device unit 50, heat is likely to be released from the motor fins 72 and the inverter fins 92 by a gas such as air passing through the duct flow channel.

The inner peripheral surface of the unit duct 100 approaches or contacts tip end surfaces of the motor fin 72 and the inverter fin 92. In the configuration, the gas passing through the duct flow channel in the axial direction AD is likely to pass through a position overlapping the motor fin 72 and the inverter fin 92 in the radial direction RD. Therefore, a heat radiation effect based on the motor fin 72 and inverter fin 92 can be enhanced easily.

As shown in FIG. 3, the inverter device 80 includes an inverter cover portion 99 in addition to the inverter housing 90. The inverter cover portion 99 is made of a metal material or the like and has a thermal conduction property. The inverter cover portion 99 extends in a direction orthogonal to the motor axis Cm. In the inverter housing 90, an opening portion formed on one end side in the axial direction AD is covered by the inverter cover portion 99.

The motor device 60 includes a drive frame 390 in addition to the motor housing 70. The drive frame 390 is made of a metal material or the like and has a thermal conduction property. The drive frame 390 extends in a direction orthogonal to the motor axis Cm. In the motor housing 70, an opening portion formed on one end side in the axial direction AD is covered by the drive frame 390. The drive frame 390 is fixed to the motor housing 70 by frame fixing tools 405. Each of the frame fixing tools 405 is a fixing tool such as a bolt. The frame fixing tool 405 is screwed to the drive frame 390 and the motor housing 70 via a washer 406.

The motor device 60 includes an O-ring 401. The O-ring 401 is an elastically deformable seal member and is made of a resin material or the like. The O-ring 401 is in a state of being sandwiched between the motor housing 70 and the drive frame 390. The O-ring 401 extends along an outer peripheral edge of the motor housing 70. The O-ring 401 seals between the motor housing 70 and the drive frame 390.

In the motor device unit 50, one end portion in the axial direction AD is formed by the inverter cover portion 99. The other end portion in the axial direction AD is formed by the drive frame 390.

The motor device unit 50 includes a unit housing 51. The unit housing 51 includes the inverter housing 90, the inverter cover portion 99, the motor housing 70, and the drive frame 390. In the unit housing 51, an outer peripheral surface thereof is formed by the inverter housing 90 and the motor housing 70. In the unit housing 51, one of a pair of end surfaces thereof is formed by the inverter cover portion 99, and the other is formed by the drive frame 390. The unit duct 100 is in a state of covering the outer peripheral surface of the unit housing 51.

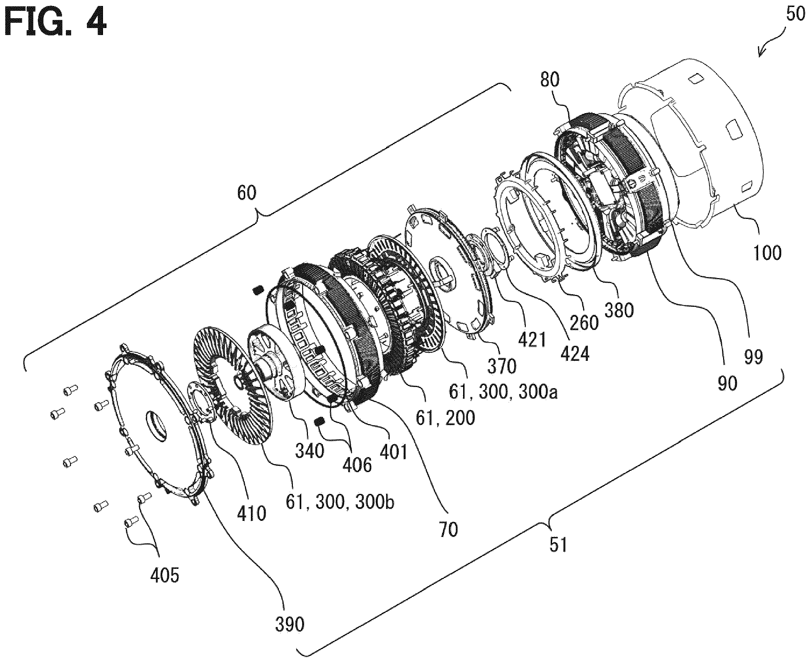

As shown in FIGS. 3 and 4, the motor 61 includes the stator 200, rotors 300, and a shaft 340. Each of the rotors 300 rotates relative to the stator 200 about the motor axis Cm. The rotor 300 is a rotor and may be referred to as a rotor sub-assembly. The motor axis Cm is a center line of the rotor 300 and corresponds to a rotation axis. The shaft 340 is fixed to the rotor 300 and rotates together with the rotor 300. The shaft 340 is a rotation shaft of the motor 61. A center line of the shaft 340 coincides with the motor axis Cm. A center line of the stator 200 coincides with the motor axis Cm. The stator 200 is a stationary element and may be referred to as a stator sub-assembly.

The motor device 60 is an axial gap-type rotary electric machine. In the motor 61, the stator 200 and the rotor 300 are aligned in the axial direction AD along the motor axis Cm. The rotor 300 is in a state of being overlapped with the stator 200 in the axial direction AD, and rotates relative to the stator 200 in this state.

The motor device 60 is a double rotor-type rotary electric machine, and includes two rotors 300. The two rotors 300 are arranged in the axial direction AD. In the axial direction AD, the stator 200 is provided between the two rotors 300. The shaft 340 is fixed to both of the two rotors 300. The two rotors 300 rotate together with the shaft 340. When the two rotors 300 are referred to as a first rotor 300a and a second rotor 300b, the first rotor 300a is provided on a side of a rear frame 370 facing the stator 200. The second rotor 300b is provided on a side of the stator 200 opposite to the inverter device 80. An axial gap-type and double rotor-type rotary electric machine may be referred to as a double axial motor.

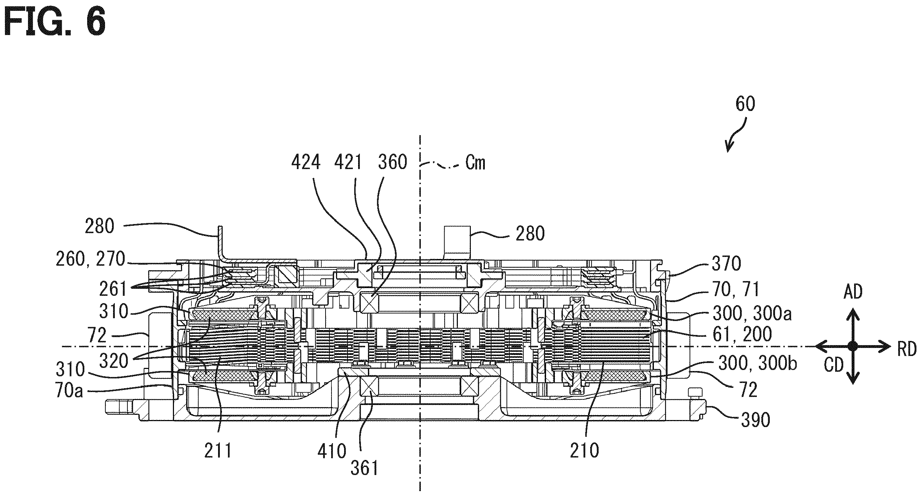

As shown in FIGS. 3 and 6, the stator 200 extends in the circumferential direction CD around the motor axis Cm, and is formed in an annular shape as a whole. The stator 200 includes a coil unit 210 and a coil protection portion 250. The coil unit 210 includes coil portions 215. Multiple coil portions 215 are arranged in the circumferential direction CD. In the coil unit 210, the coil 211 is formed by at least one coil portion 215. The coils 211 of multiple phases are arranged in the circumferential direction CD in the coil unit 210. In FIG. 6, an illustration of the coil protection portion 250 is omitted.

The coil protection portion 250 is made of a resin material or the like. The coil protection portion 250 is made of, for example, an epoxy-based thermosetting resin. The coil protection portion 250 is, for example, a mold resin formed by molding. The coil protection portion 250 has an electrical insulation property. The coil protection portion 250 has a thermal conduction property, and heat from the coil portion 215 is easily transferred thereto. The coil protection portion 250 has thermal conductivity higher than that of air, for example.

The coil protection portion 250 is in a state of covering the coil unit 210 and protects the coil unit 210. The coil protection portion 250 extends in the circumferential direction CD around the motor axis Cm. The coil protection portion 250 is formed in an annular shape as a whole. The coil protection portion 250 seals the coils 211 and the coil portions 215. The coil protection portion 250 is in contact with both the coil portions 215 and the motor housing 70. The coil protection portion 250 facilitates transferring the heat from the coil portions 215 to the motor housing 70.

The rotor 300 extends in the circumferential direction CD around the motor axis Cm, and is formed in an annular shape as a whole. The rotor 300 is formed in a plate shape as a whole. The rotor 300 includes magnets 310 and a magnet holder 320. Multiple magnets 310 are arranged in the circumferential direction CD. Each of the magnets 310 is a permanent magnet and generates a magnetic field. The magnet holder 320 supports the multiple magnets 310. The magnet holder 320 extends in the circumferential direction CD around the motor axis Cm. The magnet holder 320 is formed in an annular shape as a whole.

The shaft 340 includes a shaft main body 341 and a shaft flange 342. The shaft main body 341 is formed in a columnar shape and extends along the motor axis Cm. The shaft flange 342 extends from the shaft main body 341 toward the radially outer side. The shaft flange 342 extends in the circumferential direction CD around the motor axis Cm. The shaft flange 342 is formed in an annular shape as a whole. The shaft flange 342 is fixed to the rotor 300.

The motor device 60 includes a first bearing 360 and a second bearing 361. The bearings 360 and 361 rotatably support the shaft 340. The rotor 300 is rotatably supported by the bearings 360 and 361 via the shaft 340. The first bearing 360 and the second bearing 361 are aligned in the axial direction AD. In the axial direction AD, the shaft flange 342 is provided between the first bearing 360 and the second bearing 361. The first bearing 360 is attached to a rear frame 370 to be described later, and is fixed to the motor housing 70 via the rear frame 370. The second bearing 361 is attached to the drive frame 390, and is fixed to the motor housing 70 via the drive frame 390.

As shown in FIGS. 3, 4, and 6, the motor device 60 includes a busbar unit 260, the rear frame 370, a dustproof cover 380, a retainer plate 410, the resolver 421, and a resolver cover 424. In FIG. 3, an illustration of the dustproof cover 380 is omitted.

The rear frame 370 is formed in a plate shape as a whole and extends in a direction orthogonal to the motor axis Cm. The rear frame 370 is made of a metal material or the like. The rear frame 370 is in a state of covering the stator 200 and the rotor 300 from an inverter device 80 side. The rear frame 370 defines an internal space of the motor housing 70 from the inverter device 80 side. The rear frame 370 partitions the internal space of the motor housing 70 and an internal space of the inverter housing 90. The rear frame 370 is provided between the motor housing 70 and the inverter housing 90 in the axial direction AD. The rear frame 370 is in a state of being sandwiched between the motor housing 70 and the inverter housing 90.

The dustproof cover 380 extends in the circumferential direction CD around the motor axis Cm. The dustproof cover 380 is formed in an annular shape as a whole. The dustproof cover 380 is in a state of being overlapped with the rear frame 370 from the inverter device 80 side. The dustproof cover 380 is made of a resin material or the like, and has a structure through which a foreign matter such as dust does not pass. The dustproof cover 380 prevents the foreign matter from entering from one of the internal space of the motor housing 70 and the internal space of the inverter housing 90 to the other.

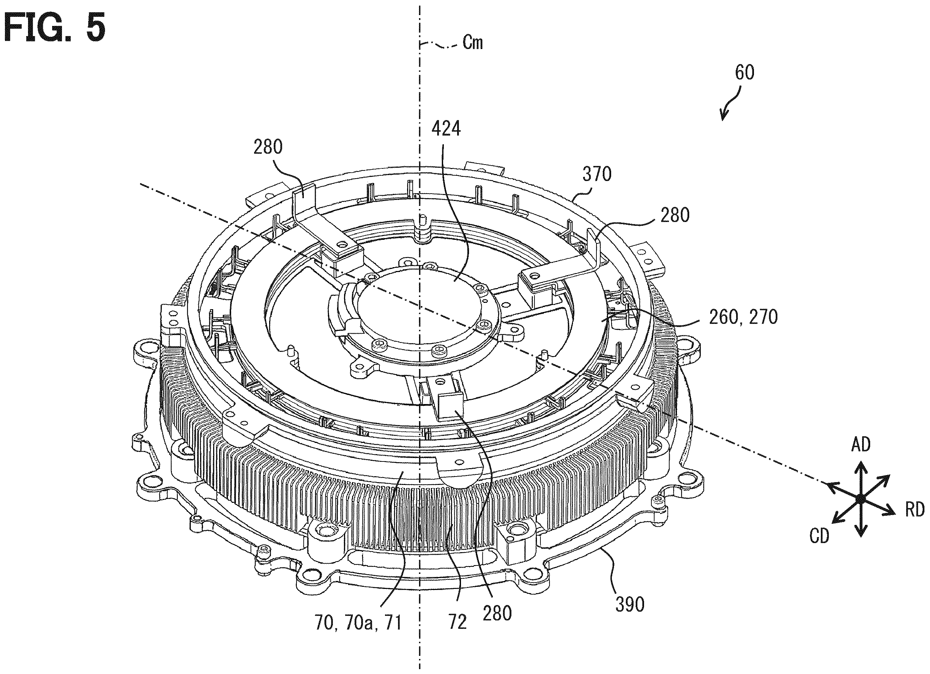

As shown in FIGS. 4 and 5, the busbar unit 260 extends in the circumferential direction CD around the motor axis Cm. The busbar unit 260 is formed in an annular shape as a whole. The busbar unit 260 is located at a position separated from the stator 200 toward the rear frame 370 in the axial direction AD. The busbar unit 260 is provided closer to the inverter device 80 than the rear frame 370 is. The busbar unit 260 extends along a plate surface of the rear frame 370.

As shown in FIGS. 3 and 6, the busbar unit 260 includes electric power busbars 261 and a busbar protection portion 270. Each of the electric power busbars 261 is a conductive member such as a busbar member for a current to pass therethrough. The electric power busbar 261 is provided for each of the multiple phases, and forms at least a part of the output line 143 in each of the multiple phases. The electric power busbar 261 is provided between the coil 211 and the inverter 81 in the output line 143, and electrically connects the coil 211 and the inverter 81. The electric power busbar 261 extends in the circumferential direction CD around the motor axis Cm. The electric power busbar 261 is formed in an annular shape as a whole. The busbar member is a member having a plate-shaped body covered with an insulator.

The busbar protection portion 270 is made of a resin material or the like and has an electrical insulation property. The busbar protection portion 270 is in a state of covering the multiple electric power busbars 261 and protects the multiple electric power busbars 261. The busbar protection portion 270 extends in the circumferential direction CD around the motor axis Cm. The busbar protection portion 270 is formed in an annular shape as a whole.

As shown in FIGS. 3, 5, and 6, the motor device 60 includes relay terminals 280. Each of the relay terminals 280 is a conductive member such as a busbar member for a current to pass therethrough. The relay terminal 280 is provided for each of the multiple phases, and forms at least a part of the output line 143 in each of the multiple phases. The relay terminal 280 is provided between the electric power busbar 261 and the inverter 81 in the output line 143. The relay terminal 280 electrically connects the electric power busbar 261 and the inverter 81. The relay terminal 280 is electrically connected to the electric power busbar 261. Multiple relay terminals 280 are arranged in the circumferential direction CD. The relay terminal 280 is connected to a member constituting the inverter 81 in the inverter device 80, for example.

As shown in FIGS. 3, 4, and 6, the retainer plate 410 extends in the circumferential direction CD around the motor axis Cm. The retainer plate 410 is formed in an annular shape as a whole. The retainer plate 410 fixes the second bearing 361 to the drive frame 390. The retainer plate 410 is fixed to the drive frame 390 in a state in which the second bearing 361 is sandwiched between the retainer plate 410 and the drive frame 390.

The resolver 421 extends in the circumferential direction CD around the motor axis Cm. The resolver 421 is formed in an annular shape as a whole. The resolver 421 includes a resolver rotor and a resolver stator. The resolver rotor rotates relative to the resolver stator. The resolver rotor is provided on a rotor 300 side, and the resolver stator is provided on a motor housing 70 side. For example, the resolver rotor is attached to the shaft 340, and the resolver stator is attached to the rear frame 370. The resolver 421 is provided on a side of the inverter device 80 facing the rear frame 370. The resolver cover 424 is formed in a plate shape as a whole and extends in a direction orthogonal to the motor axis Cm. The resolver cover 424 is in a state of covering the resolver 421 from the inverter device 80 side. The resolver cover 424 is attached to the rear frame 370. The resolver cover 424 is in a state of covering the shaft main body 341 from the inverter device 80 side.

A speed reducer 53 is attached to the motor device unit 50. The speed reducer 53 mechanically connects the motor 61 and an external device. For example, the external device is mechanically connected to the rotation shaft of the motor 61 via the speed reducer 53. The speed reducer 53 decelerates rotation of the motor 61 and transfers the rotation to the external device. Examples of the external device include a wheel and a propeller. The speed reducer 53 includes multiple gears, and may be referred to as a transmission gear and a gear box. The speed reducer 53 has a structure matching a motor characteristic of the motor 61. The speed reducer 53 is fixed to the drive frame 390 by speed reducer fixing tools 53a. Each of the speed reducer fixing tools 53a is a fixing tool such as a bolt.

### <Configuration Group Aa>

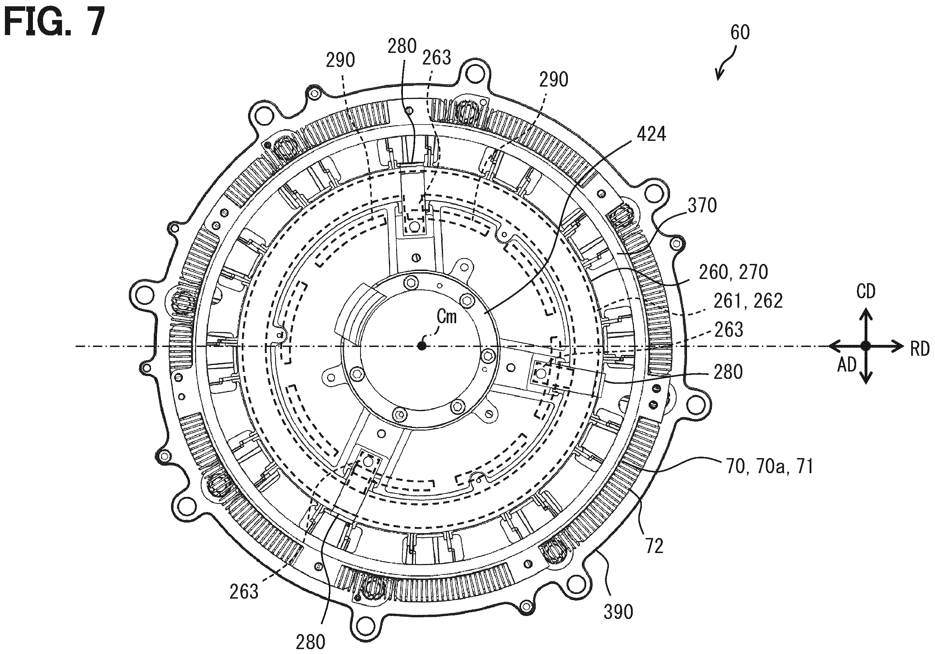

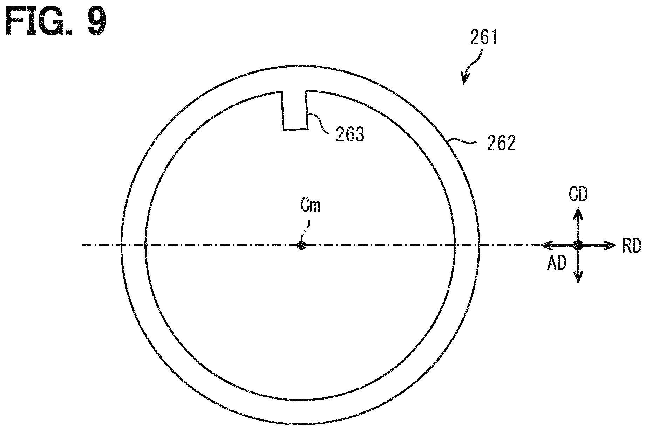

As shown in FIGS. 7, 8, and 9, the electric power busbar 261 includes a busbar main body 262 and a busbar terminal 263. The busbar main body 262 extends in the circumferential direction CD around the motor axis Cm. The busbar main body 262 is formed in an annular shape as a whole. The busbar main body 262 is formed in a plate shape as a whole and extends in a direction orthogonal to the motor axis Cm. The busbar terminal 263 extends from the busbar main body 262 in a direction intersecting the circumferential direction CD. The busbar terminal 263 extends from the busbar main body 262 toward the radially inner side. The busbar terminal 263 is formed in a plate shape as a whole. In FIG. 7, an illustration of the dustproof cover 380 is omitted.

The multiple electric power busbars 261 are arranged in the axial direction AD. For example, the multiple electric power busbars 261 include a U-phase electric power busbar 261, a V-phase electric power busbar 261, and a W-phase electric power busbar 261. In the multiple electric power busbars 261, the busbar main bodies 262 are overlapped in the axial direction AD. The multiple busbar main bodies 262 are provided at a position aligned with the stator 200 in the axial direction AD. In the multiple electric power busbars 261, the busbar terminals 263 are located at positions separated from each other in the circumferential direction CD.

The motor device 60 has a stator-side space S1 and an inverter-side space S2. The stator-side space S1 and the inverter-side space S2 are included in the internal space of the motor device 60 and are spaces partitioned by the rear frame 370. The stator-side space S1 and the inverter-side space S2 are arranged in the axial direction AD with the rear frame 370 interposed therebetween. The stator-side space S1 is a space closer to the stator 200 than to the rear frame 370. The stator-side space S1 is a space between the rear frame 370 and the drive frame 390 in the axial direction AD. The inverter-side space S2 is a space closer to the inverter device 80 than to the rear frame 370. The inverter-side space S2 is a space between the rear frame 370 and the inverter housing 90 in the axial direction AD. The inverter-side space S2 may include an internal space of the inverter device 80. The stator-side space S1 corresponds to the first space, the inverter-side space S2 corresponds to the second space, and the rear frame 370 corresponds to the space partition portion.

The electric power busbar 261 is provided in the inverter-side space S2. The busbar unit 260 is in a state of being overlapped with the rear frame 370 from the inverter device 80 side. The busbar protection portion 270 is fixed to the rear frame 370 by fixing tools such as screws.

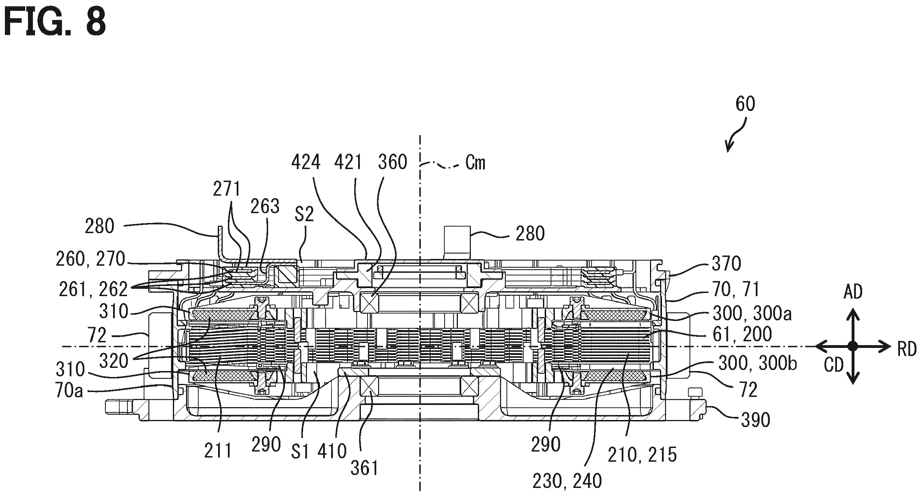

As shown in FIG. 8, the busbar protection portion 270 includes multiple protection plates 271. Each of the protection plates 271 is made of a resin material or the like, and has an electrical insulation property. The protection plate 271 is formed in a plate shape and extends in a direction orthogonal to the axial direction AD. The protection plate 271 extends in the circumferential direction CD around the motor axis Cm. The protection plate 271 is formed in an annular shape as a whole. The multiple protection plates 271 are overlapped in the axial direction AD with the busbar main bodies 262 interposed therebetween. Two of the busbar main bodies 262 which are adjacent to each other with the protection plate 271 interposed therebetween in the axial direction AD, are electrically insulated by the protection plate 271.

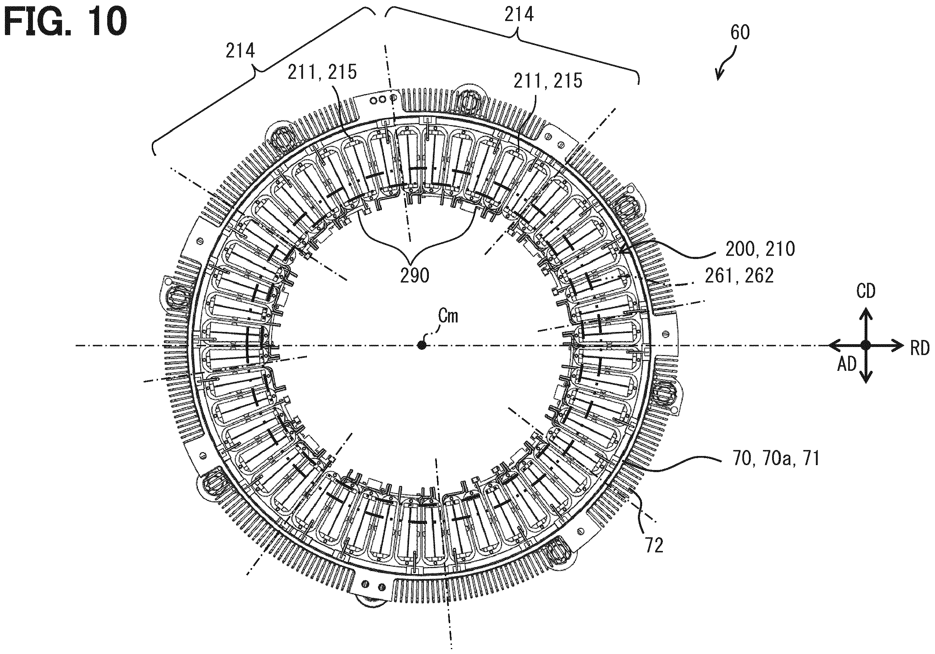

As shown in FIG. 10, the motor device 60 includes neutral point busbars 290. Each of the neutral point busbars 290 is provided on the stator 200. The neutral point busbar 290 is a conductive member such as a busbar member for a current to pass therethrough. The neutral point busbar 290 forms the neutral point 65 at least, and electrically connects the coils 211 of multiple phases. The neutral point busbar 290 extends in the circumferential direction CD around the motor axis Cm. Multiple neutral point busbars 290 are arranged in the circumferential direction CD.

As shown in FIG. 8, the neutral point busbar 290 is provided at a position separated from the electric power busbar 261 in the axial direction AD. The neutral point busbar 290 is located closer to the drive frame 390 than the rear frame 370 is in the axial direction AD. The neutral point busbar 290 is located on an opposite side of the rear frame 370 from the electric power busbar 261, and the rear frame 370 is interposed therebetween in the axial direction AD. The neutral point busbar 290 is provided in the stator-side space S1. On the other hand, as described above, the electric power busbar 261 is provided in the inverter-side space S2.

As shown in FIGS. 7 and 10, the neutral point busbar 290 is provided at a position separated from the busbar main body 262 in the radial direction RD. The neutral point busbar 290 is located at a position separated from the busbar main body 262 toward the radially inner side.

As shown in FIG. 10, the coil unit 210 includes neutral point units 214. Multiple neutral point units 214 are arranged in the circumferential direction CD. Each of the neutral point units 214 includes multiple coil portions 215 and one neutral point busbar 290. In the neutral point unit 214, the coils 211 of multiple phases are star-connected by the neutral point 65. In the coil unit 210, since the multiple neutral point units 214 are arranged in the circumferential direction CD, the star-connected coils 211 of multiple phases are arranged in the circumferential direction CD.

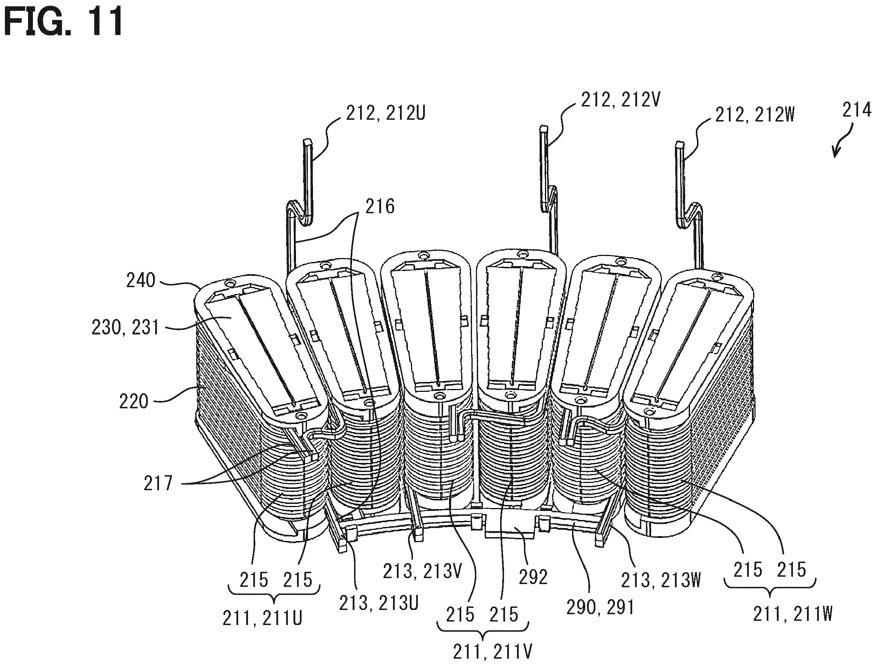

As shown in FIG. 11, in the neutral point unit 214, since the coil portions 215 are arranged in the circumferential direction CD, the coils 211 of multiple phases are arranged in the circumferential direction CD. In the neutral point unit 214, an electric power lead-out wire 212 and a neutral lead-out wire 213 extend from the coil 211 in each of the multiple phases. The electric power lead-out wire 212 is led out from the coil 211 toward the radially outer side and extends in the axial direction AD toward the electric power busbar 261. The electric power lead-out wire 212 is electrically connected to the electric power busbar 261. The neutral lead-out wire 213 is led out from the coil 211 toward the radially inner side. The neutral lead-out wire 213 is electrically connected to the neutral point busbar 290.

The coil portion 215 is formed by a wound coil wire 220. The coil wire 220 is a conductive member such as an electric wire for a current to pass therethrough. The coil wire 220 is wound around a core unit 230. In the core unit 230, the coil wire 220 is wound around a core 231 via a bobbin 240. In the coil wire 220, a wound portion forms the coil portion 215, and a portion extending from the coil portion 215 forms a first extending wire 216 and a second extending wire 217. In the coil portion 215, the first extending wire 216 extends from one of both ends arranged in the axial direction AD, and the second extending wire 217 extends from the other end.

The coil wire 220 forms the coil 211 by forming the coil portion 215. In the coil wire 220, a wound portion forms the coil 211, and a portion extending from the coil 211 forms the electric power lead-out wire 212 and the neutral lead-out wire 213.

In each of the multiple phases, one coil 211 is formed by two coil portions 215. In each of the multiple phases, the first extending wire 216 of one of the two coil portions 215 forms the electric power lead-out wire 212, and the first extending wire 216 of the other coil portions 215 forms the neutral lead-out wire 213. The second extending wires 217 of the two coil portions 215 are connected to each other.

In the neutral point unit 214, the coil 211, the electric power lead-out wire 212, and the neutral lead-out wire 213 are denoted with a U-phase, a V-phase, and a W-phase, respectively. Then, in the neutral point unit 214, a U-phase coil 211U, a V-phase coil 211V, and a W-phase coil 211W are arranged one by one in the circumferential direction CD. Similarly, a U-phase electric power lead-out wire 212U, a V-phase electric power lead-out wire 212V, and a W-phase electric power lead-out wire 212W are arranged in the circumferential direction CD. A U-phase neutral lead-out wire 213U, a V-phase neutral lead-out wire 213V, and a W-phase neutral lead-out wire 213W are arranged one by one in the circumferential direction CD.

### <Configuration Group Ab>

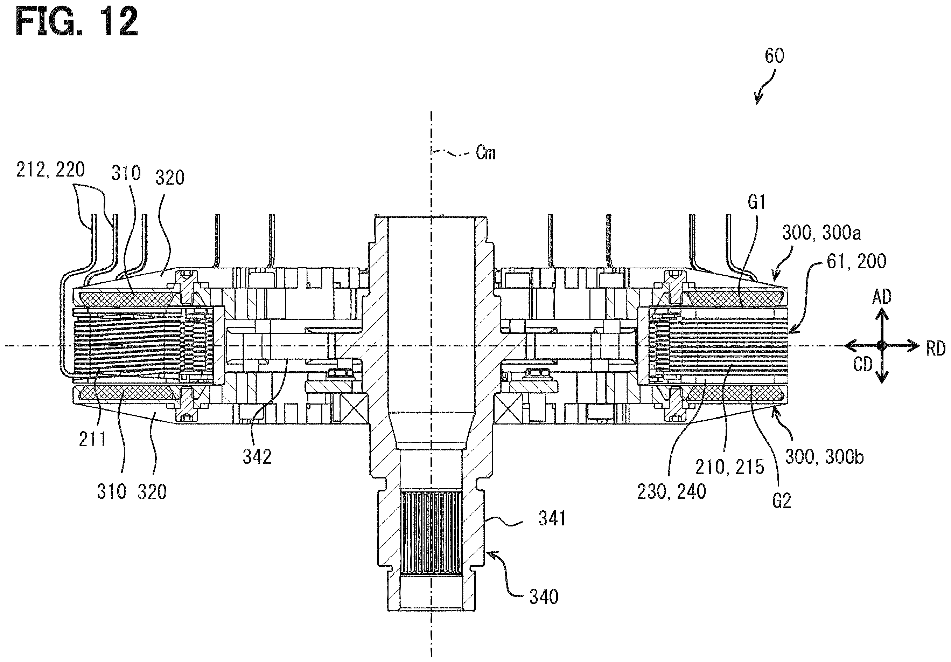

As shown in FIG. 12, the motor 61 includes the first rotor 300a and the second rotor 300b. The motor 61 includes a first gap G1 and a second gap G2. The first gap G1 is a gap between the stator 200 and the first rotor 300a. The second gap G2 is a gap between the stator 200 and the second rotor 300b. The first gap G1 and the second gap G2 are arranged in the axial direction AD with the stator 200 interposed therebetween. The motor 61 may be referred to as a double gap-type rotary electric machine.

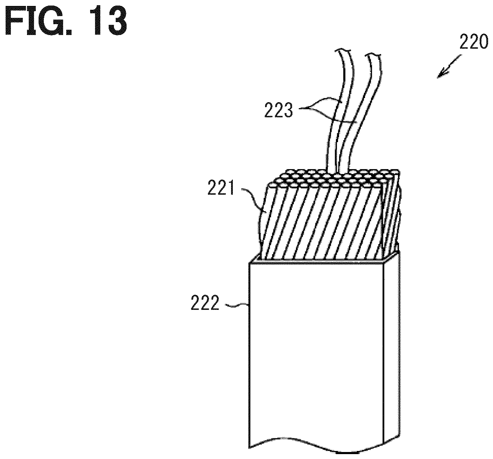

As shown in FIG. 13, the coil wire 220 includes a conductor portion 221 and a covering portion 222. The conductor portion 221 is conductive and is a portion through which a current flows in the coil wire 220. The covering portion 222 is made of a resin material or the like, and has an electrical insulation property. The covering portion 222 covers the conductor portion 221. The conductor portion 221 includes multiple wires 223. Each of the wires 223 is made of a conductive material such as copper, and is a portion through which a current flows in the conductor portion 221. The coil wire 220 may be referred to as a strand or a dividing copper wire.

### <Configuration Group Ac>

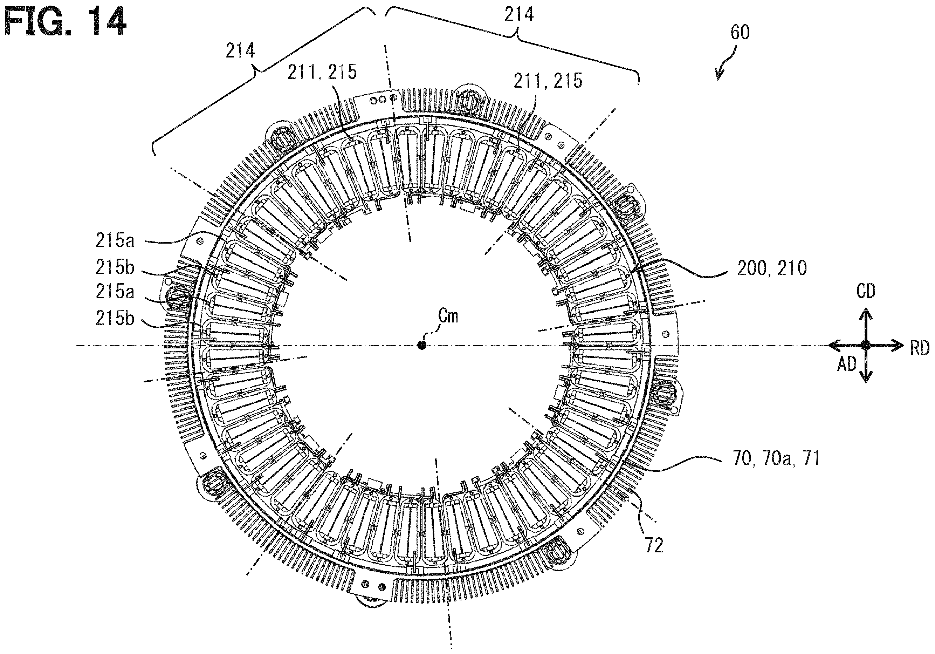

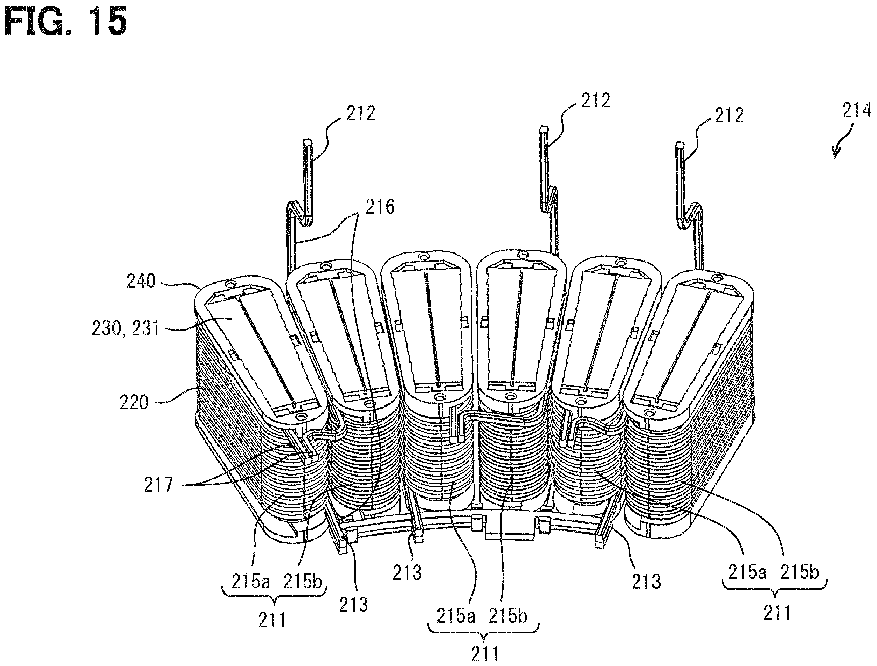

As shown in FIGS. 14 and 15, in the coil unit 210, the multiple coil portions 215 include first coil portions 215a and second coil portions 215b. The first coil portions 215a and the second coil portions 215b are alternately arranged in the circumferential direction CD. In the coil unit 210, one of two coil portions 215 adjacent to each other in the circumferential direction CD is the first coil portion 215a, and the other is the second coil portion 215b.

In the coil unit 210, two coil portions 215 adjacent to each other in the circumferential direction CD are different in the number of turns. The number of turns of the coil portion 215 is the number of turns of the coil wire 220 in the coil portion 215. The number of turns of the first coil portion 215a is different from that of the second coil portion 215b. For example, the number of turns of the first coil portion 215a is larger than the number of turns of the second coil portion 215b.

As shown in FIG. 15, in the first coil portion 215a, both the first extending wire 216 and the second extending wire 217 are led out to one side in the radial direction RD. For example, in the first coil portion 215a, both the first extending wire 216 and the second extending wire 217 are led out to the radially inner side. On the other hand, in the second coil portion 215b, the first extending wire 216 and the second extending wire 217 are led out in opposite directions in the radial direction RD. For example, in the second coil portion 215b, the first extending wire 216 is led out to the radially outer side, and the second extending wire 217 is led out to the radially inner side. Therefore, when the number of turns of the first coil portion 215a is an integer, the number of turns of the second coil portion 215b is substantially 0.5 less than the number of turns of the first coil portion 215a.

### <Configuration Group Ad>

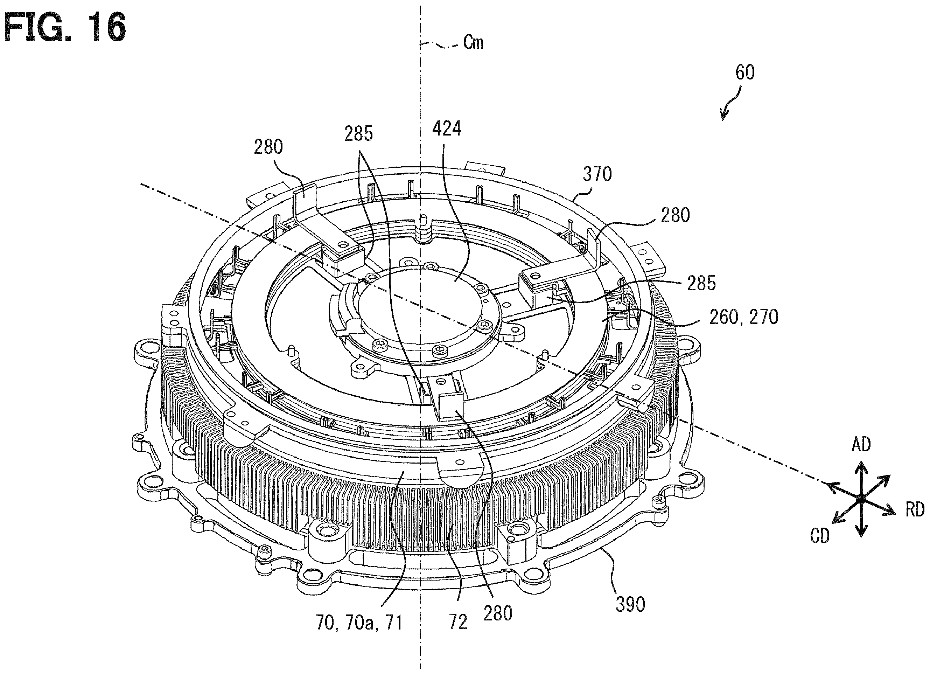

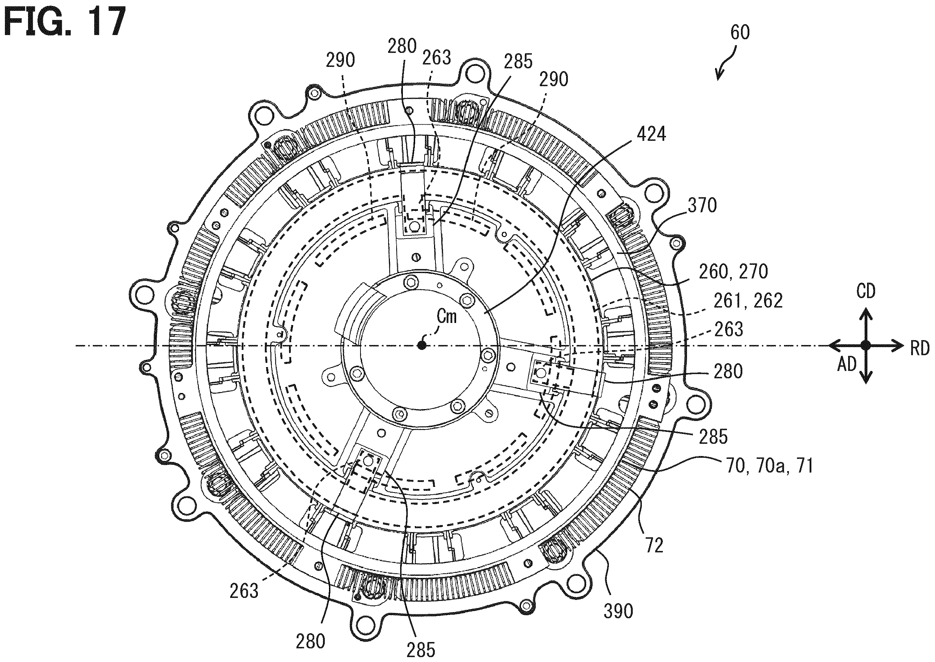

In FIGS. 16, 17, and 18, the relay terminal 280 and the electric power busbar 261 are electrically connected. In the electric power busbar 261, the busbar terminal 263 is connected to the relay terminal 280 by a connector such as a screw. The connector is a conductive member for a current to pass therethrough.

The motor device 60 includes terminal bases 285. Each of the terminal bases 285 is made of a resin material or the like, and has an electrical insulation property. The terminal base 285 supports a connection portion between the relay terminal 280 and the busbar terminal 263. For example, by screwing the connector to the terminal base 285, the connection portion between the relay terminal 280 and the busbar terminal 263 is fixed to the terminal base 285. In other words, the relay terminal 280 and the busbar terminal 263 are connected by the terminal base 285. The terminal base 285 corresponds to a terminal block. The relay terminal 280 is electrically connected to the inverter 81. The relay terminal 280 is formed by, for example, a busbar member, and corresponds to a relay busbar.

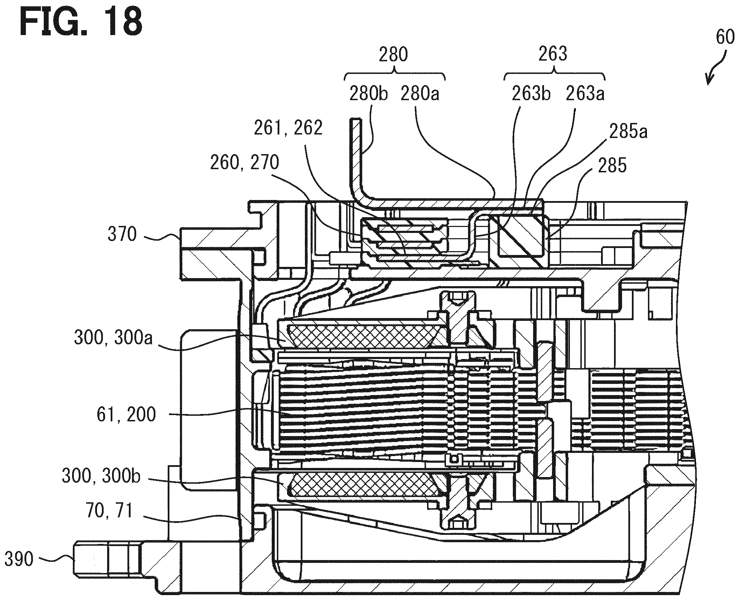

As shown in FIG. 18, the terminal base 285 has a base surface 285a. The base surface 285a extends in a direction orthogonal to the motor axis Cm. The relay terminal 280 includes a relay connection portion 280a, and the busbar terminal 263 includes a busbar connection portion 263a. The relay connection portion 280a and the busbar connection portion 263a are connected to each other by the connector in a state of being overlapped with the base surface 285a. One of the relay connection portion 280a and the busbar connection portion 263a is sandwiched between the other and the base surface 285a.

The relay terminal 280 includes a relay extending portion 280b. The relay extending portion 280b extends toward the inverter device 80 in the relay terminal 280. For example, the relay extending portion 280b extends from the relay connection portion 280a in the axial direction AD. The busbar terminal 263 includes a busbar extending portion 263b. The busbar extending portion 263b extends toward the busbar main body 262 in the busbar terminal 263. For example, the busbar extending portion 263b includes a portion extending in the radial direction RD and a portion extending in the axial direction AD.

The terminal base 285 is provided for each of the multiple phases. Multiple terminal bases 285 are arranged in the circumferential direction CD along the busbar unit 260. For example, the multiple terminal bases 285 include a U-phase terminal base 285, a V-phase terminal base 285, and a W-phase terminal base 285. The terminal base 285 is provided at a position aligned with the busbar unit 260 in the radial direction RD. The terminal base 285 is located at a position separated from the busbar unit 260 toward the radially inner side.

### <Configuration Group Ae>

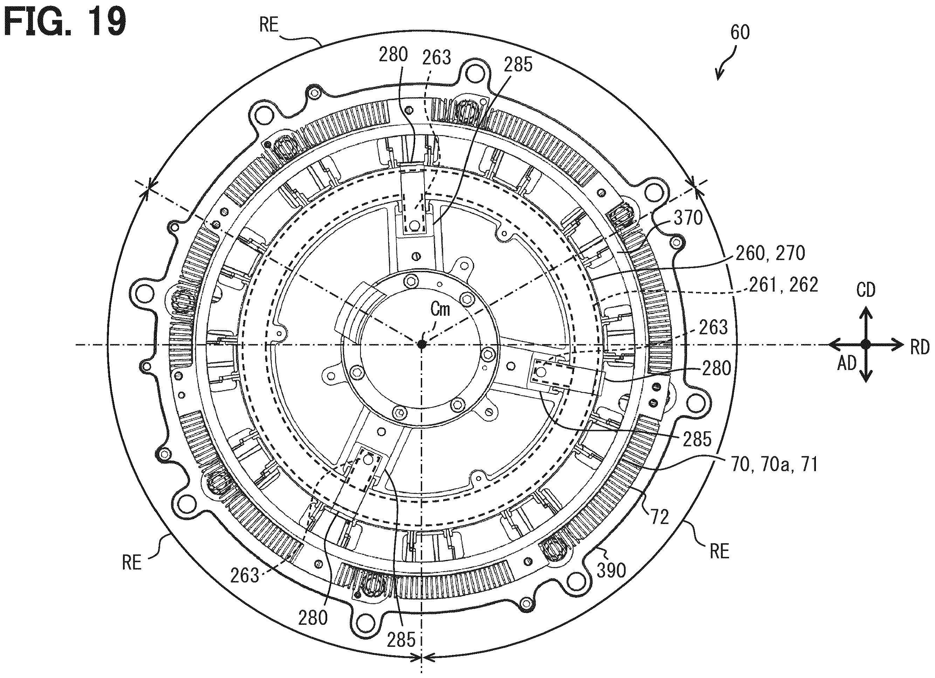

As shown in FIG. 19, the multiple relay terminals 280 are arranged by being sufficiently spaced apart from one another. A separation distance between two adjacent relay terminals 280 in the circumferential direction CD is sufficiently large. For example, in a configuration in which three relay terminals 280 are arranged in the circumferential direction CD, a separation angle between two adjacent relay terminals 280 is approximately 120 degrees.

In the motor device 60, multiple virtual divided regions RE are arranged in the circumferential direction CD. The multiple divided regions RE are regions obtained by dividing a periphery of the motor axis Cm at equal intervals in the circumferential direction CD. The number of the divided regions RE is the same with the number of the relay terminals 280. For example, when the number of the relay terminals 280 is three, the number of the divided regions RE is also three. In this case, the three divided regions RE are obtained by dividing the periphery of the motor axis Cm by 120 degrees in the circumferential direction CD.

One relay terminal 280 is disposed in each of the multiple divided regions RE. For example, one relay terminal 280 is disposed in each of the three divided regions RE. When the three relay terminals 280 are arranged at intervals of 120 degrees, one relay terminal 280 is necessarily arranged in each of the three divided regions RE. Even if the separation angle of the three relay terminals 280 is too large or too small with respect to 120 degrees, a sufficient separation distance is secured between at least two relay terminals 280.

Similarly to the multiple relay terminals 280, the multiple busbar terminals 263 and the multiple terminal bases 285 are also arranged by being sufficiently spaced apart from one another in the circumferential direction CD. For example, when there are three busbar terminals 263 and three terminal bases 285, one busbar terminal 263 and one terminal base 285 are disposed in each of the three divided regions RE.

### <Configuration Group Af>

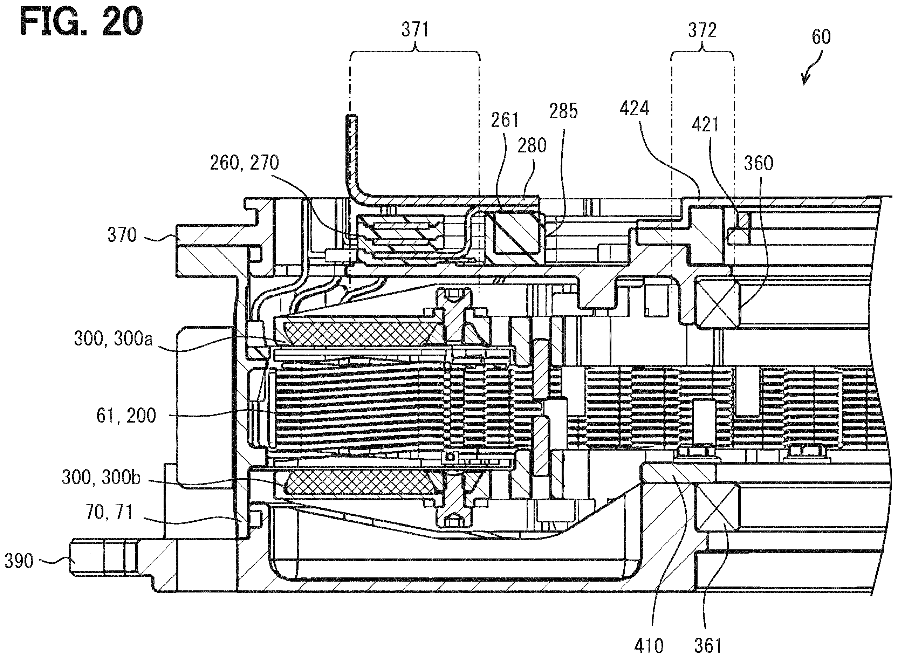

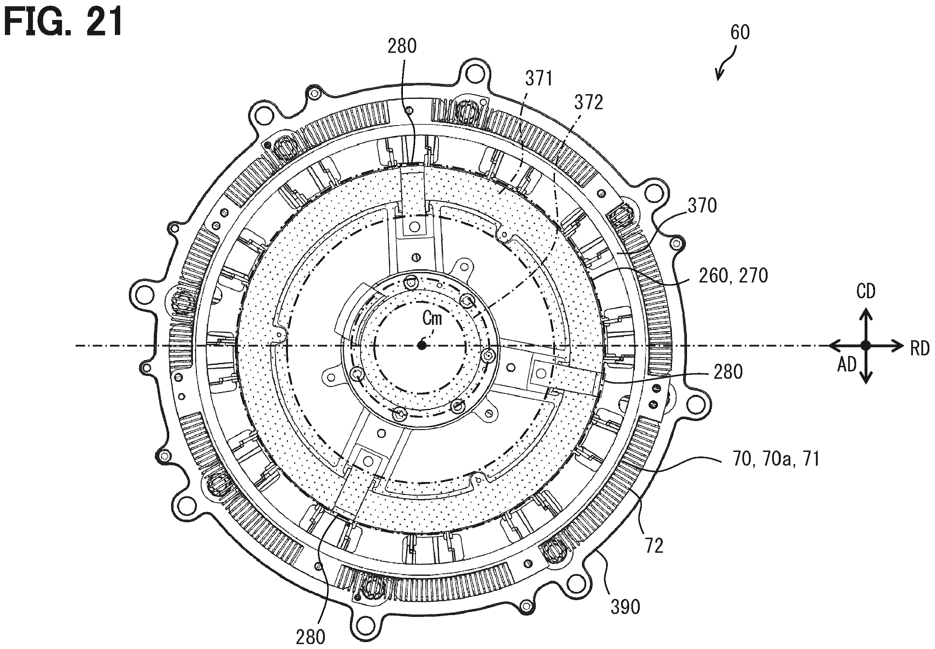

As shown in FIGS. 20 and 21, the rear frame 370 supports both the busbar unit 260 and the first bearing 360. The rear frame 370 includes a busbar support portion 371 and a bearing support portion 372. The rear frame 370 corresponds to a support frame, and the first bearing 360 corresponds to a bearing.

The busbar support portion 371 is a portion of the rear frame 370 which supports the busbar unit 260. The busbar support portion 371 supports the electric power busbar 261 by supporting the busbar protection portion 270. The busbar support portion 371 includes at least a portion of the rear frame 370 which is overlapped with the busbar unit 260 in the axial direction AD. The busbar unit 260 is fixed to the busbar support portion 371 by fixing tools such as bolts. The busbar support portion 371 extends in the circumferential direction CD around the motor axis Cm. The busbar support portion 371 is formed in an annular shape as a whole. The busbar support portion 371 is located at a position separated from an outer peripheral edge of the rear frame 370 toward the radially inner side. The busbar support portion 371 is located at a position separated from an inner peripheral edge of the rear frame 370 toward the radially outer side. The busbar support portion 371 and the bearing support portion 372 are located at positions separated from each other in the radial direction RD.

The bearing support portion 372 is a portion of the rear frame 370 which supports the first bearing 360. The bearing support portion 372 includes at least a portion of the rear frame 370 which is overlapped with the first bearing 360 in the axial direction AD. The bearing support portion 372 extends in the circumferential direction CD around the motor axis Cm. The bearing support portion 372 is formed in an annular shape as a whole. The bearing support portion 372 forms the inner peripheral edge of the rear frame 370.

The bearing support portion 372 includes a support projection portion 372a. The support projection portion 372a in the rear frame 370 protrudes toward the drive frame 390 in the axial direction AD. The support projection portion 372a extends in the circumferential direction CD and is formed in an annular shape as a whole. The support projection portion 372a is provided at a position separated from the inner peripheral edge of the rear frame 370 toward the radially outer side. The first bearing 360 is fixed to the bearing support portion 372 in a state of entering inside the support projection portion 372a. The first bearing 360 is fitted inside the support projection portion 372a, for example. In FIG. 21, the busbar support portion 371 and the bearing support portion 372 are indicated by dot hatching.

### <Configuration Group Ag>

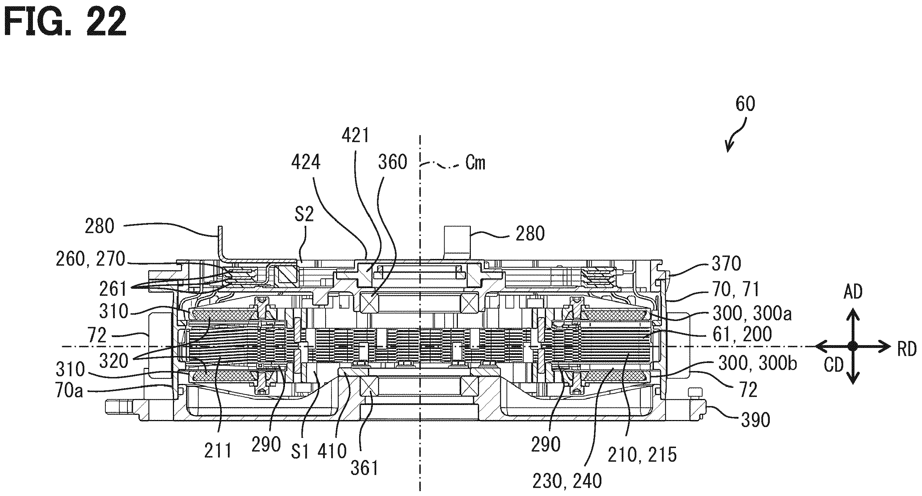

As shown in FIG. 22, the resolver 421 is provided in the inverter-side space S2. The resolver 421 is in a state of being overlapped with the rear frame 370 from the inverter device 80 side.

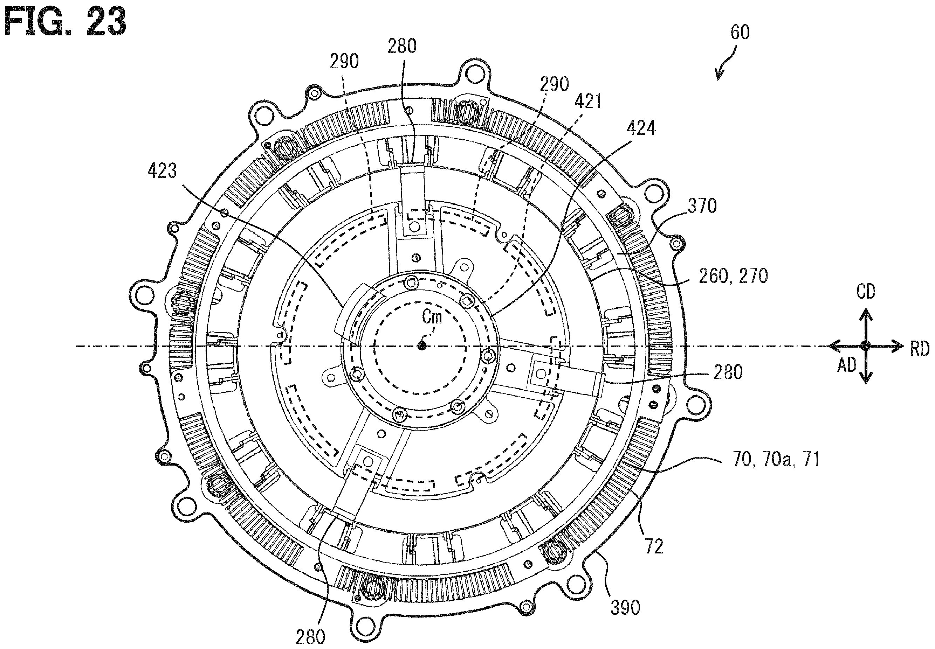

As shown in FIGS. 22 and 23, the resolver 421 is provided with a resolver connector 423. The resolver connector 423 is a connector for electrically connecting the resolver 421 to the external device such as the control device 54. In the resolver connector 423, for example, an electric wire forming the signal line 425 is electrically connected to the resolver 421. The resolver connector 423 is in a state of protruding from the resolver 421 in the axial direction AD.

At least a part of the resolver connector 423 is in a state of being exposed to the inverter device 80 without being covered by the resolver cover 424. The resolver cover 424 may be provided in the resolver 421.

As shown in FIG. 22, the neutral point busbar 290 is located at a position separated from the resolver 421 in the axial direction AD. The neutral point busbar 290 is located on an opposite side of the rear frame 370 from the resolver 421, and the rear frame 370 is interposed therebetween in the axial direction AD. The neutral point busbar 290 is provided in the stator-side space S1, and the resolver 421 is provided in the inverter-side space S2. As shown in FIG. 23, the neutral point busbar 290 is provided at a position separated from the resolver 421 in the radial direction RD. The neutral point busbar 290 is located at a position separated from the resolver 421 toward the radially outer side. The rear frame 370 corresponds to an orthogonal frame.

### <Configuration Group Ba>

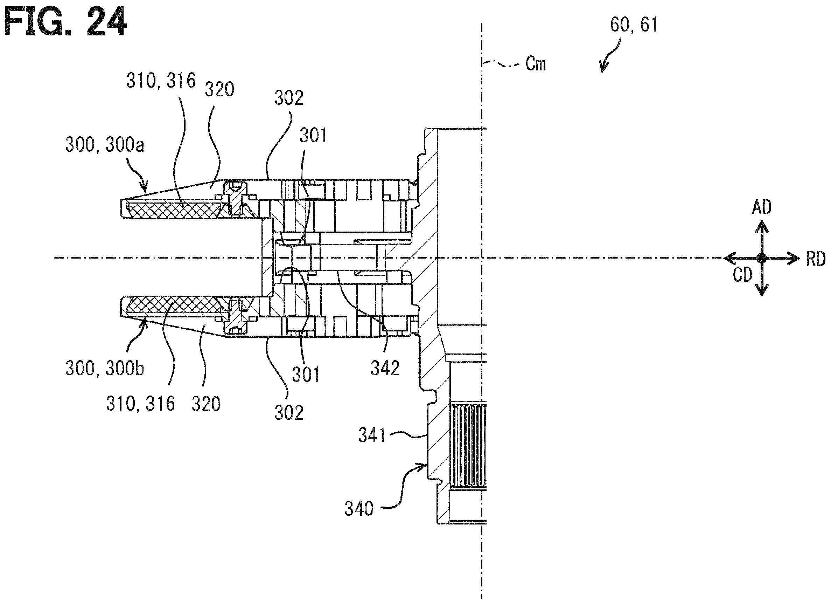

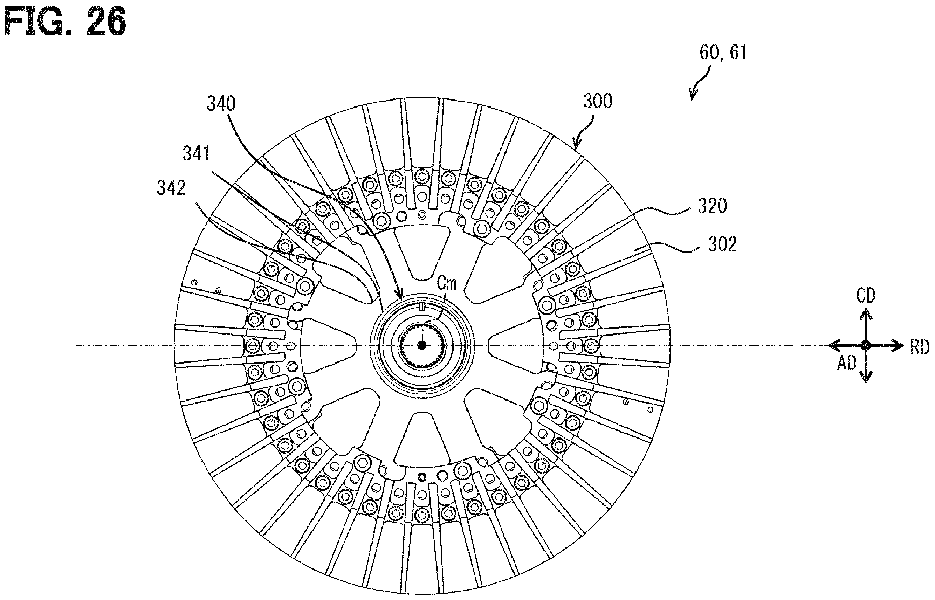

As shown in FIGS. 24, 25, and 26, the rotor 300 has a first rotor surface 301 and a second rotor surface 302. The first rotor surface 301 and the second rotor surface 302 each extend in a direction orthogonal to the motor axis Cm. The first rotor surface 301 and the second rotor surface 302 each extend in the circumferential direction CD around the motor axis Cm, and are formed in an annular shape as a whole. In the rotor 300, one of a pair of plate surfaces is the first rotor surface 301, and the other is the second rotor surface 302.

In the motor device 60, the first rotor 300a and the second rotor 300b are disposed such that the first rotor surfaces 301 thereof face each other. In the first rotor 300a and the second rotor 300b, the second rotor surfaces 302 thereof face opposite sides. In the first rotor 300a, the second rotor surfaces 302 faces the rear frame 370.

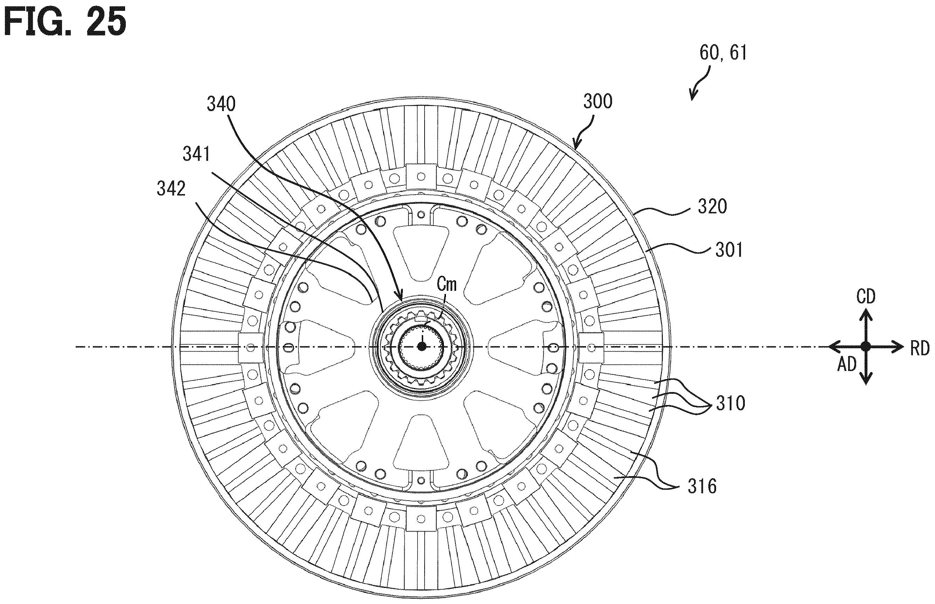

As shown in FIGS. 24 and 25, in the rotor 300, the multiple magnets 310 are arranged along the first rotor surface 301. Each of the magnets 310 is exposed on the first rotor surface 301, and is not exposed on the second rotor surface 302. The magnet 310 is in a state of being covered by the magnet holder 320 from the second rotor surface 302.

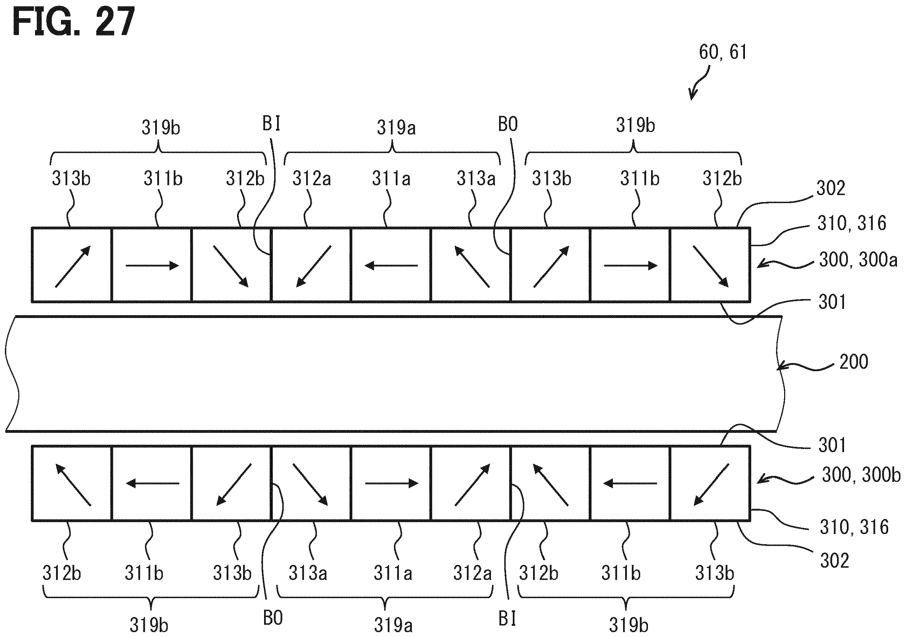

As shown in FIGS. 25 and 27, the rotor 300 includes magnet units 316. The magnet unit 316 includes at least one magnet 310. In the present embodiment, the magnet unit 316 includes multiple magnets 310. In the magnet unit 316, the multiple magnets 310 are arranged in the circumferential direction CD. The magnet unit 316 includes, for example, three magnets 310. Multiple magnet units 316 are arranged in the circumferential direction CD in the rotor 300.

As shown in FIG. 27, the multiple magnets 310 of the rotor 300 include first peripheral magnets 311a, second peripheral magnets 311b, first axially inward magnets 312a, second axially inward magnets 312b, first axially outward magnets 313a, and second axially outward magnets 313b. These peripheral magnets 311a and 311b, the axially inward magnets 312a and 312b, and the axially outward magnets 313a and 313b are disposed to strengthen a magnetic force on the stator 200. Such an array of the magnets 310 may be referred to as a Halbach array. FIG. 27 is a view of the array of the magnets 310 developed on a plane as the rotor 300 is viewed from the radially outer side.

Multiple first peripheral magnets 311a and multiple second peripheral magnets 311b are arranged in the circumferential direction CD. The first peripheral magnets 311a and the second peripheral magnets 311b are alternately arranged one by one in the circumferential direction CD. The first peripheral magnet 311a and the second peripheral magnet 311b are magnets oriented opposite to each other in the circumferential direction CD. The first peripheral magnet 311a is oriented toward one side in the circumferential direction CD, and the second peripheral magnet 311b is oriented toward the other side in the circumferential direction CD. For example, when a person views the rotor 300 from a side opposite to the stator 200, the first peripheral magnet 311a is oriented clockwise in the circumferential direction CD. The second peripheral magnet 311b is oriented counterclockwise in the circumferential direction CD. In the present embodiment, a magnetization direction in the magnet 310 is an orientation direction thereof. The first peripheral magnet 311a and the second peripheral magnet 311b correspond to the peripheral magnets.

The first axially inward magnets 312a and the second axially inward magnets 312b are alternately arranged in the circumferential direction CD. For example, the first axially inward magnets 312a and the second axially inward magnets 312b are alternately arranged one by one in the circumferential direction CD. The first axially inward magnet 312a and the second axially inward magnet 312b each are a magnet oriented to be inclined with respect to the motor axis Cm in a manner of facing the stator 200 in the axial direction AD. In the circumferential direction CD, the first axially inward magnet 312a and the second axially inward magnet 312b are oriented opposite to each other. In the circumferential direction CD, the first axially inward magnet 312a is oriented toward the same side as the first peripheral magnet 311a. In the circumferential direction CD, the second axially inward magnet 312b is oriented toward the same side as the second peripheral magnet 311b. The first axially inward magnet 312a and the second axially inward magnet 312b correspond to axially inward magnets.

The multiple magnets 310 include a pair of axially inward magnets 312a and 312b. The pair of axially inward magnets 312a and 312b are adjacent to each other in the circumferential direction CD. When a boundary between the pair of axially inward magnets 312a and 312b is referred to as an inner boundary BI, the first axially inward magnet 312a and the second axially inward magnet 312b which form the inner boundary BI are the pair of axially inward magnets 312a and 312b. The pair of axially inward magnets 312a and 312b are oriented to be inclined with respect to the motor axis Cm in a manner of facing the stator 200 in the axial direction AD and facing each other in the circumferential direction CD.

The first axially outward magnets 313a and the second axially outward magnets 313b are alternately arranged in the circumferential direction CD. The first axially outward magnets 313a and the second axially outward magnets 313b are alternately arranged one by one in the circumferential direction CD. The first axially outward magnet 313a and the second axially outward magnet 313b are each a magnet oriented to be inclined with respect to the motor axis Cm in a manner of facing a side opposite to the stator 200 in the axial direction AD. In the circumferential direction CD, the first axially outward magnet 313a and the second axially outward magnet 313b are oriented opposite to each other. In the circumferential direction CD, the first axially outward magnet 313a is oriented toward the same side as the first peripheral magnet 311a. In the circumferential direction CD, the second axially outward magnet 313b is oriented toward the same side as the second peripheral magnet 311b. The first axially outward magnet 313a and the second axially outward magnet 313b correspond to axially outward magnets.

The multiple magnets 310 include a pair of axially outward magnets 313a and 313b. The pair of axially outward magnets 313a and 313b are adjacent to each other in the circumferential direction CD. When a boundary between the pair of axially outward magnets 313a and 313b is referred to as an outer boundary BO, the first axially outward magnet 313a and the second axially outward magnet 313b which form the outer boundary BO are the pair of axially outward magnets 313a and 313b. The pair of axially outward magnets 313a and 313b are oriented to be inclined with respect to the motor axis Cm in a manner of facing a side opposite to the stator 200 in the axial direction AD and facing opposite sides in the circumferential direction CD.

In the circumferential direction CD, multiple pairs of axially inward magnets 312a and 312b and multiple pairs of axially outward magnets 313a and 313b are arranged. The pairs of axially inward magnets 312a and 312b and the pairs of axially outward magnets 313a and 313b are alternately arranged one pair by one pair in the circumferential direction CD. The pair of axially inward magnets 312a and 312b and the pair of axially outward magnets 313a and 313b are disposed such that the first axially inward magnet 312a and the first axially outward magnet 313a are adjacent to each other with the first peripheral magnet 311a interposed therebetween in the circumferential direction CD. In other words, the first peripheral magnet 311a is provided between the first axially inward magnet 312a and the first axially outward magnet 313a in the circumferential direction CD. The pair of axially inward magnets 312a and 312b and the pair of axially outward magnets 313a and 313b are disposed such that the second axially inward magnet 312b and the second axially outward magnet 313b are adjacent to each other with the second peripheral magnet 311b interposed therebetween in the circumferential direction CD. In other words, the second peripheral magnet 311b is provided between the second axially inward magnet 312b and the second axially outward magnet 313b in the circumferential direction CD.

The multiple magnets 310 include a pair of peripheral magnets 311a and 311b. The pair of peripheral magnets 311a and 311b are adjacent to each other with the pair of axially inward magnets 312a and 312b interposed therebetween. The pair of peripheral magnets 311a and 311b are oriented to face each other in the circumferential direction CD.

The multiple magnet units 316 include first orientation units 319a and second orientation units 319b. Multiple first orientation units 319a and multiple second orientation units 319b are arranged in the circumferential direction CD. The first orientation units 319a and the second orientation units 319b are alternately arranged one by one in the circumferential direction CD. The first orientation units 319a and the second orientation units 319b are oriented in opposite directions as a whole.

Each of the first orientation units 319a includes one first peripheral magnet 311a, one first axially inward magnet 312a, and one first axially outward magnet 313a. In the first orientation unit 319a, the first peripheral magnet 311a is disposed between the first axially inward magnet 312a and the first axially outward magnet 313a. In the first orientation unit 319a, the first peripheral magnet 311a, the first axially inward magnet 312a, and the first axially outward magnet 313a are fixed to each other to form a unit.

Each of the second orientation units 319b includes one second peripheral magnet 311b, one second axially inward magnet 312b, and one second axially outward magnet 313b. In the second orientation unit 319b, the second peripheral magnet 311b is disposed between the second axially inward magnet 312b and the second axially outward magnet 313b. In the second orientation unit 319b, the second peripheral magnet 311b, the second axially inward magnet 312b, and the second axially outward magnet 313b are fixed to each other to form a unit.

The first rotor 300a and the second rotor 300b are provided point-symmetrically to each other. The first rotor 300a is disposed in a direction rotated by 180 degrees with respect to the second rotor 300b. The first rotor surfaces 301 of the first rotor 300a and the second rotor 300b face each other with the stator 200 interposed therebetween. When respectively viewed from sides opposite to the stator 200, the first rotor 300a and the second rotor 300b have the same arrangement order of the peripheral magnets 311a and 311b, the axially inward magnets 312a and 312b, and the axially outward magnets 313a and 313b in the circumferential direction CD.

In the first rotor 300a and the second rotor 300b, the respective first peripheral magnets 311a are arranged in the axial direction AD. In the first rotor 300a and the second rotor 300b, a pair of axially inward magnets 312a and 312b in one rotor and a pair of axially outward magnets 313a and 313b in the other rotor are arranged in the axial direction AD. In the configuration, the first axially inward magnet 312a in the one rotor and the first axially outward magnet 313a in the other rotor are arranged in the axial direction AD. The second axially inward magnet 312b in the one rotor and the second axially outward magnet 313b in the other rotor are arranged in the axial direction AD. Further, the inner boundary BI in the one rotor and the outer boundary BO in the other rotor are arranged in the axial direction AD.

### <Configuration Group Bb>

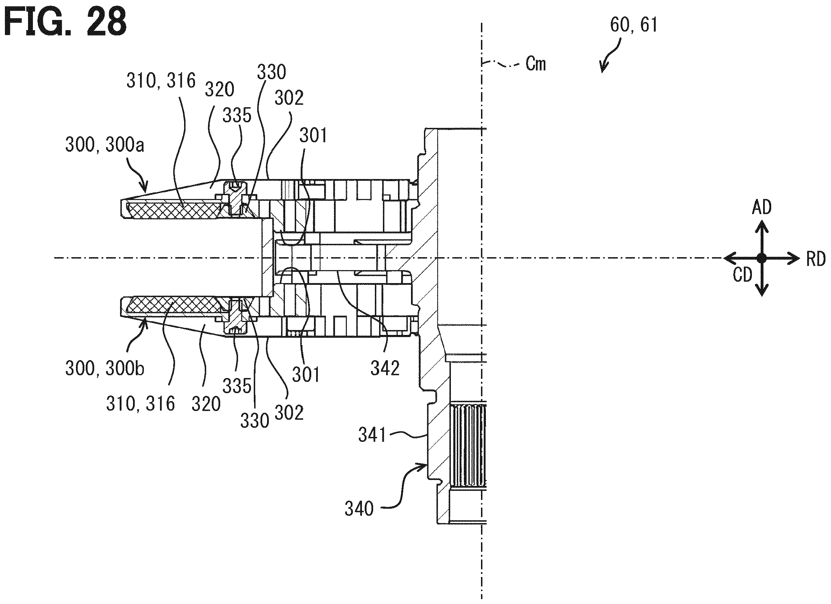

As shown in FIGS. 28, 29, and 30, the rotor 300 includes fixing blocks 330 and magnet fixing tools 335 in addition to the magnet holder 320 and the magnets 310. Each of the magnet fixing tools 335 is a fixing tool such as a bolt, and is made of a metal material or the like. The magnet fixing tool 335 fixes the magnet 310 to the magnet holder 320 via the fixing block 330. In the rotor 300, the magnet 310 and the fixing block 330 are provided on a side of the first rotor surface 301 facing the magnet holder 320. The magnet 310 is overlapped with the magnet holder 320 from the first rotor surface 301 side in the axial direction AD. The magnet 310 is in a state of being sandwiched between the fixing block 330 and the magnet holder 320 in the axial direction AD. The magnet fixing tool 335 penetrates the magnet holder 320 from the second rotor surface 302 and is screwed to the fixing block 330.

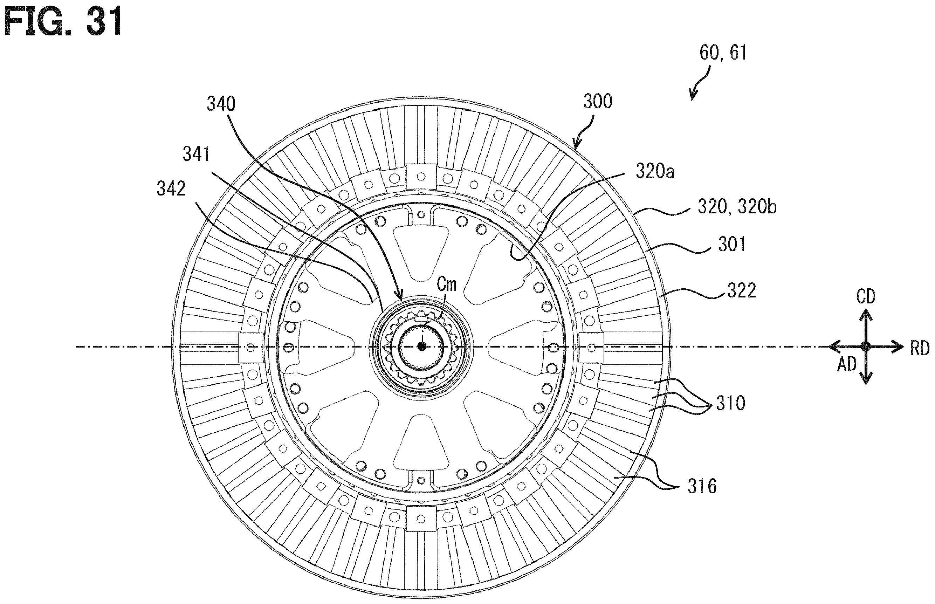

The magnet holder 320 includes a holder main body 321 and an outer peripheral engagement portion 322. The holder main body 321 extends in a direction orthogonal to the motor axis Cm, and is formed in a plate shape as a whole. The holder main body 321 forms a main portion of the magnet holder 320. The holder main body 321 extends in the circumferential direction CD around the motor axis Cm and is formed in an annular shape as a whole. The magnet holder 320 includes a holder inner peripheral end 320a (see FIG. 31) and a holder outer peripheral end 320b. The holder inner peripheral end 320a is an inner peripheral end of the magnet holder 320, and the holder outer peripheral end 320b is an outer peripheral end of the magnet holder 320. The holder main body 321 forms the holder inner peripheral end 320a and the holder outer peripheral end 320b.

The outer peripheral engagement portion 322 is a protruding portion provided in the holder main body 321, and protrudes from the holder main body 321 toward the first rotor surface 301 in the axial direction AD. The outer peripheral engagement portion 322 is provided on the holder outer peripheral end 320b. The outer peripheral engagement portion 322 includes a portion extending toward the radially inner side, and is in a state of sandwiching the magnet 310 between the portion and the holder main body 321. The outer peripheral engagement portion 322 has an engagement tapered surface 322a. The engagement tapered surface 322a is an inclined surface inclined with respect to the motor axis Cm. The engagement tapered surface 322a faces the radially inner side and is inclined with respect to the motor axis Cm to face the holder main body 321. The magnet 310 is in a state of entering between the engagement tapered surface 322a and the holder main body 321 from the radially inner side.

The fixing block 330 is made of a metal material or the like. The fixing block 330 is provided on a side opposite to the outer peripheral engagement portion 322 with the magnet 310 interposed therebetween in the radial direction RD. The fixing block 330 includes a portion extending toward the radially outer side, and is in a state of sandwiching the magnet 310 between the portion and the holder main body 321. The fixing block 330 includes a block tapered surface 330a. The block tapered surface 330a is provided on an outer surface of the fixing block 330. The block tapered surface 330a is an inclined surface inclined with respect to the motor axis Cm. The block tapered surface 330a faces the radially outer side and is inclined with respect to the motor axis Cm to face the holder main body 321. The magnet 310 is in a state of entering between the block tapered surface 330a and the holder main body 321 from the radially outer side.

The magnet 310 is provided between the outer peripheral engagement portion 322 and the fixing block 330 in the radial direction RD. The magnet 310 is fixed to the holder main body 321 in a state of being sandwiched between the outer peripheral engagement portion 322 and the fixing block 330 in the radial direction RD.

As shown in FIG. 31, multiple fixing blocks 330 and multiple magnet fixing tools 335 are arranged in the circumferential direction CD together with the magnets 310. The fixing blocks 330 are in a state of spanning the multiple magnets 310 in the circumferential direction CD. The outer peripheral engagement portion 322 extends along the holder outer peripheral end 320b. The outer peripheral engagement portion 322 extends in the circumferential direction CD around the motor axis Cm and is formed in an annular shape as a whole.

The fixing block 330 and the magnet fixing tool 335 fix the magnet 310 by fixing the magnet unit 316 to the magnet holder 320. The multiple magnet units 316 are arranged in the circumferential direction CD together with the fixing blocks 330 and the magnet fixing tools 335.

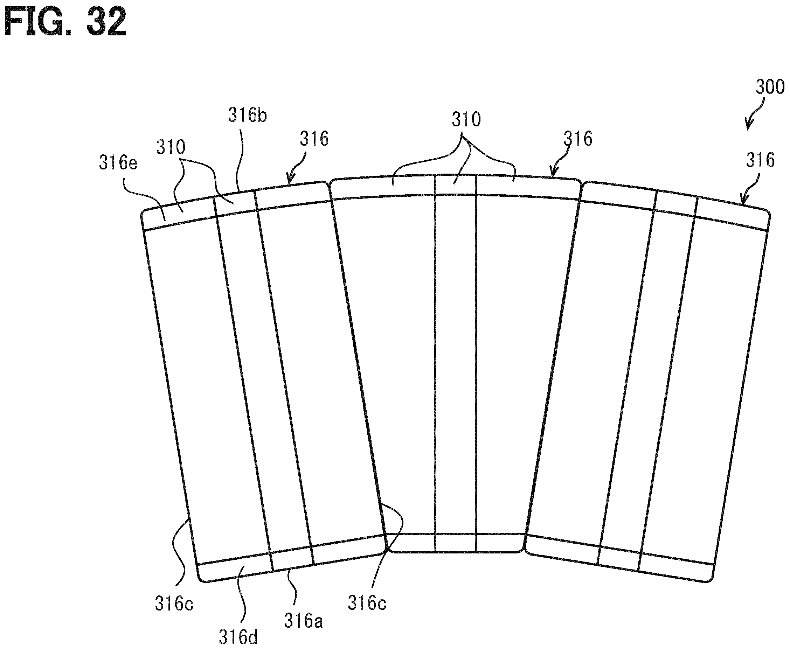

As shown in FIG. 32, the magnet unit 316 includes a unit inner peripheral end 316a, a unit outer peripheral end 316b, and a unit side surface 316c. The unit inner peripheral end 316a is an end portion of the magnet unit 316 on the radially inner side and extends in the circumferential direction CD. The unit inner peripheral end 316a extends, for example, linearly along a tangent line orthogonal to the radial direction RD. The unit outer peripheral end 316b is an end portion of the magnet unit 316 on the radially outer side and extends in the circumferential direction CD. The unit outer peripheral end 316b extends, for example, in a curved shape along an arc to bulge toward the radially outer side.

A pair of unit side surfaces 316c are arranged in the circumferential direction CD in the magnet unit 316. The pair of unit side surfaces 316c extend in the radial direction RD. The unit side surface 316c is in a state of spanning the unit inner peripheral end 316a and the unit outer peripheral end 316b in the radial direction RD.

The magnet unit 316 includes an inner peripheral tapered surface 316d and an outer peripheral tapered surface 316e. The inner peripheral tapered surface 316d is inclined with respect to the motor axis Cm toward the radial direction RD and extends from the unit inner peripheral end 316a toward the radially outer side. The outer peripheral tapered surface 316e is inclined with respect to the motor axis Cm toward the radial direction RD and extends from the unit outer peripheral end 316b toward the radially inner side.

In the magnet unit 316, the unit inner peripheral end 316a, the unit outer peripheral end 316b, the unit side surfaces 316c, the inner peripheral tapered surface 316d, and the outer peripheral tapered surface 316e are formed by at least one magnet 310.

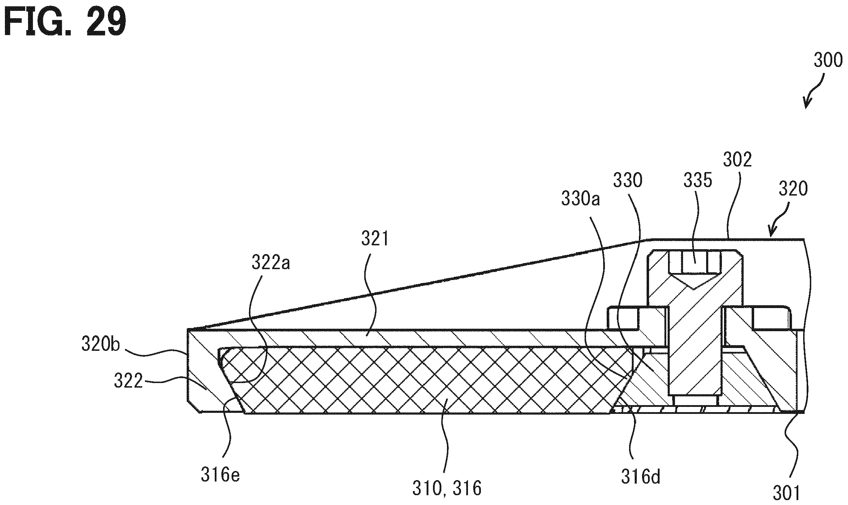

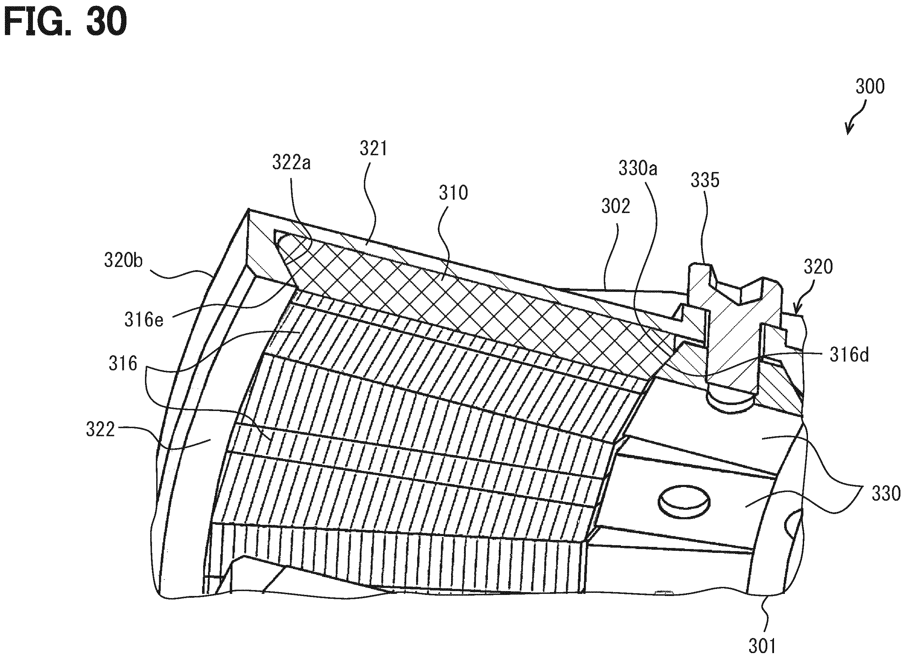

As shown in FIGS. 29 and 30, the magnet unit 316 is sandwiched between the fixing block 330 and the magnet holder 320 in a state in which the inner peripheral tapered surface 316d is overlapped with the block tapered surface 330a. The fixing block 330 fixes the magnet unit 316 to the magnet holder 320 by the block tapered surface 330a pressing the inner peripheral tapered surface 316d toward the magnet holder 320 in the radial direction RD. The magnet unit 316 is sandwiched between the outer peripheral engagement portion 322 and the holder main body 321 in a state in which the outer peripheral tapered surface 316e is overlapped with the engagement tapered surface 322a. The outer peripheral engagement portion 322 and the fixing block 330 fix the magnet unit 316 to the magnet holder 320 in both the axial direction AD and the radial direction RD.

The fixing block 330 corresponds to a fixing support portion, the block tapered surface 330a corresponds to a support inclined surface, and the inner peripheral tapered surface 316d corresponds to a magnet inclined surface.

Next, a method of manufacturing the motor device 60 will be described. A process of manufacturing the motor device 60 includes a process of manufacturing the rotor 300. An operator prepares the magnet unit 316, the magnet holder 320, the fixing block 330, and the magnet fixing tool 335 as a preparation process. Then, the operator inserts the magnet unit 316 between the holder main body 321 and the outer peripheral engagement portion 322 in the magnet holder 320 from the radially inner side. Thereafter, the operator fixes the fixing block 330 to the holder main body 321 by the magnet fixing tool 335 by sandwiching the magnet unit 316 between the fixing block 330 and the holder main body 321 in a state of overlapping the magnet unit 316 with the holder main body 321. When the operator screws the magnet fixing tool 335 into the holder main body 321, the outer peripheral tapered surface 316e is pressed against the engagement tapered surface 322a, and the block tapered surface 330a is pressed against the inner peripheral tapered surface 316d.

### <Configuration Group Bc>

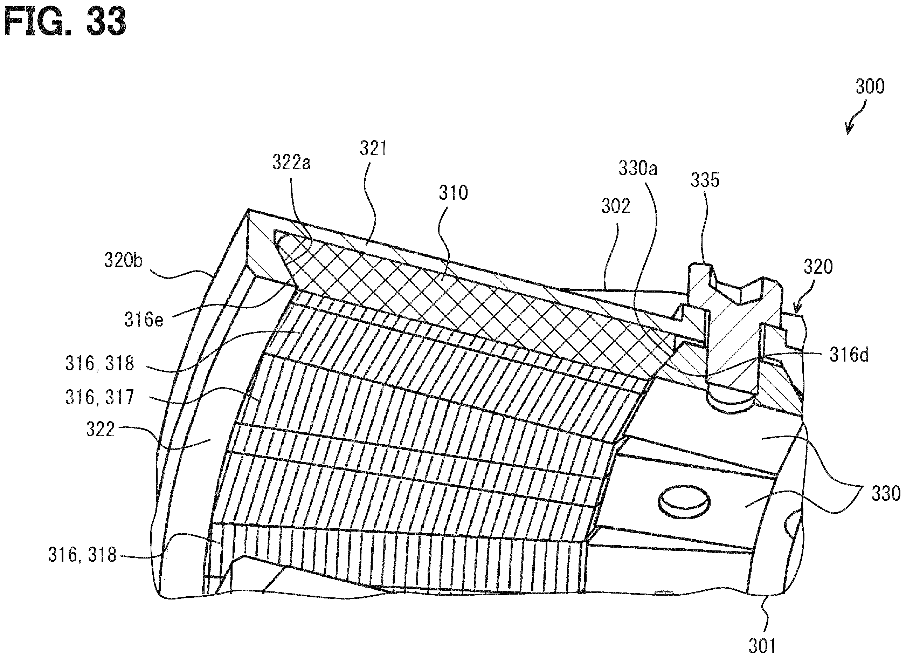

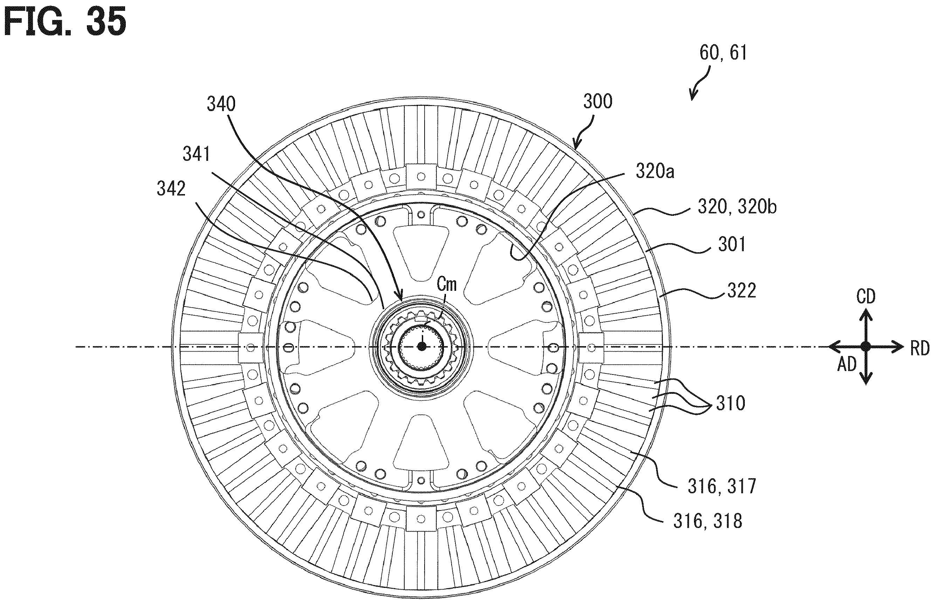

As shown in FIGS. 33, 34, and 35, the multiple magnet units 316 include inclined magnet units 317 and parallel magnet units 318. Multiple inclined magnet units 317 and multiple parallel magnet units 318 are arranged on the rotor 300 in the circumferential direction CD. The inclined magnet units 317 and the parallel magnet units 318 are alternately arranged one by one in the circumferential direction CD.

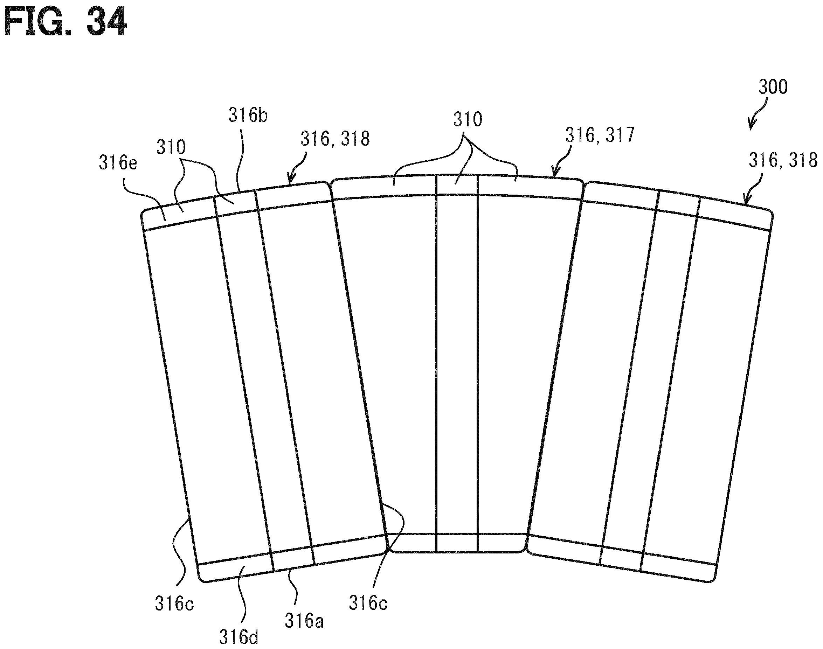

As shown in FIG. 34, in each of the inclined magnet units 317, the pair of unit side surfaces 316c are inclined away from each other toward the radially outer side. In the inclined magnet unit 317, a separation distance between the pair of unit side surfaces 316c gradually increases toward the radially outer side. In the inclined magnet unit 317, the unit outer peripheral end 316b becomes longer than the unit inner peripheral end 316a along the radial direction RD. The inclined magnet unit 317 is formed in a trapezoidal shape or a fan shape as a whole.

In each of the parallel magnet units 318, the pair of unit side surfaces 316c extend in parallel. The pair of unit side surfaces 316c extend in a direction orthogonal to the circumferential direction CD. In the parallel magnet unit 318, the separation distance between the pair of unit side surfaces 316c is uniform along the radial direction RD. In the parallel magnet unit 318, the unit outer peripheral end 316b and the unit inner peripheral end 316a have substantially the same length along the radial direction RD. The parallel magnet unit 318 is formed in a rectangular shape as a whole.

Next, a method of manufacturing the rotor 300 in the method of manufacturing the motor device 60 will be described. In the process of manufacturing the rotor 300, as described above, the operator fixes the magnet unit 316 to the magnet holder 320 by the fixing block 330 and the magnet fixing tool 335. The operator arranges the multiple magnet units 316 on the magnet holder 320 such that the inclined magnet units 317 and the parallel magnet units 318 are alternately arranged one by one in the circumferential direction CD. The operator inserts the unit outer peripheral ends 316b of both the inclined magnet unit 317 and the parallel magnet unit 318 between the outer peripheral engagement portion 322 and the holder main body 321. The operator sets one magnet unit 316 arranged last on the magnet holder 320 to be the parallel magnet unit 318. The operator inserts the last one parallel magnet unit 318 between two inclined magnet units 317 adjacent to each other in the circumferential direction CD and inserts the unit outer peripheral end 316b between the outer peripheral engagement portion 322 and the holder main body 321.

The operator may fix the magnet unit 316 to the magnet holder 320 by the fixing block 330 and the magnet fixing tool 335 every time disposing the magnet unit 316 on the magnet holder 320. The operator may fix all the magnet units 316 to the magnet holder 320 by the fixing blocks 330 and the magnet fixing tools 335 after disposing all the magnet units 316 on the magnet holder 320.

For example, a configuration different from that of the present embodiment is assumed in which all of the multiple magnet units 316 are the inclined magnet units 317. In the configuration, in a process of manufacturing the rotor 300, the operator cannot insert the last one inclined magnet unit 317 between two inclined magnet units 317 adjacent to each other in the circumferential direction CD. The reason is that a separation distance between the two inclined magnet units 317 adjacent to each other in the circumferential direction CD is smaller than a width dimension of the unit outer peripheral end 316b of the last inclined magnet unit 317 on a side radially inward with respect to the outer peripheral engagement portion 322.

Meanwhile, in the present embodiment, the operator can insert the parallel magnet unit 318 between the two inclined magnet units 317 adjacent to each other in the circumferential direction CD by setting the last one magnet unit 316 as the parallel magnet unit 318. The reason is that the separation distance between the two inclined magnet units 317 adjacent to each other in the circumferential direction CD is the same between a region on the radially inward with respect to the outer peripheral engagement portion 322 and a region on the inner side of the outer peripheral engagement portion 322.

### <Configuration Group Bd>

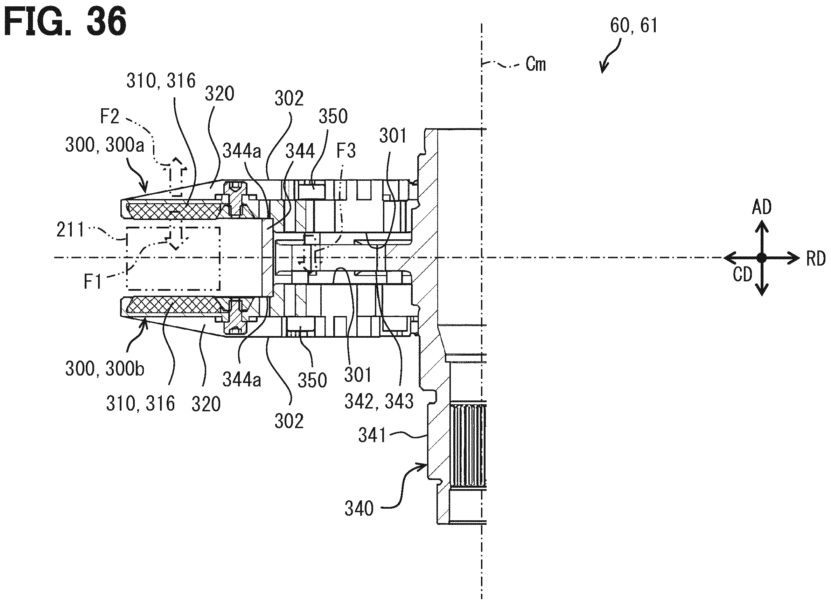

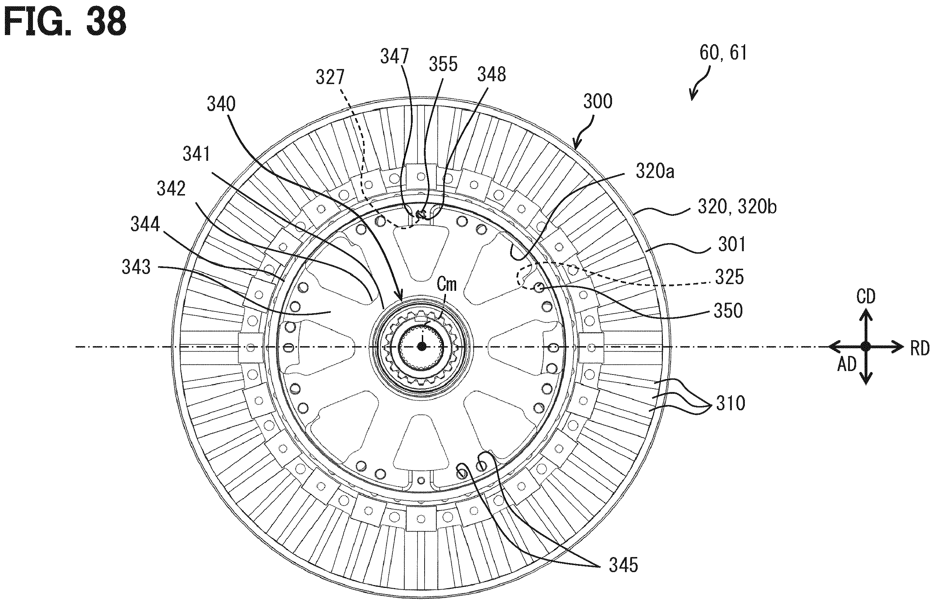

As shown in FIGS. 36, 37, and 38, the rotor 300 includes holder fixing tools 350. Each of the holder fixing tools 350 is a fixing tool such as a bolt, and is made of a metal material or the like. The holder fixing tool 350 fixes the magnet holder 320 to the shaft flange 342. Multiple holder fixing tools 350 are arranged in the circumferential direction CD. The holder fixing tool 350 is screwed to the shaft flange 342 in a state of penetrating the magnet holder 320 from the second rotor surface 302, for example.

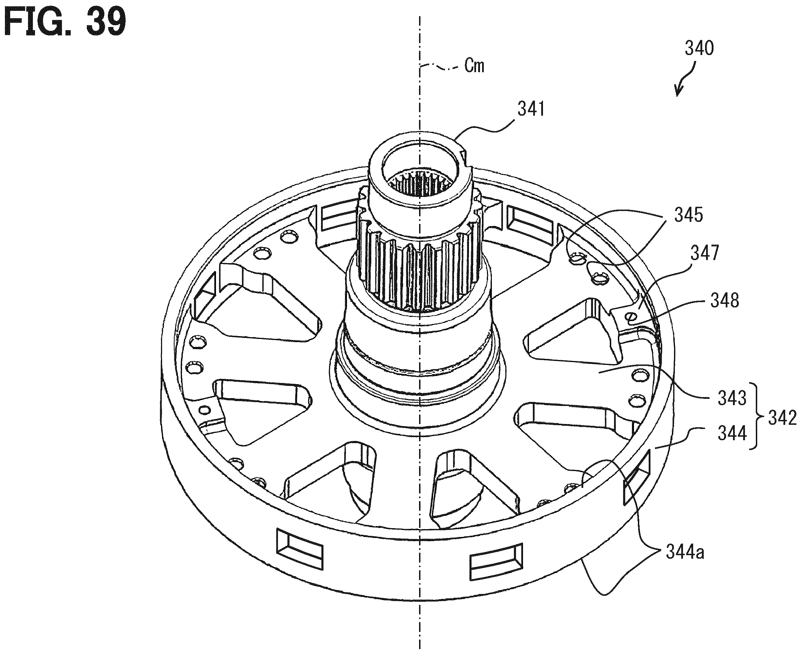

As shown in FIGS. 36, 38, and 39, the shaft flange 342 includes spokes 343 and a rim 344. Each of the spokes 343 extends from the shaft main body 341 toward the radially outer side. Multiple spokes 343 are arranged in the circumferential direction CD. The rim 344 extends in the circumferential direction CD around the motor axis Cm and is formed in an annular shape as a whole. The rim 344 is provided at a position separated from the shaft main body 341 toward the radially outer side. The rim 344 connects two spokes 343 adjacent to each other in the circumferential direction CD. The spoke 343 connects the shaft main body 341 and the rim 344 in the radial direction RD.

The rim 344 includes a pair of rim tip portions 344a. The rim 344 extends from the spoke 343 toward both sides in the axial direction AD. In the rim 344, the pair of rim tip portions 344a are arranged in the axial direction AD. The rim tip portion 344a is located at a position separated from the spoke 343 in the axial direction AD. In the axial direction AD, a height dimension of the rim 344 is larger than a height dimension of the spoke 343.

As shown in FIGS. 36, 37, and 38, the rotor 300 is in a state of being overlapped with the shaft flange 342 from one side in the axial direction AD. In the shaft flange 342, at least the rim tip portion 344a is in contact with the rotor 300. In the shaft 340, a portion on a radially outermost side among portions that are in contact with the rotor 300 is the rim tip portion 344a. The rim tip portion 344a is located at a position of the rotor 300 separated from the magnet 310 toward the radially inner side. The holder fixing tool 350 is at a position separated from the rim tip portion 344a toward the radially inner side. The holder fixing tool 350 is located on a side opposite to the magnet 310 with the rim tip portion 344a interposed therebetween in the radial direction RD.

The holder fixing tool 350 fixes the magnet holder 320 and the shaft flange 342 in a state of being inserted into a holder fixing hole 325 and a flange fixing hole 345. The holder fixing hole 325 is formed in the magnet holder 320. The holder fixing hole 325 penetrates the magnet holder 320 in the axial direction AD. Multiple holder fixing holes 325 are arranged in the circumferential direction CD. The holder fixing hole 325 is located at a position separated from the rim 344 toward the radially inner side. The flange fixing hole 345 is formed in the shaft flange 342. The flange fixing hole 345 is formed in, for example, the spoke 343. The flange fixing hole 345 penetrates the shaft flange 342 in the axial direction AD. Multiple flange fixing holes 345 are arranged in the circumferential direction CD. Each of flange fixing holes 345 is located at a position separated from the rim 344 toward the radially inner side. For example, the holder fixing tool 350 is screwed into the flange fixing hole 345 through the holder fixing hole 325.

As shown in FIG. 36, in the motor device 60, an attraction force F1 is generated to the rotor 300. The attraction force F1 is a force for attracting the magnet 310 toward the coil 211 in the axial direction AD, and is generated by a magnetic force of the magnet 310. The attraction force F1 is a force for bending a peripheral portion of the magnet 310 in the rotor 300 toward the stator 200.

In the motor device 60, a bending stress F2 against the attraction force F1 is generated in the rotor 300. The bending stress F2 is a force for bending the peripheral portion of the magnet 310 in the rotor 300 to the side opposite to the stator 200. The bending stress F2 is generated by the holder fixing tool 350 pressing the rotor 300 toward the stator 200. The holder fixing tool 350 applies a pressing force F3 to the rotor 300. The pressing force F3 is a force for pressing the rotor 300 toward the stator 200 in the axial direction AD. In the rotor 300, the bending stress F2 is generated by the rim tip portion 344a serving as a fulcrum for the pressing force F3. The holder fixing tool 350 corresponds to a pressing member, and the rim tip portion 344a corresponds to a fulcrum.

For example, a configuration different from that of the present embodiment is assumed in which the pressing force F3 is not generated by the holder fixing tool 350. In the configuration, there is a concern that the peripheral portion of the magnet 310 in the rotor 300 approaches the stator 200 in the axial direction AD, and the rotor 300 is deformed to warp toward the stator 200 with the rim tip portion 344a as a fulcrum. Meanwhile, in the present embodiment, deformation of the rotor 300 to warp toward the stator 200 with the rim tip portion 344a as the fulcrum is reduced by the pressing force F3 generated by the holder fixing tool 350.

### <Configuration Group Be>

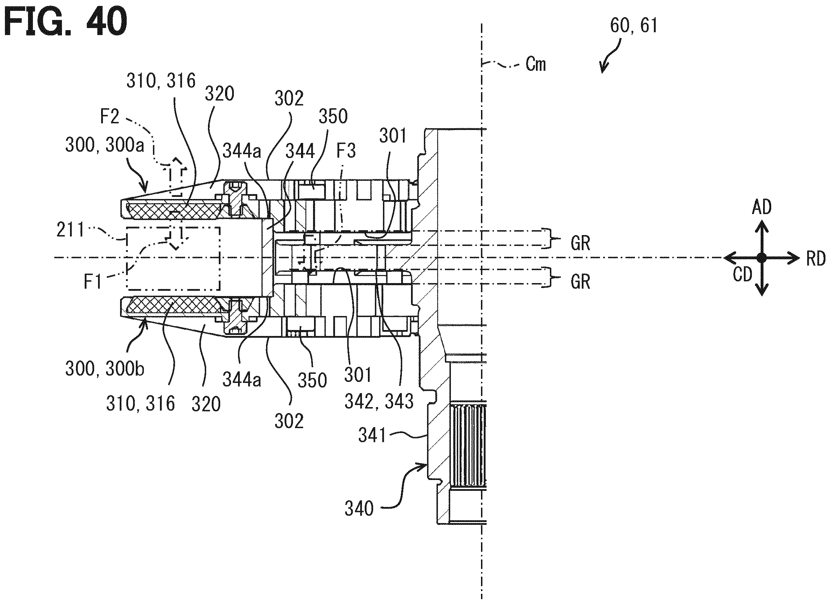

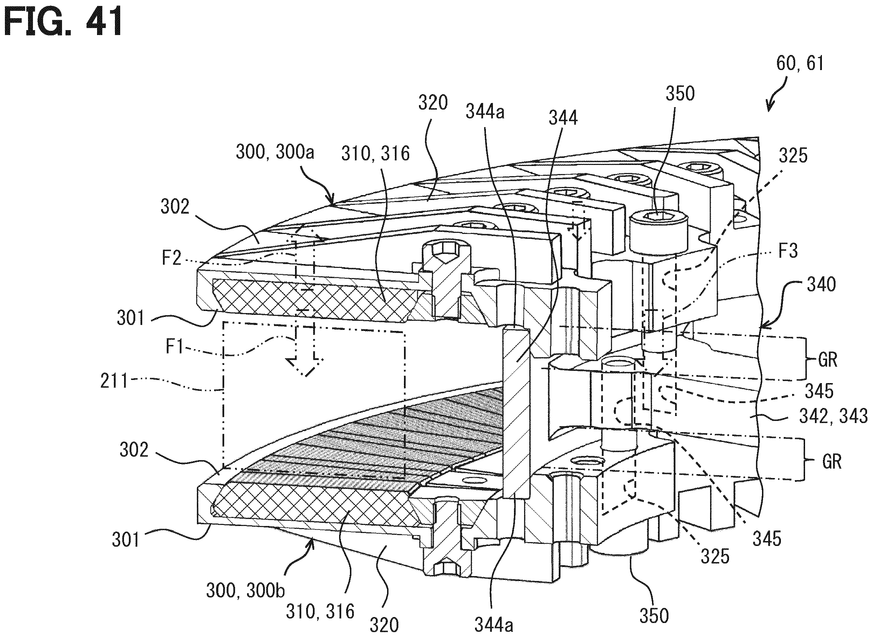

As shown in FIGS. 40 and 41, the holder fixing tool 350 is fixed to a portion of the shaft flange 342 which is radially inward with respect to the rim 344. The holder fixing tool 350 penetrates the magnet holder 320 and is screwed into the spoke 343 at a position separated from the rim 344 toward the radially inner side. A rotor gap GR is provided between the portion of the magnet holder 320 to which the holder fixing tool 350 is fixed and the portion of the spoke 343 to which the holder fixing tool 350 is fixed.

The portion of the magnet holder 320 to which the holder fixing tool 350 is fixed is the holder fixing hole 325 of the magnet holder 320 into which the holder fixing tool 350 is inserted. The portion of the spoke 343 to which the holder fixing tool 350 is fixed is the flange fixing hole 345 of the spoke 343 into which the holder fixing tool 350 is inserted. The rotor gap GR is a separation space formed between the rotor 300 and the shaft flange 342 in the axial direction AD. The rotor gap GR is formed between the magnet holder 320 and the spoke 343 in the axial direction AD. On a side radially inward with respect to the rim 344, the magnet holder 320 and the spoke 343 are separated in the axial direction AD.

The holder fixing tool 350 can increase or decrease a width dimension of the rotor gap GR in the axial direction AD. As a screwing amount of the holder fixing tool 350 into the spoke 343 increases, the portion of the magnet holder 320 to which the holder fixing tool 350 is fixed and the portion of the spoke 343 to which the magnet fixing tool 335 is fixed approach each other, and the rotor gap GR decreases. As the screwing amount of the holder fixing tool 350 increases, the pressing force F3 increases and the bending stress F2 increases. Therefore, the rotor gap GR between the shaft flange 342 and the rotor 300 is secured, and thus the bending stress F2 for resisting the attraction force F1 can be adjusted.

For example, a configuration different from that of the present embodiment is assumed in which the portion of the magnet holder 320 to which the holder fixing tool 350 is fixed and the portion of the spoke 343 to which the holder fixing tool 350 is fixed are in contact with each other. In the configuration, it is difficult to further deform the magnet holder 320 by the holder fixing tool 350, and it is difficult to further increase the pressing force F3. Therefore, for example, there is a concern that when the pressing force F3 is insufficient with respect to the attraction force F1, the shortage cannot be resolved. Meanwhile, in the present embodiment, since the portion of the magnet holder 320 to which the holder fixing tool 350 is fixed and the portion of the spoke 343 to which the holder fixing tool 350 is fixed are separated in the axial direction AD, the pressing force F3 can be further increased.

Next, a method of assembling the rotor 300 and the shaft 340 in the method of manufacturing the motor device 60 will be described. In a process of attaching the rotor 300 to the shaft 340, the operator inserts the holder fixing tool 350 into the holder fixing hole 325 and the flange fixing hole 345. When screwing the holder fixing tool 350 inserted through the holder fixing hole 325 into the flange fixing hole 345, the operator adjusts the screwing amount of the holder fixing tool 350 to such an extent that the peripheral portion of the magnet 310 in the magnet holder 320 is warped toward the second rotor surfaces 302. That is, the operator adjusts the pressing force F3 by the holder fixing tool 350.

Thereafter, in a process of attaching the stator 200 to the rotor 300 and the shaft 340, the operator confirms that the peripheral portion of the magnet 310 in the rotor 300 is not warped in the axial direction AD. When the peripheral portion of the magnet 310 in the rotor 300 is warped in the axial direction AD, the operator adjusts the screwing amount of the holder fixing tool 350 to eliminate warpage of the rotor 300. That is, the operator adjusts the pressing force F3 by the holder fixing tool 350 such that the bending stress F2 is equal to the attraction force F1.

### <Configuration Group Bf>

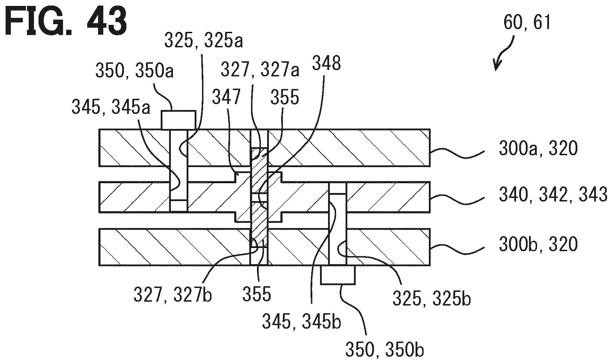

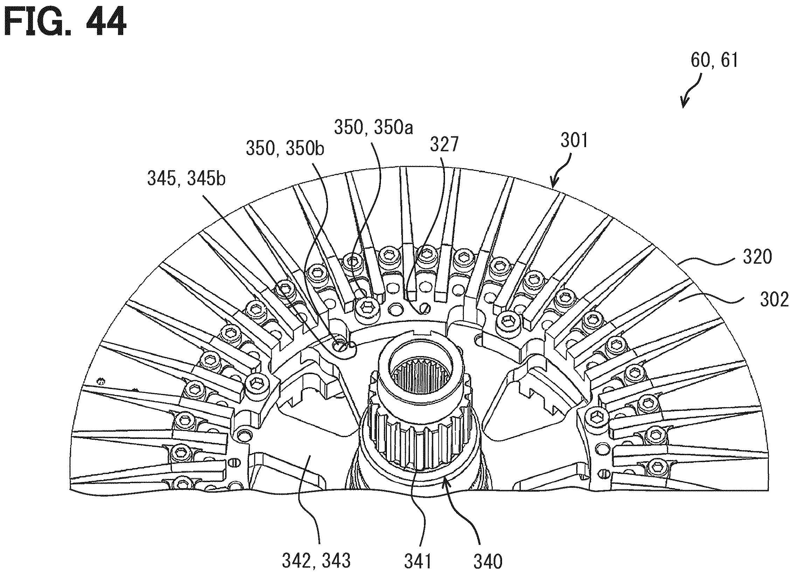

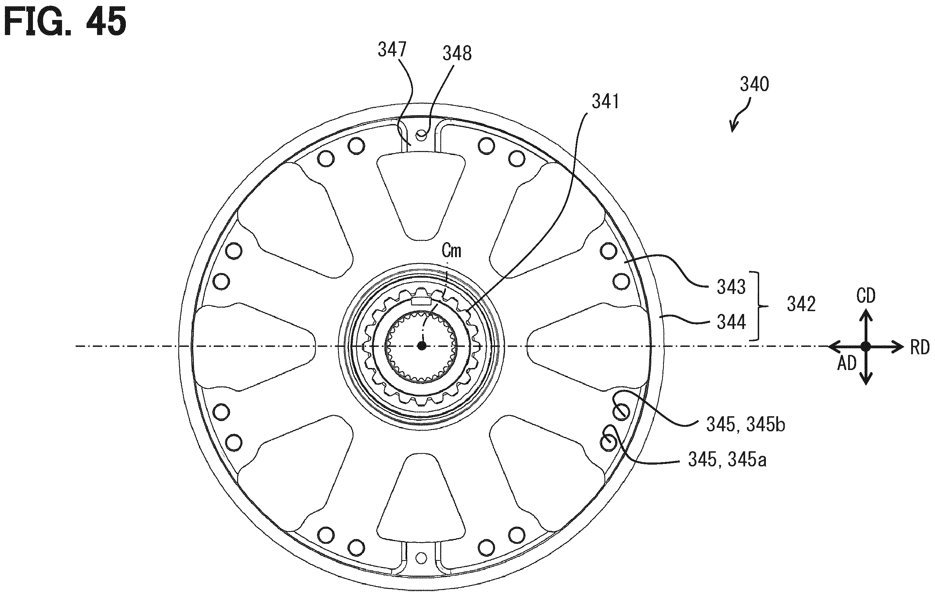

As shown in FIGS. 43, 44, and 45, in the shaft flange 342, the multiple flange fixing holes 345 formed in the spokes 343 include first flange fixing holes 345a and second flange fixing holes 345b. When the holder fixing hole 325 formed in the first rotor 300a is referred to as a first holder fixing hole 325a, the first holder fixing hole 325a and the first flange fixing hole 345a are aligned in the axial direction AD. When the holder fixing hole 325 formed in the second rotor 300b is referred to as a second holder fixing hole 325b, the second holder fixing hole 325b and the second flange fixing hole 345b are aligned in the axial direction AD. The first flange fixing holes 345a and the second flange fixing holes 345b are alternately arranged in the circumferential direction CD, for example.

FIG. 43 is a schematic diagram of a longitudinal cross-section of the motor 61 in which an arrangement of the holder fixing tools 350 is developed on a plane as the first rotor 300a, the second rotor 300b, and the shaft flange 342 are viewed from the radially inner side.

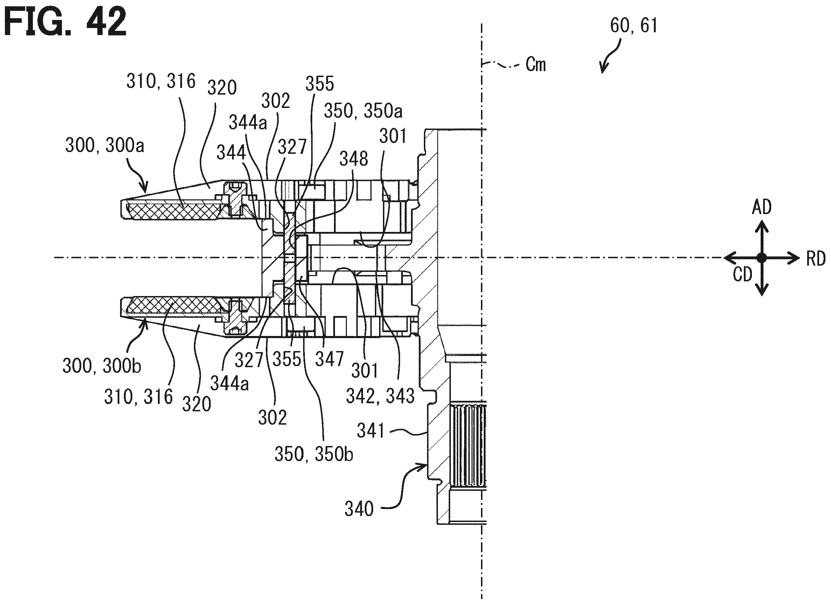

As shown in FIGS. 42, 43, and 44, the motor device 60 includes a first holder fixing tool 350a and a second holder fixing tool 350b as the holder fixing tool 350. The first holder fixing tool 350a fixes the first rotor 300a to the shaft flange 342. The first holder fixing tool 350a is inserted into the first holder fixing hole 325a and the first flange fixing hole 345a. The first holder fixing tool 350a is screwed into the first flange fixing hole 345a through the first holder fixing hole 325a, for example. The first holder fixing tool 350a corresponds to a first fixing tool. The first holder fixing hole 325a corresponds to a first rotor hole, and the first flange fixing hole 345a corresponds to a first shaft hole.

The second holder fixing tool 350b fixes the second rotor 300b to the shaft flange 342. The second holder fixing tool 350b is inserted into the second holder fixing hole 325b and the second flange fixing hole 345b. The second holder fixing tool 350b is screwed into the second flange fixing hole 345b through the second holder fixing hole 325b, for example. The second holder fixing tool 350b corresponds to a second fixing tool. The second holder fixing hole 325b corresponds to a second rotor hole, and the second flange fixing hole 345b corresponds to a second shaft hole.

The first holder fixing hole 325a and the second holder fixing hole 325b are provided at positions separated in the circumferential direction CD. The first flange fixing hole 345a and the second flange fixing hole 345b are located at positions separated from each other in the circumferential direction CD matching a positional relationship between the first holder fixing hole 325a and the second holder fixing hole 325b.

As shown in FIGS. 42 and 43, the motor device 60 includes positioning pins 355. The positioning pins 355 determine a relative position of the rotor 300 with respect to the shaft 340 in a direction orthogonal to the axial direction AD. The positioning pins 355 restrict positional deviation of the rotor 300 with respect to the shaft 340 in the direction orthogonal to the axial direction AD. For example, the positioning pins 355 restrict the positional deviation of the rotor 300 with respect to the shaft 340 in the circumferential direction CD.

As shown in FIGS. 42, 43, and 44, the motor device 60 has holder pin holes 327. Each of the holder pin holes 327 is formed in the rotor 300. The holder pin hole 327 is formed in the magnet holder 320. The holder pin hole 327 penetrates the magnet holder 320 in the axial direction AD. Multiple holder pin holes 327 are arranged in the circumferential direction CD. The holder pin hole 327 is located at a position separated from the rim 344 toward the radially inner side. In the magnet holder 320, the holder fixing holes 325 and the holder pin holes 327 are arranged in the circumferential direction CD.

The motor device 60 has flange pin holes 348. Each of the flange pin holes 348 is formed in the shaft 340. The flange pin hole 348 is formed in the shaft flange 342. The flange pin hole 348 is formed in, for example, the spoke 343. The flange pin hole 348 penetrates the shaft flange 342 in the axial direction AD. Multiple flange pin holes 348 are arranged in the circumferential direction CD. The flange pin hole 348 is located at a position separated from the rim 344 toward the radially inner side. In the shaft 340, the flange fixing holes 345 and the flange pin holes 348 are arranged in the circumferential direction CD.

The holder pin hole 327 and the flange pin hole 348 are aligned in the axial direction AD. The positioning pin 355 is inserted into the holder pin hole 327 and the flange pin hole 348 in a state of spanning the holder pin hole 327 and the flange pin hole 348 in the axial direction AD. The positioning pin 355 is fitted into the holder pin hole 327 and the flange pin hole 348. For example, the positioning pin 355 is press-fitted into the flange pin hole 348 and is clearance-fitted to the holder pin hole 327. The positioning pin 355 is configured such that no rattling is generated in the holder pin hole 327 and the flange pin hole 348. The positioning pin 355 does not move relative to the holder pin hole 327 and the flange pin hole 348 in the direction orthogonal to the axial direction AD. For example, the positioning pin 355 does not move in the circumferential direction CD relative to the holder pin hole 327 and the flange pin hole 348.

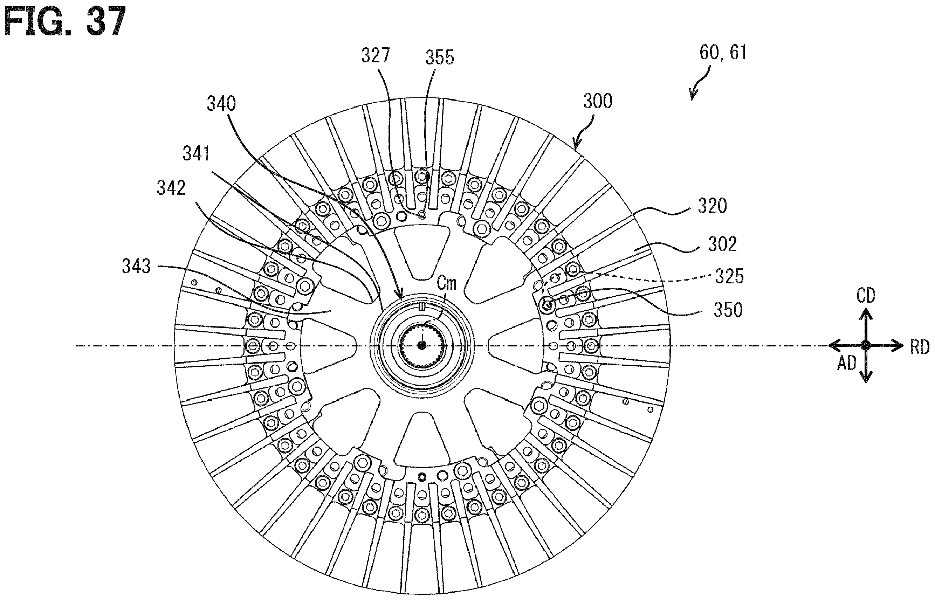

The holder fixing tool 350 is likely to generate rattling with respect to the holder fixing hole 325 and the flange fixing hole 345. For example, it is conceivable that the holder fixing hole 325 moves in the circumferential direction CD relative to the holder fixing hole 325 and the flange fixing hole 345. In this case, there is a concern that the rotor 300 and the shaft 340 are relatively deviated in the circumferential direction CD. Meanwhile, since no rattling is generated between the positioning pin 355 and the holder pin hole 327 and the flange pin hole 348, the positional deviation between the rotor 300 and the shaft 340 is prevented by the positioning pin 355. The positioning pin 355, the holder pin hole 327, and the flange pin hole 348 are also shown in FIGS. 37, 38, and 39.

The holder pin hole 327 formed in the first rotor 300a is referred to as a first holder pin hole 327a, and the holder pin hole 327 formed in the second rotor 300b is referred to as a second holder pin hole 327b. Multiple positioning pins 355 are provided in the motor device 60. The multiple positioning pins 355 include a positioning pin 355 that positions the first rotor 300a and the shaft 340. The positioning pin 355 is fitted into the first holder pin hole 327a. The multiple positioning pins 355 include a positioning pin 355 that positions the second rotor 300b and the shaft 340. The positioning pin 355 is fitted into the second holder pin hole 327b.

The first holder pin hole 327a and the second holder pin hole 327b are arranged in the axial direction AD with the flange pin hole 348 interposed therebetween. That is, the first holder pin hole 327a and the second holder pin hole 327b are not separated from each other in the circumferential direction CD. The positioning pin 355 fitted into the first holder pin hole 327a and the positioning pin 355 fitted into the second holder pin hole 327b are arranged in the axial direction AD. Therefore, in the first rotor 300a and the second rotor 300b, a difference in balance such as rotational balance is less likely to occur due to the positioning pin 355.

For example, a configuration different from that of the present embodiment is assumed in which the first holder pin hole 327a and the second holder pin hole 327b are deviated in position in the circumferential direction CD. In the configuration, there is a concern that a difference in balance occurs between the first rotor 300a and the second rotor 300b due to the positional deviation of the positioning pin 355 in the circumferential direction CD.

The shaft flange 342 includes a flange thick portion 347. The flange thick portion 347 is a portion of the shaft flange 342 that is thicker than other portions of the shaft flange 342. The flange thick portion 347 is in a state of protruding from the spoke 343 on each of one side and the other side in the axial direction AD.

The flange pin hole 348 is formed in the flange thick portion 347 of the shaft flange 342. The flange pin hole 348 penetrates the flange thick portion 347 in the axial direction AD. In the motor device 60, the flange pin hole 348 is located in the flange thick portion 347, and thus the flange pin hole 348 and the holder pin hole 327 are disposed as close as possible in the axial direction AD. A portion of the positioning pin 355 between the flange pin hole 348 and the holder pin hole 327 in the axial direction AD is as short as possible. Therefore, the portion of the positioning pin 355 between the flange pin hole 348 and the holder pin hole 327 is less likely to be deformed, and the rotor 300 is less likely to be deviated relative to the shaft 340 in the circumferential direction CD.

Since the flange pin hole 348 is formed in the flange thick portion 347, a portion of the positioning pin 355 fitted in the flange pin hole 348 is as long as possible in the axial direction AD. Therefore, the positioning pin 355 stands up easily with respect to the flange pin hole 348 with high positional accuracy. Since the shaft flange 342 includes the flange thick portion 347, a thickness of the shaft flange 342 is locally increased. Therefore, for example, unlike a configuration in which the thickness of the entire shaft flange 342 is large, rattling between the positioning pin 355 and the flange pin hole 348 is less likely to occur while reducing the weight of the shaft flange 342.

In the motor device 60, the first rotor 300a and the second rotor 300b have a point-symmetrical relation. Therefore, one of two members used as the rotor 300 can be defined as the first rotor 300a, and the other can be defined as the second rotor 300b when being disposed to be point-symmetrical with respect to the first rotor 300a. In this way, by making the member used as the first rotor 300a and the member used as the second rotor 300b common, it is possible to reduce a cost for manufacturing the first rotor 300a and the second rotor 300b.

### <Configuration Group Ca>

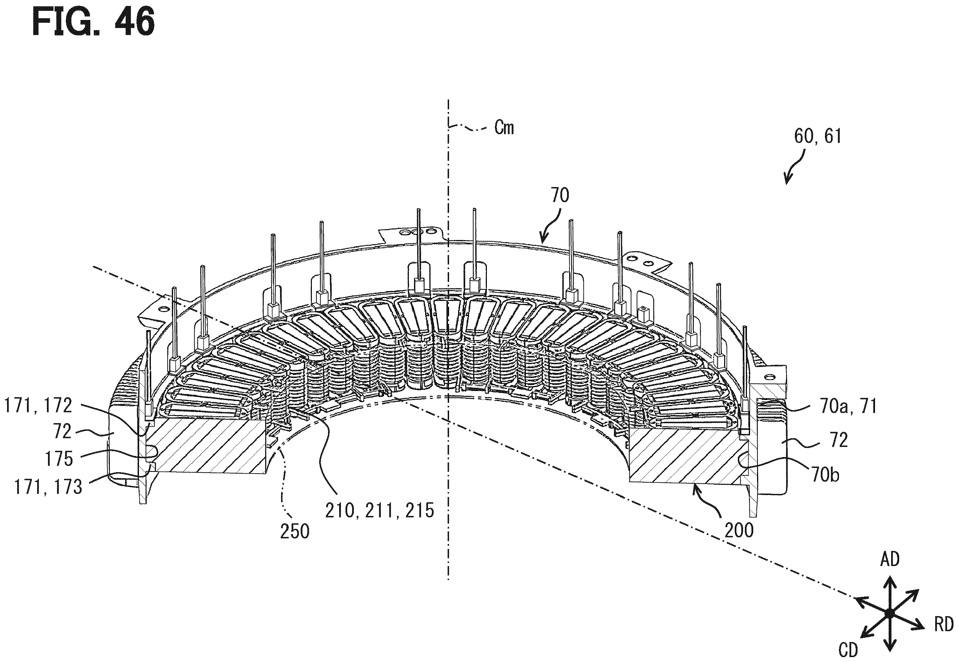

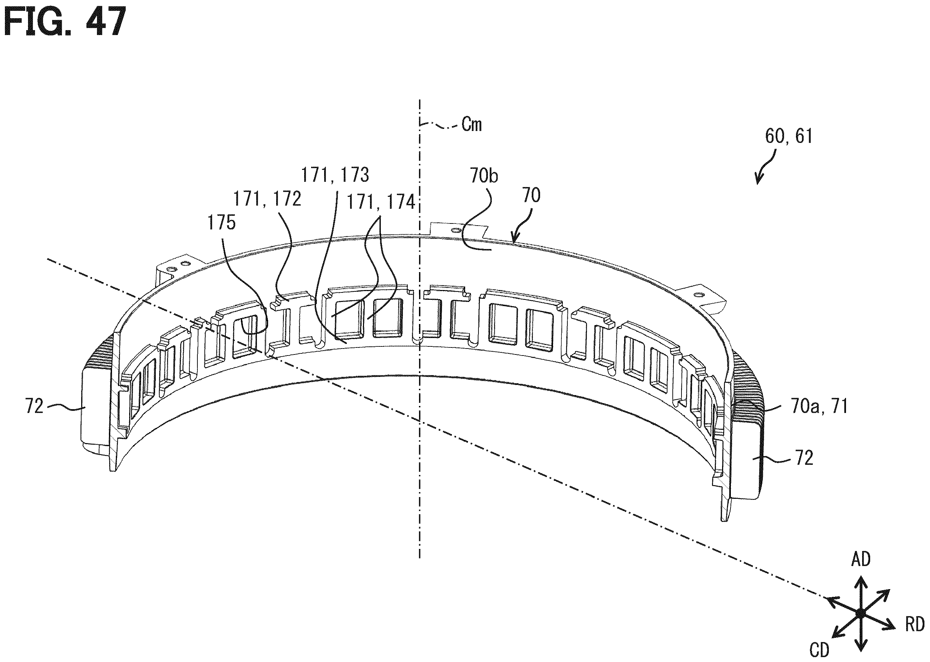

As shown in FIGS. 46 and 47, the motor housing 70 has an inner peripheral surface 70b. The inner peripheral surface 70b is included in an inner surface of the motor housing 70, and extends in an annular shape in the circumferential direction CD as a whole.

The motor housing 70 includes stator holding portions 171. Each of the stator holding portions 171 is a projection portion provided on the inner peripheral surface 70b. The stator holding portion 171 protrudes from the housing main body 71 toward the radially inner side. Multiple stator holding portions 171 are arranged in at least one of the circumferential direction CD and the axial direction AD. The stator holding portion 171 forms the inner peripheral surface 70b together with the housing main body 71.

The multiple stator holding portions 171 include first peripheral holding portions 172, second peripheral holding portions 173, and axial holding portions 174. Each of the first peripheral holding portions 172 and each of the second peripheral holding portions 173 extend along the housing main body 71 in the circumferential direction CD. The first peripheral holding portion 172 and the second peripheral holding portion 173 are arranged in the axial direction AD and are provided parallel to each other. The first peripheral holding portion 172 is provided closer to the rear frame 370 than the second peripheral holding portion 173 is in the axial direction AD. The first peripheral holding portion 172 is located at a position separated from an end portion of the motor housing 70, which is on a rear frame 370 side, toward the second peripheral holding portion 173. The second peripheral holding portion 173 is located at a position separated from an end portion of the motor housing 70, which is on a side opposite to the inverter device 80, toward the first peripheral holding portion 172.

The axial holding portion 174 extends along the housing main body 71 in the axial direction AD. Multiple axial holding portions 174 are arranged in the circumferential direction CD. The axial holding portion 174 is in a state of spanning the first peripheral holding portion 172 and the second peripheral holding portion 173 in the axial direction AD. The axial holding portion 174 connects the first peripheral holding portion 172 and the second peripheral holding portion 173.

The motor housing 70 includes holding recess portions 175. Each of the holding recess portions 175 is formed by the first peripheral holding portion 172, the second peripheral holding portion 173, and the axial holding portion 174. The holding recess portion 175 is formed between the first peripheral holding portion 172 and the second peripheral holding portion 173 in the axial direction AD and between two adjacent axial holding portions 174 in the circumferential direction CD. The holding recess portion 175 is a recess portion recessed toward the radially outer side with respect to the first peripheral holding portion 172, the second peripheral holding portion 173, and the axial holding portion 174. Multiple holding recess portions 175 are arranged in the circumferential direction CD together with the axial holding portions 174.

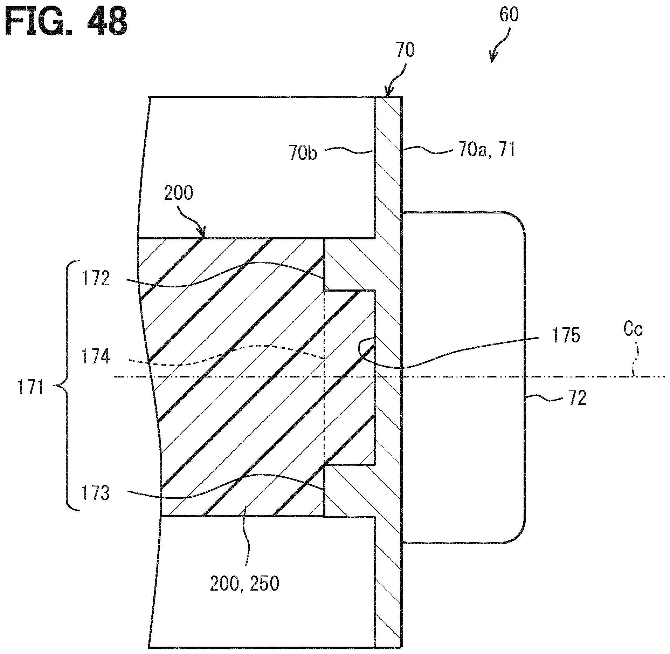

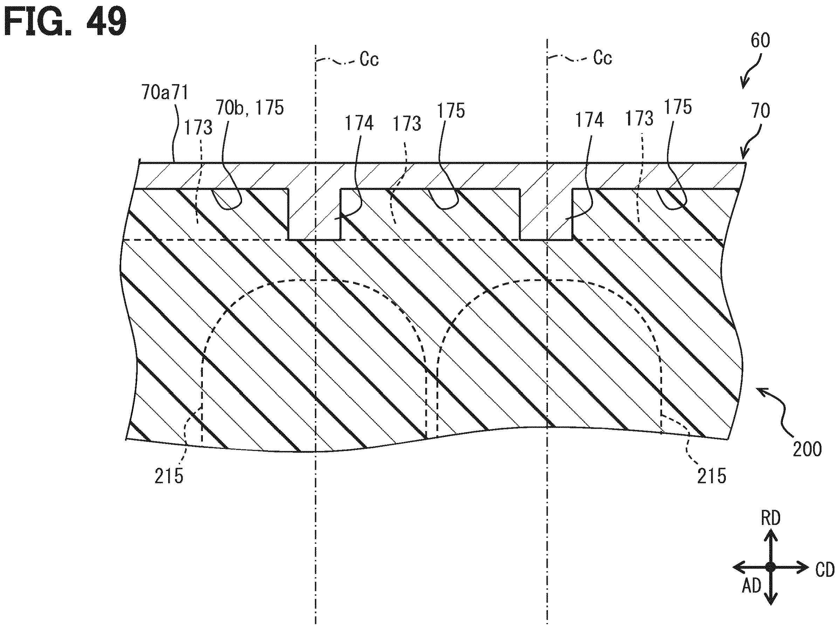

As shown in FIGS. 48 and 49, inside the motor housing 70, the coil protection portion 250 is overlapped with the inner peripheral surface 70b. The coil protection portion 250 is in close contact with the inner peripheral surface 70b. The coil protection portion 250 is in a state of entering between the first peripheral holding portion 172 and the second peripheral holding portion 173 in the axial direction AD. The coil protection portion 250 is in a state of entering between two adjacent axial holding portions 174 in the circumferential direction CD. The coil protection portion 250 is in a state of entering the inside of the holding recess portion 175, and is overlapped with an inner surface of the holding recess portion 175.

The coil protection portion 250 is in a state of spanning the first peripheral holding portion 172 and the second peripheral holding portion 173 in the axial direction AD. For example, the coil protection portion 250 is overlapped with tip end surfaces of the first peripheral holding portion 172 and the second peripheral holding portion 173. The coil protection portion 250 may protrude outward from the first peripheral holding portion 172 and the second peripheral holding portion 173 in the axial direction AD.

As shown in FIG. 49, the multiple axial holding portions 174 are arranged matching the positions of the coil portions 215 in the circumferential direction CD. The number of the axial holding portions 174 arranged in the circumferential direction CD is the same as the number of the coil portions 215 arranged in the circumferential direction CD. The axial holding portion 174 and the coil portion 215 are aligned in the axial direction AD and face each other in the axial direction AD. The coil portion 215 is provided at a position in which a coil axis Cc passes through the axial holding portion 174. The coil axis Cc is a linear virtual line extending in the radial direction RD through a center of the coil portion 215. For example, the coil portion 215 is disposed at a position in which the coil axis Cc passes through a center of the axial holding portion 174 in the circumferential direction CD. The coil portion 215 is disposed at a position in which the coil axis Cc passes through a center of the axial holding portion 174 in the axial direction AD.

FIG. 49 is a horizontal cross-sectional view of the motor housing 70 and the stator 200 which are developed such that the outer peripheral surface 70a extends linearly. The motor housing 70 corresponds to an electric machine housing, and the axial holding portion 174 corresponds to an axial projection portion.

The coil protection portion 250 preferably has a high thermal conduction property and a high electrical insulation property. However, if it is difficult to increase both the thermal conduction property and the electrical insulation property in the coil protection portion 250, it is preferable to increase the thermal conduction property in preference to the electrical insulation property. For example, the thermal conduction property of the coil protection portion 250 is higher than the thermal conduction property of the bobbin 240. Specifically, the thermal conductivity of the coil protection portion 250 is higher than the thermal conductivity of the bobbin 240. On the other hand, the electrical insulation property of the coil protection portion 250 is lower than the electrical insulation property of the bobbin 240. Specifically, a dielectric constant of the coil protection portion 250 is higher than a dielectric constant of the bobbin 240.

Next, a method of manufacturing the stator 200 in the method of manufacturing the motor device 60 will be described. In a process of manufacturing the stator 200, the operator prepares the coil unit 210 and the motor housing 70 as a preparation process. Then, the operator installs the coil unit 210 inside the motor housing 70, and attaches the motor housing 70 together with the coil units 210 to a mold for molding. The operator molds the coil protection portion 250 inside the motor housing 70 by injection molding. In this way, in the motor device 60 in which the coil unit 210 and the motor housing 70 are integrated with the coil protection portion 250 by insert molding, the coil protection portion 250 is in close contact with both the coil portion 215 and the inner peripheral surface 70b.

### <Configuration Group Cb>

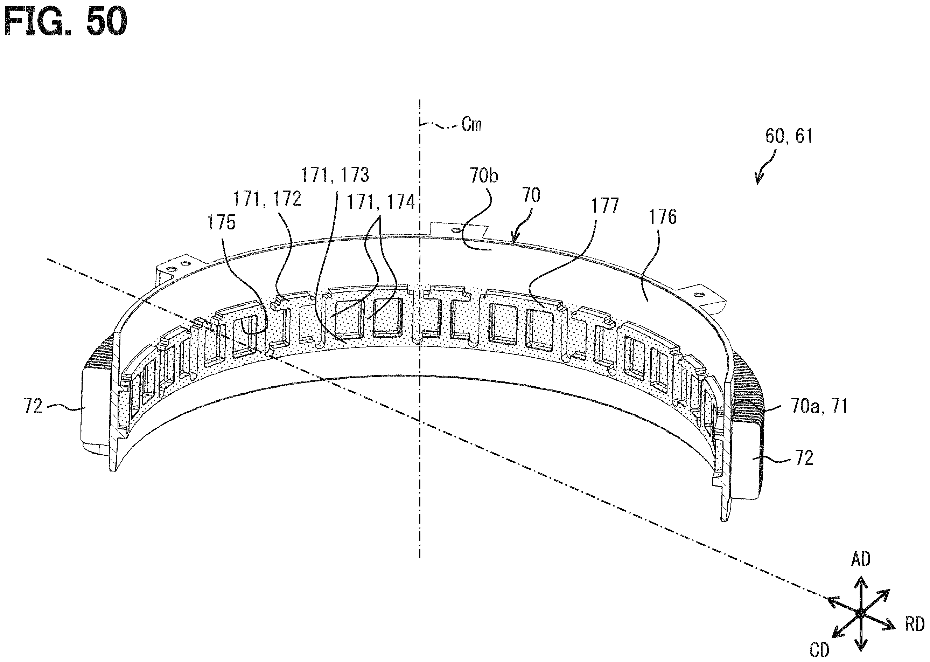

As shown in FIG. 50, in the motor housing 70, the inner peripheral surface 70b includes a housing base surface 176 and a housing rough surface 177. The housing rough surface 177 is a surface rougher than the housing base surface 176. The housing rough surface 177 is provided with, for example, many minute irregularities, thus being a rough surface. The housing rough surface 177 is formed by performing surface roughening, which is used for forming a rough surface, on the motor housing 70. Examples of the surface roughening for forming the housing rough surface 177 include mechanical processing and scientific processing.

The housing base surface 176 is provided outward with respect to the stator holding portion 171 in the axial direction AD. For example, the housing base surface 176 is provided outward with respect to the first peripheral holding portion 172 and the second peripheral holding portion 173 in the axial direction AD. The housing base surface 176 is formed along the inner peripheral surface 70b in an annular shape.

The housing rough surface 177 includes an outer surface of the stator holding portion 171 and is provided on an inner side of the housing base surface 176 in the axial direction AD. The housing rough surface 177 is provided at least on the inner surface of the holding recess portion 175. The housing rough surface 177 is provided on the outer surface of the stator holding portion 171. For example, the housing rough surface 177 is provided on outer surfaces of the first peripheral holding portion 172, the second peripheral holding portion 173, and the axial holding portion 174. In FIG. 50, the housing rough surface 177 is indicated by dot hatching.

On the inner peripheral surface 70b, at least a portion with which the coil protection portion 250 is overlapped is the housing rough surface 177. The housing rough surface 177 is a surface with which the coil protection portion 250 is more easily to be in close contact than the housing base surface 176. The housing rough surface 177 tends to have a larger surface area than the housing base surface 176. Therefore, a contact area between the housing rough surface 177 and the coil protection portion 250 tends to be large.

### <Configuration Group Cc>

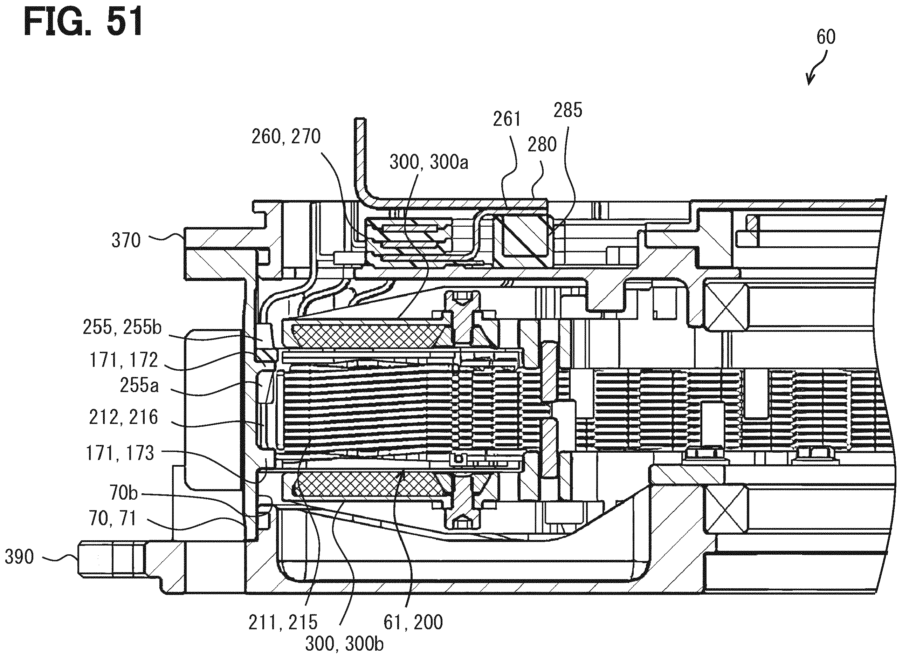

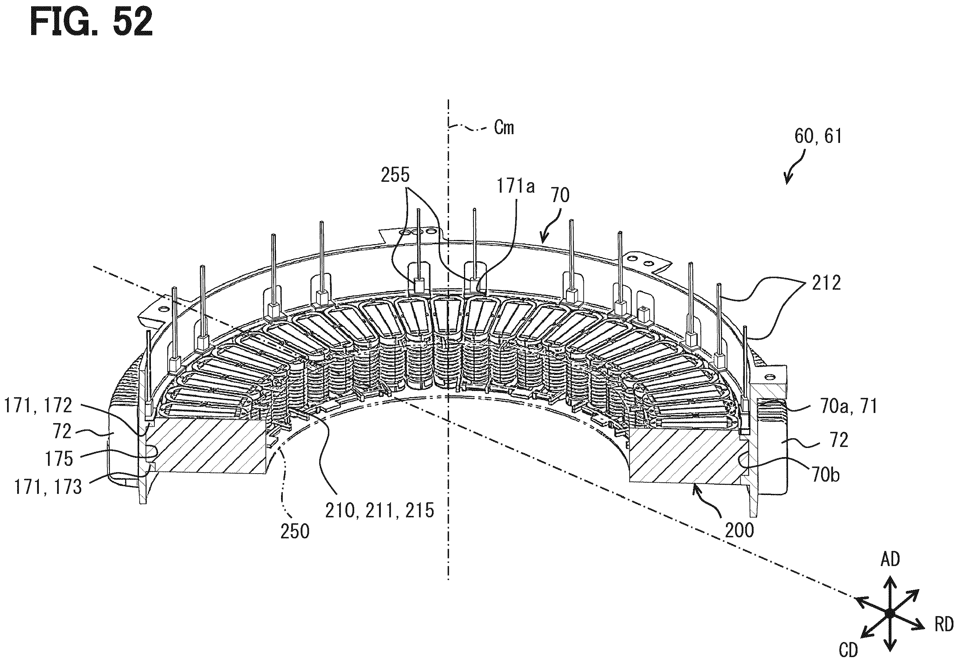

As shown in FIGS. 51 and 52, in the stator 200, the electric power lead-out wire 212 is led out from the coil protection portion 250. A grommet 255 is made of a resin material or the like, and has an electrical insulation property. A portion of the electric power lead-out wire 212 that is led out from the coil protection portion 250 is protected by the grommet 255. The grommet 255 is provided in the motor device 60. The grommet 255 covers the electric power lead-out wire 212 in a state of straddling a boundary between a portion of the electric power lead-out wire 212 embedded in the coil protection portion 250 and a portion exposed from the coil protection portion 250. In FIG. 51, an illustration of the coil protection portion 250 is omitted.

The grommet 255 includes an embedded portion 255a and an exposed portion 255b. The embedded portion 255a is a portion of the grommet 255 embedded in the coil protection portion 250. The exposed portion 255b is a portion of the grommet 255 exposed from the coil protection portion 250. The exposed portion 255b extends from the embedded portion 255a toward outside of the coil protection portion 250. The exposed portion 255b extends, for example, from the embedded portion 255a toward the rear frame 370 in the axial direction AD.

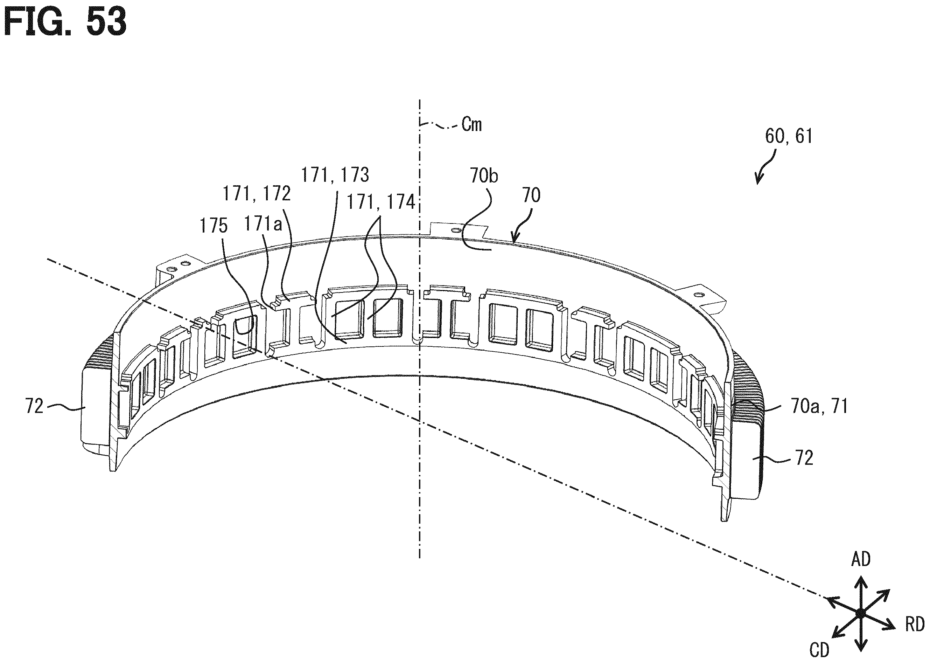

The electric power lead-out wire 212 is led out from the coil protection portion 250 to extend in the axial direction AD along the inner peripheral surface 70b in the motor housing 70. As shown in FIGS. 52 and 53, the motor housing 70 is provided with a lead-out groove portion 171a. The electric power lead-out wire 212 is led out from the coil protection portion 250 through the lead-out groove portion 171a. The lead-out groove portion 171a is provided in the stator holding portion 171. The lead-out groove portion 171a is provided in the first peripheral holding portion 172, and penetrates the first peripheral holding portion 172 in the axial direction AD in a state of being opened to the radially inner side.

As shown in FIGS. 51 and 52, the grommet 255 covers at least a portion of the electric power lead-out wire 212 which passes through the lead-out groove portion 171a. The grommet 255 is in a state of entering the lead-out groove portion 171a together with the electric power lead-out wire 212 from the radially inner side. The grommet 255 is in close contact with an inner surface of the lead-out groove portion 171a. The grommet 255 fills a gap between the inner surface of the lead-out groove portion 171a and the electric power lead-out wire 212. The grommet 255 is elastically deformable, for example, and is fitted into the lead-out groove portion 171a by being elastically deformed. The electric power lead-out wire 212 corresponds to a coil lead-out wire, and the grommet 255 corresponds to a lead-out wire protection portion.

Next, a method of manufacturing the coil protection portion 250 in the method of manufacturing the stator 200 will be described. In a process of manufacturing the coil protection portion 250, the operator prepares the coil unit 210, the motor housing 70, and the grommet 255 as a preparation process. Then, the operator attaches the grommet 255 to the electric power lead-out wire 212 of the coil unit 210. The operator performs an operation of installing the coil unit 210 inside the motor housing 70 and an operation of fitting the grommet 255 together with the electric power lead-out wire 212 into the lead-out groove portion 171a.

The operator attaches the coil unit 210 and the motor housing 70, which is attached with the grommet 255, to the mold, and molds the coil protection portion 250. In this case, the grommet 255 is fitted into the lead-out groove portion 171a, and thus the grommet 255 prevents a molten resin from flowing out from the lead-out groove portion 171a.

### <Configuration Group Cd>

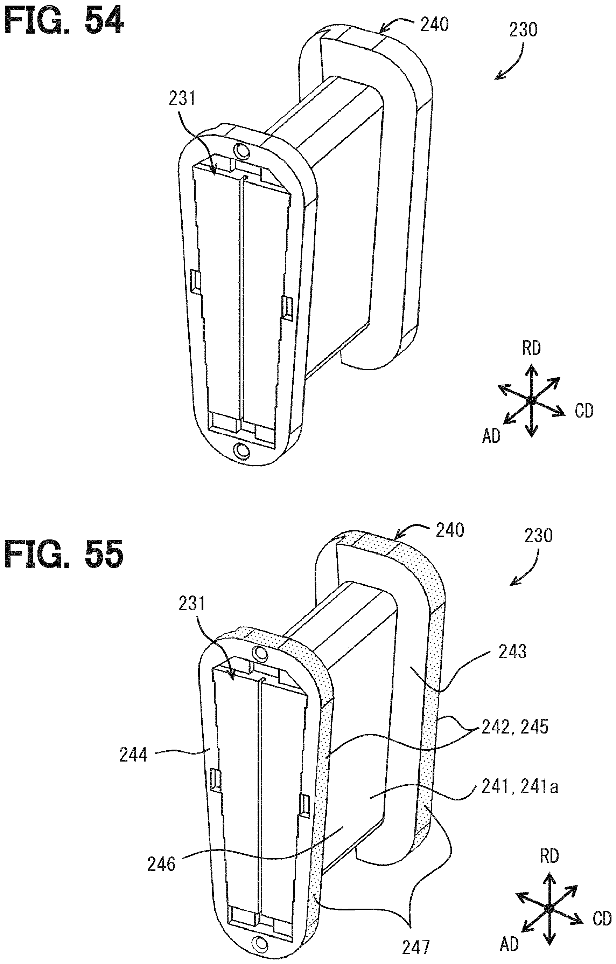

As shown in FIG. 54, the core unit 230 includes the core 231 and the bobbin 240. The core unit 230 is permanently covered with the coil protection portion 250 together with the coil 211, and is protected by the coil protection portion 250. The coil protection portion 250 is in close contact with at least a part of the bobbin 240.

The bobbin 240 is made of a resin material or the like. The bobbin 240 is made of, for example, an epoxy-based thermosetting resin. The bobbin 240 is, for example, a molded resin formed by molding. The bobbin 240 has an electrical insulation property. The bobbin 240 has a thermal conduction property, and heat from the core 231 is easily transferred. The bobbin 240 has thermal conductivity higher than that of air, for example.

The bobbin 240 is in a state of covering at least a part of the core 231 and protects the core 231. The bobbin 240 covers the core 231 to extend in the direction orthogonal to the axial direction AD. The bobbin 240 is formed in an annular shape as a whole. The bobbin 240 is in close contact with an outer surface of the core 231. The bobbin 240 easily conducts heat from the coil 211 to the coil protection portion 250.

The bobbin 240 preferably has a high thermal conduction property and a high electrical insulation property. However, when it is difficult to increase both the thermal conduction property and the electrical insulation property in the bobbin 240, it is preferable to increase the electrical insulation property in preference to the thermal conduction property. For example, the electrical insulation property of the bobbin 240 is higher than the electrical insulation property of the coil protection portion 250. Specifically, the dielectric constant of the bobbin 240 is smaller than the dielectric constant of the coil protection portion 250. On the other hand, the thermal conduction property of the bobbin 240 is lower than the thermal conduction property of the coil protection portion 250. Specifically, the thermal conductivity of the bobbin 240 is smaller than the thermal conductivity of the coil protection portion 250.

### <Configuration Group Ce>

As shown in FIG. 55, the bobbin 240 includes a bobbin trunk portion 241 and bobbin flanges 242. The bobbin trunk portion 241 is formed in a columnar shape as a whole and extends in the axial direction AD. An outer peripheral surface 241a of the bobbin trunk portion 241 is formed in an annular shape to extend in the direction orthogonal to the axial direction AD.

Each of the bobbin flanges 242 extends outward from the outer peripheral surface 241a. The bobbin flange 242 extends from the outer peripheral surface 241a in the direction orthogonal to the axial direction AD, and is formed in a plate shape as a whole. A pair of bobbin flanges 242 are provided side by side in the axial direction AD. In the bobbin 240, the coil 211 is wound around the bobbin trunk portion 241 between the pair of bobbin flanges 242.

The bobbin flange 242 has a flange inner plate surface 243, a flange outer plate surface 244, and a flange end surface 245. In the bobbin flange 242, a plate surface in the pair of plate surfaces which is on a bobbin trunk portion 241 side is the flange inner plate surface 243, and a plate surface opposite to the bobbin trunk portion 241 is the flange outer plate surface 244. The flange inner plate surfaces 243 of the pair of bobbin flanges 242 face each other. The flange end surface 245 is a tip end surface of the bobbin flange 242 and extends in the direction orthogonal to the axial direction AD. The flange end surface 245 is located at a position separated from the bobbin trunk portion 241 toward an outer side.

An outer surface of the bobbin 240 includes a bobbin base surface 246 and a bobbin rough surface 247. The bobbin rough surface 247 is a surface rougher than the bobbin base surface 246. The bobbin rough surface 247 is provided with, for example, many minute irregularities, thus being a rough surface. The bobbin rough surface 247 is formed by performing surface roughening, which is used for forming a rough surface, on the bobbin 240. Examples of the surface roughening for forming the bobbin rough surface 247 include mechanical processing and scientific processing. In FIG. 55, the bobbin rough surface 247 is indicated by dot hatching.

The bobbin base surface 246 includes, for example, the outer peripheral surface 241a, the flange inner plate surface 243, and the flange outer plate surface 244. The bobbin rough surface 247 includes, for example, the flange end surface 245. The flange outer plate surface 244 may be included in the rough surface.

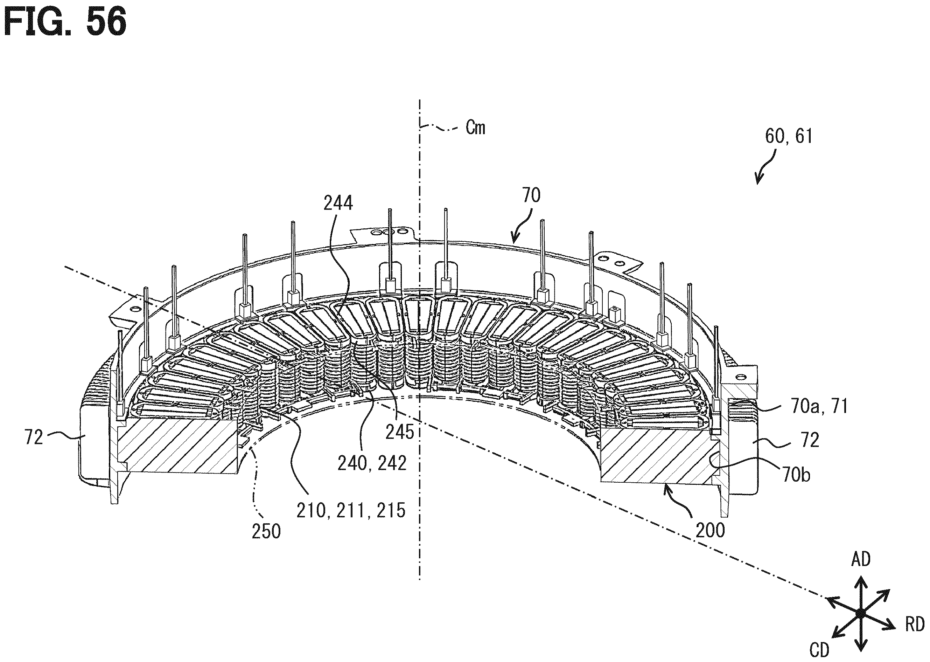

In the bobbin 240, at least a portion with which the coil protection portion 250 is overlapped is the bobbin rough surface 247. As shown in FIG. 56, in the coil unit 210, in a state in which the coil 211 is wound around the bobbin 240, at least the flange outer plate surface 244 and the flange end surface 245 are exposed to the outer side. In the motor device 60, in a state in which the coil unit 210 is covered by the coil protection portion 250, the coil protection portion 250 covers at least the flange end surface 245. That is, the coil protection portion 250 is overlapped with the flange end surface 245. The coil protection portion 250 basically does not cover the flange outer plate surface 244.

In the motor device 60, since the flange end surface 245 is included in the bobbin rough surface 247, the coil protection portion 250 is easily brought into close contact with the flange end surface 245. The flange end surface 245, which is the bobbin rough surface 247, tends to have a larger surface area than the bobbin base surface 246. Therefore, a contact area between the flange end surface 245 and the coil protection portion 250 tends to be large.

### <Configuration Group Cf>

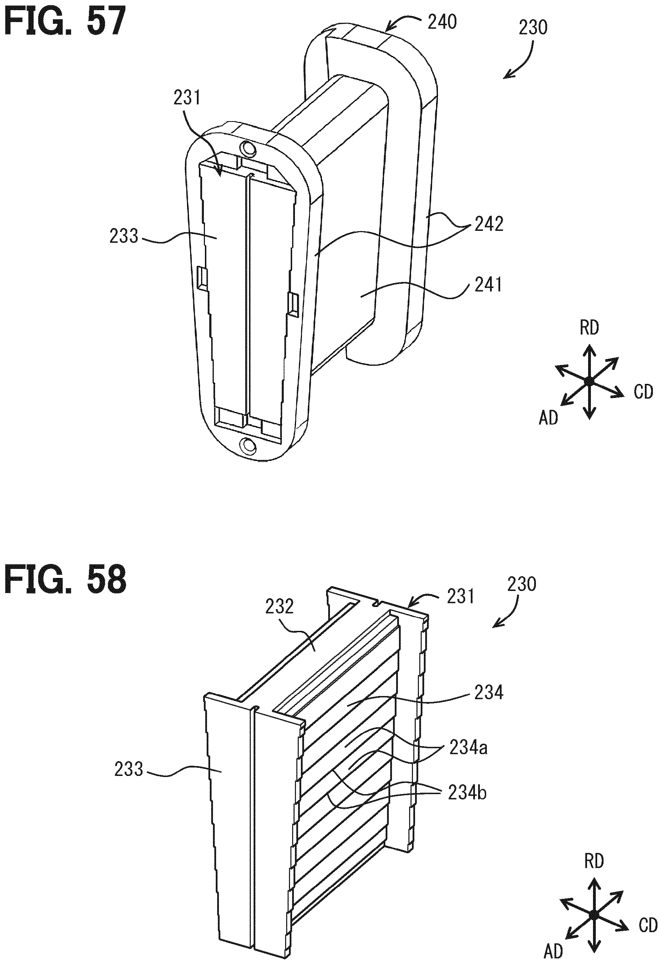

As shown in FIGS. 57 and 58, the core 231 includes a core trunk portion 232 and core flanges 233. The core trunk portion 232 is formed in a plate shape as a whole and extends in the axial direction AD. An outer peripheral surface 232a of the core trunk portion 232 is formed in an annular shape to extend in the direction orthogonal to the axial direction AD.

Each of the core flanges 233 extends outward from the outer peripheral surface 232a. The core flange 233 extends from the outer peripheral surface 232a in the direction orthogonal to the axial direction AD, and is formed in a plate shape as a whole. A pair of core flanges 233 are provided side by side in the axial direction AD. In the core 231, the coil 211 is wound around the core trunk portion 232 via the bobbin trunk portion 241 between the pair of core flanges 233.

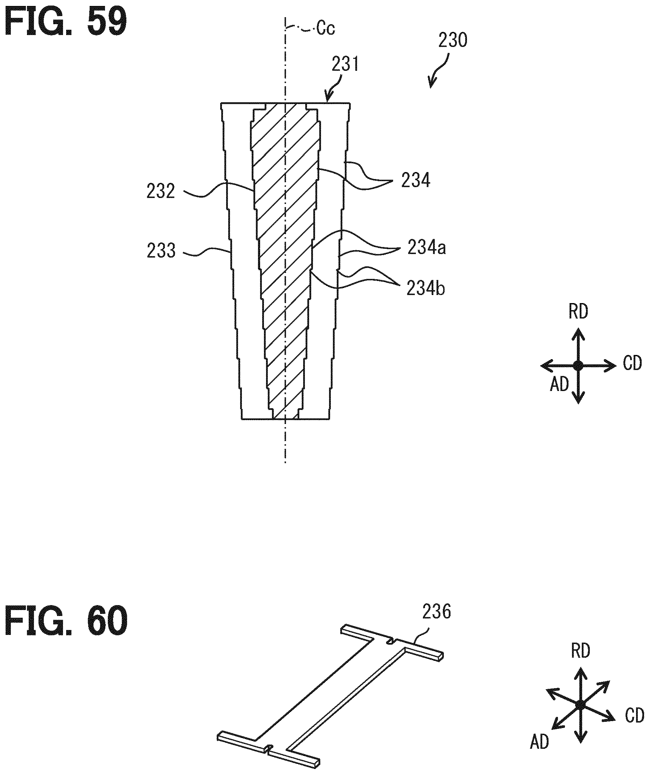

As shown in FIGS. 58 and 59, the core 231 as a whole is gradually narrowed toward the radially inner side. A core width of the core 231 gradually decreases toward the radially inner side. The core width is a width dimension of the core 231 in the circumferential direction CD. The outer surface of the core 231 includes core step surfaces 234. Each of the core step surfaces 234 extends stepwise in the radial direction RD. The core step surface 234 is provided on the core trunk portion 232 and the core flanges 233. A pair of core step surfaces 234 are provided side by side in the circumferential direction CD in the core trunk portion 232 and the core flanges 233.

The core step surface 234 includes step base surfaces 234a and step connection surfaces 234b. Multiple step base surfaces 234a and multiple step connection surfaces 234b are arranged in the radial direction RD. The step base surface 234a extends in the direction orthogonal to the circumferential direction CD. Of two step base surfaces 234a adjacent to each other in the radial direction RD, the step base surface 234a on the radially inner side is disposed inward in the circumferential direction CD with respect to the step base surface 234a on the radially outer side. The step connection surface 234b extends in the direction orthogonal to the radial direction RD. The step connection surface 234b connects two step base surfaces 234a adjacent to each other in the radial direction RD.

The core 231 is formed by multiple core forming plate members 236. As shown in FIG. 60, each of the core forming plate members 236 is a thin plate-shaped member. The core forming plate member 236 is made of, for example, a soft magnetic material. The core 231 is formed by overlapping the multiple core forming plate members 236. The core 231 includes multiple types of core forming plate members 236 having different sizes and shapes. In the core 231, the multiple types of core forming plate members 236 are used according to the core width. In the core 231, multiple core forming plate members 236 forming the step base surface 234a at one stage are of one type of core forming plate members 236 having the same size and shape. The core 231 includes at least the same number of types of core forming plate members 236 as the number of step base surfaces 234a.

In the core 231, since the multiple core forming plate members 236 are stacked, an eddy current is less likely to be generated. Therefore, eddy current loss generated in the core 231 can be reduced. In the core unit 230, at least the bobbin 240 is overlapped with the core step surface 234. Since the core step surface 234 is provided on the outer surface of the core 231, a surface area is likely to be increased. In the core unit 230, a contact area between the core 231 and the bobbin 240 is likely to be increased by the core step surface 234.

A method of manufacturing the core 231 and the core unit 230 in the method of manufacturing the motor device 60 will be described. In a process of manufacturing the core 231, the operator prepares multiple types of core forming plate members 236. Then, the operator forms the core 231 by performing, for each of the step base surfaces 234a at multiple stages, work of overlapping the multiple core forming plate members 236 of one type to form the step base surface 234a at one stage.

In a process of manufacturing the core unit 230, the operator prepares the core 231 as a preparation process. Then, the operator attaches the core 231 to a mold and the bobbin 240 is molded by molding. In this way, in the core unit 230 in which the core 231 is integrated with the bobbin 240 by insert molding, the bobbin 240 is in close contact with the core 231. In the core 231, the bobbin 240 is in close contact with the core step surface 234.

For example, a configuration different from that of the present embodiment is assumed in which the core width of the core 231 continuously decreases toward the radially inner side. In the configuration, the outer surface of the core 231 includes a tapered surface instead of the core step surface 234. Therefore, in order to form the tapered surface by laminating the multiple core forming plate members 236, the number of types of core forming plate members 236 is very large. In the manufacture of the core 231, there is a concern that a cost for manufacturing the core forming plate member 236 increases as the number of types of core forming plate member 236 increases. Meanwhile, in the present embodiment, since the core width of the core 231 gradually decreases toward the radially inner side, the types of the core forming plate member 236 can be reduced. Therefore, it is possible to reduce the cost for manufacturing the core forming plate member 236 in manufacturing the core 231.

### <Configuration Group Cg>

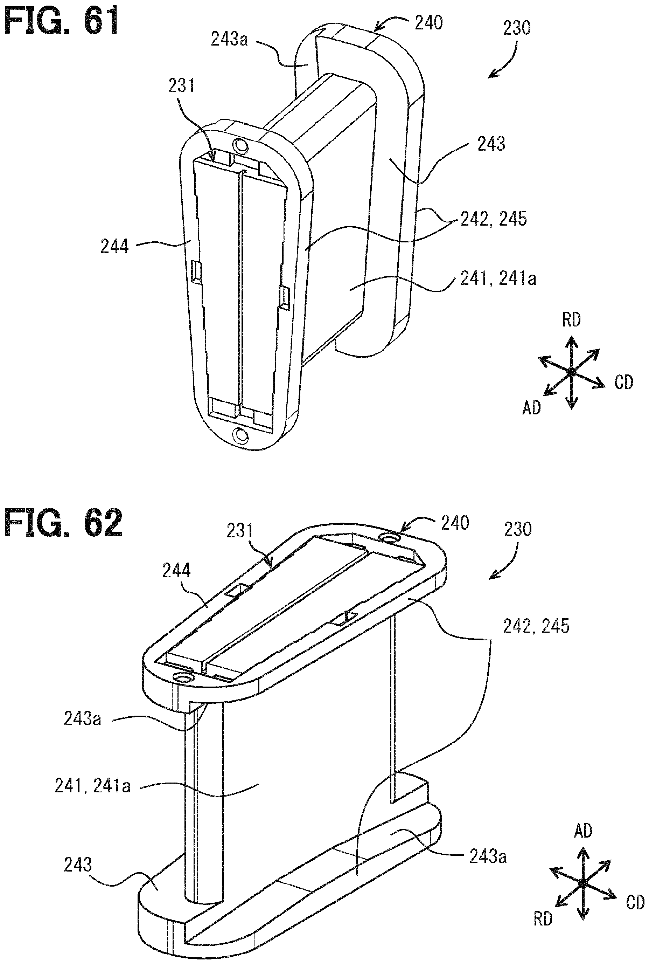

As shown in FIGS. 61, 62, 63, and 64, the bobbin 240 includes flange recess portions 243a. The flange recess portions 243a are respectively provided in the pair of bobbin flanges 242. The flange recess portion 243a is a recess portion provided in the flange inner plate surface 243. The flange recess portion 243a is provided on one side of the bobbin trunk portion 241 in the circumferential direction CD. The flange recess portion 243a is not provided on the other side of the bobbin trunk portion 241 in the circumferential direction CD. The flange recess portion 243a extends along the bobbin trunk portion 241 in the radial direction RD. Both end portions of the flange recess portion 243a are opened in the radial direction RD. The flange recess portion 243a is opened toward a side opposite to the bobbin trunk portion 241 in the circumferential direction CD. The flange recess portions 243a respectively provided in the pair of bobbin flanges 242 face each other in the axial direction AD. The flange inner plate surface 243 corresponds to a flange surface.

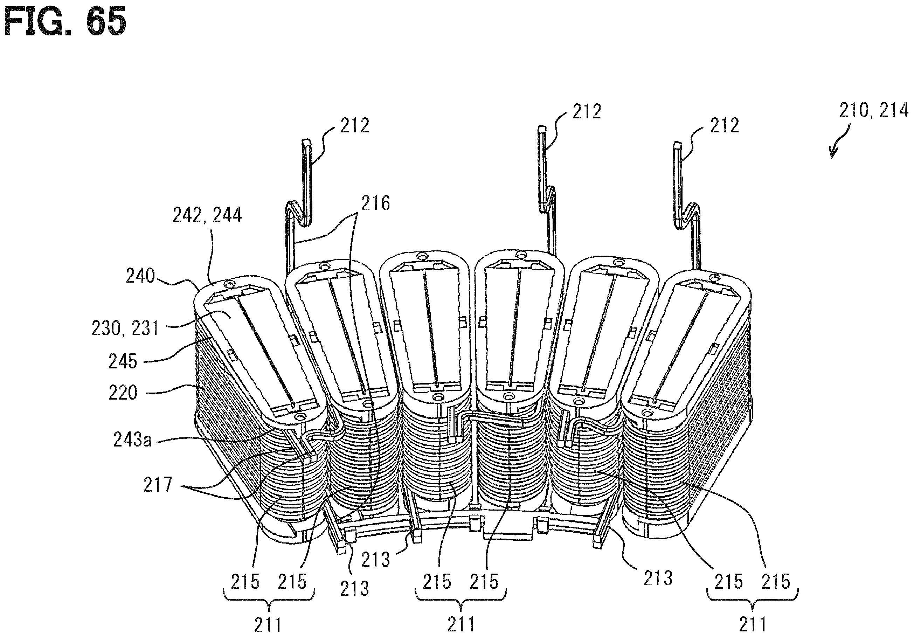

As shown in FIG. 65, in the coil unit 210, the flange recess portion 243a is used to lead out the electric power lead-out wire 212 from the coil 211. In the coil portion 215, the flange recess portion 243a is used to lead out the first extending wire 216. In the coil portion 215, the coil wire 220 is led out through the flange recess portion 243a to form the first extending wire 216.

On a side opposite to the flange recess portion 243a with the bobbin trunk portion 241 interposed in the circumferential direction CD, a dead space is less likely to be formed between the coil portion 215 and the flange inner plate surface 243 due to absence of the flange recess portion 243a. In this way, since a dead space is less likely to be formed between the pair of bobbin flanges 242, a space factor of the coil 211 can be increased in the bobbin 240. In the bobbin 240, the space factor of the coil 211 increases as the dead space formed between the pair of bobbin flanges 242 decreases.

### <Configuration Group Da>

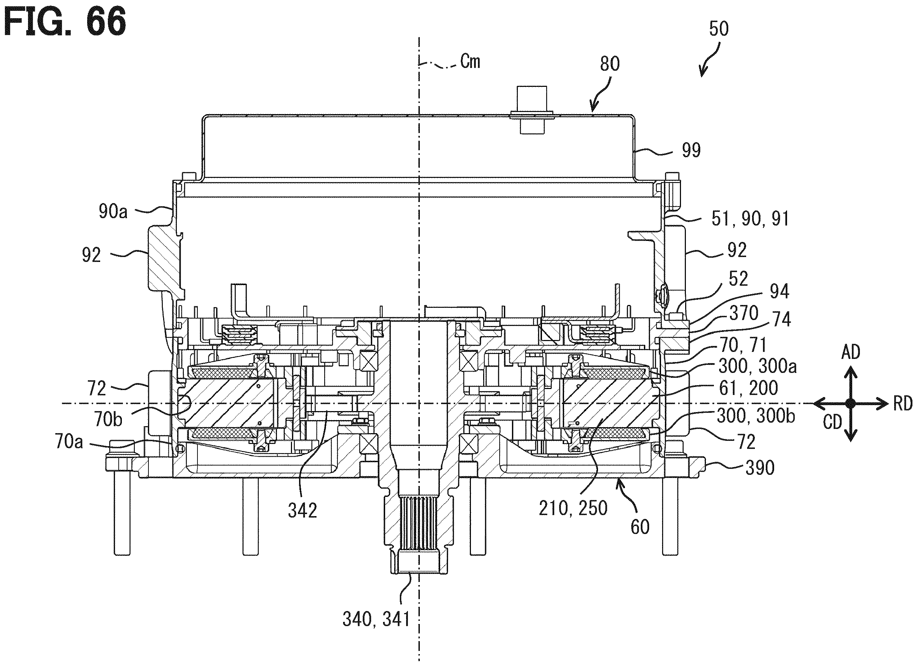

As shown in FIG. 66, in the motor device unit 50, the unit housing 51 includes the motor housing 70 and the inverter housing 90. The outer peripheral surface of the unit housing 51 includes the outer peripheral surface 70a of the motor housing 70 and the outer peripheral surface 90a of the inverter housing 90. The motor fins 72 and the inverter fins 92 are provided on the outer peripheral surface of the unit housing 51. The unit housing 51 accommodates the stator 200, the rotor 300, and the inverter 81. In the motor device unit 50, heat of the motor 61 and the inverter 81 is easily released to the outside by the motor fins 72 and the inverter fins 92.

In the unit housing 51, the motor housing 70 and the inverter housing 90 are integrated. The motor housing 70 and the inverter housing 90 are arranged along the motor axis Cm in the axial direction AD. The motor housing 70 corresponds to the electric machine housing, and the inverter housing 90 corresponds to a device housing.

The motor housing 70 and the inverter housing 90 are fixed by housing fixing tools 52. Each of the housing fixing tools 52 is a fixing tool such as a bolt. The housing fixing tool 52 connects a connection flange 74 of the motor housing 70 and a connection flange 94 of the inverter housing 90. The connection flange 74 is provided on the outer peripheral surface 70a of the motor housing 70 and protrudes from the housing main body 71 toward the radially outer side. The connection flange 94 is provided on the outer peripheral surface 90a of the inverter housing 90 and protrudes from the housing main body 91 toward the radially outer side.

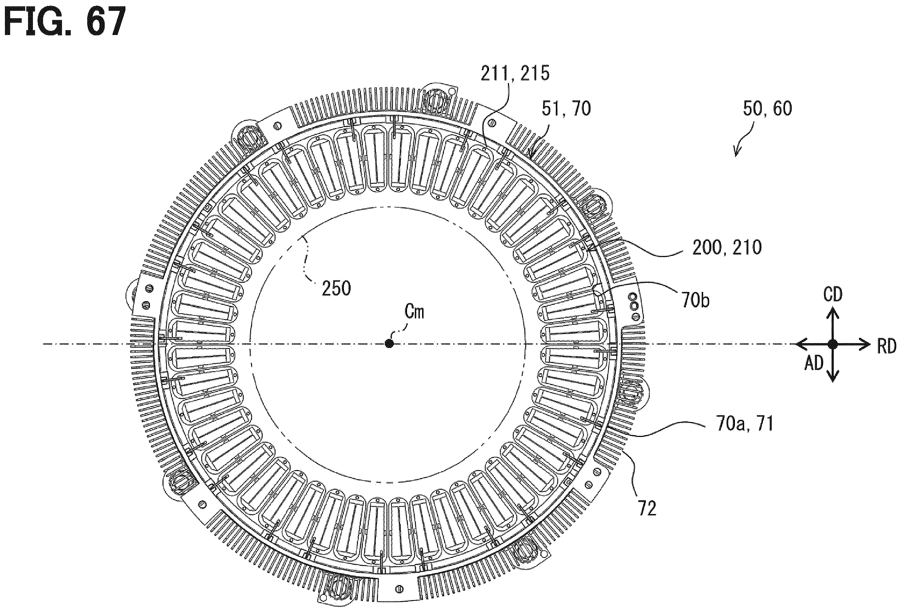

As shown in FIGS. 66 and 67, in the motor housing 70, the coil protection portion 250 is overlapped with the inner peripheral surface 70b. The inner peripheral surface 70b of the motor housing 70 is included in the inner peripheral surface of the unit housing 51. The coil protection portion 250 is overlapped with the inner peripheral surface of the unit housing 51. The coil protection portion 250 is in close contact with the inner peripheral surface of the unit housing 51.

### <Configuration Group Db>

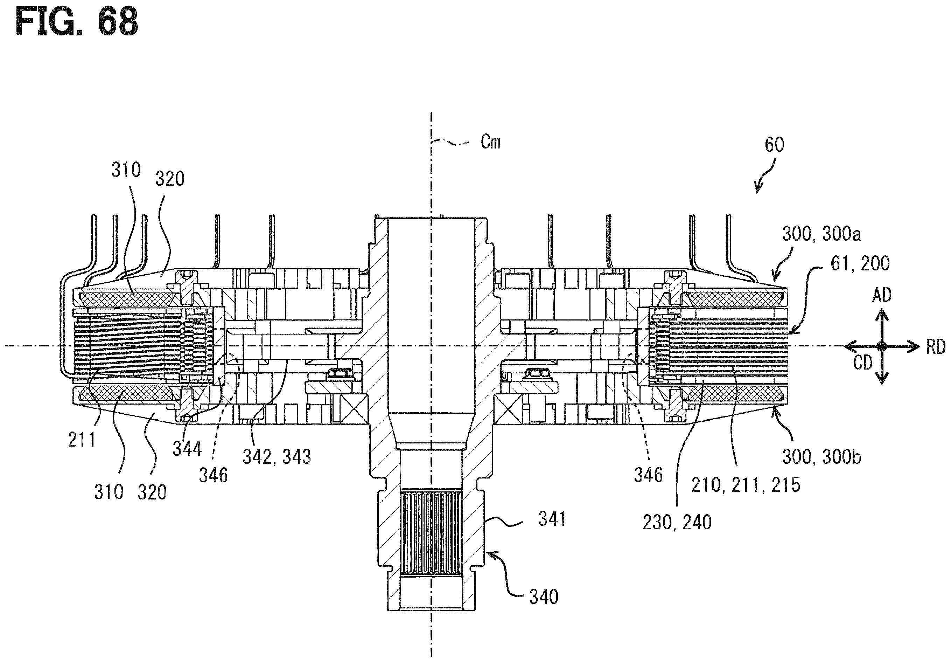

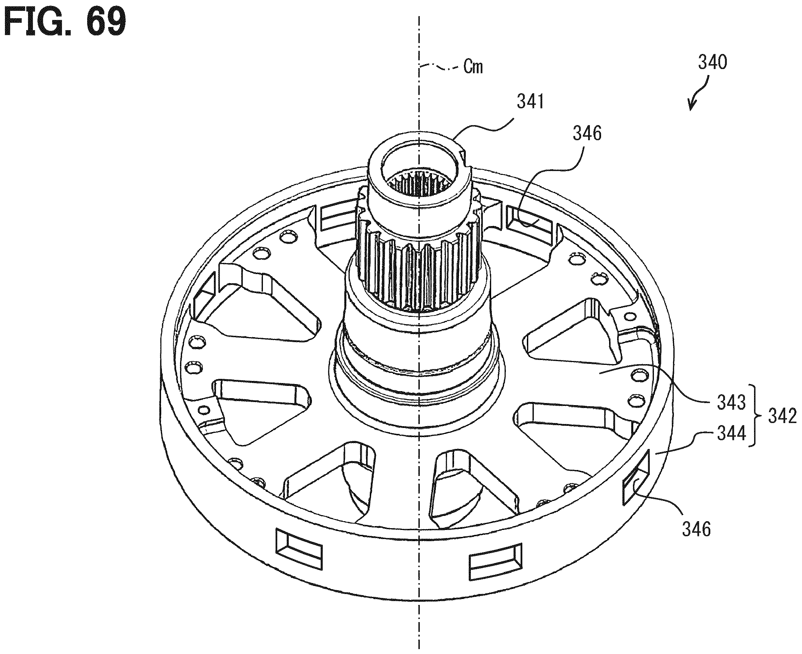

As shown in FIGS. 68 and 69, in the shaft 340, the rim 344 of the shaft flange 342 is formed in a plate shape as a whole. A pair of plate surfaces of the rim 344 face the radial direction RD. A thickness direction of the rim 344 is the radial direction RD. The rim 344 extends in an annular shape in the circumferential direction CD and corresponds to an annular portion. The rim 344 forms an outer peripheral end of the shaft flange 342. The rim 344 is in a state of spanning the first rotor 300a and the second rotor 300b in the axial direction AD.

As shown in FIG. 68, the rim 344 is provided inside the stator 200. The rim 344 is located at a position separated from the stator 200 toward the radially inner side. The rim 344 is in a state of partitioning an inner space of the stator 200 in the radial direction RD. The inner space of the stator 200 is a space that exists on the radially inner side of the coil protection portion 250. The inner space may be referred to as an inner region. The rim 344 extends along the inner peripheral surface of the coil protection portion 250 in the axial direction AD. In the axial direction AD, a height dimension of the rim 344 and a height dimension of the coil protection portion 250 are substantially the same.

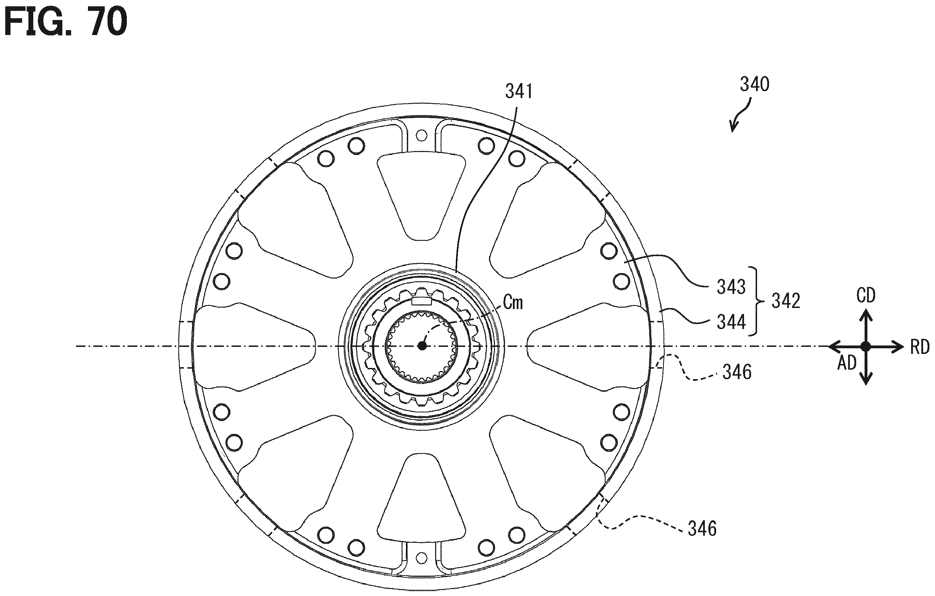

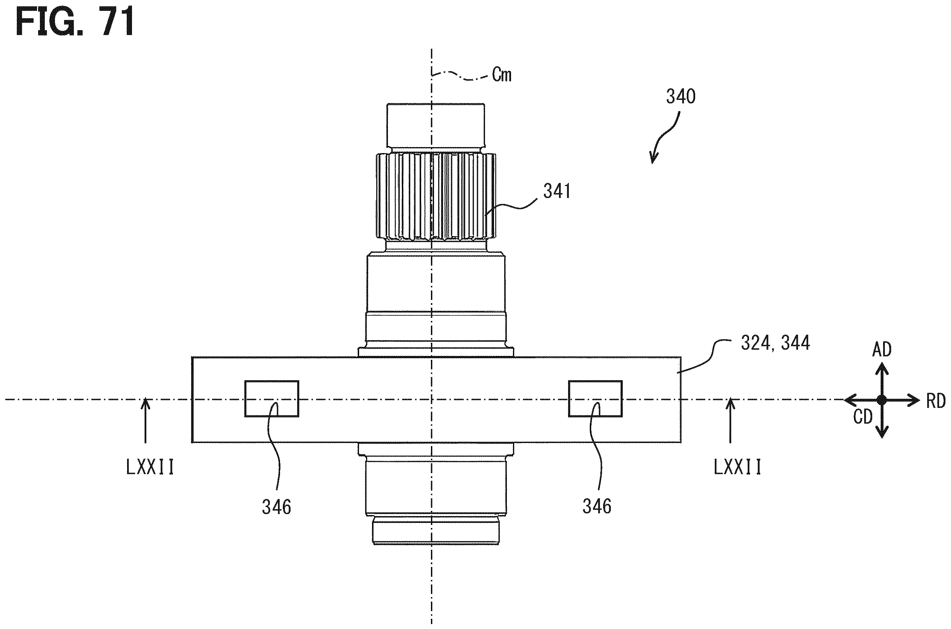

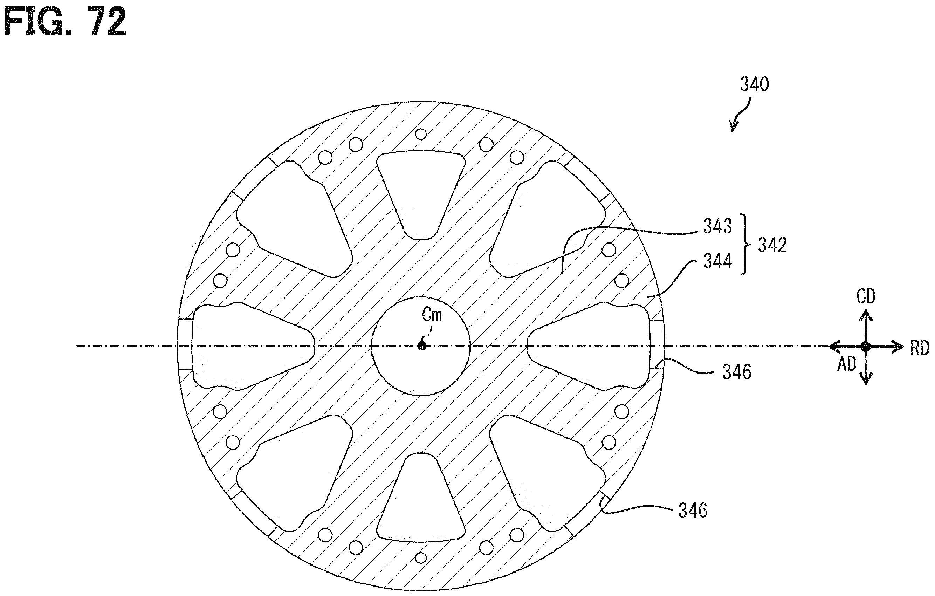

As shown in FIGS. 69, 70, 71, and 72, the shaft flange 342 has flange vent holes 346. Each of the flange vent holes 346 is formed in the rim 344 and penetrates the rim 344 in the radial direction RD. The flange vent hole 346 is located at a position separated from both of the pair of rim tip portions 344a in the axial direction AD. For example, the flange vent hole 346 is formed at an intermediate position of the rim 344 in the axial direction AD.

Multiple flange vent holes 346 are arranged in the circumferential direction CD. In the shaft flange 342, the flange vent hole 346 and the spoke 343 are arranged in the circumferential direction CD. The flange vent hole 346 is formed between two spokes 343 adjacent to each other in the circumferential direction CD. The two spokes 343 adjacent to each other with the flange vent hole 346 interposed therebetween in the circumferential direction CD are located at positions separated from the flange vent hole 346.

In FIG. 68, the flange vent hole 346 enables ventilation in the internal space of the motor device 60 in the radial direction RD. The flange vent hole 346 establishes communication between a space radially inward with respect to the rim 344 and a space radially outward with respect to the rim 344. In the inner space of the coil protection portion 250, the heat of the stator 200 is easily released to the inside of the rim 344 through the flange vent hole 346. The stator 200 is easily cooled by air as a gas flowing through the flange vent hole 346 in the radial direction RD. Inside the motor housing 70, air convection in the radial direction RD is likely to occur through the flange vent hole 346.

### <Configuration Group Dc>

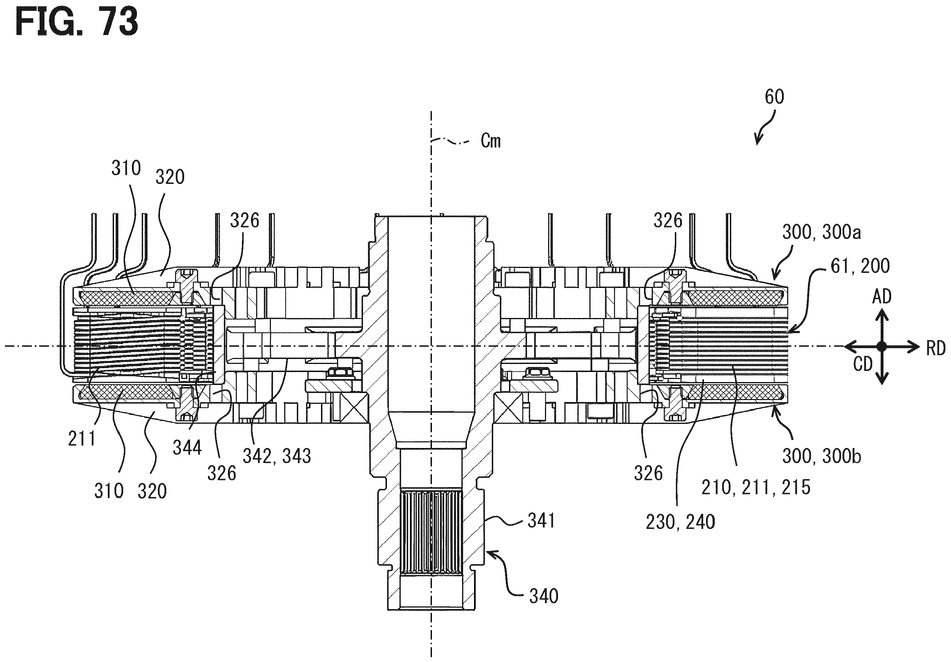

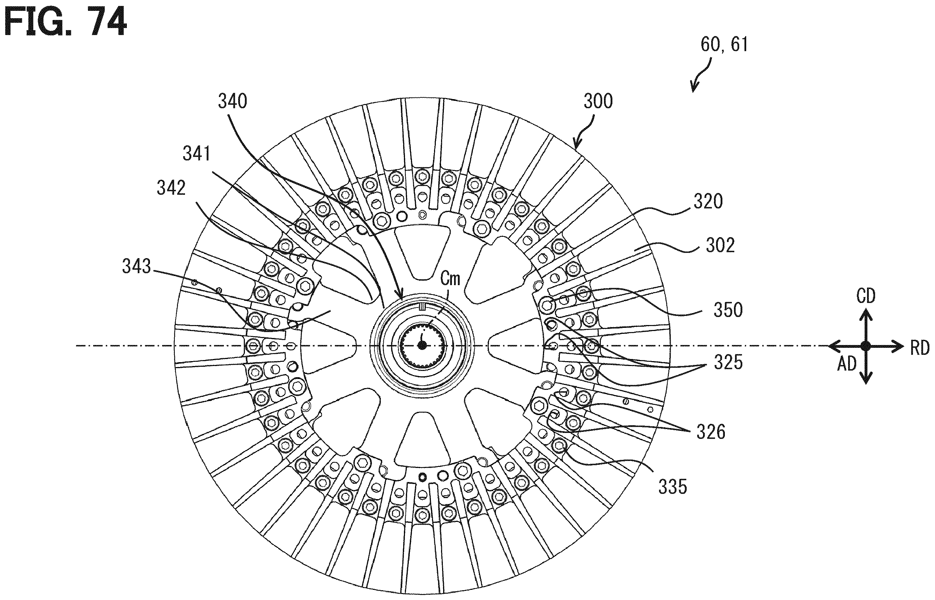

As shown in FIGS. 73 and 74, the rotor 300 has holder adjustment holes 326. Each of the holder adjustment holes 326 is formed in the magnet holder 320. The holder adjustment hole 326 penetrates the rotor 300 in the axial direction AD by penetrating the magnet holder 320 in the axial direction AD. The holder adjustment hole 326 is formed radially inward with respect to the magnet 310. For example, the holder adjustment hole 326 is formed between the holder fixing hole 325 and the magnet fixing tool 335 in the radial direction RD. Multiple holder adjustment holes 326 are arranged in the circumferential direction CD. The holder adjustment holes 326 are arranged, for example, in the same number as the magnet fixing tools 335.

In the rotor 300, the center of gravity may deviate from the motor axis Cm in the radial direction RD and the rotor 300 may be out of balance. In the rotor 300, a weight member is attached to the magnet holder 320 to maintain balance. The weight member attached to the rotor 300 is inserted into any of the multiple holder adjustment holes 326 according to a balance state of the rotor 300. The weight member is fixed to the holder adjustment hole 326 by being fitted into the holder adjustment hole 326. The balance of the rotor 300 includes static balance in a state in which the rotor 300 is not rotating and rotation balance in a state in which the rotor 300 is rotating. The holder adjustment hole 326 corresponds to a balance adjustment hole.

A part of the holder adjustment hole 326 is in a state of being closed by the rim 344 in the axial direction AD. The weight member is inserted into the holder adjustment hole 326 from the second rotor surface 302 in the axial direction AD. The rim 344 blocks a part of the holder adjustment hole 326 to restrict the weight member from falling out of the holder adjustment hole 326 to the first rotor surface 301.

In FIG. 73, the magnet holder 320 is in a state of partitioning the internal space of the motor housing 70 in the axial direction AD in both the first rotor 300a and the second rotor 300b. For example, the magnet holder 320 of the first rotor 300a is in a state of partitioning the internal space of the motor housing 70 into a space on the rear frame 370 side and a space on a stator 200 side. The magnet holder 320 of the second rotor 300b is in a state of partitioning the internal space of the motor housing 70 into a space on the stator 200 side and a space on a drive frame 390 side.

The holder adjustment hole 326 enables ventilation in the internal space of the motor device 60 in the axial direction AD. The holder adjustment hole 326 establishes communication between the two spaces that are partitioned in the axial direction AD by the magnet holder 320. Therefore, the heat of the stator 200 is easily released in the axial direction AD through the holder adjustment hole 326. The stator 200 is easily cooled by air flowing through the holder adjustment hole 326 in the axial direction AD. Inside the motor housing 70, air convection in the axial direction AD is likely to occur through the holder adjustment hole 326.

For example, the holder adjustment hole 326 of the first rotor 300a establishes communication between the space on the rear frame 370 side relative to the first rotor 300a and the space on the stator 200 side relative to the first rotor 300a. Therefore, the heat of the stator 200 is easily released toward the rear frame 370 through the holder adjustment hole 326 of the first rotor 300a. The holder adjustment hole 326 of the second rotor 300b establishes communication between a space on the stator 200 side relative to the second rotor 300b and a space on the drive frame 390 side relative to the second rotor 300b. Therefore, the heat of the stator 200 is easily released toward the drive frame 390 through the holder adjustment hole 326 of the second rotor 300b.

### <Configuration Group Dd>

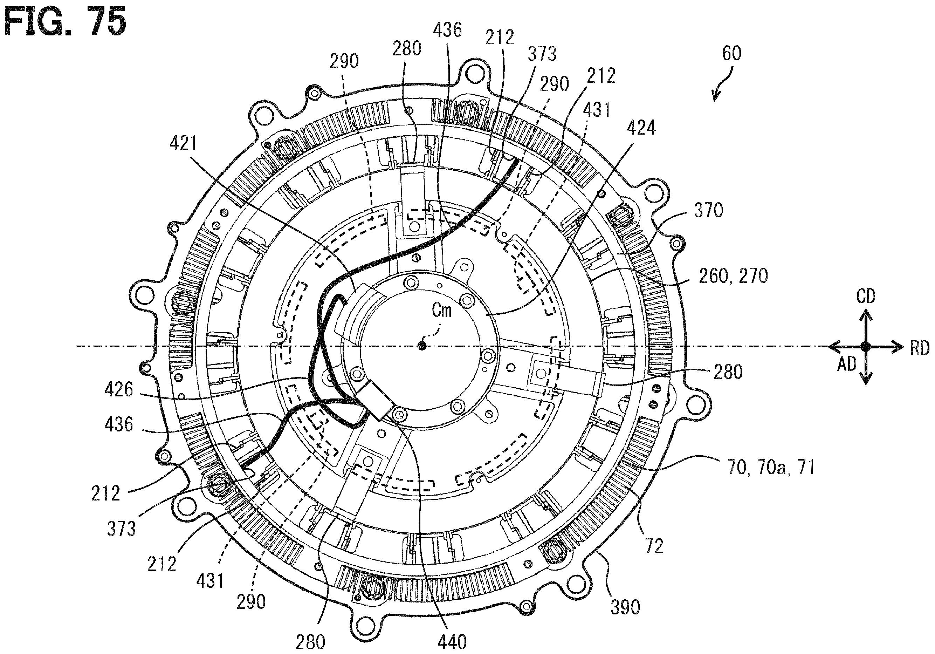

As shown in FIG. 75, the rear frame 370 includes frame opening portions 373. The frame opening portion 373 penetrates the rear frame 370 in the axial direction AD. The frame opening portion 373 is an opening portion that opens the rear frame 370 in the axial direction AD. The frame opening portion 373 is provided radially outward with respect to the busbar unit 260 in the radial direction RD. Multiple frame opening portions 373 are arranged in the circumferential direction CD.

The electric power lead-out wire 212 is inserted through the frame opening portion 373 in the axial direction AD. The electric power lead-out wire 212 is led out toward the electric power busbar 261 through the frame opening portion 373. In the electric power lead-out wire 212, a portion led out from the frame opening portion 373 is electrically connected to the electric power busbar 261. At least one electric power lead-out wire 212 is inserted through the frame opening portion 373.

In the motor device unit 50, the rear frame 370 and the resolver cover 424 are in a state of partitioning the interior of the unit housing 51 into an inverter device 80 side and a motor device 60 side. The rear frame 370 and the resolver cover 424 extend in the direction orthogonal to the axial direction AD as a whole. The rear frame 370 and the resolver cover 424 correspond to housing partition portions.

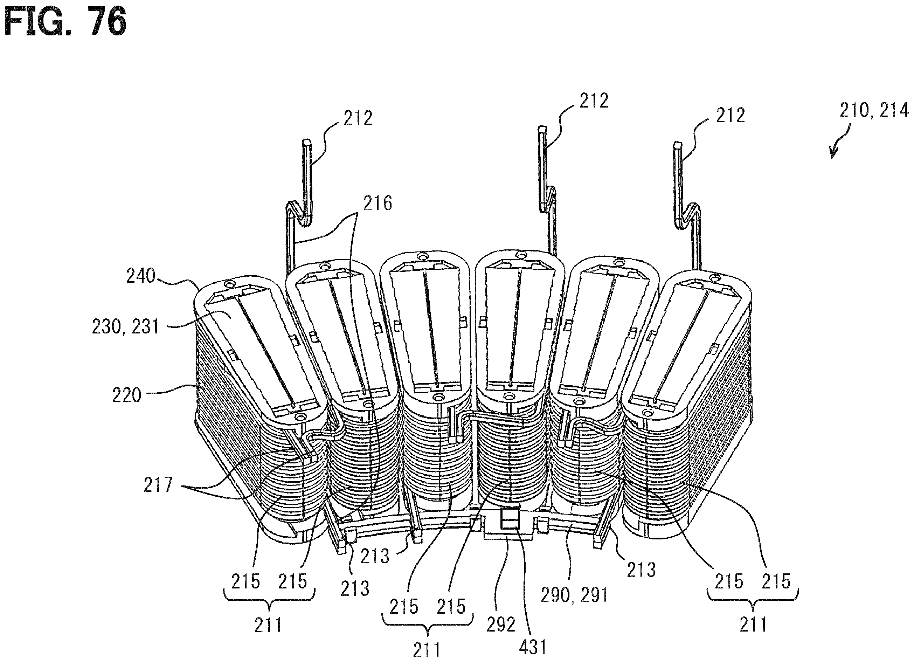

As shown in FIGS. 75 and 76, the temperature sensor 431 is provided in, for example, the coil unit 210 of the motor 61. Multiple temperature sensors 431 are provided, for example. The temperature sensors 431 are attached to the neutral point busbar 290. The neutral point busbar 290 includes a busbar main body 291 and a sensor support portion 292. The busbar main body 291 forms a main portion of the neutral point busbar 290. The busbar main body 291 is in a state of spanning multiple coil portions 215 in the neutral point unit 214. The sensor support portion 292 supports the temperature sensor 431. The sensor support portion 292 is, for example, a protruding portion protruding from the busbar main body 291. The temperature sensor 431 is fixed to the sensor support portion 292.

As shown in FIG. 75, the motor device 60 includes a signal terminal block 440. The signal terminal block 440 is provided on a side of the rear frame 370 and the resolver cover 424 facing the inverter device 80 in the axial direction AD. The signal terminal block 440 is attached to at least one of the rear frame 370 and the resolver cover 424. The signal terminal block 440 is aligned with the resolver connector 423 in the direction orthogonal to the axial direction AD.

The motor device 60 includes a signal wiring 426. The signal wiring 426 extends from the resolver connector 423. The signal wiring 426 is a conductive member such as an electric wire, and forms the signal line 425. The signal wiring 426 is electrically connected to the resolver 421 via the resolver connector 423.

The motor device 60 includes a signal wiring 436. The signal wiring 436 extends from the temperature sensor 431. The signal wiring 436 is a conductive member such as an electric wire, and forms the signal line 435. The signal wiring 436 is electrically connected to the temperature sensor 431.

The signal terminal block 440 collects the signal wirings 426 and 436 and corresponds to a wiring collecting portion. The signal wirings 426 and 436 are drawn into the signal terminal block 440. The signal terminal block 440 includes multiple terminal portions and a case accommodating the terminal portions. The signal wirings 426 and 436 drawn into the signal terminal block 440 are electrically connected to the terminal portions, respectively.

Regarding the resolver 421, the signal wiring 426 is in a state of spanning the resolver connector 423 and the signal terminal block 440. The signal wiring 426 extends along the rear frame 370 and the resolver cover 424 on a side of the rear frame 370 and the resolver cover 424 facing the inverter device 80. The resolver 421 can detect a state of the motor device 60 by detecting the rotation angle of the motor 61. The resolver 421 corresponds to a state detection unit, and the signal wiring 426 corresponds to a detection wiring.

Regarding the temperature sensor 431, the signal wiring 436 is in a state of spanning the temperature sensor 431 and the signal terminal block 440. The signal wiring 436 is inserted through the frame opening portion 373, thereby penetrating the rear frame 370 and the resolver cover 424 in the axial direction AD. The temperature sensor 431 can detect the state of the motor device 60 by detecting the temperature of the motor 61. The temperature sensor 431 corresponds to a state detection unit, and the signal wiring 436 corresponds to a detection wiring.

Multiple inverter wirings of the inverter device 80 are drawn into the signal terminal block 440. The multiple inverter wirings include inverter lines that form the signal line 425 together with the signal wiring 426 and form the signal line 435 together with the signal wiring 436. The inverter wirings are electrically connected to the signal wirings 426 and 436 via the terminal portions in the signal terminal block 440. The inverter wirings connected to the signal wirings 426 and 436 are electrically connected to the control device 54 in the inverter device 80, for example.

### <Configuration Group De>

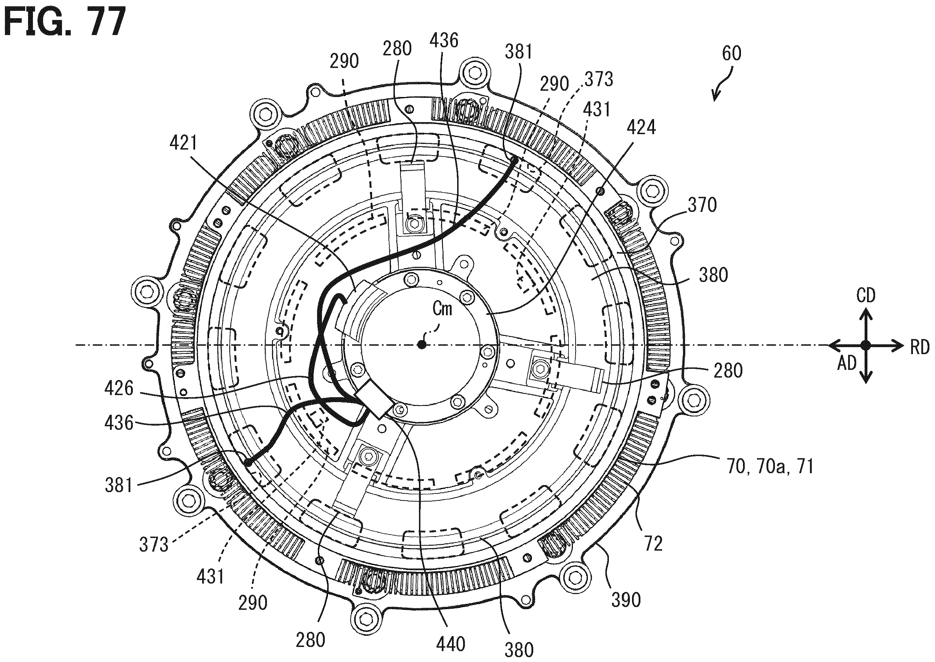

In FIG. 77, the dustproof cover 380 covers all the frame opening portions 373. The dustproof cover 380 is in a state of spanning the multiple frame opening portions 373 in the circumferential direction CD. The dustproof cover 380 closes the frame opening portion 373 from the inverter device 80 side in the axial direction AD. The dustproof cover 380 restricts a foreign matter from passing through the frame opening portion 373 in the axial direction AD.

The dustproof cover 380 is in a state of covering the electric power lead-out wire 212 and the busbar unit 260 from the inverter device 80 side. The dustproof cover 380 has an electrical insulation property and reduce a decrease in insulation reliability between the electric power lead-out wire 212 and the electric power busbar 261 and the inverter device 80. The dustproof cover 380 is in a state of entering between the busbar unit 260 and the busbar terminal 263 in the axial direction AD.

The signal wiring 436 extending from the temperature sensor 431 penetrates the dustproof cover 380 and is led out toward the inverter device 80. The dustproof cover 380 has wiring holes 381. Each of the wiring holes 381 penetrates the dustproof cover 380 in the axial direction AD. The signal wiring 436 passes through the wiring hole 381 to penetrate the dustproof cover 380. The wiring hole 381 has a size and a shape that are closed by the signal wiring 436. In a state in which the signal wiring 436 passes through the wiring hole 381, it is difficult for the foreign matter to pass through the wiring hole 381. The wiring hole 381 is formed in the dustproof cover 380 at a position closer to an outer peripheral edge than to an inner peripheral edge. Multiple wiring holes 381 are formed in the dustproof cover 380. One signal wiring 436 passes through one wiring hole 381.

The rear frame 370 and the resolver cover 424 correspond to the housing partition portions, and the dustproof cover 380 corresponds to a partition cover. The frame opening portion 373 corresponds to a partition opening portion, and the electric power lead-out wire 212 corresponds to the coil lead-out wire. The signal wiring 436 may pass between the dustproof cover 380 and the rear frame 370 and led out toward the inverter device 80.

### <Configuration Group Df>

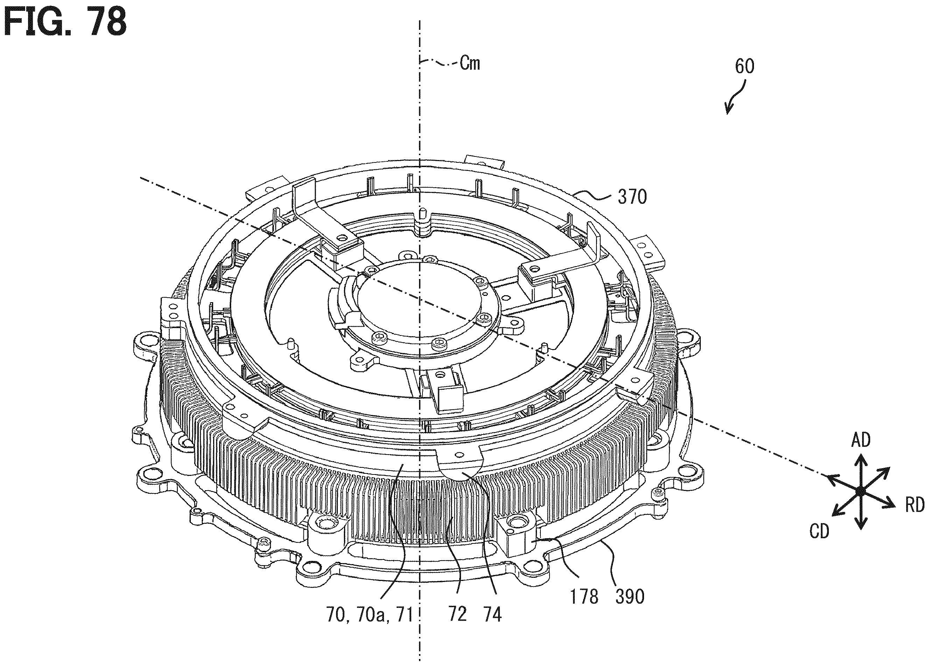

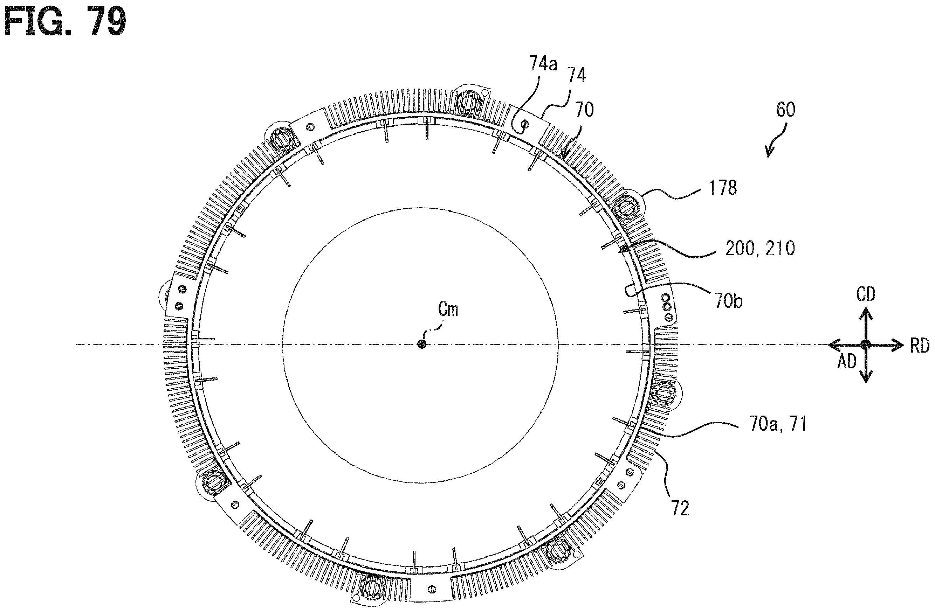

As shown in FIGS. 78 and 79, the motor housing 70 includes the connection flanges 74. The connection flange 74 extends from the housing main body 71 toward the radially outer side and corresponds to an electric machine flange. Multiple connection flanges 74 are arranged in the circumferential direction CD.

The connection flange 74 has a flange hole 74a. The flange hole 74a extends in the axial direction AD. The flange hole 74a penetrates the connection flange 74 in the axial direction AD. The flange hole 74a is a hole for fixing the motor housing 70 to the inverter housing 90, and corresponds to an electric machine fixing hole. The flange hole 74a is formed only in the connection flange 74 of the housing main body 71 and the connection flange 74. The connection flange 74 is connected to the connection flange 94 of the inverter housing 90 by screwing the housing fixing tool 52 into the flange hole 74a. The inverter housing 90 is a fixing target to which the motor housing 70 is fixed, and corresponds to a housing fixing target. The connection flange 74 may be referred to as a lug portion.

As described above, in the motor housing 70, the flange hole 74a is formed only in the connection flange 74 of the housing main body 71 and the connection flange 74. Therefore, rigidity of the housing main body 71 is not lowered by the flange hole 74a. In the motor housing 70, a flange portion in which the connection flange 74 is provided on the housing main body 71 and a non-flange portion in which the connection flange 74 is not provided on the housing main body 71 are alternately arranged in the circumferential direction CD. Even though the flange hole 74a is formed in the connection flange 74, a thickness dimension of the flange portion in the radial direction RD is larger than a thickness dimension of the non-flange portion. Rigidity of the flange portion is higher than rigidity of the non-flange portion by an amount corresponding to the thickness dimension of the connection flange 74.

For example, a configuration different from that of the present embodiment is assumed in which a hole for fixing the housing fixing tool 52 is provided in the housing main body 71. In the configuration, the housing main body 71 is thinned by an amount corresponding to forming of the hole for the housing fixing tool 52. Therefore, there is a concern that the rigidity of the housing main body 71 is lowered by the hole for the housing fixing tool 52.

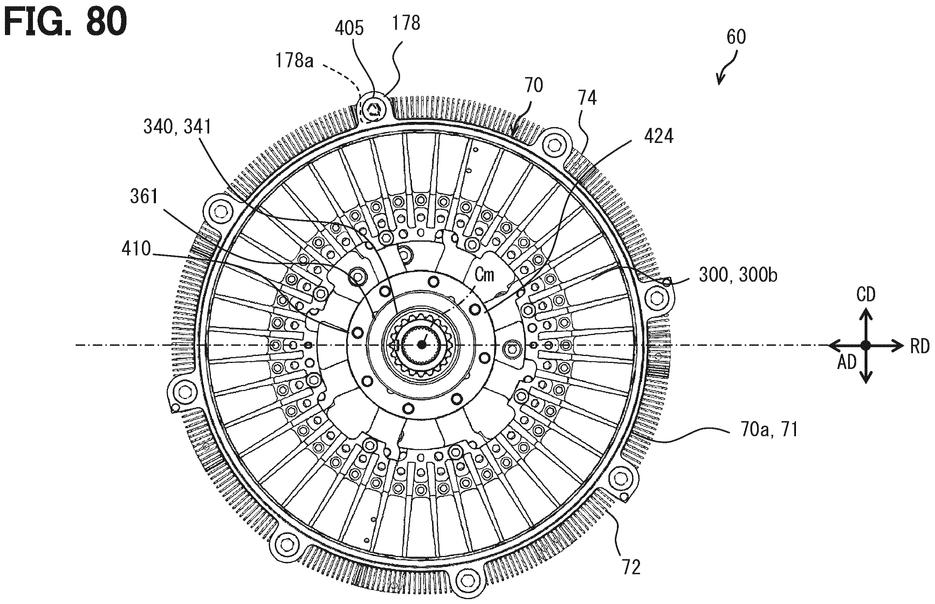

As shown in FIGS. 78 and 80, the motor housing 70 includes fixing flanges 178. Each of the fixing flanges 178 is provided on the outer peripheral surface 70a of the motor housing 70. The fixing flange 178 protrudes from the housing main body 71 toward the radially outer side and corresponds to the electric machine flange. Multiple fixing flanges 178 are arranged in the circumferential direction CD.

The fixing flange 178 has a flange hole 178a. The flange hole 178a extends in the axial direction AD. The flange hole 178a penetrates the fixing flange 178 in the axial direction AD. The flange hole 178a is a hole for fixing the motor housing 70 to the drive frame 390, and corresponds to an electric machine fixing hole. The flange hole 178a is formed only in the fixing flange 178 of the housing main body 71 and the fixing flange 178. The fixing flange 178 is fixed to the drive frame 390 by screwing the frame fixing tool 405 into the flange hole 178a. The drive frame 390 is a fixing target to which the motor housing 70 is fixed, and corresponds to the housing fixing target. The fixing flange 178 may be referred to as the lug portion. In FIG. 80, an illustration of the drive frame 390 is omitted.

As described above, in the motor housing 70, the flange hole 178a is formed only in the fixing flange 178 of the housing main body 71 and the fixing flange 178. Therefore, the rigidity of the housing main body 71 is not lowered by the flange hole 178a. In the motor housing 70, a flange portion in which the fixing flange 178 is provided on the housing main body 71 and a non-flange portion in which the fixing flange 178 is not provided on the housing main body 71 are alternately arranged in the circumferential direction CD. Even though the flange hole 178a is formed in the fixing flange 178, a thickness dimension of the flange portion in the radial direction RD is larger than a thickness dimension of the non-flange portion. Rigidity of the flange portion is higher than rigidity of the non-flange portion by an amount corresponding to the thickness dimension of the fixing flange 178.

For example, a configuration different from that of the present embodiment is assumed in which a hole for fixing the frame fixing tool 405 is provided in the housing main body 71. In the configuration, the housing main body 71 is thinned by an amount corresponding to forming of the hole for the frame fixing tool 405. Therefore, there is a concern that the rigidity of the housing main body 71 is lowered by the hole for the frame fixing tool 405.

### <Configuration Group Dg>

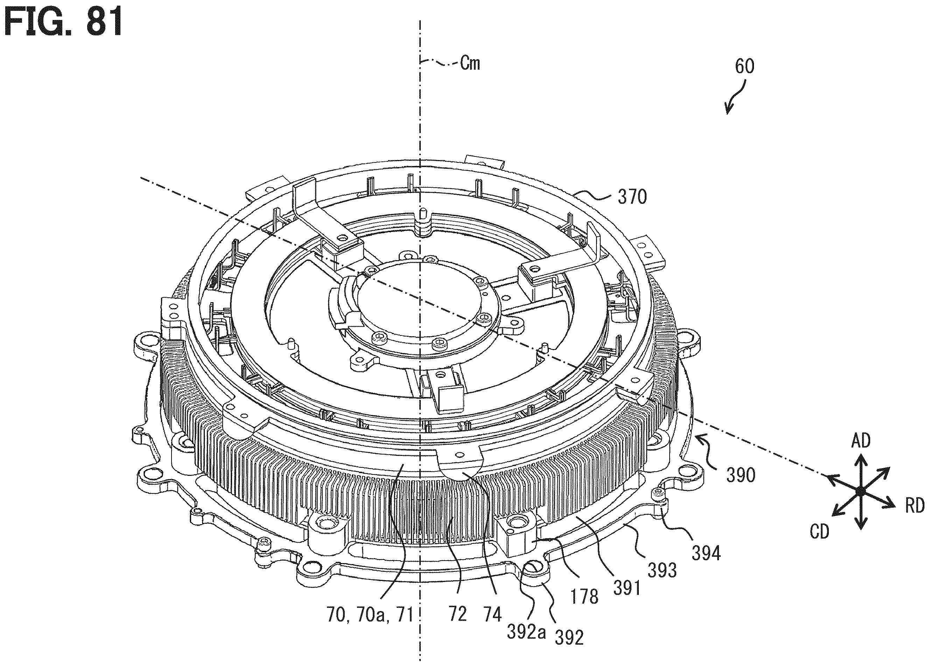

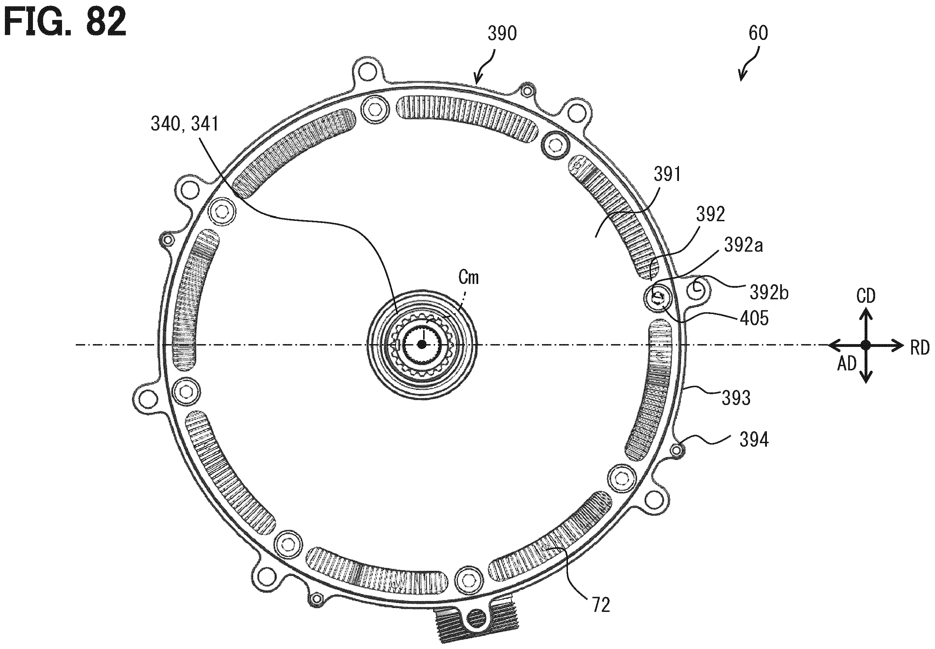

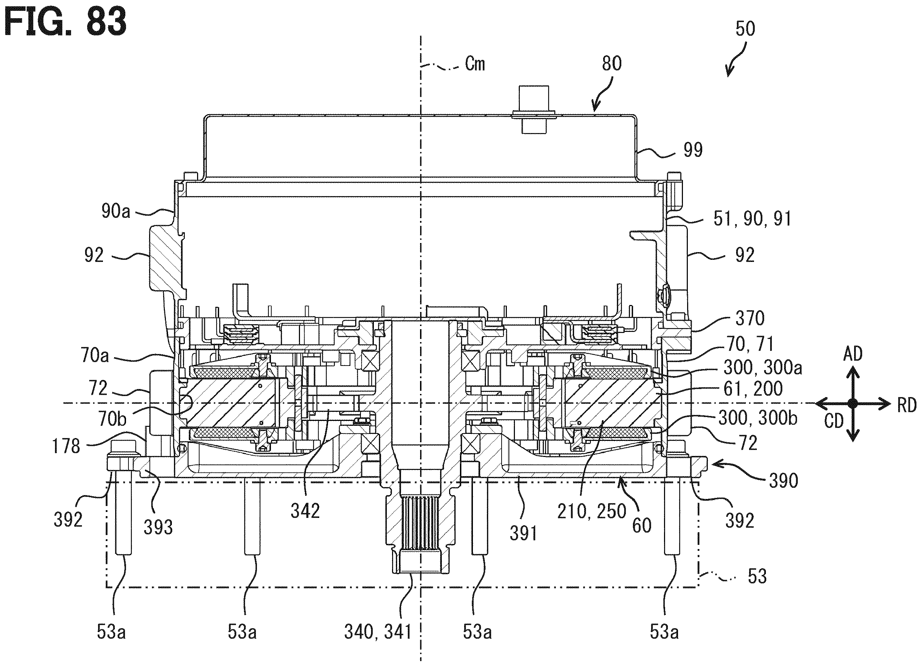

As shown in FIGS. 81, 82, and 83, the drive frame 390 covers the motor 61 from the side opposite to the inverter device 80 in the axial direction AD. The drive frame 390 is in a state of closing the opening portion of the motor housing 70 from a second rotor 300b side. The motor housing 70 corresponds to the electric machine housing, and the drive frame 390 corresponds to an electric machine cover portion.

The drive frame 390 includes a frame main body 391 and fixing flanges 392. The frame main body 391 is formed in a plate shape as a whole and extends in the direction orthogonal to the axial direction AD. The frame main body 391 is in a state of closing the opening portion of the motor housing 70. An outer peripheral edge of the frame main body 391 extends along the outer peripheral surface 70a of the motor housing 70 in the circumferential direction CD.

Each of the fixing flanges 392 extends from the frame main body 391 toward the radially outer side. Multiple fixing flanges 392 are arranged in the circumferential direction CD. For example, eight fixing flanges 392 are arranged in the circumferential direction CD. The fixing flange 392 is located at a position aligned with the fixing flange 178 of the motor housing 70 in the axial direction AD.

The fixing flange 392 includes a first fixing hole 392a and a second fixing hole 392b. Each of the first fixing hole 392a and the second fixing hole 392b extends in the axial direction AD. Each of the first fixing hole 392a and the second fixing hole 392b penetrates the fixing flange 392 in the axial direction AD. The first fixing hole 392a and the second fixing hole 392b are provided only in the fixing flange 392 of the frame main body 391 and the fixing flange 392. The first fixing hole 392a and the second fixing hole 392b are arranged in the fixing flange 392 in the radial direction RD. The first fixing hole 392a is provided radially inward with respect to the second fixing hole 392b. The first fixing hole 392a is located at a position separated from the second fixing hole 392b toward the radially inner side.

The first fixing hole 392a is a hole for fixing the drive frame 390 to the motor housing 70. The fixing flange 392 is fixed to the fixing flange 178 of the motor housing 70 by screwing the frame fixing tool 405 into the first fixing hole 392a. The fixing flange 392 may be referred to as the lug portion.

The second fixing hole 392b is a hole for fixing the drive frame 390 to the speed reducer 53. The fixing flange 392 is fixed to the speed reducer 53 by screwing the speed reducer fixing tool 53a into the second fixing hole 392b. The speed reducer 53 is a fixing target to which the drive frame 390 is fixed, and corresponds to a cover fixing target.

As described above, in the drive frame 390, the first fixing hole 392a and the second fixing hole 392b are formed only in the fixing flange 392 of the frame main body 391 and the fixing flange 392. Therefore, rigidity of the frame main body 391 is not lowered by the first fixing hole 392a and the second fixing hole 392b.

For example, a configuration different from that of the present embodiment is assumed in which holes for fixing the frame fixing tool 405 and the speed reducer fixing tool 53a are formed in the frame main body 391. In the configuration, there is a concern that the rigidity of the frame main body 391 is reduced by an amount corresponding to forming of the holes for the frame fixing tool 405 and the speed reducer fixing tool 53a.

The drive frame 390 includes outer peripheral frame portions 393 and outer peripheral flanges 394. Each of the outer peripheral frame portions 393 spans two fixing flanges 392 adjacent to each other in the circumferential direction CD, and connects the fixing flanges 392. The outer peripheral frame portion 393 extends along the outer peripheral edge of the frame main body 391 in the circumferential direction CD. Multiple outer peripheral frame portions 393 are arranged in the circumferential direction CD. The outer peripheral frame portion 393 is located at a position separated from the frame main body 391 toward the radially outer side. The outer peripheral frame portion 393 is located at a position separated from a tip portion of the fixing flange 392 toward the radially inner side. The outer peripheral frame portion 393 extends in the circumferential direction CD from a portion of the fixing flange 392 between the first fixing hole 392a and the second fixing hole 392b.

In the drive frame 390, the fixing flange 392 is in a state of being reinforced by the outer peripheral frame portion 393. Therefore, even if the rigidity of the fixing flange 392 is lowered due to formation of the two holes including the first fixing hole 392a and the second fixing hole 392b, the rigidity of the fixing flange 392 is compensated by the outer peripheral frame portion 393.

The outer peripheral flange 394 extends from the outer peripheral frame portion 393 toward the radially outer side. The outer peripheral flange 394 is located at a position separated from the fixing flange 392 in the circumferential direction CD. Multiple outer peripheral flanges 394 are arranged in the circumferential direction CD. The outer peripheral flange 394 is fixed to the unit duct 100 (see FIG. 2). A hole for fixing the unit duct 100 is formed in the outer peripheral flange 394. The outer peripheral flange 394 is fixed to the unit duct 100 by screwing a fixing tool such as a bolt into the hole.

### <Configuration Group E>

In FIGS. 51, 52, 84, and 86, the electric power lead-out wire 212 is electrically connected to the electric power busbar 261. The electric power lead-out wire 212 is connected to the electric power busbar 261 via a busbar lead-out wire 265. The busbar lead-out wire 265 is in a state of being led out from the electric power busbar 261. The busbar lead-out wire 265 is a conductive member such as an electric wire for a current to pass therethrough, and is electrically connected to the electric power busbar 261. The busbar lead-out wire 265 extends from the electric power busbar 261 toward the radially outer side. Multiple busbar lead-out wires 265 are arranged in the circumferential direction CD. The busbar lead-out wire 265 is connected to each of the multiple electric power busbars 261. The multiple busbar lead-out wires 265 are connected to the electric power busbars 261 of respective phases. The busbar lead-out wire 265 is located on a side opposite to the first rotor 300a with the rear frame 370 interposed therebetween in the axial direction AD.

The electric power busbar 261 and the busbar lead-out wire 265 are provided on a side opposite to the coil 211 with the first rotor 300a interposed therebetween in the axial direction AD. The electric power busbar 261 and the busbar lead-out wire 265 are located at positions separated from the first rotor 300a toward the rear frame 370 in the axial direction AD. The electric power busbar 261 corresponds to a connection target.

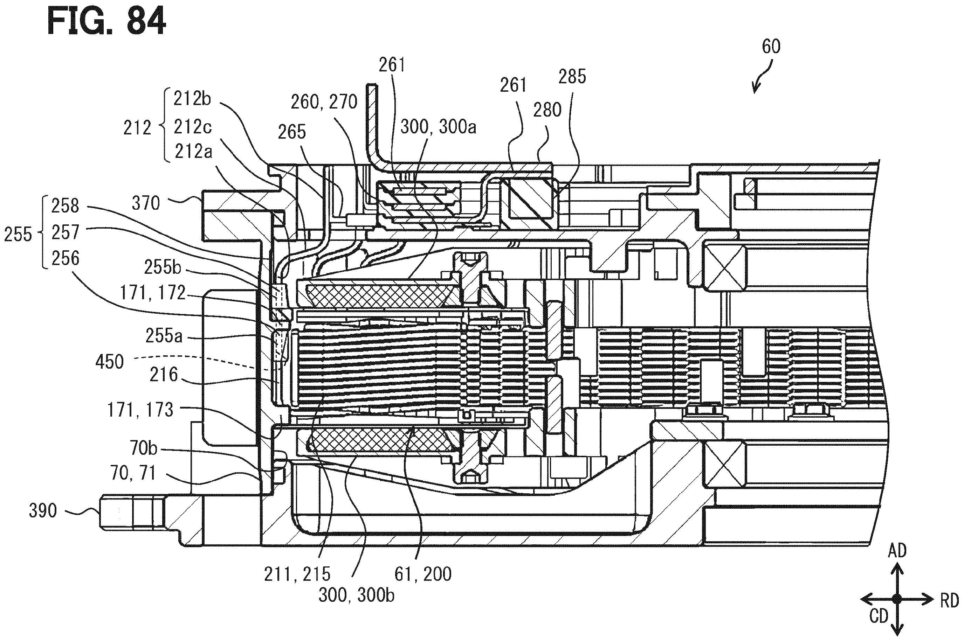

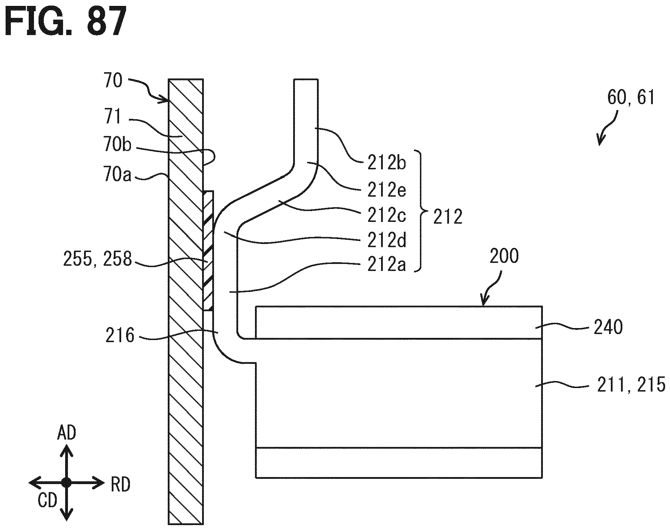

As shown in FIGS. 84, 86, and 87, the electric power lead-out wire 212 includes an outer peripheral lead-out portion 212a, an inner peripheral lead-out portion 212b, an intersection lead-out portion 212c, an outer peripheral bent portion 212d, and an inner peripheral bent portion 212e. In FIG. 87, illustrations of the rotors 300a and 300b, the coil protection portion 250, and the like are omitted. In the motor housing 70, the outer peripheral surface 70a may be referred to as a motor outer peripheral surface 70a, and the inner peripheral surface 70b may be referred to as a motor inner peripheral surface 70b.

The outer peripheral lead-out portion 212a is a portion of the electric power lead-out wire 212 which is provided on an outer peripheral side relative to the coil 211 and the first rotor 300a. The outer peripheral lead-out portion 212a extends along the motor inner peripheral surface 70b in the axial direction AD. The outer peripheral lead-out portion 212a extends straight in the axial direction AD, for example. The outer peripheral lead-out portion 212a includes a portion passing between the coil 211 and the motor inner peripheral surface 70b and a portion passing between the first rotor 300a and the motor inner peripheral surface 70b. The outer peripheral lead-out portion 212a extends further toward the electric power busbar 261 than the coil 211 extends in the axial direction AD. The outer peripheral lead-out portion 212a is located at a position separated from the first rotor 300a toward the radially outer side. The outer peripheral lead-out portion 212a may or may not extend further toward the electric power busbar 261 than is the first rotor 300a in the axial direction AD.

The inner peripheral lead-out portion 212b is a portion of the electric power lead-out wire 212 which is provided radially inward with respect to the outer peripheral lead-out portion 212a. Similarly to the outer peripheral lead-out portion 212a, the inner peripheral lead-out portion 212b extends in the axial direction AD. The inner peripheral lead-out portion 212b extends straight in the axial direction AD, for example. The inner peripheral lead-out portion 212b is located at a position aligned with the first rotor 300a in the axial direction AD. The inner peripheral lead-out portion 212b is located at a position separated from the first rotor 300a toward the electric power busbar 261 in the axial direction AD. The inner peripheral lead-out portion 212b is electrically connected to the busbar lead-out wire 265. The inner peripheral lead-out portion 212b extends further toward the first rotor 300a than the busbar lead-out wire 265 extends in the axial direction AD.

The intersection lead-out portion 212c is a portion of the electric power lead-out wire 212 extending in a direction inclined with respect to the axial direction AD. The intersection lead-out portion 212c extends in a direction intersecting the outer peripheral lead-out portion 212a and the inner peripheral lead-out portion 212b. The intersection lead-out portion 212c extends straight in a direction intersecting the axial direction AD, for example. The intersection lead-out portion 212c is orthogonal to the circumferential direction CD and extends in the axial direction AD and the radial direction RD. In the axial direction AD, an end portion of the intersection lead-out portion 212c on an inner peripheral lead-out portion 212b side is located closer to the electric power busbar 261 than an end portion on an outer peripheral lead-out portion 212a side is.

The outer peripheral bent portion 212d is a portion of the electric power lead-out wire 212 between the outer peripheral lead-out portion 212a and the intersection lead-out portion 212c. The outer peripheral bent portion 212d connects the outer peripheral lead-out portion 212a and the intersection lead-out portion 212c in a bent state. The outer peripheral bent portion 212d is crooked, for example, bent to bulge toward the radially outer side. The outer peripheral bent portion 212d is crooked to connect the outer peripheral lead-out portion 212a and the intersection lead-out portion 212c. The outer peripheral bent portion 212d may be referred to as an outer peripheral crooked portion. The outer peripheral bent portion 212d may not be bent as long as the outer peripheral bent portion 212d is crooked, and may be curved, for example.

The inner peripheral bent portion 212e is a portion of the electric power lead-out wire 212 between the intersection lead-out portion 212c and the inner peripheral lead-out portion 212b. The inner peripheral bent portion 212e is located at a position separated from the outer peripheral bent portion 212d toward the electric power busbar 261 in the axial direction AD. The inner peripheral bent portion 212e connects the intersection lead-out portion 212c and the inner peripheral lead-out portion 212b in a bent state. The inner peripheral bent portion 212e is crooked, for example, bent to bulge toward the radially inner side. The inner peripheral bent portion 212e is crooked to connect the intersection lead-out portion 212c and the inner peripheral lead-out portion 212b. The inner peripheral bent portion 212e may be referred to as an inner peripheral crooked portion. The inner peripheral bent portion 212e may not be bent as long as the inner peripheral bent portion 212e is crooked, and may be curved, for example.

The grommet 255 is made of an insulation material and has an electrical insulation property. In other words, the grommet 255 is made of a non-conductive material and is non-conductive. Examples of the insulation material include a resin material and a rubber material. The grommet 255 is made of a material mainly containing a synthetic resin, for example.

As shown in FIGS. 84, 85, and 86, the grommet 255 includes a grommet main body 256, an inner grommet portion 257, and an outer grommet portion 258. The grommet main body 256, the inner grommet portion 257, and the outer grommet portion 258 are arranged in the axial direction AD. The grommet main body 256 covers and protects the outer peripheral lead-out portion 212a. The grommet main body 256 extends in the axial direction AD in a state of surrounding four sides of the outer peripheral lead-out portion 212a. The grommet main body 256 includes a portion entering between the motor inner peripheral surface 70b and the coil 211 in the radial direction RD.

The inner grommet portion 257 extends along the outer peripheral lead-out portion 212a in the axial direction AD. The inner grommet portion 257 extends from the grommet main body 256 toward the intersection lead-out portion 212c. The inner grommet portion 257 covers and protects the outer peripheral lead-out portion 212a from the radially inner side. The inner grommet portion 257 includes a portion entering between the outer peripheral lead-out portion 212a and the first rotor 300a in the radial direction RD. The inner grommet portion 257 does not extend further toward the electric power busbar 261 than is the first rotor 300a in the axial direction AD. The inner grommet portion 257 corresponds to an inner protection portion.

The outer grommet portion 258 extends along the outer peripheral lead-out portion 212a in the axial direction AD. The outer grommet portion 258 extends from the grommet main body 256 toward the intersection lead-out portion 212c. The outer grommet portion 258 covers and protects the outer peripheral lead-out portion 212a from the radially outer side. The outer grommet portion 258 includes a portion entering between the outer peripheral lead-out portion 212a and the motor inner peripheral surface 70b in the radial direction RD. The outer grommet portion 258 is in a state of being overlapped with the motor inner peripheral surface 70b. The outer grommet portion 258 corresponds to an outer insulation portion and an outer protection portion.

The outer grommet portion 258 extends further toward the electric power busbar 261 than the inner grommet portion 257 extends in the axial direction AD. As shown in FIGS. 84 and 87, the outer grommet portion 258 extends further toward the electric power busbar 261 than the outer peripheral lead-out portion 212a extends in the axial direction AD. The outer grommet portion 258 is in a state of spanning the outer peripheral lead-out portion 212a and the intersection lead-out portion 212c in the axial direction AD. The outer grommet portion 258 extends further toward the electric power busbar 261 than the outer peripheral bent portion 212d extends in the axial direction AD. On the other hand, the outer grommet portion 258 does not reach the inner peripheral lead-out portion 212b in the axial direction AD. That is, the outer grommet portion 258 is located at a position separated from the inner peripheral lead-out portion 212b toward the coil 211 in the axial direction AD. The outer grommet portion 258 may or may not reach the inner peripheral bent portion 212e in the axial direction AD.

In the grommet 255, the outer peripheral lead-out portion 212a is in a state of being sandwiched between the inner grommet portion 257 and the outer grommet portion 258 in the radial direction RD. In the present embodiment, the outer peripheral lead-out portion 212a is in a state of entering inside the inner grommet portion 257 from the radially outer side. Therefore, in addition to the portion entering between the outer peripheral lead-out portion 212a and the first rotor 300a, the inner grommet portion 257 includes a portion that extends from this portion toward the radially outer side. The outer peripheral lead-out portion 212a may be in a state of entering inside the outer grommet portion 258 from the radially inner side.

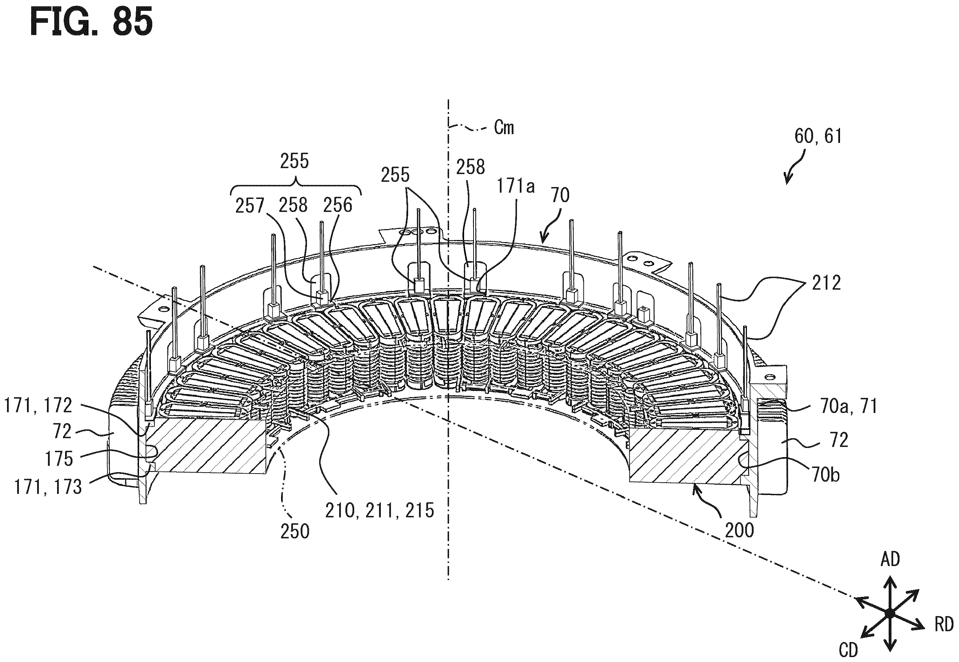

FIG. 85 illustrates a state in which the electric power lead-out wire 212 is not crooked. In FIG. 87, illustrations of the grommet main body 256 and inner grommet portion 257 of the grommet 255 are omitted.

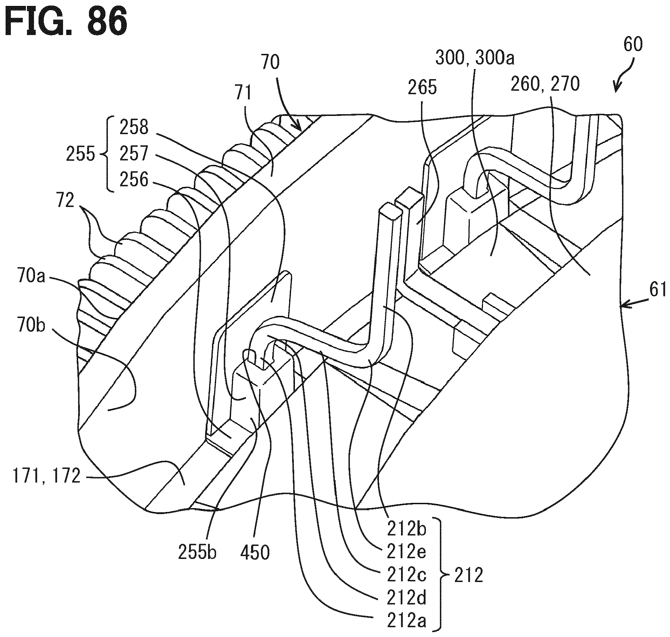

As shown in FIGS. 84 and 86, the outer peripheral lead-out portion 212a extends further toward the electric power busbar 261 than the inner grommet portion 257 extends in the axial direction AD. The outer peripheral lead-out portion 212a extends further toward the drive frame 390 than the grommet 255 extends in the axial direction AD. That is, the outer peripheral lead-out portion 212a extends further toward a side opposite to the electric power busbar 261 than the outer grommet portion 258 extends in the axial direction AD. In the axial direction AD, a length dimension of the outer peripheral lead-out portion 212a is larger than a length dimension of the outer grommet portion 258.

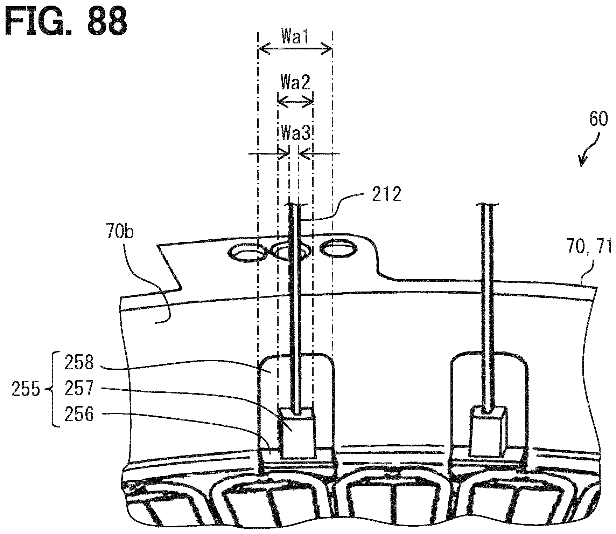

As shown in FIG. 88, in the grommet 255, the outer grommet portion 258 extends from the inner grommet portion 257 toward both sides in the circumferential direction CD. In the circumferential direction CD, a width dimension Wa1 of the outer grommet portion 258 is larger than a width dimension Wa2 of the inner grommet portion 257. The outer grommet portion 258 extends further toward both sides in the circumferential direction CD than the outer peripheral lead-out portion 212a extends. In the circumferential direction CD, the width dimension Wa1 of the outer grommet portion 258 is larger than a width dimension Wa3 of the outer peripheral lead-out portion 212a. The width dimension Wa3 is a dimension indicating a thickness of the outer peripheral lead-out portion 212a. Similarly to the outer grommet portion 258, the inner grommet portion 257 extends further toward both sides in the circumferential direction CD than the outer peripheral lead-out portion 212a extends. In the circumferential direction CD, the width dimension Wa2 of the inner grommet portion 257 is larger than the width dimension Wa3 of the outer peripheral lead-out portion 212a.

As shown in FIGS. 84 and 86, the grommet 255 has a grommet hole 450. The grommet hole 450 penetrates the grommet 255 in the axial direction AD. The grommet hole 450 penetrates the grommet main body 256 in the axial direction AD. The grommet hole 450 extends along a boundary between the inner grommet portion 257 and the outer grommet portion 258 in the axial direction AD. The grommet hole 450 is formed by the inner grommet portion 257 and the outer grommet portion 258. The outer peripheral lead-out portion 212a is inserted through the grommet hole 450, thereby penetrating the grommet 255 in the axial direction AD.

The grommet hole 450 penetrates both the embedded portion 255a and the exposed portion 255b in the grommet 255 in the axial direction AD. The outer peripheral lead-out portion 212a is inserted through the grommet hole 450, thereby penetrating both the embedded portion 255a and the exposed portion 255b in the axial direction AD. In the grommet 255, at least a part of the grommet main body 256 is included in the embedded portion 255a. The inner grommet portion 257 and the outer grommet portion 258 may or may not be included in the embedded portion 255a. At least a part of the inner grommet portion 257 and at least a part of the outer grommet portion 258 are included in the exposed portion 255b. The grommet main body 256 may or may not be included in the exposed portion 255b.

The grommet 255 is fixed to the motor housing 70 by the coil protection portion 250 in which the embedded portion 255a is embedded. In the grommet 255, the grommet main body 256 and the outer grommet portion 258 are fixed to the motor inner peripheral surface 70b.

Next, a method of manufacturing the coil protection portion 250 in the method of manufacturing the motor device 60 will be described. In a process of manufacturing the coil protection portion 250, the operator prepares the coil unit 210, the motor housing 70, and the grommet 255 as a preparation process.

After the preparation process, the operator performs a mold process of attaching the coil unit 210, the motor housing 70, and the grommet 255 to a mold. In the mold process, the operator attaches the grommet 255 to the coil unit 210. The operator inserts the electric power lead-out wire 212 through the grommet hole 450 to attach the grommet 255 to the outer peripheral lead-out portion 212a. For example, as shown in FIG. 85, the operator may insert the electric power lead-out wire 212 through the grommet hole 450 in a state in which the electric power lead-out wire 212 is bent. The operator installs the coil unit 210 inside the motor housing 70. The operator may install the coil unit 210, on which the grommet 255 is attached, inside the motor housing 70. Then, the operator sets the coil unit 210, the motor housing 70, and the grommet 255 in a mold for molding.

The operator performs a molding process after the mold process. In the molding process, the operator causes the coil protection portion 250 to be molded by injection molding by injecting a molten resin inside the motor housing 70. The motor housing 70 and the mold are filled such that the molten resin seals the coil 211. The grommet 255 restricts leakage of the molten resin from a periphery of the electric power lead-out wire 212. The grommet 255 maintains a state in which the coil 211 is sealed by the molten resin. The grommet 255 is in a state in which at least the grommet main body 256 is immersed in the molten resin. In the grommet 255, even if the molten resin enters the grommet hole 450 in the grommet main body 256, the molten resin does not enter the grommet hole 450 in the inner grommet portion 257 and the outer grommet portion 258.

The molten resin is solidified to form the coil protection portion 250. The coil protection portion 250 seals the coil 211, and corresponds to a sealing resin portion. The grommet 255 is in a state in which at least the grommet main body 256 is embedded in the coil protection portion 250. The grommet 255 is a member for maintaining a state in which the coil 211 is sealed by the molten resin, and corresponds to a sealing maintaining portion. The outer grommet portion 258 is included in the sealing maintaining portion.

### <Configuration Group F>

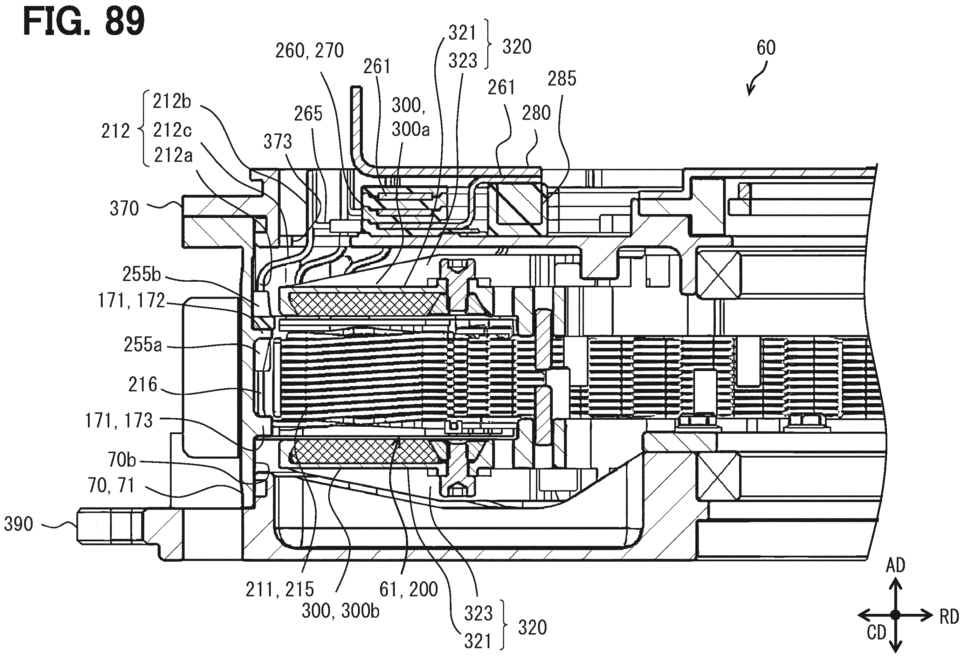

As shown in FIG. 89, each of the first rotor 300a and the second rotor 300b includes holder ribs 323. Each of the holder ribs 323 is provided on the magnet holder 320. The holder rib 323 extends from the holder main body 321 in the axial direction AD. The holder rib 323 protrudes from the holder main body 321 toward a side opposite to the stator 200 in the axial direction AD. In the first rotor 300a, the holder rib 323 protrudes toward the electric power busbar 261. In the second rotor 300b, the holder rib 323 protrudes toward the drive frame 390.

In the magnet holder 320, the holder main body 321 and the holder ribs 323 are integrally formed. For example, the holder main body 321 and the holder ribs 323 are integrally molded by a material for forming the magnet holder 320. The magnet holder 320 is a non-magnetic member and is made of a non-magnetic material. Examples of the non-magnetic material for forming the magnet holder 320 include an aluminum alloy, titanium, a resin, and CFRP. The CFRP is carbon fiber reinforced plastics.

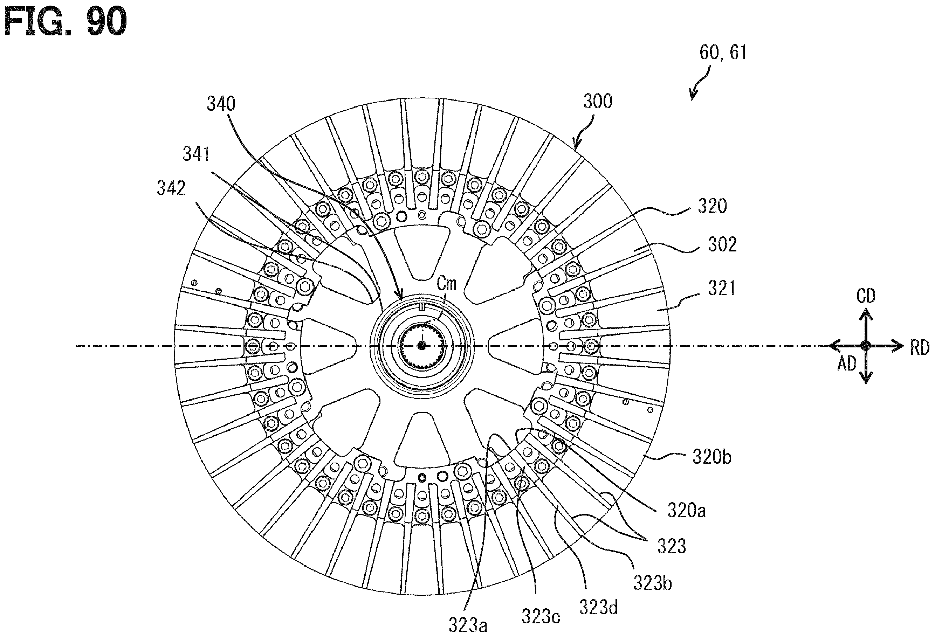

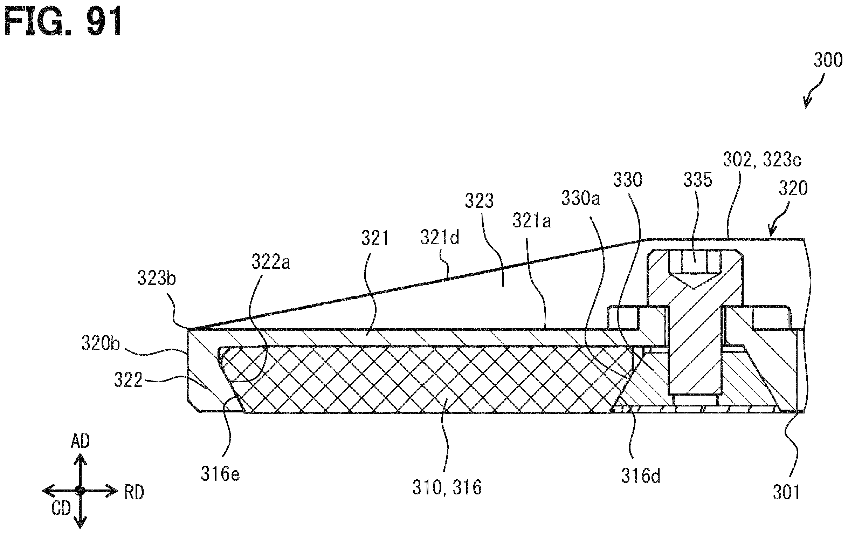

In FIGS. 90 and 91, the holder inner peripheral end 320a and the holder outer peripheral end 320b of the magnet holder 320 are formed by the holder main body 321. Both an inner peripheral end and an outer peripheral end of the holder main body 321 extend in an annular shape in the circumferential direction CD. The inner peripheral end of the holder main body 321 is the holder inner peripheral end 320a, and the outer peripheral end of the holder main body 321 is the holder outer peripheral end 320b. The holder main body 321 extends along the stator 200 in a plate shape in the direction orthogonal to the axial direction AD. The holder main body 321 corresponds to a rotor plate portion, and the holder rib 323 corresponds to a rotor rib. The holder inner peripheral end 320a corresponds to an inner peripheral end of the rotor plate portion, and the holder outer peripheral end 320b corresponds to an outer peripheral end of the rotor plate portion.

The holder main body 321 has a main body outer plate surface 321a. The main body outer plate surface 321a is a plate surface in a pair of plate surfaces of the holder main body 321 which is on an electric power busbar 261 side. The main body outer plate surface 321a extends in the direction orthogonal to the axial direction AD. The holder rib 323 is provided on the main body outer plate surface 321a. In the holder main body 321, the magnet 310 is provided on the plate surface opposite to the main body outer plate surface 321a.

The holder rib 323 extends along the holder main body 321 in the radial direction RD. The holder rib 323 extends from the holder outer peripheral end 320b toward the radially inner side. The holder rib 323 is a portion of the rotor 300 that extends in an elongated shape in the radial direction RD. The holder rib 323 extends in the radial direction RD to span the holder outer peripheral end 320b and the holder inner peripheral end 320a. The holder rib 323 extends from the holder inner peripheral end 320a toward the radially outer side. The holder rib 323 is provided on the second rotor surface 302, and is not provided on the first rotor surface 301.

Multiple holder ribs 323 are arranged in the circumferential direction CD. The holder ribs 323 extend radially around the motor axis Cm. A protruding portion protruding toward the radially inner side is provided at the inner peripheral end of the holder main body 321. Multiple protruding portions are arranged in the circumferential direction CD. The multiple holder ribs 323 include a holder rib 323 located at a position aligned with the protruding portion in the radial direction RD.

The holder rib 323 includes a rib inner peripheral end 323a and a rib outer peripheral end 323b. The rib inner peripheral end 323a is an end portion in a pair of end portions of the holder rib 323 which is on the radially inner side, and the rib outer peripheral end 323b is an end portion which is on the radially outer side. The rib inner peripheral end 323a is located at a position aligned with the holder inner peripheral end 320a in the axial direction AD. The rib outer peripheral end 323b is located at a position aligned with the holder outer peripheral end 320b in the axial direction AD.

The holder rib 323 includes a rib parallel portion 323c and a rib tapered portion 323d. The rib parallel portion 323c and the rib tapered portion 323d are provided on a tip portion of the holder rib 323. In a pair of end portions of the holder rib 323 arranged in the axial direction AD, an end portion opposite to the holder main body 321 is the tip portion. The tip portion of the holder rib 323 is, for example, a tip end surface. The rib parallel portion 323c extends from the rib inner peripheral end 323a toward the radially outer side. The rib parallel portion 323c extends parallel to the main body outer plate surface 321a. The rib parallel portion 323c is, for example, a surface extending in the direction orthogonal to the axial direction AD, and is a flat surface.

The rib tapered portion 323d extends from the rib outer peripheral end 323b toward the radially inner side. The rib tapered portion 323d is inclined with respect to the main body outer plate surface 321a to face the radially outer side. The rib tapered portion 323d gradually moves away from the main body outer plate surface 321a from the rib outer peripheral end 323b toward the radially inner side. The rib tapered portion 323d is an inclined surface extending in a direction inclined with respect to the holder main body 321. The rib tapered portion 323d extends straight into a tapered shape in the direction inclined with respect to the main body outer plate surface 321a, and may be referred to as a tapered surface. The rib tapered portion 323d corresponds to a rib inclined portion.

The rib tapered portion 323d extends from the rib parallel portion 323c toward the radially outer side. The rib tapered portion 323d is in a state of spanning the rib parallel portion 323c and the rib outer peripheral end 323b. In the radial direction RD, the rib tapered portion 323d is longer than the rib parallel portion 323c. A boundary between the rib tapered portion 323d and the rib parallel portion 323c is located closer to the rib inner peripheral end 323a than to the rib outer peripheral end 323b.

A width dimension of the holder rib 323 in the circumferential direction CD gradually decreases toward the radially outer side. In the holder rib 323, a width dimension of the rib outer peripheral end 323b is smaller than a width dimension of the rib inner peripheral end 323a. In the holder rib 323, the rib inner peripheral end 323a has a largest width dimension, and the rib outer peripheral end 323b has a smallest width dimension.

The holder rib 323 is provided at a position overlapped with the magnet 310 in the axial direction AD. The holder rib 323 extends further toward the radially outer side than the magnet 310. The rib outer peripheral end 323b is located at a position separated from the magnet 310 toward the radially outer side. The rib inner peripheral end 323a is located at a position separated from the magnet 310 toward the radially inner side. The boundary between the rib parallel portion 323c and the rib tapered portion 323d is located radially inward with respect to the magnet 310.

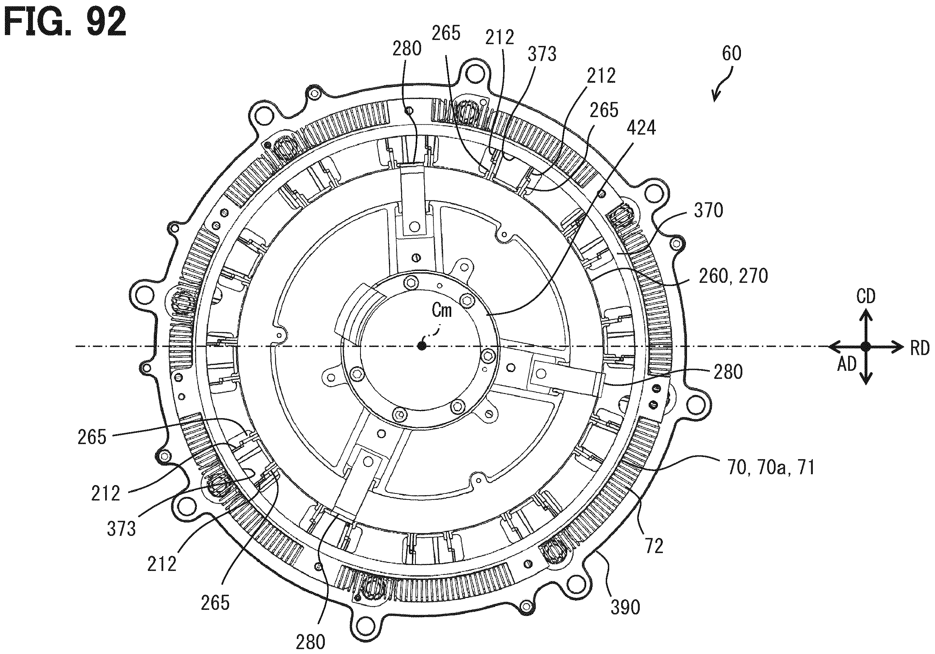

As shown in FIGS. 89 and 92, the rear frame 370 extends in a plate shape in the direction orthogonal to the axial direction AD, and is provided between the first rotor 300a and the electric power busbar 261. The rear frame 370 is made of an aluminum alloy, titanium, a resin, CFRP, and the like. The frame opening portion 373 is formed in the rear frame 370 to penetrate the rear frame 370 in the axial direction AD. The electric power lead-out wire 212 is inserted through the frame opening portion 373 and led out toward the electric power busbar 261 through the frame opening portion 373. The electric power lead-out wire 212 is electrically connected to the electric power busbar 261 via the busbar lead-out wire 265. The rear frame 370 corresponds to an intermediate plate portion, and the frame opening portion 373 corresponds to a lead-out insertion hole.

The busbar lead-out wire 265 is in a state of being led out from the busbar unit 260. The busbar lead-out wire 265 is electrically connected to each of the electric power busbar 261 and the electric power lead-out wire 212. A portion for connecting the busbar lead-out wire 265 and the electric power busbar 261 is protected by the busbar protection portion 270. A lead-out connection portion 266 for connecting the busbar lead-out wire 265 and the electric power lead-out wire 212 is provided outside the busbar protection portion 270. The lead-out connection portion 266 is located at a position separated from the frame opening portion 373 toward the electric power busbar 261 in the axial direction AD. The lead-out connection portion 266 is located at a position aligned with the frame opening portion 373 in the axial direction AD. The busbar lead-out wire 265 corresponds to a connection lead-out portion, and the lead-out connection portion 266 corresponds to a connection portion.

The busbar unit 260 is fixed to the rear frame 370. In the rear frame 370, the busbar protection portion 270 is fixed to the rear frame 370. The busbar protection portion 270 is supported by the busbar support portion 371 of the rear frame 370. The busbar protection portion 270 is made of a material having an electrical insulation property. Examples of the material for forming the busbar protection portion 270 include a resin and CFRP. The rear frame 370 is fixed to the motor housing 70. The motor housing 70 is made of an aluminum alloy, titanium, a resin, CFRP, and the like.

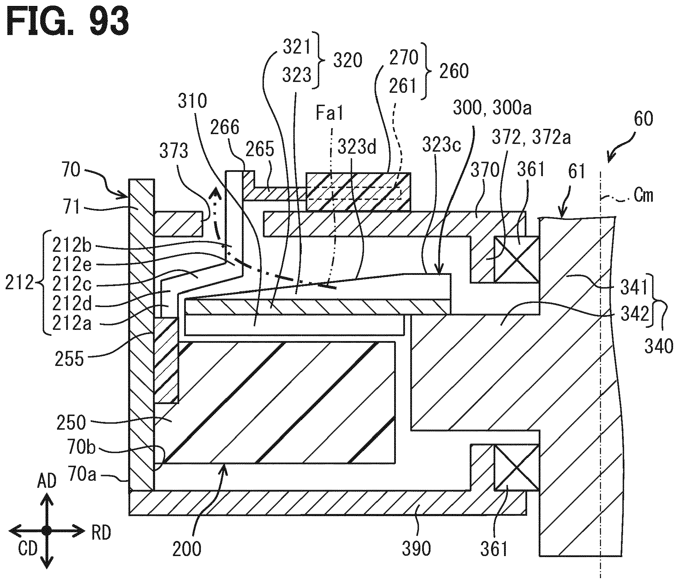

As shown in FIGS. 89 and 93, a part of the electric power lead-out wire 212 is located at a position aligned with the holder rib 323 in the axial direction AD. The electric power lead-out wire 212 includes an aligned lead-out portion located at a position aligned with the holder rib 323 in the axial direction AD. The aligned lead-out portion includes the inner peripheral lead-out portion 212b, the intersection lead-out portion 212c, and the inner peripheral bent portion 212e. The aligned lead-out portion is located on a side opposite to the stator 200 with the first rotor 300a interposed therebetween in the axial direction AD. The aligned lead-out portion is provided on a side opposite to the holder main body 321 with the holder rib 323 of the first rotor 300a interposed therebetween.

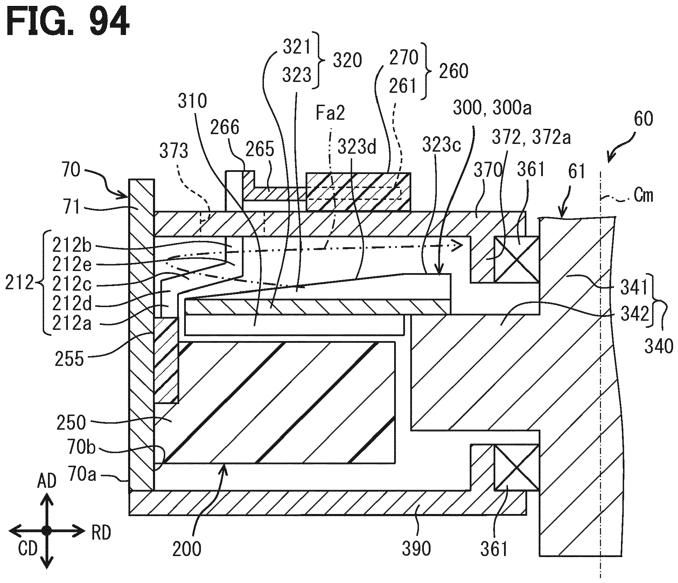

In the electric power lead-out wire 212, the inner peripheral lead-out portion 212b is inserted through the frame opening portion 373. In the lead-out connection portion 266, the inner peripheral lead-out portion 212b is connected to the busbar lead-out wire 265. In FIGS. 93 and 94, an illustration of the first rotor 300a and the like is omitted.

In the motor device 60, when the rotor 300 rotates, a flow of air is generated by the holder rib 323 as an air flow. The holder rib 323 rotates together with the holder main body 321 about the motor axis Cm as the rotor 300 rotates. The holder rib 323 rotates together with the holder main body 321 to send air toward the electric power lead-out wire 212 and the like. The air flow generated by the holder rib 323 serves as cooling air to cool the electric power lead-out wire 212 and the like. The cooling air generated by the holder rib 323 hits, for example, a portion of the electric power lead-out wire 212 exposed from the coil protection portion 250 and the grommet 255. The cooling air hits a portion of the outer peripheral lead-out portion 212a exposed from the grommet 255, the lead-out portions 212b and 212c, and the bent portions 212d and 212e.

For example, as shown in FIG. 5, the cooling air generated by the holder rib 323 of the first rotor 300a includes an air flow Fa1 flowing out from the frame opening portion 373. The air flow Fa1 flows radially outward from the holder rib 323 toward the electric power lead-out wire 212, and reaches the frame opening portion 373 while cooling the electric power lead-out wire 212. Then, the air flow Fa1 flows in the axial direction AD to pass through the frame opening portion 373, and cools the lead-out connection portion 266, the electric power busbar 261, and the like.

As shown in FIG. 6, the air flow generated by the holder rib 323 of the first rotor 300a includes an air flow Fa2 that flows in a circulating manner. The air flow Fa2 flows radially outward along the holder rib 323 toward the electric power lead-out wire 212, and reaches the motor inner peripheral surface 70b while cooling the electric power lead-out wire 212. Thereafter, the air flow Fa2 flows toward the radially inner side along the rear frame 370 while cooling the electric power lead-out wire 212. The air flow Fa2 flows along the rear frame 370 to cool the busbar unit 260 via the rear frame 370. In the busbar unit 260, the electric power busbar 261 is indirectly cooled by the air flow Fa2 via the rear frame 370 and the busbar protection portion 270.

Further, the air flow flowing in the radial direction RD along the holder rib 323 such as the air flows Fa1 and Fa2 can cool the magnet 310 via the holder main body 321. The air flow flowing into the stator 200 over the first rotor 300a can cool the coil protection portion 250 and the coil 211.

### <Configuration Group G>

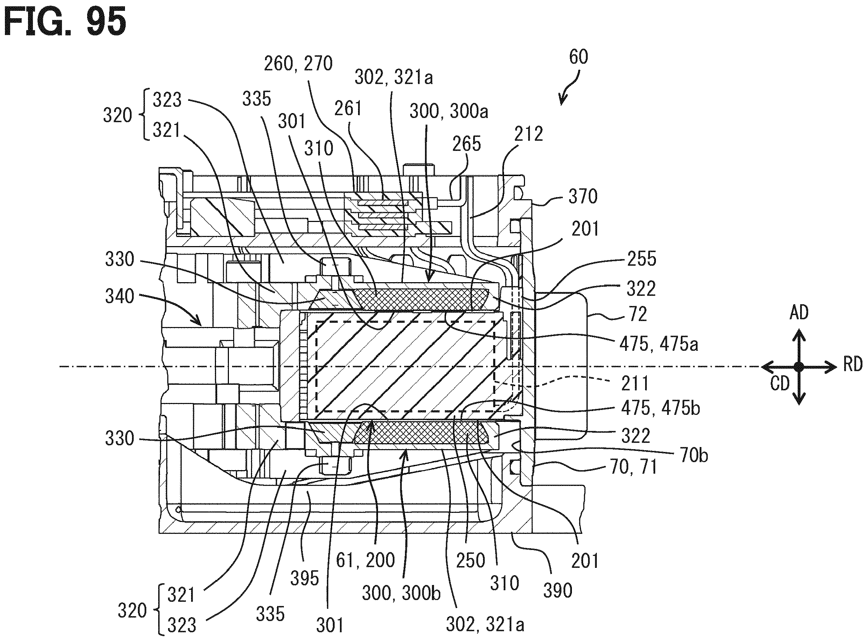

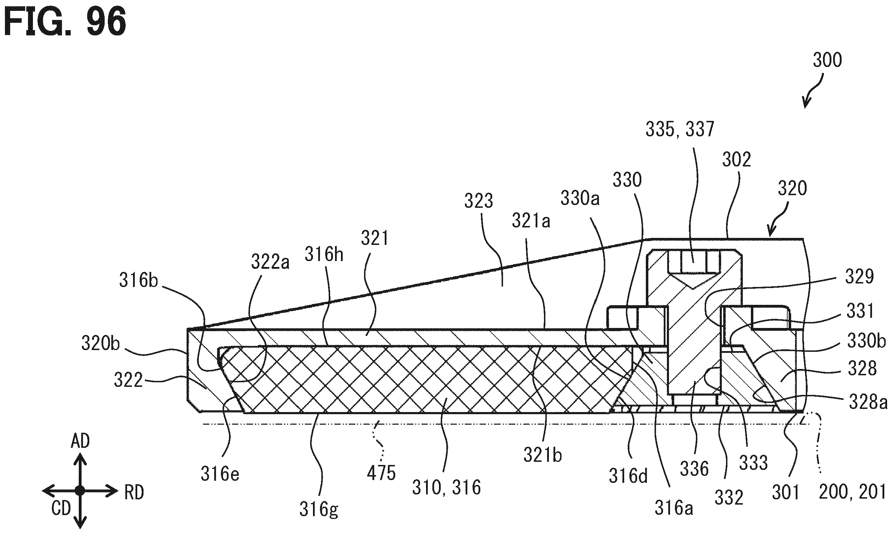

As shown in FIGS. 95 and 96, the motor device 60 includes an axial gap 475. The axial gap 475 is a gap between the stator 200 and the rotor 300, and corresponds to an axial gap. The axial gap 475 extends in the direction orthogonal to the axial direction AD. Similarly to the stator 200 and the rotor 300, the axial gap 475 extends in an annular shape in the circumferential direction CD. The axial gap 475 is located at least between the coil 211 and the magnet 310. The axial gap 475 extends further in the radial direction RD than the coil 211 and the magnet 310 extend. The axial gap 475 extends at least radially inward or radially outward with respect to at least one of the coil 211 and the magnet 310.

The axial gap 475 is a gap between a stator surface 201 and the first rotor surface 301. The stator surface 201 is an end surface of the stator 200, and is arranged in a pair in the axial direction AD. One in the pair of stator surfaces 201 faces the first rotor 300a, and the other faces the second rotor 300b. The stator surface 201 is included in an outer surface of the stator 200. The stator surface 201 extends in the direction orthogonal to the axial direction AD, and extends in an annular shape in the circumferential direction CD. The stator surface 201 is formed by at least one of the core unit 230 and the coil protection portion 250.

In the axial gap 475, a magnetic field tends to be strengthened as a gap area increases. The gap area is a cross-sectional area of the axial gap 475 in the direction orthogonal to the motor axis Cm. For example, when the axial gap 475 is expanded to the radially outer side by a predetermined dimension, an increment in the gap area is larger than that when the axial gap 475 is expanded to the radially inner side by the same predetermined dimension.

As described in the above configuration group Bb, in the rotor 300, the magnet unit 316 is fixed to the magnet holder 320 by the fixing block 330. The fixing block 330 holds, together with the outer peripheral engagement portion 322, the magnet unit 316 in a manner of embracing the magnet unit 316 therein. The fixing block 330 and the outer peripheral engagement portion 322 hold the magnet unit 316 such that the magnet unit 316 does not fall off from the magnet holder 320.

As shown in FIGS. 96, 97, and 99, the holder main body 321 has a main body inner plate surface 321b. The main body inner plate surface 321b is a plate surface in the pair of plate surfaces of the holder main body 321 which is opposite to the main body outer plate surface 321a. The main body inner plate surface 321b faces the axial gap 475, and extends in the direction orthogonal to the axial direction AD together with the axial gap 475.

In the magnet unit 316, the unit outer peripheral end 316b is in a state of entering between the main body inner plate surface 321b and the engagement tapered surface 322a. The outer peripheral engagement portion 322 and the engagement tapered surface 322a extend in an annular shape in the circumferential direction CD along the holder outer peripheral end 320b. The engagement tapered surface 322a is inclined with respect to the motor axis Cm to face a side opposite to the axial gap 475. The outer peripheral tapered surface 316e is in a state of being caught by the engagement tapered surface 322a. The outer peripheral engagement portion 322 supports the magnet unit 316 in a state in which the unit outer peripheral end 316b is caught, and corresponds to an outer peripheral support portion.

The magnet holder 320 includes a holder receiving portion 328. The holder receiving portion 328 is a portion of the magnet holder 320 that receives the fixing block 330. The holder receiving portion 328 is located at the radially inner side of the fixing block 330. The holder receiving portion 328 is provided at a position away from the outer peripheral engagement portion 322 toward the radially inner side with the magnet unit 316 and the fixing block 330 interposed therebetween. Similarly to the outer peripheral engagement portion 322, the holder receiving portion 328 is a protruding portion provided on the main body inner plate surface 321b. The holder receiving portion 328 extends in the axial direction AD from the holder main body 321 toward the axial gap 475. The holder receiving portion 328 extends in an annular shape along the holder inner peripheral end 320a in the circumferential direction CD.

The holder receiving portion 328 has a holder receiving surface 328a. The holder receiving surface 328a is an inclined surface inclined with respect to the motor axis Cm. The holder receiving surface 328a faces the radially outer side and is inclined with respect to the motor axis Cm to face the axial gap 475. The holder receiving surface 328a extends in an annular shape along the holder inner peripheral end 320a in the circumferential direction CD. The holder receiving surface 328a has an annular shape.

The fixing block 330 fixes the magnet unit 316 to the magnet holder 320 and corresponds to a fixing member. The fixing block 330 is a non-magnetic member and is made of a non-magnetic material. Examples of the non-magnetic material for forming the fixing block 330 include an aluminum alloy, titanium, a resin, and CFRP.

The fixing blocks 330 are individually provided for the multiple magnet units 316. For example, one fixing block 330 fixes one magnet unit 316. That is, the fixing block 330 and the magnet unit 316 are provided in one-to-one correspondence. The multiple fixing blocks 330 include an inclined fixing block 330 for fixing the inclined magnet unit 317 and a parallel fixing block 330 for fixing the parallel magnet unit 318. The inclined fixing block 330 and the parallel fixing block 330 are different in at least one of a shape and a size. For example, in the circumferential direction CD, a width dimension of the inclined fixing block 330 is larger than a width dimension of the parallel fixing block 330. The inclined fixing block 330 and the parallel fixing block 330 may have the same shape and size.

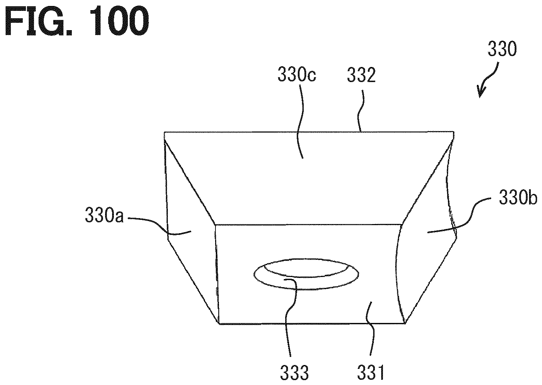

As shown in FIGS. 96 and 100, the fixing block 330 has a block receiving surface 330b and block facing surfaces 330c in addition to the block tapered surface 330a. The block tapered surface 330a, the block receiving surface 330b, and the block facing surfaces 330c are included in the outer surface of the fixing block 330.

The block receiving surface 330b is an inclined surface inclined with respect to the motor axis Cm. The block receiving surface 330b faces the radially inner side and is inclined with respect to the motor axis Cm to face a side opposite to the axial gap 475. The block receiving surface 330b is in a state of being overlapped with the holder receiving surface 328a. The block receiving surface 330b is curved to be recessed toward the radially outer side. Since the block receiving surface 330b is a curved surface, the block receiving surface 330b is easily overlapped with the holder receiving surface 328a having an annular shape. The block receiving surface 330b corresponds to a fixing opposite surface.

A pair of block facing surfaces 330c are arranged in the circumferential direction CD. The pair of block facing surfaces 330c span the block tapered surface 330a and the block receiving surface 330b. The pair of block facing surfaces 330c extend parallel to each other.

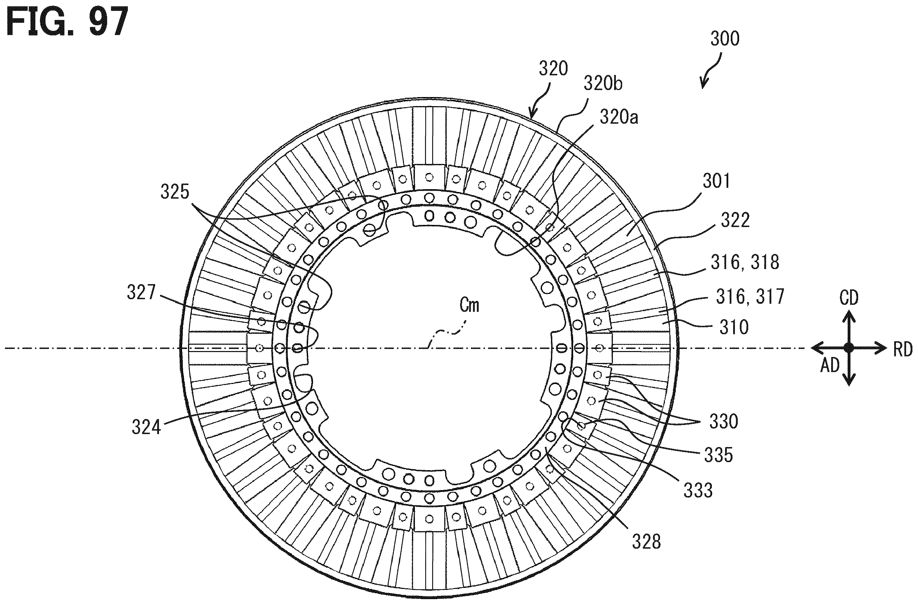

As shown in FIG. 97, the multiple fixing blocks 330 are arranged in the circumferential direction CD. The multiple fixing blocks 330 are arranged in a row along the circumferential direction CD. The row of the fixing blocks 330 extends in an annular shape in the circumferential direction CD as a whole. There is a gap between two fixing blocks 330 adjacent to each other in the circumferential direction CD. In the fixing blocks 330, the block facing surfaces 330c are inclined with respect to each other, and thus a gap is formed. The fixing block 330 corresponds to a dividing member.

As shown in FIGS. 96 and 100, the fixing block 330 has a block inner end surface 331 and a block outer end surface 332. The block inner end surface 331 and the block outer end surface 332 are included in the outer surface of the fixing block 330 together with the block tapered surface 330a and the like. The block inner end surface 331 and the block outer end surface 332 extend in the direction orthogonal to the axial direction AD. The block inner end surface 331 is provided inside the magnet holder 320 and faces a side opposite to the axial gap 475. The block outer end surface 332 is provided outside the magnet holder 320 and faces the axial gap 475. The block outer end surface 332 faces the stator surface 201 with the axial gap 475 interposed therebetween. The block tapered surface 330a, the block receiving surface 330b, and the block facing surfaces 330c are in a state of spanning the block inner end surface 331 and the block outer end surface 332.

The fixing block 330 has a block hole 333. The block hole 333 penetrates the fixing block 330 in the axial direction AD. The block hole 333 extends in the axial direction AD to span the block inner end surface 331 and the block outer end surface 332. The block hole 333 is a screw hole into which the magnet fixing tool 335 is screwed. The block hole 333 has a female screw. The female screw is provided on an inner peripheral surface of the block hole 333.

The magnet holder 320 includes block-purpose holes 329. Each of the block-purpose holes 329 penetrates the holder main body 321 in the axial direction AD. The block-purpose hole 329 is formed between the outer peripheral engagement portion 322 and the holder receiving portion 328 in the radial direction RD. Multiple block-purpose holes 329 are arranged in the circumferential direction CD. The block-purpose hole 329 is aligned with the block hole 333 in the axial direction AD and is in communication with the block hole 333.

The magnet fixing tool 335 screws the fixing block 330 to the magnet holder 320. The magnet fixing tool 335 is a non-magnetic member and is made of a non-magnetic material. Examples of the non-magnetic material for forming the magnet fixing tool 335 include an aluminum alloy, titanium, a resin, and CFRP.

The magnet fixing tool 335 includes a fixing shaft portion 336 and a fixing head portion 337. The fixing shaft portion 336 extends from the fixing head portion 337 in the axial direction AD. The fixing shaft portion 336 has a male screw. The male screw is formed on an outer peripheral surface of the fixing shaft portion 336. The fixing shaft portion 336 is screwed into the block hole 333 through the block-purpose hole 329. The fixing head portion 337 is in a state of being caught by the holder main body 321 from a side opposite to the fixing block 330. The fixing head portion 337 does not protrude further than the holder rib 323 in the axial direction AD. The magnet fixing tool 335 screws the fixing block 330 to the magnet holder 320 from the side opposite to the fixing block 330 with the holder main body 321 interposed therebetween. The magnet fixing tool 335 corresponds to a screw member, the fixing shaft portion 336 corresponds to a screw portion, and the fixing head portion 337 corresponds to a screw head portion.

The magnet fixing tool 335 can adjust a position of the fixing block 330 in the axial direction AD by adjusting a degree of screwing the fixing shaft portion 336 into the block hole 333. Since the holder receiving surface 328a and the block receiving surface 330b are inclined with respect to the motor axis Cm, the position of the fixing block 330 can be adjusted in the radial direction RD. For example, even if the position of the fixing block 330 is deviated in the radial direction RD depending on a shape and a size of the magnet unit 316, the holder receiving surface 328a and the block receiving surface 330b are easily brought into contact with each other by adjusting the position of the fixing block 330 in the axial direction AD. Both the holder receiving surface 328a and the block receiving surface 330b correspond to adjustment surfaces.

For example, a configuration different from that of the present embodiment is assumed in which the holder receiving surface 328a and the block receiving surface 330b extend parallel to the motor axis Cm. In the configuration, for example, when the position of the fixing block 330 is deviated toward the radially outer side, there is concern that the holder receiving surface 328a and the block receiving surface 330b are away from each other in the radial direction RD. When the position of the fixing block 330 is deviated toward the radially inner side, there is a concern that the fixing block 330 is caught by the holder receiving portion 328, and the fixing block 330 cannot be inserted between the magnet unit 316 and the holder receiving portion 328.

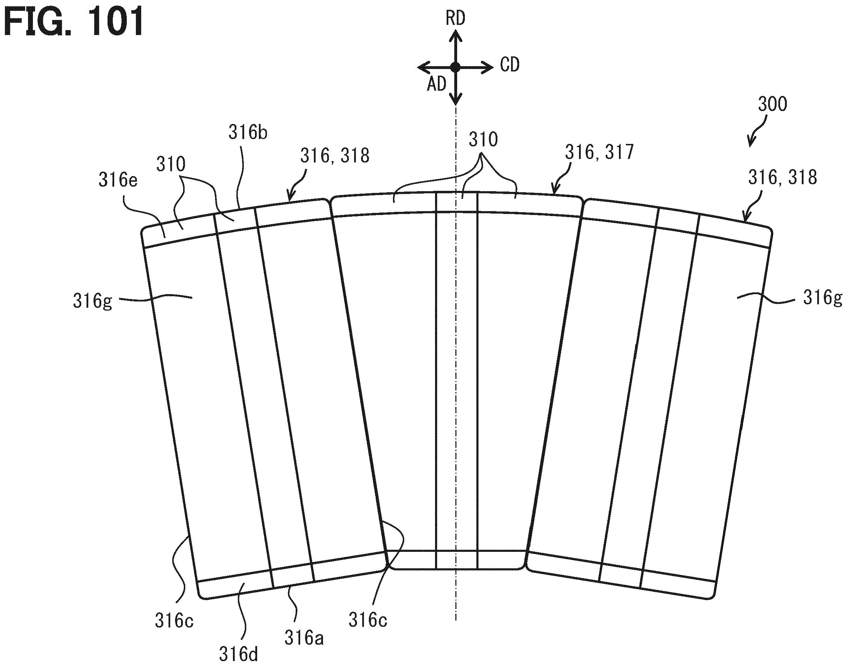

As shown in FIGS. 96, 101, and 102, the magnet unit 316 has a first unit surface 316g and a second unit surface 316h. The magnet unit 316 is formed in a plate shape as a whole and extends in the direction orthogonal to the axial direction AD. The first unit surface 316g and the second unit surface 316h are a pair of plate surfaces of the magnet unit 316. The first unit surface 316g and the second unit surface 316h extend in the direction orthogonal to the axial direction AD. The first unit surface 316g faces the axial gap 475. The first unit surface 316g faces the stator 200 with the axial gap 475 interposed therebetween, and corresponds to a unit facing surface. The second unit surface 316h faces a side opposite to the axial gap 475. The second unit surface 316h is overlapped with the main body inner plate surface 321b. The first unit surface 316g and the second unit surface 316h extend parallel to each other.

A peripheral edge surface of the magnet unit 316 extends along peripheral portions of the first unit surface 316g and the second unit surface 316h. The peripheral edge surface of the magnet unit 316 extends in the axial direction AD to span the first unit surface 316g and the second unit surface 316h. The peripheral edge surface of the magnet unit 316 includes the unit inner peripheral end 316a, the unit outer peripheral end 316b, and the unit side surfaces 316c.

The unit inner peripheral end 316a is an end surface of the magnet unit 316 on the radially inner side. The unit inner peripheral end 316a has the inner peripheral tapered surface 316d. The inner peripheral tapered surface 316d corresponds to a magnet inclined surface, and the unit inner peripheral end 316a corresponds to an inner end surface. The unit outer peripheral end 316b is an end surface of the magnet unit 316 on the radially outer side. The unit outer peripheral end 316b has the outer peripheral tapered surface 316e. The outer peripheral tapered surface 316e corresponds to an outer peripheral inclined surface, and the unit outer peripheral end 316b corresponds to an outer end surface.

Regarding each of the inner peripheral tapered surface 316d and the outer peripheral tapered surface 316e, an inclination angle with respect to the motor axis Cm is, for example, an angle smaller than 45 degrees. Regarding each of the inner peripheral tapered surface 316d and the outer peripheral tapered surface 316e, a length dimension in the circumferential direction CD is smaller than a length dimension in the axial direction AD.

As shown in FIG. 96, in the magnet unit 316, the unit inner peripheral end 316a is in a state of entering between the main body inner plate surface 321b and the block tapered surface 330a. The block tapered surface 330a is inclined with respect to the motor axis Cm to face a side opposite to the axial gap 475. The block tapered surface 330a is caught to overlap with the inner peripheral tapered surface 316d. The block tapered surface 330a corresponds to a fixing inclined surface.

The first rotor surface 301 includes the first unit surface 316g. The first rotor surface 301 includes a tip end surface of the outer peripheral engagement portion 322. The tip end surface of the outer peripheral engagement portion 322 forms the axial gap 475 together with the first unit surface 316g. The tip end surface of the outer peripheral engagement portion 322 is arranged continuously with the first unit surface 316g in the radial direction RD. The tip end surface of the outer peripheral engagement portion 322 does not approach the axial gap 475 beyond the first unit surface 316g. The tip end surface of the outer peripheral engagement portion 322 may be located at a position away from the axial gap 475 beyond the first unit surface 316g.

The first rotor surface 301 includes the block inner end surface 331. The block inner end surface 331 forms the axial gap 475 together with the first unit. The block inner end surface 331 is arranged continuously with the first unit surface 316g in the radial direction RD. The block inner end surface 331 does not approach the axial gap 475 beyond the first unit surface 316g. The block inner end surface 331 may be located away from the axial gap 475 beyond the first unit surface 316g.

In the rotor 300, the axial gap 475 is determined by a position of the magnet unit 316 in the axial direction AD. As described above, the outer peripheral engagement portion 322 and the fixing block 330 do not narrow the axial gap 475 due to approaching to the axial gap 475 beyond the first unit surface 316g.

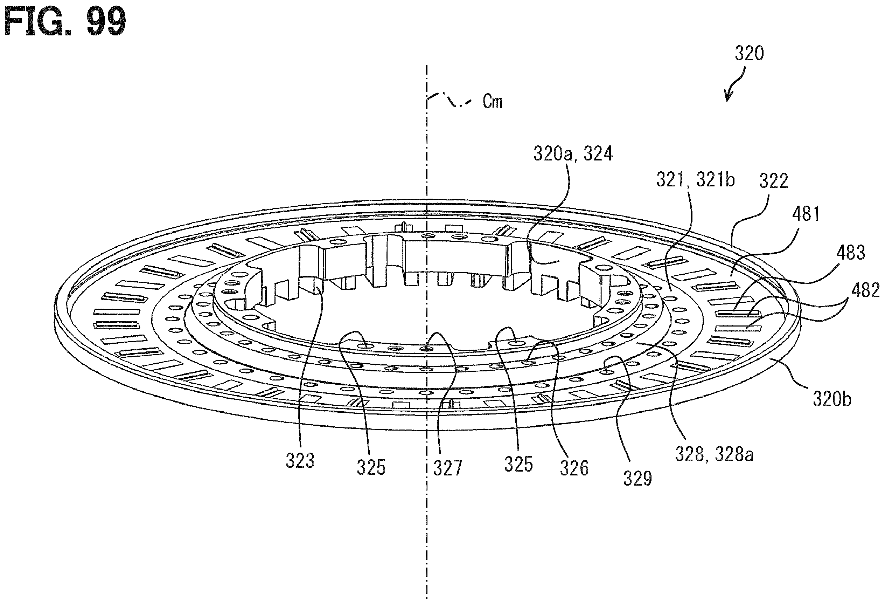

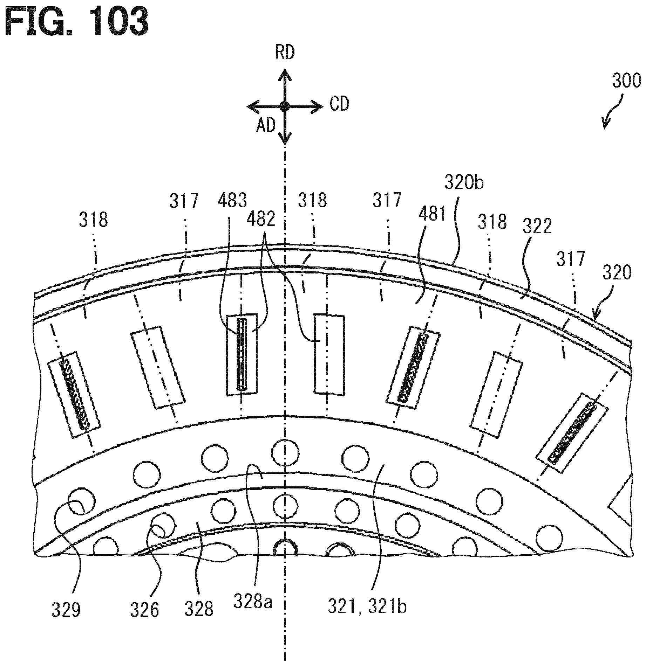

The magnet unit 316 is bonded to the holder main body 321 by an adhesive. The adhesive is made of a resin material or the like. As shown in FIGS. 99 and 103, the magnet holder 320 includes an adhesion recess portion 481 and magnet bases 482. The adhesion recess portion 481 is a recess portion provided in the main body inner plate surface 321b. Each of the magnet bases 482 is a projection portion protruding from a bottom surface of the adhesion recess portion 481. A tip end surface of the magnet base 482 is flush with the main body inner plate surface 321b. The magnet unit 316 is provided to span the magnet base 482 and the main body inner plate surface 321b. The adhesive is provided inside the adhesion recess portion 481 and bonds an inner surface of the adhesion recess portion 481 and the second unit surface 316h.

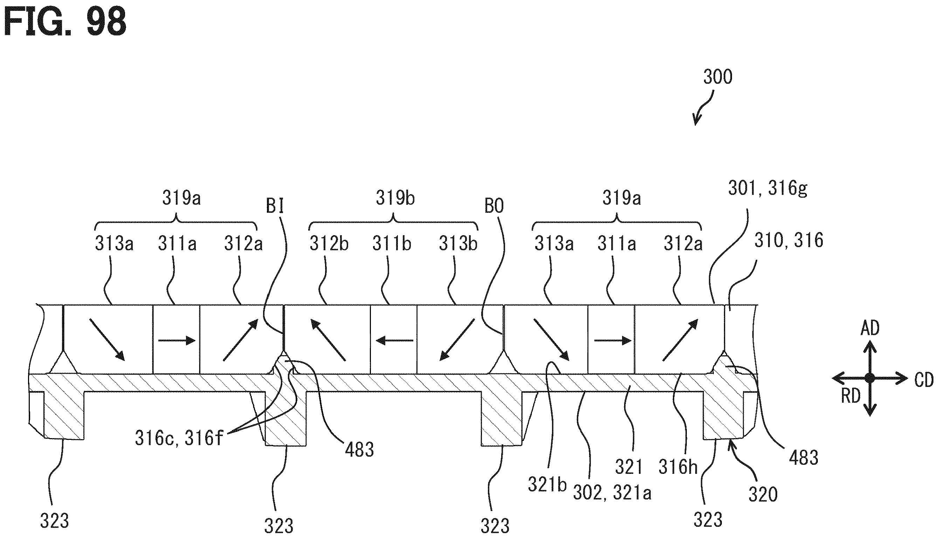

As shown in FIGS. 98, 99, and 103, the magnet holder 320 includes magnet protrusions 483. Each of the magnet protrusions 483 protrudes from the holder main body 321 toward the magnet unit 316. The magnet protrusion 483 is, for example, a protrusion provided on the magnet base 482. Multiple magnet protrusions 483 are arranged in the circumferential direction CD. The magnet protrusion 483 is provided between the outer peripheral engagement portion 322 and the holder receiving portion 328 and extends in the radial direction RD. The magnet protrusion 483 determines the position of the magnet unit 316 in the circumferential direction CD, and corresponds to a positioning portion. The magnet protrusion 483 is caught by the magnet unit 316 to restrict the magnet unit 316 from being deviated in the circumferential direction CD relative to the magnet holder 320.

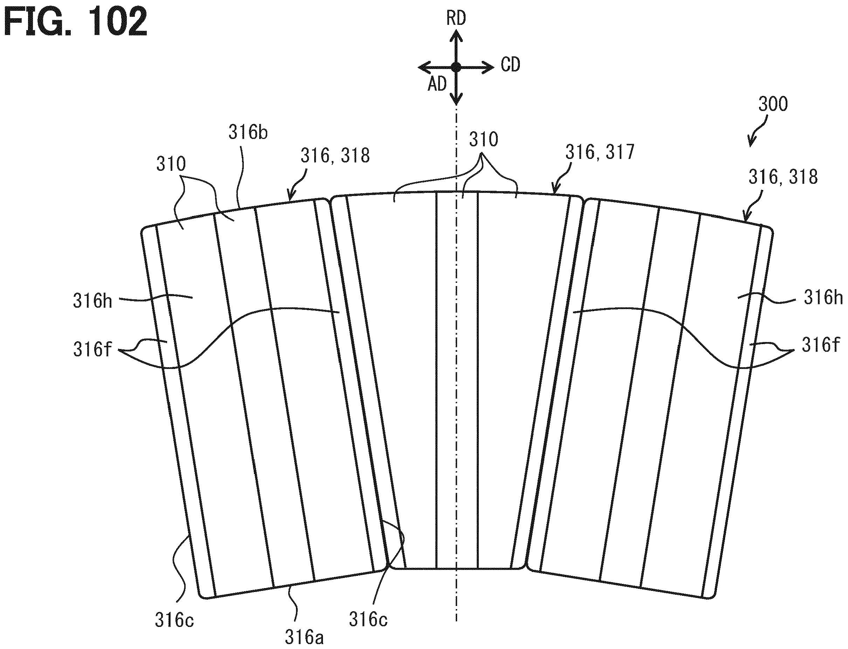

As shown in FIGS. 98 and 102, the magnet unit 316 has side tapered surfaces 316f. Each of the side tapered surfaces 316f is included in the unit side surface 316c. The side tapered surface 316f is an inclined surface inclined with respect to the motor axis Cm. The side tapered surface 316f is inclined with respect to the motor axis Cm to face the holder main body 321. The magnet protrusion 483 is in a state of entering between the side tapered surface 316f and the holder main body 321. The magnet protrusion 483 is in contact with the side tapered surface 316f, thus positioning the magnet unit 316. The magnet protrusion 483 is caught by the side tapered surface 316f to restrict the positional deviation of the magnet unit 316.

As described in the above configuration group Bc, the multiple magnet units 316 include the inclined magnet unit 317 and the parallel magnet unit 318. In the inclined magnet unit 317, a width dimension in the circumferential direction CD increases toward the radially outer side. In the inclined magnet unit 317, a portion having a smallest width dimension is the unit inner peripheral end 316a, and a portion having a largest width dimension is the unit outer peripheral end 316b. The inclined magnet unit 317 corresponds to an expansion unit.

In the parallel magnet unit 318, a width dimension in the circumferential direction CD is uniform in the radial direction RD. In the parallel magnet unit 318, a width dimension of the unit inner peripheral end 316a is the same as a width dimension of the unit outer peripheral end 316b. The parallel magnet unit 318 corresponds to a uniform unit.

The inclined magnet units 317 and the parallel magnet units 318 are alternately arranged one by one in the circumferential direction CD. As shown in FIG. 103, when a unit boundary extend to the radially inner side, the unit boundary passes through a position deviated from the motor axis Cm in the radial direction RD. The unit boundary is a boundary between the inclined magnet unit 317 and the parallel magnet unit 318, and multiple unit boundaries are arranged in the circumferential direction CD. The magnet base 482 and the magnet protrusion 483 extend along the unit boundary in the radial direction RD. The magnet bases 482 are individually provided for, for example, all unit boundaries. The multiple magnet bases 482 include protrusion-provided magnet bases 482 on each of which the magnet protrusions 483 is provided and no-protrusion-provided magnet bases 482 on each of which no magnet protrusion 483 is provided. For example, the protrusion-provided magnet bases 482 and the no-protrusion-provided magnet bases 482 are alternately arranged one by one in the circumferential direction CD.

As described in the above configuration group Ba, a Halbach array is used for the array of the magnets 310. As shown in FIG. 98, the multiple magnet units 316 are arranged in the circumferential direction CD such that the multiple magnets 310 are arranged in the Halbach array in the circumferential direction CD. The Halbach array facilitates magnetic flux generated by the magnet 310 to extend toward the axial gap 475. Moreover, the magnet holder 320, the fixing block 330, and the magnet fixing tool 335 are nonmagnetic. Therefore, the magnet holder 320, the fixing block 330, and the magnet fixing tool 335 are less likely to block the magnetic flux from the magnet 310. The magnet holder 320 makes it difficult for the magnetic flux from the magnet 310 to leak to the outside. Therefore, the magnetic flux from the magnet 310 is prevented from extending toward the magnet holder 320, the fixing block 330, and the magnet fixing tool 335.

In the rotor 300, since the Halbach array is used for the array of the magnets 310, a yoke is not required. In the configuration, it is unnecessary to provide a yoke between the magnet holder 320 and the magnet 310. That is, there is no need to adopt a configuration in which the magnet 310 is indirectly fixed to the magnet holder 320 via a yoke. Therefore, the magnet 310 can be directly fixed to the magnet holder 320. Therefore, the positional accuracy of the magnet 310 can be improved. Further, a fixing strength of the magnet 310 to the magnet holder 320 can be increased.

Next, a method of manufacturing the rotor 300 will be described. In a process of manufacturing the rotor 300, the operator prepares the magnet holder 320, the magnet unit 316, the fixing block 330, and the magnet fixing tool 335 as a preparation process.

After the preparation process, the operator performs a fixing process of fixing the magnet unit 316 to the magnet holder 320. In the fixing process, the operator first applies the adhesive to the adhesion recess portion 481 of the magnet holder 320. Thereafter, the operator temporarily places the magnet unit 316 on the magnet holder 320 in alignment with the magnet protrusion 483. For example, the operator assembles both the inclined magnet unit 317 and the parallel magnet unit 318 into the magnet holder 320 by moving the inclined magnet unit 317 and the parallel magnet unit 318 to one side in the circumferential direction CD to abut against the magnet protrusion 483. The operator attaches the fixing block 330 to the magnet holder 320 such that the unit inner peripheral end 316a is sandwiched between the fixing block 330 and the holder main body 321 in a state in which the unit outer peripheral end 316b is inserted between the engagement tapered surface 322a and the main body inner plate surface 321b. Then, the operator fixes the fixing block 330 to the magnet holder 320 with the magnet fixing tool 335.

### <Configuration Group H>

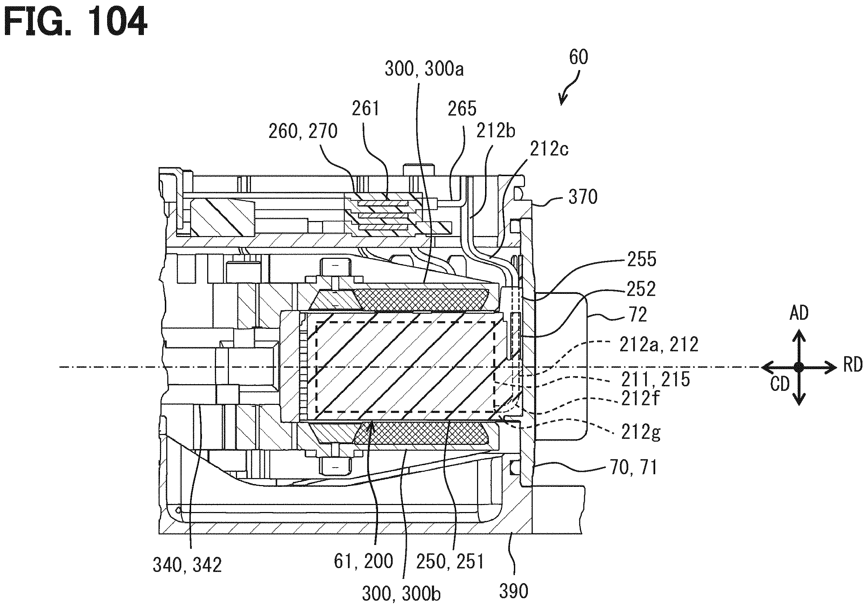

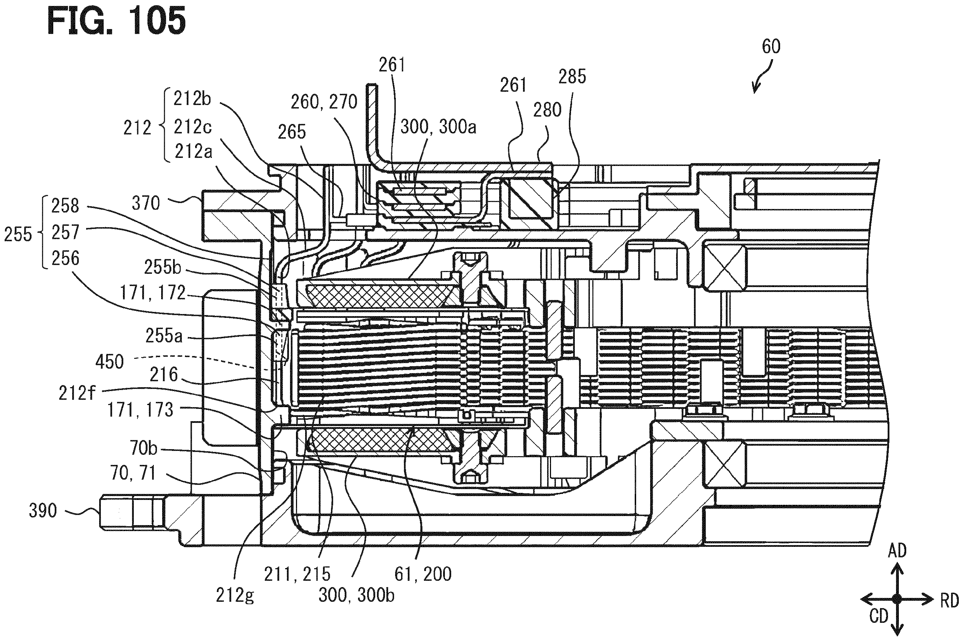

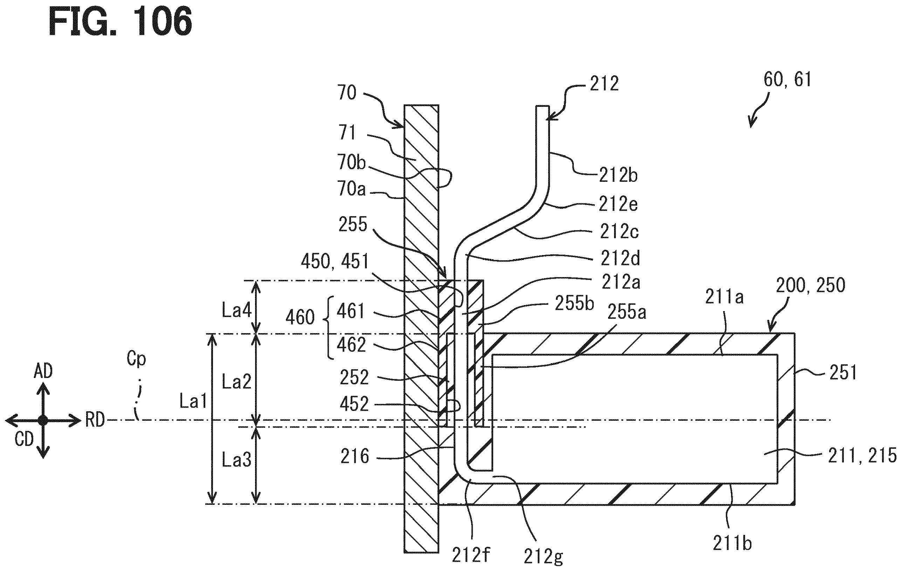

In FIGS. 104, 105, and 106, the electric power lead-out wire 212 is electrically connected to the electric power busbar 261. The electric power lead-out wire 212 includes a connection bent portion 212f in addition to the outer peripheral lead-out portion 212a and the like. In FIG. 106, an illustration of the rotors 300a and 300b is omitted.

The connection bent portion 212f is a portion of the electric power lead-out wire 212 which is located between the outer peripheral lead-out portion 212a and the coil 211. The connection bent portion 212f is located at a position separated from the outer peripheral bent portion 212d toward a side opposite to the electric power busbar 261 in the axial direction AD. The connection bent portion 212f connects the outer peripheral lead-out portion 212a and the coil 211 in a bent state. The connection bent portion 212f is crooked, for example, bent to bulge toward the radially outer side. The connection bent portion 212f is crooked to connect the outer peripheral lead-out portion 212a and the coil 211. The connection bent portion 212f corresponds to a connection crooked portion. The connection bent portion 212f may not be bent as long as the connection bent portion 212f is crooked, and may be curved, for example.

The electric power lead-out wire 212 includes a lead-out base end portion 212g. The lead-out base end portion 212g is an end portion of the electric power lead-out wire 212 on a coil 211 side. The lead-out base end portion 212g is also an end portion of the connection bent portion 212f on the coil 211 side. The lead-out base end portion 212g is included in a boundary between the electric power lead-out wire 212 and the coil 211.

In the grommet 255, the electric power lead-out wire 212 is inserted through the grommet hole 450. In the electric power lead-out wire 212, the outer peripheral lead-out portion 212a is inserted through the grommet hole 450. The grommet 255 has heat resistance. The grommet 255 can withstand a molding temperature when the coil protection portion 250 is molded. The molding temperature is a temperature of the molten resin for molding the coil protection portion 250. The grommet 255 can withstand heat of the molten resin. The coil protection portion 250 may be referred to as a mold resin.

In a state where the motor device 60 is driven, a temperature of the electric power lead-out wire 212 is likely to rise due to energization to the electric power lead-out wire 212. The grommet 255 can withstand the temperature of the electric power lead-out wire 212 which has increased as the motor device 60 is driven. The grommet 255 can withstand the heat of the electric power lead-out wire 212.

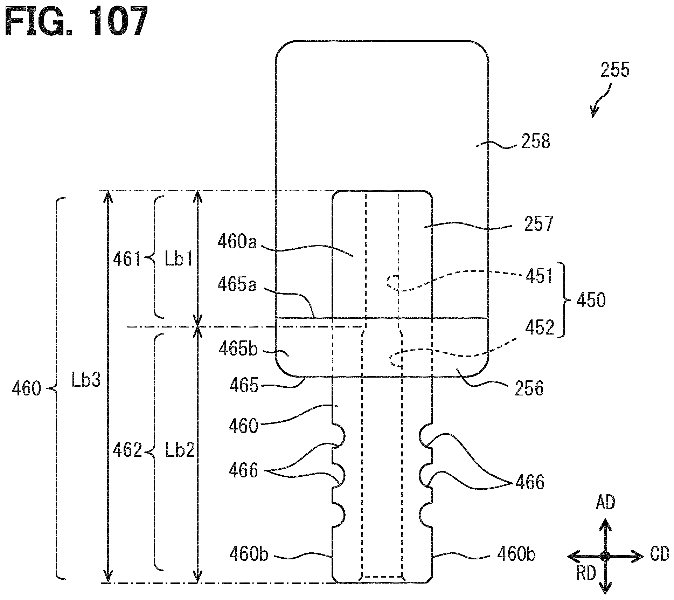

As shown in FIGS. 106 and 107, in the grommet 255, the grommet hole 450 includes a fastening hole portion 451 and an expanded hole portion 452. The fastening hole portion 451 and the expanded hole portion 452 are aligned in the axial direction AD. The expanded hole portion 452 extends from the fastening hole portion 451 toward the coil protection portion 250 in the axial direction AD. The expanded hole portion 452 is a hole expanded with respect to the fastening hole portion 451. The expanded hole portion 452 is a hole larger than the fastening hole portion 451. An inner diameter of the expanded hole portion 452 is larger than an inner diameter of the fastening hole portion 451. Each of the fastening hole portion 451 and the expanded hole portion 452 has, for example, a circular cross section.

The grommet 255 includes a grommet cylinder 460 and a grommet rib 465. The grommet cylinder 460 is a cylindrical portion of the grommet 255 and extends in the axial direction AD. The grommet cylinder 460 includes a pair of end portions arranged in the axial direction AD. One end portion is inside the coil protection portion 250 and is included in the embedded portion 255a. The other end portion is located away from the coil protection portion 250 toward the outer peripheral bent portion 212d, and is included in the exposed portion 255b. The grommet cylinder 460 corresponds to a protection cylinder portion.

The grommet rib 465 extends from the grommet cylinder 460 in the direction orthogonal to the axial direction AD. The grommet rib 465 is provided between the pair of end portions of the grommet cylinder 460. The grommet rib 465 is located closer to the end portion included in the exposed portion 255b than to the end portion included in the embedded portion 255a, in the pair of end portions. The grommet rib 465 extend from the grommet cylinder 460 toward both sides in the circumferential direction CD. The grommet rib 465 extends from the grommet cylinder 460 toward the radially inner side. The grommet rib 465 includes a portion extending from the grommet cylinder 460 toward one side in the circumferential direction CD, a portion extending toward the other side in the circumferential direction CD, and a portion extending toward the radially inner side.

The grommet cylinder 460 includes a fastening cylinder portion 461 and an expanded cylinder portion 462. The fastening cylinder portion 461 forms the fastening hole portion 451. The fastening hole portion 451 is formed by an inner peripheral surface of the fastening cylinder portion 461. The expanded cylinder portion 462 forms the expanded hole portion 452. The expanded hole portion 452 is formed by an inner peripheral surface of the expanded cylinder portion 462. The fastening cylinder portion 461 and the expanded cylinder portion 462 are arranged in the axial direction AD. The expanded cylinder portion 462 extends from the fastening cylinder portion 461 toward the coil protection portion 250 in the axial direction AD. The expanded cylinder portion 462 is thinner than the fastening cylinder portion 461. A wall portion of the expanded cylinder portion 462 is thinner than a wall portion of the fastening cylinder portion 461.

In the grommet 255, a part of the grommet cylinder 460 and the grommet rib 465 are included in the grommet main body 256. In the grommet cylinder 460, a part of the fastening cylinder portion 461 and the expanded cylinder portion 462 are included in the grommet main body 256. A remaining portion of the fastening cylinder portion 461 is included in the inner grommet portion 257. The outer grommet portion 258 extends from the grommet rib 465 toward the fastening cylinder portion 461 in the axial direction AD.

As shown in FIG. 107, in the grommet hole 450, the fastening cylinder portion 461 is shorter than the expanded cylinder portion 462. In the axial direction AD, a length dimension Lb1 of the fastening cylinder portion 461 is smaller than a length dimension Lb2 of the expanded cylinder portion 462. The fastening cylinder portion 461 is shorter than 1/2 of a length of the grommet cylinder 460. In the axial direction AD, the length dimension Lb1 of the fastening cylinder portion 461 is smaller than 1/2 of a length dimension Lb3 of the grommet cylinder 460. The length dimension Lb1 of the fastening cylinder portion 461 is, for example, larger than an outer diameter of the fastening hole portion 451. The length dimension Lb1 is, for example, larger than an outer diameter of the fastening cylinder portion 461. The fastening cylinder portion 461 is longer than the inner grommet portion 257. In the grommet 255, the grommet rib 465 is in a state of straddling a boundary between the fastening cylinder portion 461 and the expanded cylinder portion 462 in the axial direction AD. The length dimension Lb1 of the fastening cylinder portion 461 may be referred to as an interference.

As shown in FIG. 106, in the grommet 255, the embedded portion 255a is embedded in the coil protection portion 250, and the exposed portion 255b is exposed from the coil protection portion 250. The grommet 255 is embedded in the coil protection portion 250 such that the grommet main body 256 is the embedded portion 255a and the inner grommet portion 257 and the outer grommet portion 258 are the exposed portion 255b. The grommet 255 covers and protects the electric power lead-out wire 212 at least by the embedded portion 255a. The embedded portion 255a corresponds to a protective embedded portion.

The embedded portion 255a extends inside the coil protection portion 250 toward a side opposite to the electric power busbar 261 beyond a protection axis Cp. The protection axis Cp is a linear virtual line extending in the radial direction RD through a center of the coil protection portion 250. The protection axis Cp corresponds to a center line of the coil protection portion 250. In the axial direction AD, a length dimension La2 of the embedded portion 255a is larger than 1/2 of a length dimension La1 of the coil protection portion 250. The length dimension La2 of the embedded portion 255a is larger than a length dimension La3 of a portion of the coil protection portion 250 which is aligned with the embedded portion 255a in the axial direction AD. The embedded portion 255a is longer than the inner grommet portion 257. The length dimension La2 of the embedded portion 255a is larger than a length dimension La4 of the inner grommet portion 257 in the axial direction AD. In FIG. 106, an illustration of the outer grommet portion 258 is omitted.

In the grommet 255, a part of the grommet cylinder 460 is in close contact with the electric power lead-out wire 212. In the grommet cylinder 460, the fastening cylinder portion 461 is in close contact with the outer peripheral lead-out portion 212a. The fastening cylinder portion 461 covers the outer peripheral lead-out portion 212a in a state of being in close contact with the outer peripheral lead-out portion 212a. An inner diameter of the fastening cylinder portion 461 is slightly smaller than an outer diameter of the outer peripheral lead-out portion 212a. The fastening cylinder portion 461 is attached to the outer peripheral lead-out portion 212a in an elastically deformed state, and is in close contact with the outer peripheral lead-out portion 212a by a restoring force of the grommet 255. Due to the restoring force of the grommet 255, a gap is less likely to be formed between the fastening cylinder portion 461 and the outer peripheral lead-out portion 212a. The fastening cylinder portion 461 corresponds to a close contact covering portion.

In the grommet cylinder 460, the expanded cylinder portion 462 is in a state of being away from the outer peripheral lead-out portion 212a toward the outer peripheral side. The expanded cylinder portion 462 is away outward from the outer peripheral lead-out portion 212a in the radial direction of the expanded cylinder portion 462. The expanded cylinder portion 462 covers the outer peripheral lead-out portion 212a in a state of being away from the outer peripheral surface of the outer peripheral lead-out portion 212a. A gap is formed between the expanded cylinder portion 462 and the outer peripheral lead-out portion 212a. An inner diameter of the expanded cylinder portion 462 is larger than the outer diameter of the outer peripheral lead-out portion 212a. The expanded cylinder portion 462 corresponds to a gap cover portion.

A part of the coil protection portion 250 is in a state of entering between the expanded cylinder portion 462 and the outer peripheral lead-out portion 212a. The coil protection portion 250 includes a protection main body 251 and a protection entry portion 252. The protection entry portion 252 is in a state of entering the gap between the expanded cylinder portion 462 and the outer peripheral lead-out portion 212a. The protection entry portion 252 extends from the protection main body 251 in the axial direction AD. The protection entry portion 252 is in close contact with both an inner surface of the expanded cylinder portion 462 and an outer surface of the outer peripheral lead-out portion 212a. The protection entry portion 252 is in a state of joining the inner surface of the expanded cylinder portion 462 and the outer surface of the outer peripheral lead-out portion 212a. The protection entry portion 252 is in a state of being filled in the gap between the expanded cylinder portion 462 and the outer peripheral lead-out portion 212a. The protection entry portion 252 corresponds to an entering portion.

The protection entry portion 252 is in a state of covering the outer peripheral lead-out portion 212a. The protection entry portion 252 extends in an annular shape along the outer peripheral surface of the outer peripheral lead-out portion 212a. A wall portion of the protection entry portion 252 is thinner than a wall portion of the expanded cylinder portion 462. In the protection entry portion 252, a thickness dimension of the wall portion is smaller than the outer diameter of the outer peripheral lead-out portion 212a.

The coil protection portion 250 includes a first protection end portion 250a and a second protection end portion 250b. The coil protection portion 250 includes a pair of end portions arranged in the axial direction AD as the protection end portions 250a and 250b. In the pair of end portions, the end portion on the electric power busbar 261 side in the axial direction AD is the first protection end portion 250a, and the end portion on a side opposite to the electric power busbar 261 is the second protection end portion 250b. The protection end portions 250a and 250b are end surfaces of the coil protection portion 250 and extend in the direction orthogonal to the axial direction AD.

The coil 211 includes a first coil end portion 211a and a second coil end portion 211b. The coil 211 includes a pair of end portions arranged in the axial direction AD as the coil end portions 211a and 211b. In the pair of end portions, the end portion on the electric power busbar 261 side in the axial direction AD is the first coil end portion 211a, and the end portion on a side opposite to the electric power busbar 261 is the second coil end portion 211b. The coil end portions 211a and 211b are formed by the coil wire 220. The first coil end portion 211a is located on a first rotor 300a side in the axial direction AD, and corresponds to a rotor side end portion. The second coil end portion 211b is located on a side opposite to the first rotor 300a in the axial direction AD, and corresponds to an opposite side end portion.

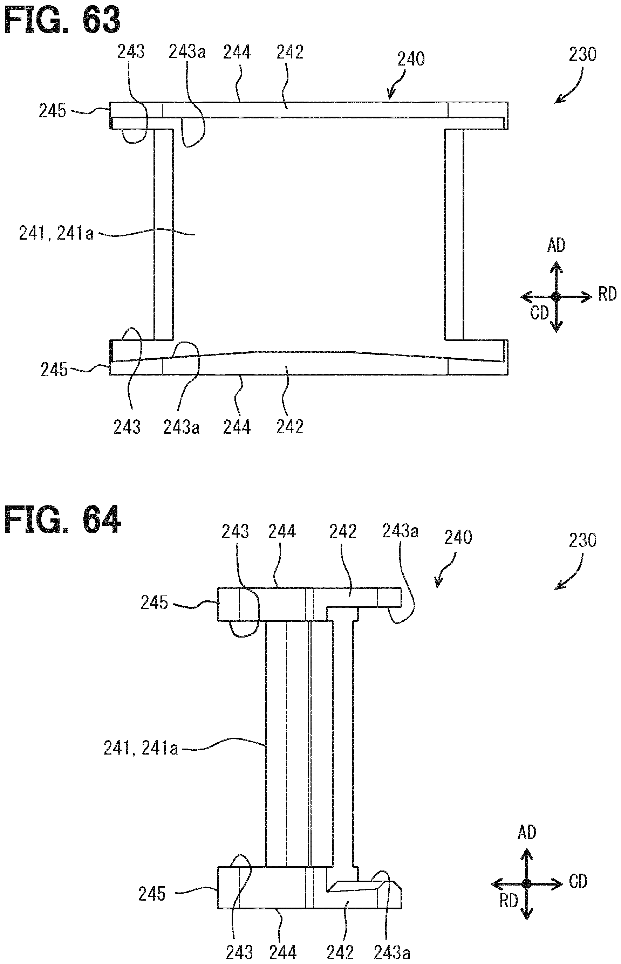

The coil end portions 211a and 211b are provided between the first protection end portion 250a and the second protection end portion 250b in the axial direction AD. The first coil end portion 211a is located at a position away from the first protection end portion 250a toward the second coil end portion 211b. The first coil end portion 211a is at least away from the first protection end portion 250a by a thickness of the bobbin flange 242 (see FIG. 63 and the like). The second coil end portion 211b is located at a position away from the second protection end portion 250b toward the first coil end portion 211a. The second coil end portion 211b is at least away from the second protection end portion 250b by the thickness of the bobbin flange 242.

The electric power lead-out wire 212 is led out from the second coil end portion 211b of the coil 211. The connection bent portion 212f including the lead-out base end portion 212g includes a portion extending from the coil 211 toward the radially outer side and a portion extending from the outer peripheral lead-out portion 212a toward the second coil end portion 211b in the axial direction AD.

The connection bent portion 212f is located at a position separated from the first coil end portion 211a toward the second coil end portion 211b in the axial direction AD. Therefore, the lead-out base end portion 212g is located at a position separated from the first coil end portion 211a toward the second coil end portion 211b. The connection bent portion 212f is located at a position separated from the protection axis Cp toward the second coil end portion 211b. Therefore, the lead-out base end portion 212g is located at a position separated from the protection axis Cp toward the second coil end portion 211b. Further, the connection bent portion 212f is located at a position separated from the grommet 255 toward the second coil end portion 211b in the axial direction AD.

The grommet 255 is provided at a position straddling the first protection end portion 250a in the axial direction AD. The exposed portion 255b extends from the first protection end portion 250a toward a side opposite to the coil 211 in the axial direction AD. The embedded portion 255a extends from the first protection end portion 250a toward the coil 211 in the axial direction AD.

The grommet 255 is provided at a position straddling the first coil end portion 211a in the axial direction AD. The exposed portion 255b is located at a position separated from the first coil end portion 211a on the side opposite to the coil 211. The embedded portion 255a is located at a position straddling the first coil end portion 211a in the axial direction AD. The grommet 255 extends toward the second coil end portion 211b beyond the protection axis Cp in the axial direction AD.

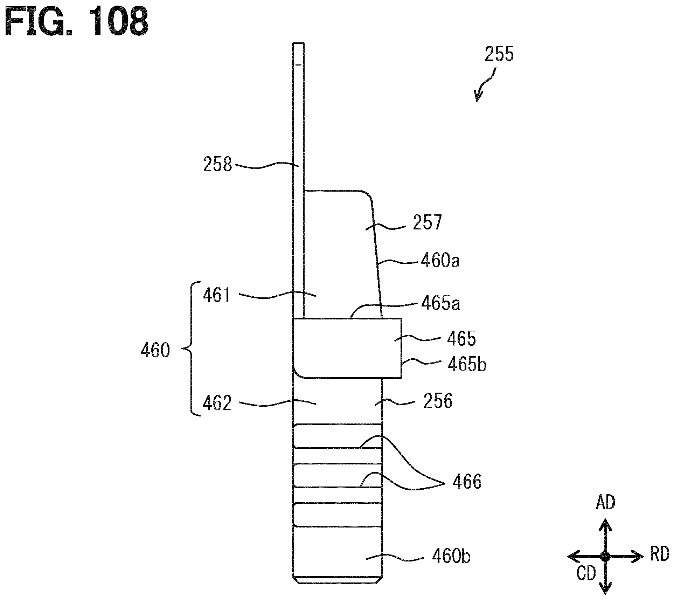

As shown in FIGS. 107 and 108, the grommet 255 has grommet grooves 466. Each of the grommet grooves 466 is a recess portion formed in an outer surface of the grommet 255. The outer surface of the grommet 255 includes cylinder side surfaces 460b. The cylinder side surfaces 460b are included in an outer surface of the grommet cylinder 460. The cylinder side surfaces 460b extend in the direction orthogonal to the circumferential direction CD, and are arranged in a pair in the circumferential direction CD with the grommet hole 450 interposed therebetween. The cylinder side surfaces 460b are included in an outer surface of the expanded cylinder portion 462. The cylinder side surface 460b extends from the grommet rib 465 toward a side opposite to the fastening cylinder portion 461. A portion of the expanded cylinder portion 462 on which the grommet grooves 466 are provided is included in the embedded portion 255a. The grommet groove 466 is provided in an outer surface of the embedded portion 255a.

The grommet grooves 466 are provided in each of the pair of cylinder side surfaces 460b. Multiple grommet grooves 466 are provided in the cylinder side surface 460b. The multiple grommet grooves 466 are arranged on each of the pair of cylinder side surfaces 460b in the axial direction AD. The grommet groove 466 is a groove portion opened in the circumferential direction CD. The grommet groove 466 extends in the radial direction RD. The grommet grooves 466 are respectively opened on the radially inner side and the radially outer side.

The grommet 255 has a cylinder tapered surface 460a. The cylinder tapered surface 460a is included in the outer surface of the grommet cylinder 460. The cylinder tapered surface 460a faces the radially inner side. The cylinder tapered surface 460a is inclined with respect to a rib intersecting surface 465b to face a side opposite to the rib intersecting surface 465b in the axial direction AD. The cylinder tapered surface 460a may be referred to as a cylinder inclined surface. The cylinder tapered surface 460a is included in an outer surface of the fastening cylinder portion 461. The cylinder tapered surface 460a extends in a tapered shape from the grommet rib 465 in the axial direction AD. A thickness dimension of the fastening cylinder portion 461 in the radial direction RD gradually decreases toward a side opposite to the grommet rib 465 from the cylinder tapered surface 460a in the axial direction AD.

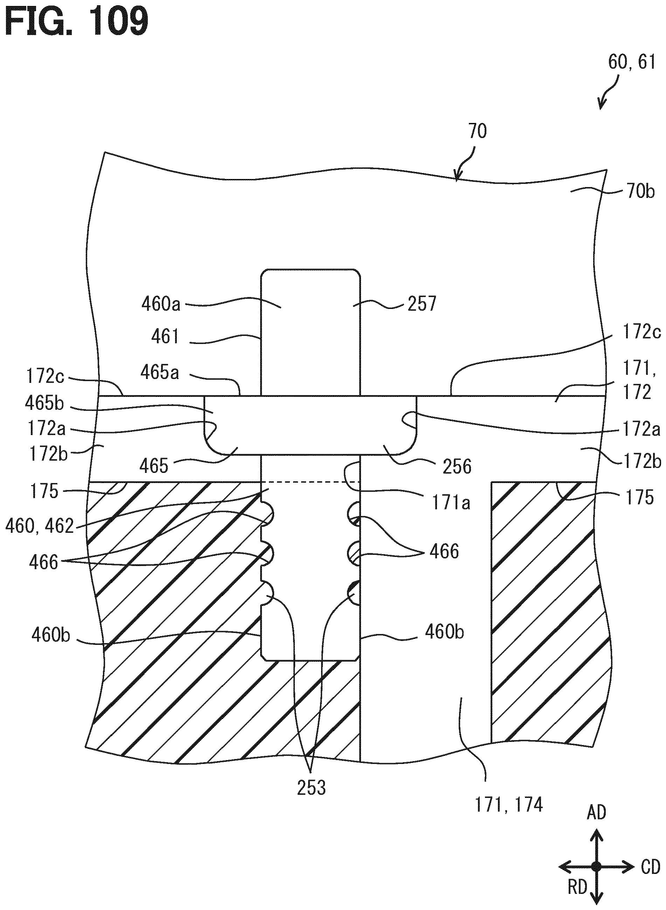

As shown in FIG. 109, a part of the coil protection portion 250 is in a state of entering the inside of the grommet grooves 466. The grommet 255 and the coil protection portion 250 are in a state of being engaged with each other. By an engagement portion where the grommet 255 and the coil protection portion 250 are engaged with each other, the grommet 255 is restricted from being removed from the coil protection portion 250.

The coil protection portion 250 includes protection engagement portions 253. Each of the protection engagement portions 253 is in a state of entering the grommet groove 466. The protection engagement portion 253 extends from the protection main body 251 toward the inside of the grommet groove 466. The protection engagement portion 253 is in close contact with an inner surface of the grommet groove 466. The protection engagement portion 253 is in a state of being engaged with the grommet groove 466. The grommet groove 466 is opened in a direction orthogonal to the axial direction AD such as the circumferential direction CD, and extends in the direction orthogonal to the axial direction AD such as the radial direction RD. The grommet groove 466 corresponds to an embedded engagement portion, and the protection engagement portion 253 corresponds to an engaged portion.

The grommet 255 is in a state of being caught by the first peripheral holding portion 172 in the motor housing 70. The first peripheral holding portion 172 includes a first recess portion 172a, a first inner peripheral surface 172b, and a first extending surface 172c. The first inner peripheral surface 172b and the first extending surface 172c are included in an outer surface of the first peripheral holding portion 172. The first inner peripheral surface 172b is a surface in the outer surface of the first peripheral holding portion 172 which faces the radially inner side. The first extending surface 172c is a surface in the outer surface of the first peripheral holding portion 172 which faces the electric power busbar 261 side in the axial direction AD. The first recess portion 172a is a recess portion formed in the first inner peripheral surface 172b, and is recessed from the first inner peripheral surface 172b toward the radially outer side. The first recess portion 172a is opened toward the first extending surface 172c in the axial direction AD. The first recess portion 172a extends from the lead-out groove portion 171a toward the first extending surface 172c in the axial direction AD.

The grommet 255 is in a state of entering the inside of the lead-out groove portion 171a and the first recess portion 172a. In the grommet 255, the expanded cylinder portion 462 enters the inside of the lead-out groove portion 171a. The grommet rib 465 enters the inside of the first recess portion 172a. The grommet rib 465 is in a state of being caught by the first recess portion 172a from a side opposite to the axial holding portion 174 in the axial direction AD. The grommet rib 465 is in a state of being in close contact with an inner surface of the first recess portion 172a.

The grommet 255 has a rib extending surface 465a and the rib intersecting surface 465b. The rib extending surface 465a and the rib intersecting surface 465b are included in the outer surface of the grommet rib 465. The rib extending surface 465a extends in the direction orthogonal to the axial direction AD from the grommet cylinder 460. The grommet 255 is in a state of being integrated with the first peripheral holding portion 172. The rib extending surface 465a extends in the circumferential direction CD to be integrated with the first extending surface 172c. For example, the rib extending surface 465a and the first extending surface 172c are surfaces that extend to be continuous with each other. The rib intersecting surface 465b extends in the circumferential direction CD to be integrated with the first inner peripheral surface 172b. For example, the rib intersecting surface 465b and the first inner peripheral surface 172b are surfaces that extend to be continuous with each other.

Next, a method of manufacturing the coil protection portion 250, on which the grommet 255 is attached, in the method of manufacturing the motor device 60 will be described. In a process of manufacturing the coil protection portion 250 on which the grommet 255 is attached, the operator prepares the coil unit 210, the motor housing 70, and the grommet 255 as a preparation process. In a stage of the preparation process, the electric power lead-out wire 212 of the coil unit 210 is in a state of extending linearly in the axial direction AD.

After the preparation process, the operator performs a grommet process, an attaching process, and a mold process. In the grommet process, the operator attaches the grommet 255 to the electric power lead-out wire 212 of the coil unit 210. The operator inserts the electric power lead-out wire 212 from the expanded hole portion 452 into the grommet hole 450. In the grommet 255, the inner peripheral surface of the fastening cylinder portion 461 is easily in close contact with the electric power lead-out wire 212, whereas a gap is easily formed between the inner peripheral surface of the expanded cylinder portion 462 and the electric power lead-out wire 212. Therefore, for example, as compared with a configuration which is different from that of the present embodiment and in which the entire inner peripheral surface of the grommet cylinder 460 is in close contact with the electric power lead-out wire 212, a close contact area in which the grommet 255 and the electric power lead-out wire 212 are in close contact with each other is reduced. Therefore, difficulty in work of inserting the electric power lead-out wire 212 into the grommet hole 450 by the operator is easily reduced.

In the attaching process, the operator attaches the coil unit 210 and the grommet 255 to the motor housing 70. The operator fits the grommet 255 through which the electric power lead-out wire 212 penetrates into the lead-out groove portion 171a and the first recess portion 172a, in a state in which the coil unit 210 is attached inside the motor housing 70. The grommet 255 is in close contact with the inner surfaces of the lead-out groove portion 171a and the first recess portion 172a by a restoring force generated accompanying the elastic deformation. In a state of being fitted into the lead-out groove portion 171a and the first recess portion 172a, the grommet 255 is located at a position separated from the connection bent portion 212f in the axial direction AD with respect to the electric power lead-out wire 212. The operator inserts the electric power lead-out wire 212 into the lead-out groove portion 171a together with the grommet 255.

In the mold process, the operator attaches a mold to the motor housing 70 to which the coil unit 210 and the grommet 255 are attached. Before the operator attaches the mold to the motor housing 70, the grommet 255 is in a state of protruding from the lead-out groove portion 171a and the first recess portion 172a. The mold has an axial pressing surface that presses the grommet 255 in the axial direction AD. The axial pressing surface faces the rib extending surface 465a in the axial direction AD, and presses the rib extending surface 465a such that the rib extending surface 465a and the first extending surface 172c are flush with each other. The axial pressing surface elastically deforms the grommet 255 in the axial direction AD such that the grommet rib 465 enters the inside of the first recess portion 172a.

The mold has a radial pressing surface that presses the grommet 255 toward the radially outer side. The radial pressing surface faces the radially outer side and presses the rib intersecting surface 465b such that the rib intersecting surface 465b and the first inner peripheral surface 172b are flush with each other. The radial pressing surface elastically deforms the grommet 255 in the radial direction RD such that the grommet rib 465 enters the inside of the first recess portion 172a.

The operator inserts the mold inside the motor housing 70 from the fastening cylinder portion 461 toward the expanded cylinder portion 462 in the axial direction AD. The operator performs work of bringing the mold into a state of being caught by the first peripheral holding portion 172 such that the axial pressing surface comes into contact with the first extending surface 172c while pressing the rib extending surface 465a and the radial pressing surface comes into contact with the first inner peripheral surface 172b while pressing the rib intersecting surface 465b. In the work, since the cylinder tapered surface 460a is inclined with respect to the rib intersecting surface 465b, the axial pressing surface is less likely to be caught by the cylinder tapered surface 460a before reaching the rib extending surface 465a.

After the mold process, the operator performs the molding process for molding the coil protection portion 250. In the molding process, the operator causes the molten resin to be poured into the motor housing 70 and the mold. The molten resin may be referred to as a resin mold. In the motor housing 70, the grommet 255 restricts leakage of the molten resin from the first recess portion 172a. Since the grommet rib 465 is in close contact with the inner surface of the first recess portion 172a, the molten resin is restricted from entering between the grommet rib 465 and the first recess portion 172a. In the grommet 255, since the gap is formed between the expanded cylinder portion 462 and the electric power lead-out wire 212, the molten resin enters inside of the expanded hole portion 452. On the other hand, since the fastening cylinder portion 461 is in close contact with the electric power lead-out wire 212, the molten resin does not enter the inside of the fastening hole portion 451. Therefore, the molten resin is restricted from leaking out from the grommet hole 450.

When the molten resin is injected into the motor housing 70 and the mold, an injection pressure is applied to the coil unit 210 and the grommet 255. The injection pressure is a pressure for injecting the molten resin into the motor housing 70 and the mold. In the coil unit 210, the grommet 255 prevents the electric power lead-out wire 212 from being pressed by the injection pressure of the molten resin and deforming unintentionally. For example, in the electric power lead-out wire 212, the embedded portion 255a prevents a portion between the connection bent portion 212f and the exposed portion 255b from being unintentionally deformed. Therefore, contact of the electric power lead-out wire 212 with the motor housing 70 is restricted, and as a result, occurrence of a case short circuit is restricted. The case short circuit is a short circuit caused by contact of the conductor portion 221 of the electric power lead-out wire 212 with the motor housing 70.

In the embedded portion 255a, since there is a gap between the expanded cylinder portion 462 and the electric power lead-out wire 212, the expanded cylinder portion 462 is relatively deformable with respect to the electric power lead-out wire 212. Therefore, the injection pressure of the molten resin applied to the expanded cylinder portion 462 is less likely to be applied to the electric power lead-out wire 212 due to the deformation of the expanded cylinder portion 462.

After the molten resin is solidified to form the coil protection portion 250, the operator removes the mold from the motor housing 70. Thereafter, the operator performs work of bending the electric power lead-out wire 212 to form the inner peripheral lead-out portion 212b and the like.

### <Configuration Group I>

As described in the above configuration groups Bd and Be, regarding the rotor 300, the rotor 300 is attached to the shaft 340. The shaft 340 is made of an aluminum alloy, titanium, a resin, CFRP, and the like. In the present embodiment, the shaft 340 is made of titanium.

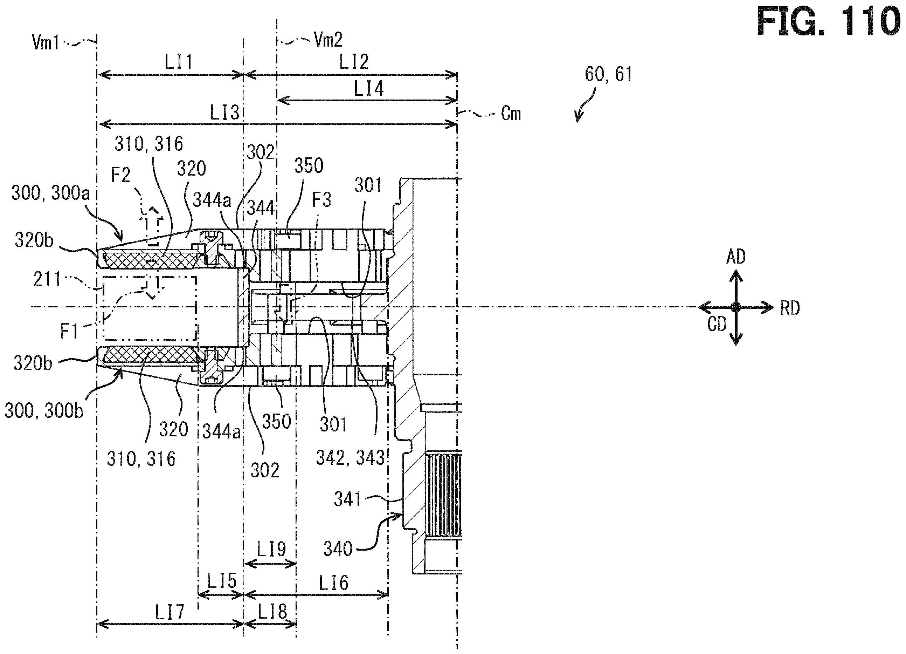

In FIG. 110, the spoke 343 extends from the shaft main body 341 toward the radially outer side, and corresponds to a rotation extending portion. The spoke 343 is provided between the shaft main body 341 and the rim 344. The spoke 343 connects the shaft main body 341 and the rim 344 in a state of extending in the radial direction RD. The spoke 343 is in a state of spanning the shaft main body 341 and the rim 344 via a rim inner peripheral hole 349. The spoke 343 is provided between the first rotor 300a and the second rotor 300b in the axial direction AD. The spoke 343 is connected to a portion of the rim 344 between the first rotor 300a and the second rotor 300b.

As shown in FIG. 37, the multiple spokes 343 are arranged in the circumferential direction CD. The multiple spokes 343 extend radially around the motor axis Cm. Two spokes 343 adjacent to each other in the circumferential direction CD are separated from each other in the circumferential direction CD. In the axial direction AD, the height dimension of the spoke 343 is smaller than the height dimension of the rim 344.

In FIG. 110, the rim 344 is formed in a plate shape as a whole and extends in the direction orthogonal to the radial direction RD. The rim 344 extends in the circumferential direction CD along the holder inner peripheral end 320a. The rim 344 extends from the spoke 343 toward both sides in the axial direction AD. For example, the rim 344 protrudes from the spoke 343 toward the first rotor 300a, and protrudes from the spoke 343 toward the second rotor 300b. The rim 344 supports the rotor 300 against an attraction force F1 between the coil 211 and the magnet 310, and corresponds to a rotation support portion. The rim 344 supports the first rotor 300a and the second rotor 300b respectively against the attraction forces F1 generated in the first rotor 300a and the second rotor 300b.

The rim 344 is provided at a position closer to the holder outer peripheral end 320b than to the motor axis Cm in the radial direction RD. That is, the rim 344 is provided at a position close to an outer peripheral end of the rotor 300. For example, a distance Ll1 between the rim 344 and an outer peripheral virtual line Vm1 is smaller than a distance Ll2 between the rim 344 and the motor axis Cm. The outer peripheral virtual line Vm1 is a linear virtual line extending parallel to the motor axis Cm through the holder outer peripheral end 320b.

The distance Ll2 is smaller than a distance Ll3 between the outer peripheral virtual line Vm1 and the motor axis Cm, and is larger than a distance Ll4 between an intermediate virtual line Vm2 and the motor axis Cm. The intermediate virtual line Vm2 is a linear virtual line extending parallel to the motor axis Cm through a center between the outer peripheral virtual line Vm1 and the motor axis Cm in the radial direction RD. The distance Ll1 is smaller than both the distances Ll3 and Ll4. The distance Ll1 is a separation distance between the rim 344 and the holder outer peripheral end 320b in the radial direction RD. The distances Ll1 and Ll2 are both distances to a center of the rim 344. The holder outer peripheral end 320b is an outer peripheral end of the magnet holder 320 and an outer peripheral end of the rotor 300.

The rim 344 is provided at a position closer to the magnet 310 than to the shaft main body 341 in the radial direction RD. For example, a distance Ll5 between the rim 344 and the magnet 310 is smaller than a distance Ll6 between the rim 344 and the shaft main body 341. The distance Ll5 is a separation distance between the center of the rim 344 and the unit inner peripheral end 316a in the radial direction RD. The distance Ll6 is a separation distance between the center of the rim 344 and an inner peripheral end of the spoke 343 in the radial direction RD.

The rim 344 is provided at a position closer to the holder inner peripheral end 320a than to the holder outer peripheral end 320b in the radial direction RD. For example, a distance Ll8 between the rim 344 and the holder inner peripheral end 320a is smaller than a distance Ll7 between the rim 344 and the holder outer peripheral end 320b. The distances Ll7 and Ll8 are both distances to the center of the rim 344.

The rim 344 is provided between the holder inner peripheral end 320a and the magnet 310 in the radial direction RD. The rim 344 is located a position away from both the holder inner peripheral end 320a and the magnet 310. The holder inner peripheral end 320a is the inner peripheral end of the magnet holder 320 and an inner peripheral end of the rotor 300. The rim 344 is provided at a position closer to the magnet 310 than to the holder inner peripheral end 320a in the radial direction RD. For example, the distance Ll5 between the rim 344 and the magnet 310 is smaller than the distance Ll8 between the rim 344 and the holder inner peripheral end 320a.

As described in the above configuration groups Bd and Be, the holder fixing tool 350 fixes the magnet holder 320 to the shaft flange 342. In the shaft flange 342, the magnet holder 320 is fixed to the spoke 343. The holder fixing tool 350 is screwed into the flange fixing hole 345. The flange fixing hole 345 is a portion of the spoke 343 to which the magnet holder 320 is fixed. The holder fixing tool 350 is provided at a position away from the rim 344 toward a side opposite to the magnet 310 in the radial direction RD. The holder fixing tool 350 corresponds to a rotation fixing portion.

The holder fixing tool 350 fixes the magnet holder 320 to the spoke 343 in a state in which the magnet holder 320 is pressed toward the spoke 343. The holder fixing tool 350 applies the pressing force F3 to the magnet holder 320 in a direction in which the magnet holder 320 approaches the spoke 343. In the magnet holder 320, the bending stress F2 acting to separate the magnet holder 320 from the coil 211 is generated by the pressing force F3. The bending stress F2 restricts the magnet holder 320 from crooking toward the coil 211 against the attraction force F1 between the coil 211 and the magnet 310. In the rotor 300, an acting position on which the attraction force F1 acts is a point of effort.

In the magnet holder 320, the bending stress F2 is generated when the rim tip portion 344a serves as a fulcrum for the pressing force F3. The rim tip portion 344a serves as a contact surface that is in contact with the magnet holder 320. Since the attraction force F1, the bending stress F2, and the pressing force F3 are all forces directed in the axial direction AD, a force applied to the rim 344 is also likely to be a force directed in the axial direction AD. Therefore, even if the rim 344 has a thin shape in the radial direction RD, the rim 344 is less likely to be deformed by the force applied to the rim 344. Therefore, the rim 344 has a shape as thin as possible, thereby reducing a weight of the shaft 340.

For example, the rim 344 is thinner than the spoke 343. Specifically, a thickness dimension of the rim 344 in the radial direction RD is smaller than a thickness dimension of the spoke 343 in the axial direction AD. The thickness dimension of the rim 344 is smaller than the distance LI5 between the magnet 310 and the rim 344 in the radial direction RD.

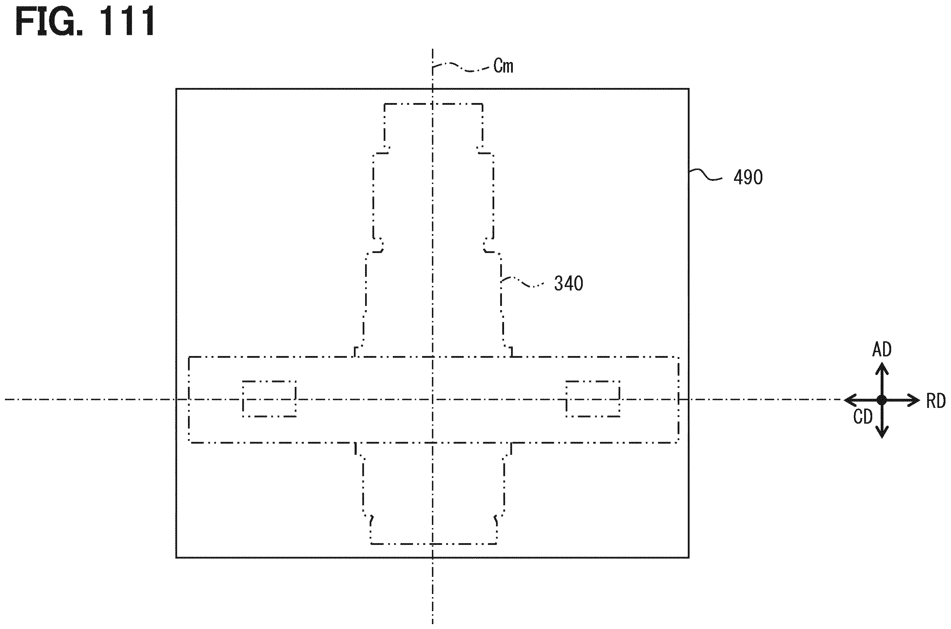

Next, a method of manufacturing the shaft 340 in the method of manufacturing the motor device 60 will be described. In a process of manufacturing the shaft 340, the operator prepares a shaft base material 490 as shown in FIG. 111 as a preparation process. The shaft base material 490 is a base material for manufacturing the shaft 340, and is, for example, a rectangular parallelepiped member. The shaft base material 490 is an aluminum alloy, titanium, a resin, CFRP, and the like. In the present embodiment, a titanium base material is used as the shaft base material 490.

After the preparation process, the operator performs a machining process of machining the shaft base material 490 into a shape of the shaft 340. In the machining process, the operator performs cutting processing for cutting the shaft base material 490 to manufacture the shaft 340 from the shaft base material 490. In the machining process, grinding may be performed. In the manufacture of the shaft 340, a yield of the material is easily improved by using a base material that is made as small as possible as the shaft base material 490.

### <Configuration Group K>

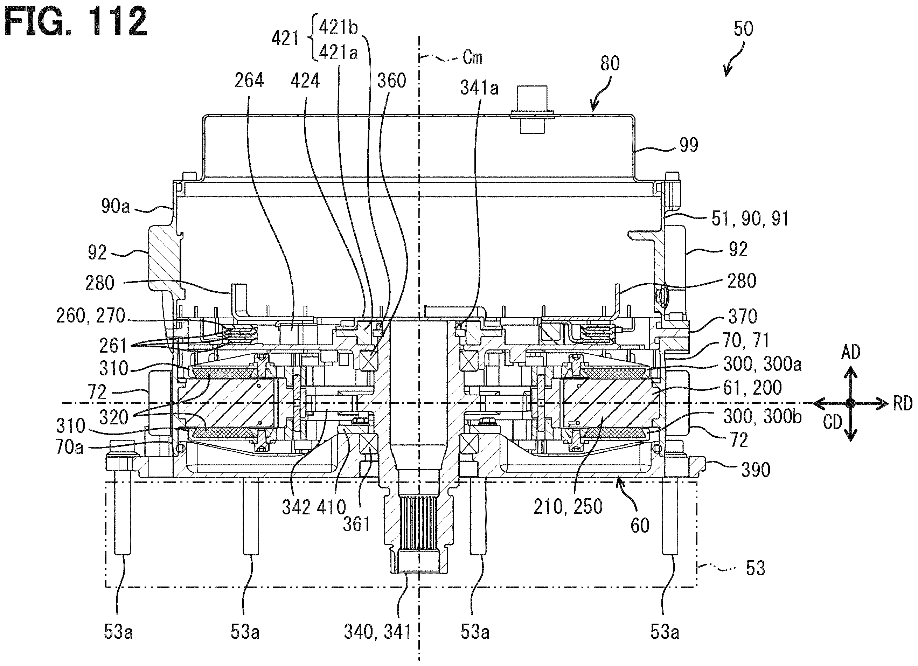

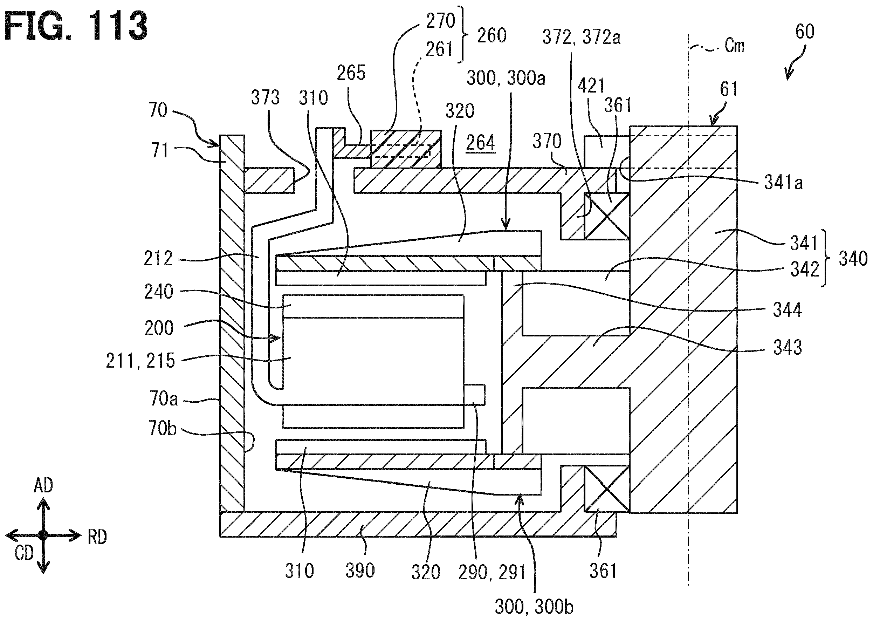

As described in the above configuration group Ag, the motor device 60 includes the resolver 421. As shown in FIGS. 112 and 113, the resolver 421 is provided on the shaft main body 341. The resolver 421 detects a rotation state of the rotor 300 by detecting a rotation state of the shaft main body 341. The resolver 421 detects a rotation angle as the rotation state of the shaft main body 341. The resolver 421 corresponds to the rotation detection unit, and the shaft main body 341 corresponds to a rotation shaft portion. The resolver 421 extends along a main body outer peripheral surface 341a in the circumferential direction CD as a whole. The main body outer peripheral surface 341a is an outer peripheral surface of the shaft main body 341. The resolver 421 is formed in an annular shape, and is provided on the radially outer side of the shaft main body 341.

The resolver 421 includes a resolver stator 421a and a resolver rotor 421b. In the resolver 421, the resolver rotor 421b rotates relative to the resolver stator 421a to detect the rotation angle of the shaft main body 341.

The resolver stator 421a is provided on a motor housing 70 side. The resolver stator 421a is fixed to, for example, the rear frame 370. The resolver stator 421a extends along the rear frame 370 in the circumferential direction CD. The resolver stator 421a is formed in an annular shape, and is provided on the radially outer side of the shaft main body 341.

The resolver rotor 421b is provided on a rotor 300 side. The resolver rotor 421b is fixed to the shaft main body 341, and rotates together with the shaft main body 341 about the motor axis Cm. The resolver rotor 421b extends along the main body outer peripheral surface 341a in the circumferential direction CD. The resolver rotor 421b is formed in an annular shape, and is provided on, for example, the radially inner side of the resolver stator 421a.

The resolver 421 is provided between the electric power busbar 261 and the shaft main body 341 in the radial direction RD. The resolver 421 is located at a position away from the electric power busbar 261 toward the radially inner side. The resolver 421 is located at a position closer to the shaft main body 341 than to the electric power busbar 261 in the radial direction RD. In the radial direction RD, a positional relationship between the resolver 421 and the electric power busbar 261 is substantially the same as a positional relationship between the resolver 421 and the busbar unit 260. For example, the resolver 421 is located at a position away from the electric power busbar 261 toward the radially inner side, thereby being located at a position away from the busbar unit 260 toward the radially inner side.

The busbar unit 260 has a rectangular cross section. In a cross section of the busbar unit 260, long sides extend in the radial direction RD, and short sides extend in the axial direction AD. In the cross section of the busbar unit 260, a length dimension in the radial direction RD is larger than a length dimension in the axial direction AD. An outer surface of the busbar unit 260 is formed by the busbar protection portion 270. In the busbar unit 260, the busbar protection portion 270 is fixed to the rear frame 370.

The resolver 421 is in a state of entering a unit space 264. The unit space 264 is an inner space of the busbar unit 260. The unit space 264 is a space surrounded in four directions by the unit inner peripheral surface 260a. The unit space 264 is a space between the unit inner peripheral surface 260a and the main body outer peripheral surface 341a in the radial direction RD. The unit inner peripheral surface 260a is an inner peripheral surface of the busbar unit 260. The unit inner peripheral surface 260a extends in the direction orthogonal to the radial direction RD, and extends in an annular shape in the circumferential direction CD. At least a part of the resolver 421 is accommodated in the unit space 264. In the present embodiment, substantially the entire resolver 421 is accommodated in the unit space 264 in the axial direction AD. At least a part of the resolver connector 423 and the resolver cover 424 is accommodated in the unit space 264. The resolver connector 423 and the resolver cover 424 may not be accommodated in the unit space 264.

The resolver 421 is in a state of entering the radially inner side of the electric power busbar 261. In the busbar unit 260, the multiple busbar main bodies 262 are in a state of being overlapped in the axial direction AD. The resolver 421 extends in the axial direction AD to straddle the multiple busbar main bodies 262. The resolver 421 extends toward both a stator 200 side and a side opposite to the stator 200 with respect to the multiple busbar main bodies 262. The resolver 421 is in a state of entering between the busbar main body 262 and the shaft main body 341. An inner space of the electric power busbar 261 is included in the unit space 264. At least a part of the resolver 421 is accommodated in the unit space 264 by being accommodated in the inner space of the electric power busbar 261.

The electric power busbar 261 is electrically connected to the coil 211. The electric power busbar 261 is connected to the coil 211 via, for example, the electric power lead-out wire 212 and the busbar lead-out wire 265. The electric power busbar 261 is provided at a position separated from the resolver 421 toward the radially outer side. The electric power busbar 261 is located at a position closer to the motor inner peripheral surface 70b than to the resolver 421 in the radial direction RD. The electric power busbar 261 corresponds to an energization busbar. The electric power busbar 261 may be referred to as an energizing conductor or an electric power conductor.

The resolver 421 and the electric power busbar 261 are arranged along the rear frame 370 in the radial direction RD. The resolver 421 and the electric power busbar 261 are located on a side opposite to the stator 200 and the rotor 300 with the rear frame 370 interposed therebetween. The rear frame 370 covers the stator 200 and the rotor 300 from the axial direction AD. The resolver 421 and the electric power busbar 261 are fixed to the motor housing 70 via the rear frame 370. The motor housing 70 corresponds to the electric machine housing, and the rear frame 370 corresponds to an electric machine cover.

The electric power busbar 261 is provided at a position aligned with the coil portion 215 in the axial direction AD. The electric power busbar 261 extends in a direction in which the multiple coil portions 215 are arranged. The multiple coil portions 215 are arranged in a row along the circumferential direction CD. The electric power busbar 261 extends along the row of the coil portions 215 in the circumferential direction CD.

As described in the above configuration group Aa, the motor device 60 includes the neutral point busbar 290. The resolver 421 and the electric power busbar 261 are located on a side opposite to the neutral point busbar 290 with the first rotor 300a interposed therebetween. The resolver 421 and the electric power busbar 261 are provided at positions away from the neutral point busbar 290 in the axial direction AD. In the axial direction AD, in addition to the first rotor 300a, the rear frame 370 and the spoke 343 are provided between the resolver 421 and the electric power busbar 261 and the neutral point busbar 290. The spoke 343 supports the rotor 300 in a state of extending from the shaft main body 341 toward the radially outer side. The spoke 343 corresponds to a rotor support portion.

The neutral point busbar 290 is electrically connected to the neutral point 65. The neutral point busbar 290 is located on a side opposite to the resolver 421 and the electric power busbar 261 with the first rotor 300a, the rear frame 370, and the spoke 343 interposed therebetween in the axial direction AD. The neutral point busbar 290 is provided between the first rotor 300a and the second rotor 300b in the axial direction AD. The neutral point busbar 290 is located closer to the second rotor 300b than to the first rotor 300a in the axial direction AD.

The neutral point busbar 290 is located between the resolver 421 and the electric power busbar 261 in the radial direction RD. The neutral point busbar 290 is located at a position away from the resolver 421 toward the radially outer side. The neutral point busbar 290 is located at a position away from the electric power busbar 261 toward the radially inner side. The neutral point busbar 290 is located closer to the electric power busbar 261 than to the resolver 421 in the radial direction RD. The neutral point busbar 290 is located between the coil portion 215 and the shaft flange 342 in the radial direction RD. The neutral point busbar 290 is located on the radially inner side of the coil portion 215. The neutral point busbar 290 is located at a position away from the shaft flange 342 toward the radially outer side.

The shaft flange 342 is located at a position between the resolver 421 and the neutral point busbar 290. For example, when the resolver 421 and the neutral point busbar 290 are connected by a virtual line at a shortest distance, the virtual line intersects the shaft flange 342. The shaft 340 is a non-magnetic member and is made of a non-magnetic material. Examples of the non-magnetic material for forming the shaft 340 include an aluminum alloy, titanium, a resin, and CFRP. In the shaft 340, at least the shaft flange 342 is a non-magnetic portion. The shaft 40 easily restricts the magnetic field, which is generated by the current flowing through the neutral point busbar 290, from reaching the resolver 421. For example, the shaft flange 342 prevents noise from being generated in the detection signal of the resolver 421 when an electromagnetic wave is generated as the neutral point busbar 290 is energized and the electromagnetic wave reaches the resolver 421.

The rear frame 370 is a non-magnetic member and is made of a non-magnetic material. Examples of the non-magnetic material for forming the rear frame 370 include an aluminum alloy, titanium, a resin, and CFRP. The rear frame 370 easily restricts a magnetic field, which is generated as the neutral point busbar 290 and the coil 211 are energized, from reaching the resolver 421. The rear frame 370 easily restricts the magnetic field generated by the magnet 310 from reaching the resolver 421.

In the rotor 300, the Halbach array of the magnets 310 makes it difficult for the magnetic flux from the magnet 310 to leak to outside of the magnet holder 320. For example, in the rotor 300, leakage of magnetic flux to the radially inner side is less likely to occur. In the rotor 300, leakage of magnetic flux to a side opposite to the magnet 310 with the magnet holder 320 interposed therebetween in the axial direction AD is less likely to occur.

### <Configuration Group L>

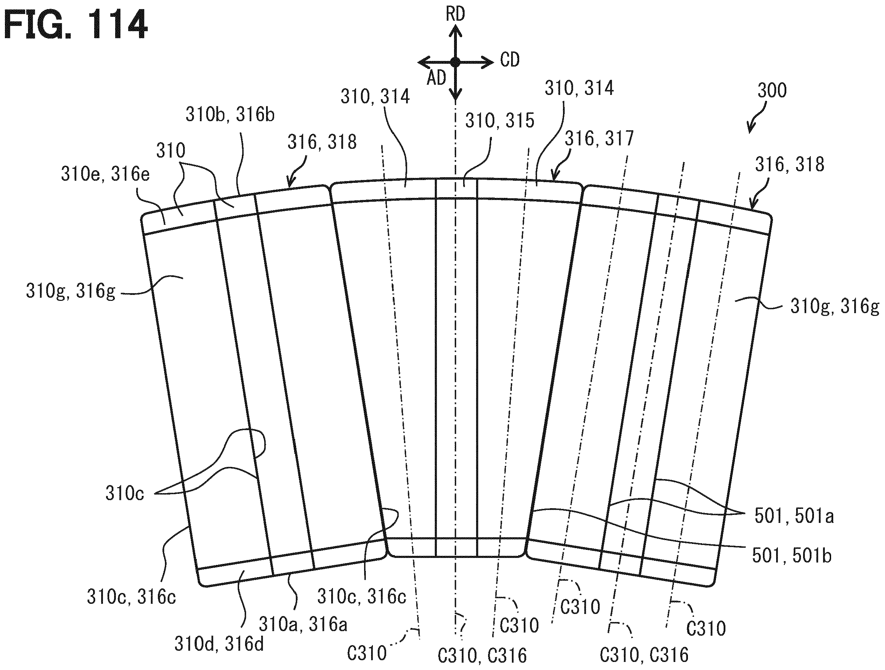

As shown in FIG. 114, the magnet 310 has a magnet inner peripheral end 310a, a magnet outer peripheral end 310b, magnet side surfaces 310c, an inner peripheral tapered surface 310d, and an outer peripheral tapered surface 310e. The magnet 310 further has a first magnet surface 310g and a second magnet surface 310h. The magnet inner peripheral end 310a, the magnet outer peripheral end 310b, the magnet side surfaces 310c, the tapered surfaces 310d and 310e, and magnet surfaces 310g and 310h are included in an outer surface of the magnet 310. The magnet inner peripheral end 310a is an end surface of the magnet 310 on the radially inner side. The inner peripheral tapered surface 310d is provided on the magnet inner peripheral end 310a. The magnet outer peripheral end 310b is an end surface of the magnet 310 on the radially outer side. The outer peripheral tapered surface 310e is provided on the magnet outer peripheral end 310b.

As described in the above configuration group Bb, the magnet unit 316 has the unit inner peripheral end 316a, the unit outer peripheral end 316b, the unit side surfaces 316c, the inner peripheral tapered surface 316d, and the outer peripheral tapered surface 316e. As described in the above configuration group G, the magnet unit 316 further has the first unit surface 316g and the second unit surface 316h.

An outer surface of the magnet unit 316 is formed by the multiple magnets 310 provided in the magnet unit 316. The outer surface of the magnet unit 316 includes the outer surfaces of the multiple magnets 310. The magnet inner peripheral end 310a is included in the unit inner peripheral end 316a. The magnet outer peripheral end 310b is included in the unit outer peripheral end 316b. The magnet side surface 310c is included in the unit side surface 316c. The inner peripheral tapered surface 310d of the magnet 310 is included in the inner peripheral tapered surface 316d of the magnet unit 316. The outer peripheral tapered surface 310e of the magnet 310 is included in the outer peripheral tapered surface 316e of the magnet unit 316. The first magnet surface 310g is included in the first unit surface 316g. The second magnet surface 310h is included in the second unit surface 316h.

The magnet unit 316 has the side tapered surface 316f (see FIG. 98). The magnet 310 includes a portion included in the side tapered surface 316f. The portion is included in the outer surface of the magnet 310.

In the magnet unit 316, the multiple magnets 310 are bonded by the adhesive. The adhesive is made of a resin material, an adhesive agent, or the like. In the magnet 310, the pair of magnet side surfaces 310c are arranged in the circumferential direction CD. Two magnets 310 adjacent to each other in the circumferential direction CD are bonded to each other in a state in which the magnet side surfaces 310c are overlapped with each other.

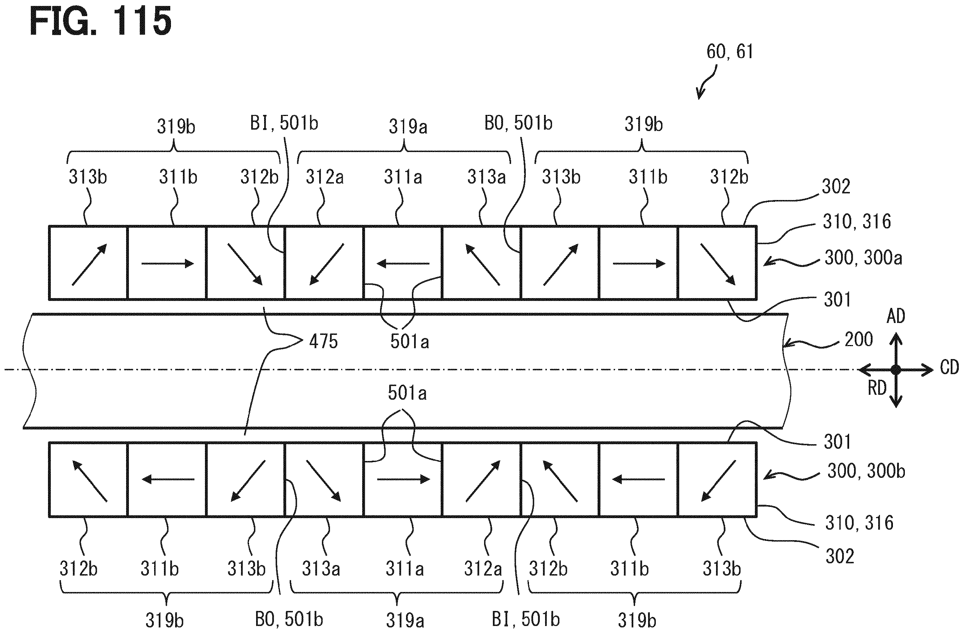

As shown in FIG. 115, the rotor 300 includes magnet boundaries 501. Each of the magnet boundaries 501 is a boundary between two magnets 310 adjacent to each other in the circumferential direction CD. Multiple magnet boundaries 501 are arranged in the circumferential direction CD. The multiple magnet boundaries 501 include a unit inner boundary 501a and a unit outer boundary 501b.

The unit inner boundary 501a is provided on the magnet unit 316. The unit inner boundary 501a is a boundary between two magnets 310 of one magnet unit 316 adjacent to each other in the circumferential direction CD. Multiple unit inner boundaries 501a are arranged on the rotor 300 in the circumferential direction CD. The unit outer boundary 501b is not provided on the magnet unit 316. The unit outer boundary 501b is also a boundary between two magnet units 316 adjacent to each other in the circumferential direction CD. Multiple unit outer boundaries 501b are arranged on the rotor 300 in the circumferential direction CD. The multiple unit outer boundaries 501b include the inner boundary BI and the outer boundary BO. The unit outer boundary 501b is the inner boundary BI or the outer boundary BO.

Orientations of two magnets 310 adjacent to each other in the circumferential direction CD with the unit inner boundary 501a interposed therebetween are in the same direction in the circumferential direction CD. The orientations of the magnets 310 are, for example, toward the inner boundary BI in the circumferential direction CD. In one magnet unit 316, all the magnets 310 are oriented toward the inner boundary BI in the circumferential direction CD. In this way, in two magnets 310 adjacent to each other in the circumferential direction CD with the unit inner boundary 501a interposed therebetween, a repulsive force is less likely to be generated. The orientation of the magnet 310 is a magnetization direction of the magnet 310.

The orientations of two magnets 310 adjacent to each other in the circumferential direction CD with the unit outer boundary 501b interposed therebetween are in opposite directions in the circumferential direction CD. For example, orientations of the first axially inward magnet 312a and the second axially inward magnet 312b adjacent to each other with the inner boundary BI interposed therebetween as the unit outer boundary 501b approach each other. In this way, the first axially inward magnet 312a and the second axially inward magnet 312b are in a state in which the orientations thereof face each other. Orientations of the first axially outward magnet 313a and the second axially outward magnet 313b with the outer boundary BO interposed therebetween as the unit outer boundary 501b are away from each other. In this way, the first axially outward magnet 313a and the second axially outward magnet 313b are in a state in which the orientations thereof are opposite to each other. As described above, in two magnets 310 adjacent to each other in the circumferential direction CD with the unit outer boundary 501b interposed therebetween, a repulsive force is likely to be generated.

As shown in FIG. 114, the magnet unit 316 includes at least one of an inclined magnet 314 and a parallel magnet 315 as the magnet 310. For example, the inclined magnet unit 317 includes both the inclined magnet 314 and the parallel magnet 315. In the inclined magnet unit 317, the inclined magnet 314 and the parallel magnet 315 are arranged in the circumferential direction CD. The parallel magnet unit 318 includes only the parallel magnet 315 in the inclined magnet 314 and the parallel magnet 315. In the parallel magnet unit 318, multiple parallel magnets 315 are arranged in the circumferential direction CD.

In the inclined magnet 314, a pair of magnet side surfaces 310c are inclined to each other. The pair of magnet side surfaces 310c are inclined to be away from each other toward the radially outer side, for example. In the inclined magnet 314, a separation distance between the pair of magnet side surfaces 310c gradually increases toward the radially outer side. In the inclined magnet 314, the magnet outer peripheral end 310b is longer than the magnet inner peripheral end 310a in the radial direction RD. The inclined magnet 314 is formed in a trapezoidal shape or a fan shape as a whole.

In the parallel magnet 315, a pair of magnet side surfaces 310c extend in parallel. The pair of magnet side surfaces 310c extend in the direction orthogonal to the circumferential direction CD. In the parallel magnet 315, a separation distance between the pair of magnet side surfaces 310c is uniform in the radial direction RD. In the parallel magnet 315, the magnet outer peripheral end 310b and the magnet inner peripheral end 310a have substantially the same length in the radial direction RD. The parallel magnet 315 is formed in a rectangular shape as a whole.

In the rotor 300, one of the inclined magnet unit 317 and the parallel magnet unit 318 is the first orientation unit 319a, and the other is the second orientation unit 319b. For example, when the inclined magnet unit 317 is the first orientation unit 319a, the parallel magnet unit 318 is the second orientation unit 319b. In the configuration, one of two inclined magnets 314 of the inclined magnet unit 317 is the first axially inward magnet 312a, and the other is the first axially outward magnet 313a. The parallel magnet 315 of the inclined magnet unit 317 is the first peripheral magnet 311a. One of the parallel magnets 315 at both ends of the parallel magnet unit 318 is the second axially inward magnet 312b, and the other is the second axially outward magnet 313b. The parallel magnet 315 in the middle of the parallel magnet unit 318 is the second peripheral magnet 311b.

In the inclined magnet unit 317, a width dimension of the parallel magnet 315 in the circumferential direction CD is smaller than a width dimension of the inclined magnet 314. In the parallel magnet unit 318, a width dimension of the parallel magnet 315 in the middle is smaller than a width dimension of each of the parallel magnets 315 at both ends. That is, in the first orientation unit 319a and the second orientation unit 319b, width dimensions of the peripheral magnets 311a and 311b are smaller than width dimensions of the axially inward magnets 312a and 312b and width dimensions of the axially outward magnets 313a and 313b.

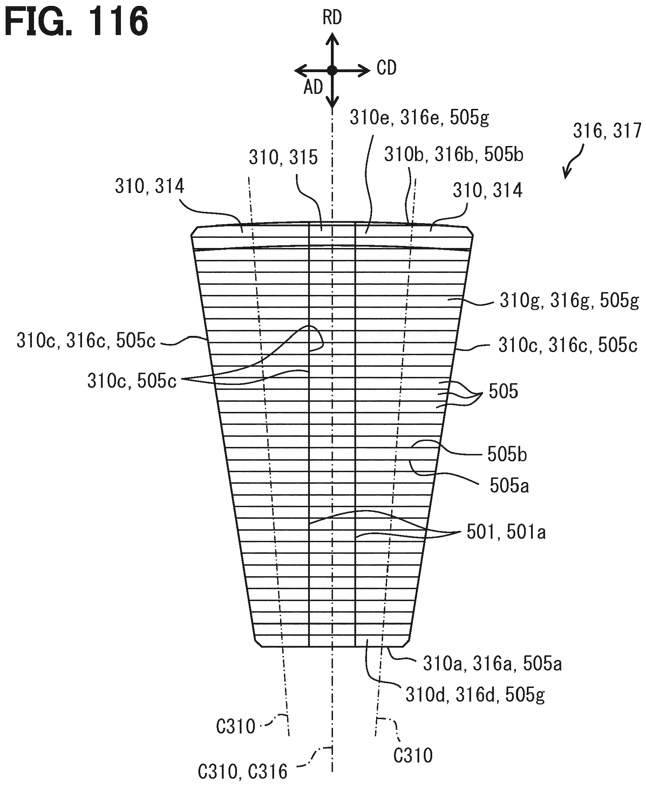

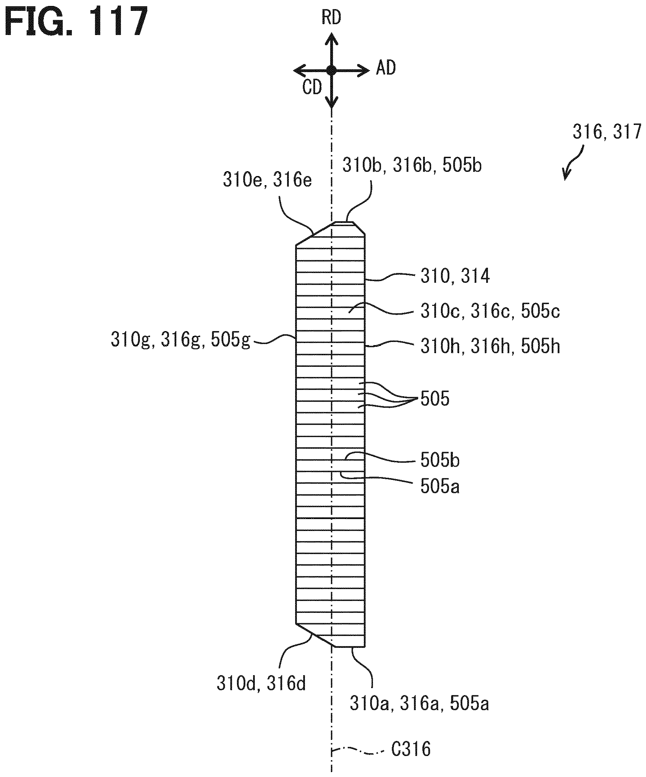

As shown in FIGS. 116 and 117, the magnet 310 includes magnet pieces 505. Each of the magnet pieces 505 is a magnet piece forming the magnet 310, and corresponds to a magnet member. Multiple magnet pieces 505 are provided in the magnet 310. The multiple magnet pieces 505 form the magnet 310 in a state of being joined by an adhesive. The magnet piece 505 is a permanent magnet. The multiple magnet pieces 505 are stacked in the radial direction RD. The radial direction RD corresponds to a stacking direction. The magnet piece 505 is formed in a plate shape and extends in the direction orthogonal to the radial direction RD. Two magnet pieces 505 adjacent to each other in the radial direction RD are overlapped with each other. Thickness dimensions of the multiple magnet pieces 505 are substantially the same for the magnet pieces 505.

In the magnet 310, orientation directions of the multiple magnet pieces 505 are aligned in the magnet pieces 505. That is, in the magnet 310, magnetization directions of the multiple magnet pieces 505 are aligned in the magnet pieces 505. Orientation directions of the multiple magnet pieces 505 of one magnet 310 are the same. For example, in the magnet 310 oriented to face one side in the circumferential direction CD, all of the multiple magnet pieces 505 are oriented to face the one side in the circumferential direction CD.

The magnet piece 505 has an inner peripheral piece surface 505a, an outer peripheral piece surface 505b, a piece side surfaces 505c, a first piece surface 505g, and a second piece surface 505h. The inner peripheral piece surface 505a, the outer peripheral piece surface 505b, the piece side surfaces 505c, the first piece surface 505g, and the second piece surface 505h are included an outer surface of the magnet piece 505. The inner peripheral piece surface 505a and the outer peripheral piece surface 505b are a pair of plate surfaces of the magnet piece 505. In the magnet piece 505, a plate surface on the radially inner side is the inner peripheral piece surface 505a, and a plate surface on the radially outer side is the outer peripheral piece surface 505b. The inner peripheral piece surface 505a and the outer peripheral piece surface 505b extend parallel to each other. In two magnet pieces 505 adjacent to each other in the radial direction RD, the inner peripheral piece surface 505a of one magnet piece 505 and the outer peripheral piece surface 505b of the other magnet piece 505 are bonded to each other.

The outer surface of the magnet 310 is formed by the multiple magnet pieces 505 of the magnet 310. The outer surface of the magnet 310 includes the outer surfaces of the multiple magnet pieces 505. The piece side surface 505c is included in the magnet side surface 310c. The first piece surface 505g is included in the first magnet surface 310g. The second piece surface 505h is included in the second magnet surface 310h.

The piece side surfaces 505c, the first piece surface 505g, and the second piece surface 505h are included in an outer peripheral surface of the magnet piece 505. The piece side surfaces 505c, the first piece surface 505g, and the second piece surface 505h extend in the radial direction RD to connect the inner peripheral piece surface 505a and the outer peripheral piece surface 505b. A pair of piece side surfaces 505c are included in the outer peripheral surface of the magnet piece 505. The pair of piece side surfaces 505c are arranged in the circumferential direction CD.

An innermost magnet piece 505 of the magnet 310 forms the magnet inner peripheral end 310a. The innermost magnet piece 505 is provided at a radially innermost position among the multiple magnet pieces 505 of the magnet 310. In the innermost magnet piece 505, the inner peripheral piece surface 505a is provided on the magnet inner peripheral end 310a. An outermost magnet piece 505 of the magnet 310 forms the magnet outer peripheral end 310b. The outermost magnet piece 505 is provided at a radially outermost position among the multiple magnet pieces 505 of the magnet 310. In the outermost magnet piece 505, the outer peripheral piece surface 505b is provided on the magnet outer peripheral end 310b.

In the magnet 310, the inner peripheral tapered surface 310d is in a state of spanning multiple magnet pieces 505. In the radial direction RD, a width dimension of the inner peripheral tapered surface 310d is larger than the thickness dimension of the magnet piece 505. The inner peripheral tapered surface 310d is provided at a position straddling in the radial direction RD a boundary between two magnet pieces 505 adjacent to each other in the radial direction RD. The inner peripheral tapered surface 310d is formed by multiple magnet pieces 505.

The outer peripheral tapered surface 310e is in a state of spanning multiple magnet pieces 505. In the radial direction RD, a width dimension of the outer peripheral tapered surface 310e is larger than the thickness dimension of the magnet piece 505. The outer peripheral tapered surface 310e is provided at a position straddling in the radial direction RD a boundary between two magnet pieces 505 adjacent to each other in the radial direction RD. The outer peripheral tapered surface 310e is formed by multiple magnet pieces 505.

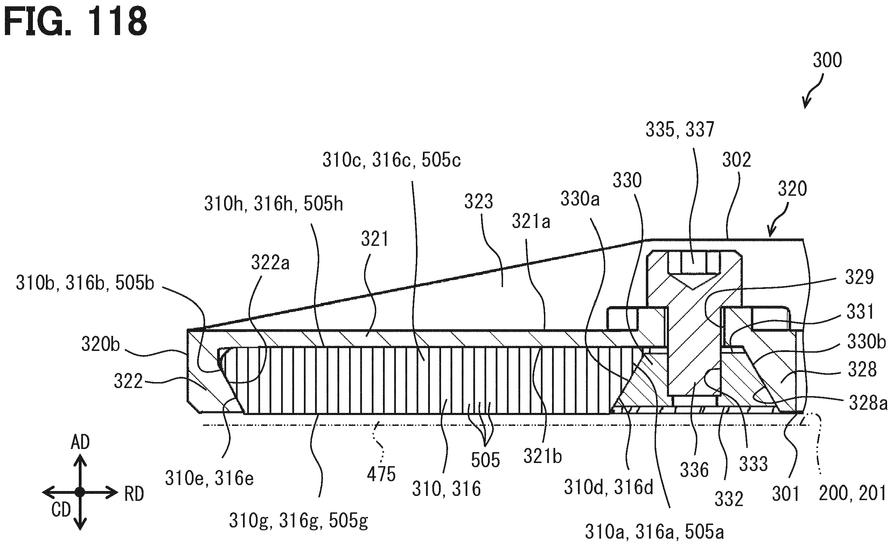

As shown in FIG. 118, in the magnet 310, the multiple magnet pieces 505 are in a state of being caught by the magnet holder 320 and the fixing block 330. Among the multiple magnet pieces 505 of the magnet 310, the multiple magnet pieces 505 forming the inner peripheral tapered surface 310d are caught by the fixing block 330. The multiple magnet pieces 505 caught by the fixing block 330 are in contact with the block tapered surface 330a. Among the multiple magnet pieces 505 of the magnet 310, the multiple magnet pieces 505 forming the outer peripheral tapered surface 316e are caught by the outer peripheral engagement portion 322. The multiple magnet pieces 505 caught by the outer peripheral engagement portion 322 are in contact with the engagement tapered surface 322a.

As shown in FIG. 114, in the rotor 300, a magnet center line C310 and a unit center line C316 extend in the radial direction RD. The unit center line C316 is a linear virtual line extending in the radial direction RD through a center of the magnet unit 316. The unit center line C316 passes through a center of the unit inner peripheral end 316a and a center of the unit outer peripheral end 316b in addition to the center of the magnet unit 316. The magnet center line C310 is a linear virtual line extending in the radial direction through a center of the magnet 310. The magnet center line C310 passes through a center of the magnet inner peripheral end 310a and a center of the magnet outer peripheral end 310b in addition to the center of the magnet 310.

In the magnet unit 316, one unit center line C316 and multiple magnet center lines C310 extend. In the magnet unit 316, the magnet center line C310 of the magnet 310 in the middle among the three magnets 310 coincides with the unit center line C316. In the inclined magnet unit 317, the magnet center line C310 of the inclined magnet 314 is inclined with respect to the unit center line C316. In the inclined magnet unit 317, the magnet center line C310 of one of the two inclined magnets 314 is inclined with respect to the magnet center line C310 of the other. In the parallel magnet unit 318, the magnet center lines C310 of all the parallel magnets 315 extend parallel to the unit center line C316.

As shown in FIGS. 116 and 117, in the inclined magnet unit 317 and the parallel magnet unit 318, the magnet piece 505 extends in a direction orthogonal to the unit center line C316. In the inclined magnet unit 317 and the parallel magnet unit 318, the magnet piece 505 of the inclined magnet 314 and the magnet piece 505 of the parallel magnet 315 are aligned on a straight line. The magnet piece 505 of the inclined magnet 314 and the magnet piece 505 of the parallel magnet 315 may be located not to be deviated in the radial direction or may be located to be deviated in the radial direction RD. The inclined magnet unit 317 and the parallel magnet unit 318 correspond to a common unit.

In the parallel magnet 315 of the inclined magnet unit 317, the magnet piece 505 is orthogonal to the magnet center line C310. On the other hand, in the inclined magnet 314 of the inclined magnet unit 317, the magnet piece 505 is not orthogonal to the magnet center line C310. In the multiple parallel magnets 315 of the parallel magnet unit 318, the magnet piece 505 is orthogonal to the magnet center line C310.

The outer surface of the magnet 310 includes grinding surfaces that are ground. In the magnet 310, at least the magnet side surfaces 310c, the inner peripheral tapered surface 310d, the outer peripheral tapered surface 310e, the first magnet surface 310g, and the second magnet surface 310h are grinding surfaces. In the outer surface of the magnet 310, a surface ground to extend in a planar shape is the grinding surface. The grinding surface of the magnet 310 is assumed to have a planar shape even though the grinding surface is crooked to bulge or dent. The outer surface of the magnet 310 may be in a state of having no step as the state in which the grinding surface extends in a planar shape.

The magnet side surface 310c extends in the radial direction RD to span the multiple magnet pieces 505. The magnet side surface 310c is a grinding surface and corresponds to a magnet grinding surface and a stacked grinding surface. The magnet side surface 310c includes multiple piece side surfaces 505c. The multiple piece side surfaces 505c are disposed on the same plane, thus forming the magnet side surface 310c in a planar shape. For example, two piece side surfaces 505c adjacent to each other in the radial direction RD are not deviated from each other in the circumferential direction CD, and no step is generated on the magnet side surface 310c. In the magnet side surface 310c, the multiple piece side surfaces 505c are flush with one another. The piece side surface 505c corresponds to a member grinding surface.

Similarly to the magnet side surface 310c, the first magnet surface 310g extends in the radial direction RD to span the multiple magnet pieces 505. The first magnet surface 310g is a grinding surface and corresponds to the magnet grinding surface and the stacked grinding surface. The first magnet surface 310g includes multiple first piece surfaces 505g. The multiple first piece surfaces 505g are disposed on the same plane, thus forming the first magnet surface 310g in a planar shape. For example, two first piece surfaces 505g adjacent to each other in the radial direction RD are not deviated in the axial direction AD, and no step is generated on the first magnet surface 310g. In the first magnet surface 310g, the multiple first piece surfaces 505g are flush with one another. The first piece surface 505g corresponds to the member grinding surface.

Similarly to the magnet side surface 310c, the second magnet surface 310h extends in the radial direction RD to span the multiple magnet pieces 505. The second magnet surface 310h is a grinding surface and corresponds to the magnet grinding surface and the stacked grinding surface. The second magnet surface 310h includes multiple second piece surfaces 505h. The multiple second piece surfaces 505h are disposed on the same plane, thus forming the second magnet surface 310h in a planar shape. For example, two second piece surfaces 505h adjacent to each other in the radial direction RD are not deviated from each other in the axial direction AD, and no step is generated on the second magnet surface 310h. In the second magnet surface 310h, the multiple second piece surfaces 505h are flush with one another. The second piece surface 505h corresponds to the member grinding surface.

At least a part of the magnet inner peripheral end 310a is a grinding surface. In the present embodiment, the inner peripheral tapered surface 310d as a part of the magnet inner peripheral end 310a is a grinding surface. The inner peripheral tapered surface 310d extends in the radial direction RD and the circumferential direction CD to span multiple magnet pieces 505. The inner peripheral tapered surface 310d is inclined with respect to the magnet side surface 310c, the first magnet surface 310g, and the second magnet surface 310h. The inner peripheral tapered surface 310d corresponds to the magnet grinding surface and an inclined grinding surface.

The inner peripheral tapered surface 310d includes multiple first piece surfaces 505g. The first piece surface 505g included in the inner peripheral tapered surface 310d is inclined with respect to the first piece surface 505g included in the first magnet surface 310g. In the inner peripheral tapered surface 310d, the multiple first piece surfaces 505g are disposed on the same plane, thus forming the inner peripheral tapered surface 310d in a planar shape. For example, two first piece surfaces 505g adjacent to each other in the radial direction RD are not deviated from each other in the axial direction AD, and no step is generated on the inner peripheral tapered surface 310d. In the inner peripheral tapered surface 310d, the multiple first piece surfaces 505g are flush with one another. The first piece surface 505g included in the inner peripheral tapered surface 310d also corresponds to the member grinding surface.

At least a part of the magnet outer peripheral end 310b is a grinding surface. In the present embodiment, the outer peripheral tapered surface 310e as a part of the magnet outer peripheral end 310b is a grinding surface. The outer peripheral tapered surface 310e extends in the radial direction RD and the circumferential direction CD to span multiple magnet pieces 505. The outer peripheral tapered surface 310e is inclined with respect to the magnet side surface 310c, the first magnet surface 310g, and the second magnet surface 310h. The outer peripheral tapered surface 310e corresponds to the magnet grinding surface and the inclined grinding surface.

The outer peripheral tapered surface 310e includes multiple first piece surfaces 505g. The first piece surface 505g included in the outer peripheral tapered surface 310e is inclined with respect to the first piece surface 505g included in the first magnet surface 310g. In the outer peripheral tapered surface 310e, the multiple first piece surfaces 505g are disposed on the same plane, thus forming the outer peripheral tapered surface 310e in a planar shape. For example, two first piece surfaces 505g adjacent to each other in the radial direction RD are not deviated from each other in the axial direction AD, and no step is generated on the outer peripheral tapered surface 310e. In the outer peripheral tapered surface 310e, the multiple first piece surfaces 505g are flush with one another. The first piece surface 505g included in the outer peripheral tapered surface 310e also corresponds to the member grinding surface.

In the magnet 310, similarly to the inner peripheral tapered surface 310d and the outer peripheral tapered surface 310e, the side tapered surface 316f is a grinding surface. Therefore, the side tapered surface 316f corresponds to the magnet grinding surface and the inclined grinding surface.

The outer surface of the magnet unit 316 includes grinding surfaces that are ground. In the magnet unit 316, at least the unit side surface 316c, the inner peripheral tapered surface 316d, the outer peripheral tapered surface 316e, the first unit surface 316g, and the second unit surface 316h are grinding surfaces. The grinding surface of the magnet unit 316 is a surface similar to the grinding surface of the magnet 310. For example, in the outer surface of the magnet unit 316, a surface ground to extend in a planar shape is the grinding surface. The grinding surface of the magnet unit 316 is assumed to have a planar shape even though the grinding surface is crooked to bulge or dent. The outer surface of the magnet unit 316 may be in a state of having no step as the state in which the grinding surface extends in a planar shape.

The unit side surface 316c is formed by the magnet side surface 310c of one magnet 310. The magnet side surface 310c is a grinding surface, thereby the unit side surface 316c is a grinding surface.

The first unit surface 316g extends in the circumferential direction CD to span multiple magnets 310. The first unit surface 316g is a grinding surface and corresponds to a unit grinding surface. The first unit surface 316g includes multiple first magnet surfaces 310g. The multiple first magnet surfaces 310g are disposed on the same plane, thus forming the first unit surface 316g in a planar shape. For example, two first magnet surfaces 310g adjacent to each other in the circumferential direction CD are not deviated from each other in the axial direction AD, and no step is generated on the first unit surface 316g. In the first unit surface 316g, the multiple first magnet surfaces 310g are flush with one another.

Similarly to the first unit surface 316g, the second unit surface 316h extends in the circumferential direction CD to span multiple magnets 310. The second unit surface 316h is a grinding surface and corresponds to the unit grinding surface. The second unit surface 316h includes multiple second magnet surfaces 310h. The multiple second magnet surfaces 310h are disposed on the same plane, thus forming the second unit surface 316h in a planar shape. For example, two second magnet surfaces 310h adjacent to each other in the circumferential direction CD are not deviated from each other in the axial direction AD, and no step is generated on the second unit surface 316h. In the second unit surface 316h, the multiple second magnet surfaces 310h are flush with one another.

At least a part of the unit inner peripheral end 316a is a grinding surface. In the present embodiment, the inner peripheral tapered surface 316d as a part of the unit inner peripheral end 316a is a grinding surface. The inner peripheral tapered surface 316d extends in the radial direction RD and the circumferential direction CD to span multiple magnets 310. The inner peripheral tapered surface 316d is inclined with respect to the unit side surface 316c, the first unit surface 316g, and the second unit surface 316h. The inner peripheral tapered surface 316d corresponds to the unit grinding surface.

The inner peripheral tapered surface 316d includes multiple inner peripheral tapered surfaces 310d. The multiple inner peripheral tapered surfaces 310d are disposed on the same plane, thus forming the inner peripheral tapered surface 316d in a planar shape. For example, two inner peripheral tapered surfaces 310d adjacent to each other in the circumferential direction CD are not deviated from each other in the axial direction AD, and no step is generated on the inner peripheral tapered surface 316d. In the inner peripheral tapered surface 316d, the multiple inner peripheral tapered surfaces 310d are flush with one another.

At least a part of the unit outer peripheral end 316b is a grinding surface. In the present embodiment, the outer peripheral tapered surface 316e as a part of the unit outer peripheral end 316b is a grinding surface. The outer peripheral tapered surface 316e extends in the radial direction RD and the circumferential direction CD to span multiple magnets 310. The outer peripheral tapered surface 316e is inclined with respect to the unit side surface 316c, the first unit surface 316g, and the second unit surface 316h. The outer peripheral tapered surface 316e corresponds to the unit grinding surface.

The outer peripheral tapered surface 316e includes multiple outer peripheral tapered surfaces 310e. The multiple outer peripheral tapered surfaces 310e are disposed on the same plane, thus forming the outer peripheral tapered surface 316e in a planar shape. For example, two outer peripheral tapered surfaces 310e adjacent to each other in the circumferential direction CD are not deviated from each other in the axial direction AD, and no step is generated on the outer peripheral tapered surface 316e. In the outer peripheral tapered surface 316e, the multiple outer peripheral tapered surfaces 310e are flush with one another.

As shown in FIG. 115, the first magnet surface 310g forms the axial gap 475. The first magnet surface 310g is included in the first rotor surface 301. Since there is no step on the first magnet surface 310g, the axial gap 475 is less likely to vary in the circumferential direction CD and the radial direction RD. The first unit surface 316g includes the first magnet surface 310g, thus forming the axial gap 475. The first unit surface 316g is included in the first rotor surface 301. Since there is no step on the first unit surface 316g, the axial gap 475 is less likely to vary in the circumferential direction CD and the radial direction RD. The axial gap 475 corresponds to the gap, and the first magnet surface 310g corresponds to a gap defining surface. The axial gap 475 may be simply referred to as a gap.

As described in the above configuration groups Bb and G, the magnet unit 316 is supported by the magnet holder 320, the fixing block 330, and the magnet fixing tool 335. The magnet holder 320, the fixing block 330, and the magnet fixing tool 335 support the magnet 310 and the magnet unit 316, and correspond to a magnet support portion. As shown in FIG. 96, the outer peripheral tapered surface 316e brought into a state of being caught by the outer peripheral engagement portion 322, and thus the magnet unit 316 is fixed to the magnet holder 320. That is, the outer peripheral tapered surface 310e is brought into a state of being caught by the outer peripheral engagement portion 322, and thus the magnet 310 is fixed to the magnet holder 320. The inner peripheral tapered surface 316d is brought into a state of being caught by the fixing block 330, and thus the magnet unit 316 is fixed to the fixing block 330. That is, the inner peripheral tapered surface 310d is brought into a state of being caught by the fixing block 330, and thus the magnet 310 is fixed to the fixing block 330.

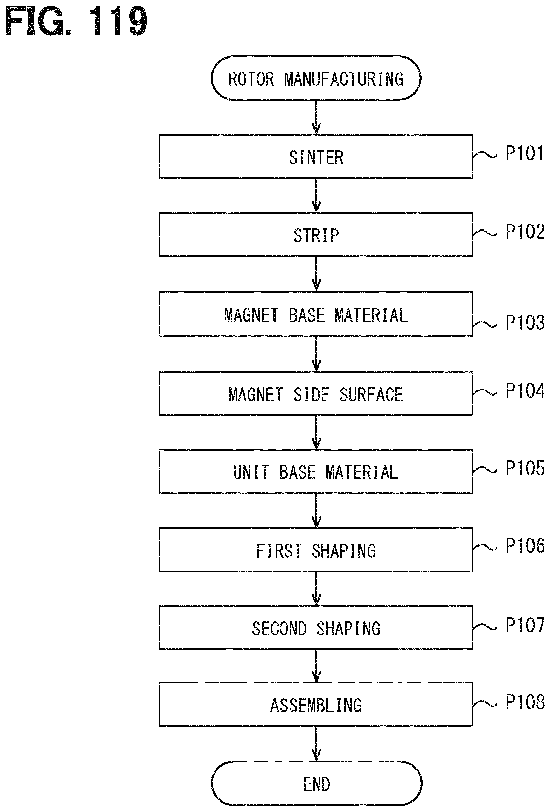

Next, a method of manufacturing the magnet 310 will be described. The method of manufacturing the magnet 310 is included in a method of manufacturing the magnet unit 316. The method of manufacturing the magnet unit 316 is included in the method of manufacturing the rotor 300. The method of manufacturing the rotor 300 is included in the method of manufacturing the motor device 60. Here, the method of manufacturing the rotor 300 will be described with reference to a flowchart of FIG. 119. The method of manufacturing the magnet 310 corresponds to a magnet manufacturing method. The method of manufacturing the rotor 300 corresponds to a method for manufacturing a rotor.

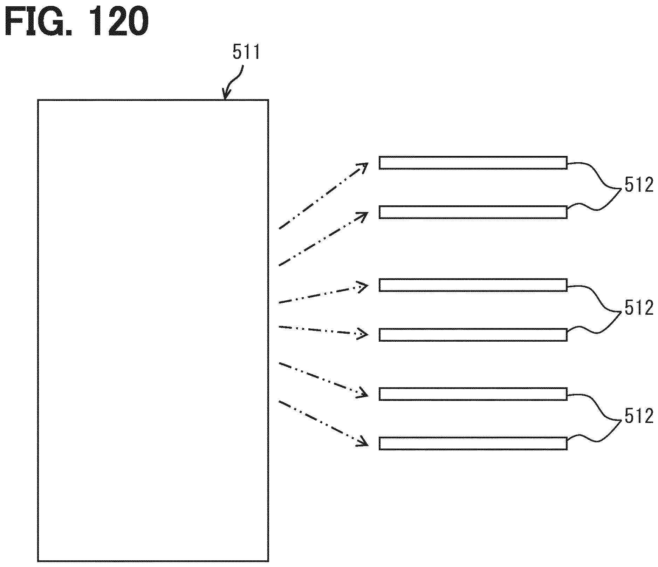

In the process of manufacturing the rotor 300 shown in FIG. 119, the operator performs a sintering process as step P101. The sintering process is a process of manufacturing a sintered magnet corresponding to a neodymium magnet. In the sintering process, the operator manufactures a sintered block 511 shown in FIG. 120 as the sintered magnet, for example. The sintered block 511 is a block-shaped sintered magnet.

After the sintering process, the operator performs a strip process as step P102. The strip process is a process of manufacturing a strip-shaped member from the sintered magnet. In the strip process, as shown in FIG. 120, the operator manufactures strip magnets 512 from the sintered block 511. For example, the operator divides the sintered block 511 into multiple divided pieces, and shapes the divided pieces into strips to form the strip magnets 512. The operator does not grind the strip magnets 512 in the strip process. The strip magnet 512 is a magnet formed in a plate shape and corresponds to a magnet plate member. The operator prepares the strip magnet 512 by performing the sintering process and the strip process. A preparation process of preparing the strip magnet 512 includes the sintering process and the strip process.

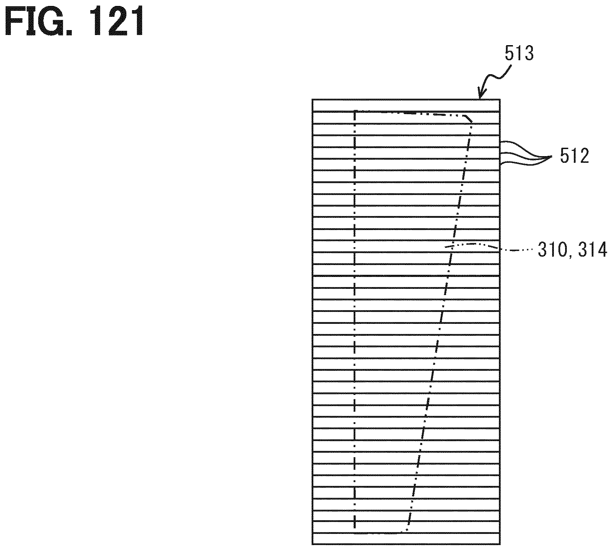

After the strip process, the operator performs a magnet base material process as step P103. The magnet base material process is a process of manufacturing a base material for forming the magnet 310. In the magnet base material process, the operator manufactures a magnet base material 513 as shown in FIG. 121 as the base material for forming the magnet 310. The operator manufactures the magnet base material 513 by stacking and bonding the multiple strip magnets 512. The operator causes plate surfaces of the multiple strip magnets 512 to be overlapped and bonds the plate surfaces with an adhesive. Since the strip magnets 512 are not ground in the strip process, fine irregularities are likely to exist on the plate surfaces of the strip magnets 512. Since a contact area between the plate surface of the strip magnet 512 and the adhesive is increased due to the minute irregularities, an adhesive strength of the adhesive is likely to be increased. That is, it is easy to firmly bond the multiple strip magnets 512. The magnet base material 513 shown in FIG. 121 is a magnet base material for manufacturing the inclined magnet 314.

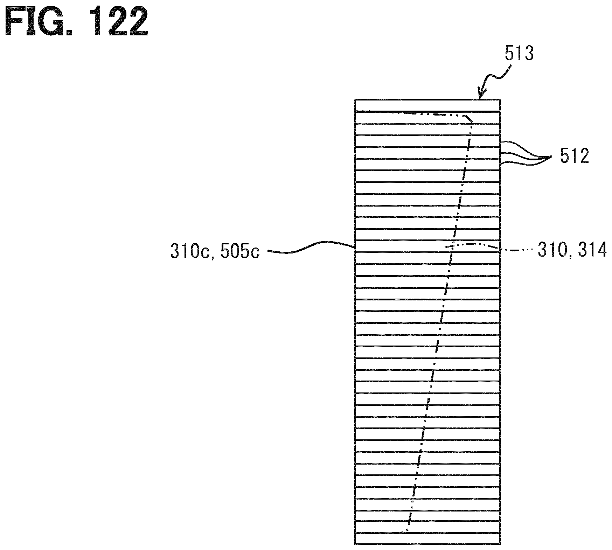

After the magnet base material process, the operator performs a magnet side surface process as step P104. The magnet side surface process is a process of forming an adhesion surface on the magnet base material 513. In the magnet side surface process, the operator performs grinding on the magnet base material 513 to form the magnet side surface 310c as shown in FIG. 122. The operator grinds the magnet base material 513 such that the magnet side surface 310c has a planar shape. The operator forms the magnet side surface 310c according to the number of bonding targets to be bonded to the magnet 310. The magnet side surface 310c corresponds to a magnet plane.

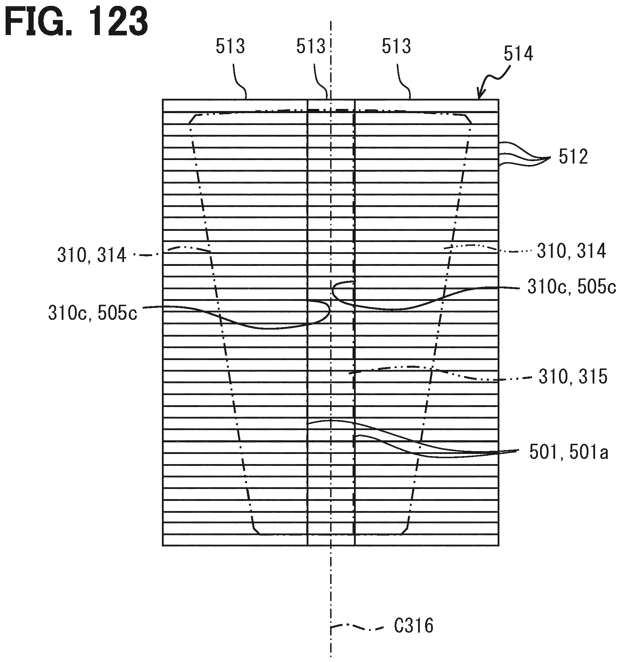

After the magnet side surface process, the operator performs a unit base material process as step P105. The unit base material process is a process of manufacturing a base material for forming the magnet unit 316. In the unit base material process, the operator manufactures a unit base material 514 as shown in FIG. 123 as the base material for forming the magnet unit 316. The operator manufactures the unit base material 514 by arranging and bonding multiple magnet base materials 513. The operator causes the magnet side surfaces 310c of the multiple magnet base materials 513 to be overlapped and bonds the magnet side surfaces 310c to each other.

When the operator manufactures the unit base material 514, the unit inner boundary 501a is formed in the unit base material 514. As described above, a repulsive force is less likely to be generated between two magnet base materials 513 adjacent to each other with the unit inner boundary 501a interposed therebetween. Therefore, when the operator bonds two magnet base materials 513 by the adhesive, the bonding is less likely to be released by the repulsive force between the two magnet base materials 513.

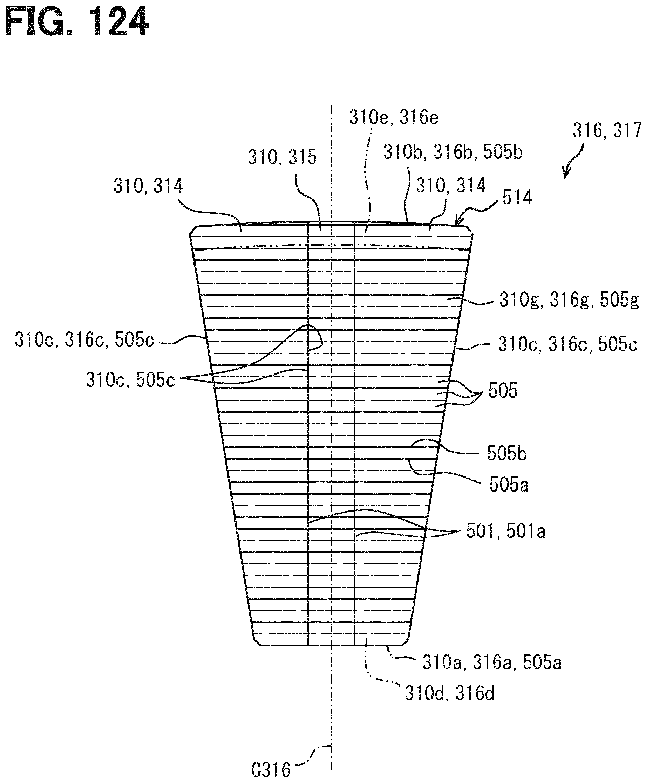

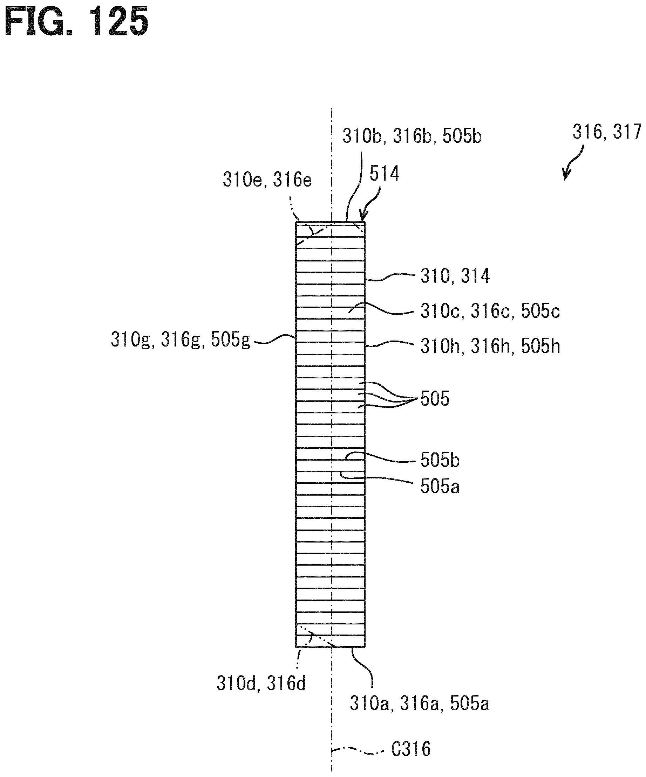

After the unit base material process, the operator adjust a shape of the unit base material 514 to manufacture the magnet unit 316. The operator shapes the unit base material 514, for example, in two stages. The operator performs a first shaping process as step P106. The first shaping process is a process of preprocessing the unit base material 514 to adjust an outline of the unit base material 514. The operator performs grinding on the unit base material 514 to form the unit side surfaces 316c, the first unit surface 316g, and the second unit surface 316h as shown in FIGS. 124 and 125. The operator grinds the unit base material 514 such that the unit side surfaces 316c, the first unit surface 316g, and the second unit surface 316h each have a planar shape.

The unit side surface 316c, the first unit surface 316g, and the second unit surface 316h include the magnet side surface 310c, the first magnet surface 310g, and the second magnet surface 310h. The first shaping process is also a process of grinding the unit base material 514 by an operator such that the magnet side surface 310c, the first magnet surface 310g, and the second magnet surface 310h each have a planar shape. The magnet side surface 310c, the first magnet surface 310g, and the second magnet surface 310h correspond to the magnet plane.

In the first shaping process, the operator forms the unit inner peripheral end 316a and the unit outer peripheral end 316b on the unit base material 514. The operator also grinds the unit base material 514 such that the unit inner peripheral end 316a and the unit outer peripheral end 316b each have a planar shape.

After the first shaping process, the operator performs a second shaping process as step P107. The second shaping process is a process of finishing the unit base material 514 to manufacture the magnet unit 316. The operator grinds the preprocessed unit base material 514 to form the inner peripheral tapered surface 316d and the outer peripheral tapered surface 316e indicated by dashed lines in FIGS. 124 and 125. The operator grinds the unit base material 514 such that the inner peripheral tapered surface 316d and the outer peripheral tapered surface 316e each have a planar shape. In a second shaping process, the operator forms the side tapered surface 316f in addition to the inner peripheral tapered surface 316d and the outer peripheral tapered surface 316e.

The inner peripheral tapered surface 316d and the outer peripheral tapered surface 316e include the inner peripheral tapered surface 310d and the outer peripheral tapered surface 310e. The second shaping process is also a process in which the operator grinds the unit base material 514 such that the inner peripheral tapered surface 310d and the outer peripheral tapered surface 310e each have a planar shape. The inner peripheral tapered surface 310d and the outer peripheral tapered surface 310e correspond to the magnet plane.

After the second shaping process, the operator performs an assembling process as step P108. The assembling process is a process of assembling the magnet unit 316 to the magnet holder 320. The operator prepares the magnet holder 320, the fixing block 330, and the magnet fixing tool 335 in addition to the magnet unit 316. Then, the operator fixes the magnet unit 316 to the magnet holder 320 using the fixing block 330 and the magnet fixing tool 335. The operator arranges the multiple magnet units 316 along the holder main body 321. In this case, the unit outer boundary 501b is formed by multiple magnet units 316. As described above, a repulsive force is likely to be generated between two magnets 310 adjacent to each other with the unit outer boundary 501b interposed therebetween. Therefore, the operator assembles the multiple magnet units 316 to the magnet holder 320 against the repulsive force.

### <Configuration Group M>

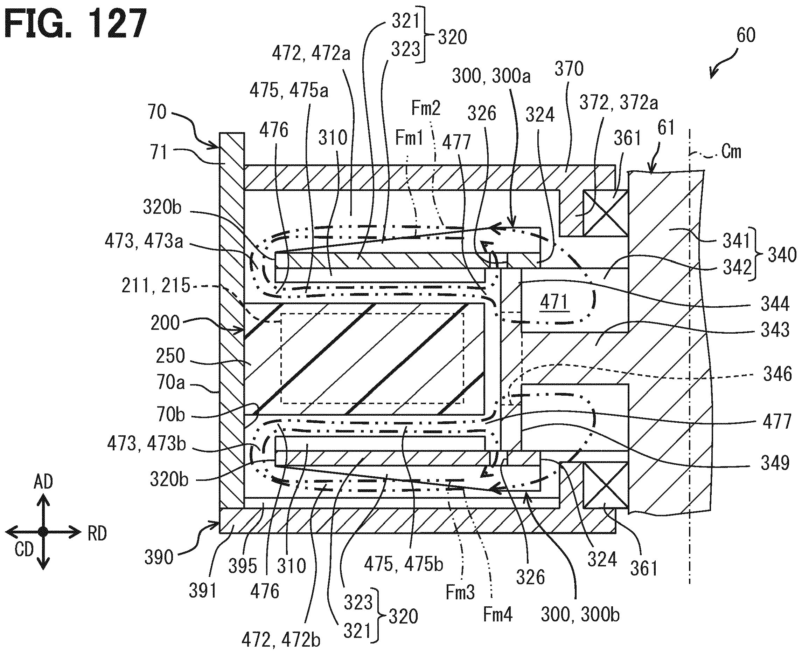

As shown in FIG. 127, the internal space of the motor housing 70 includes a stator region 471, an opposite region 472, and an outer peripheral region 473. The stator region 471 is a region closer to the stator 200 than to the rotor 300 in the axial direction AD. The stator region 471 extends along the first rotor surface 301. The opposite region 472 is a region opposite to the stator region 471 with the rotor 300 interposed therebetween. The opposite region 472 extends along the second rotor surfaces 302. The opposite region 472 and the outer peripheral region 473 extend in the radial direction RD to span the shaft main body 341 and the motor inner peripheral surface 70b. The opposite region 472 and the outer peripheral region 473 extend around the shaft main body 341 in an annular shape in the circumferential direction CD. The stator region 471 and the opposite region 472 are arranged in the axial direction AD with the rotor 300 and the outer peripheral region 473 interposed therebetween.

The outer peripheral region 473 is a region between the rotor 300 and the motor housing 70 in the radial direction RD. The outer peripheral region 473 extends in the radial direction RD to span the holder outer peripheral end 320b and the motor inner peripheral surface 70b. The outer peripheral region 473 extends around the rotor 300 in an annular shape in the circumferential direction CD. The outer peripheral region 473 is between the stator region 471 and the opposite region 472 in the axial direction AD, and establishes communication between the stator region 471 and the opposite region 472.

The stator region 471, the opposite region 472, and the outer peripheral region 473 are spaces in the internal space of the motor housing 70. The stator region 471 corresponds to a stator space, the opposite region 472 corresponds to an opposite space, and the outer peripheral region 473 corresponds to an outer peripheral space.

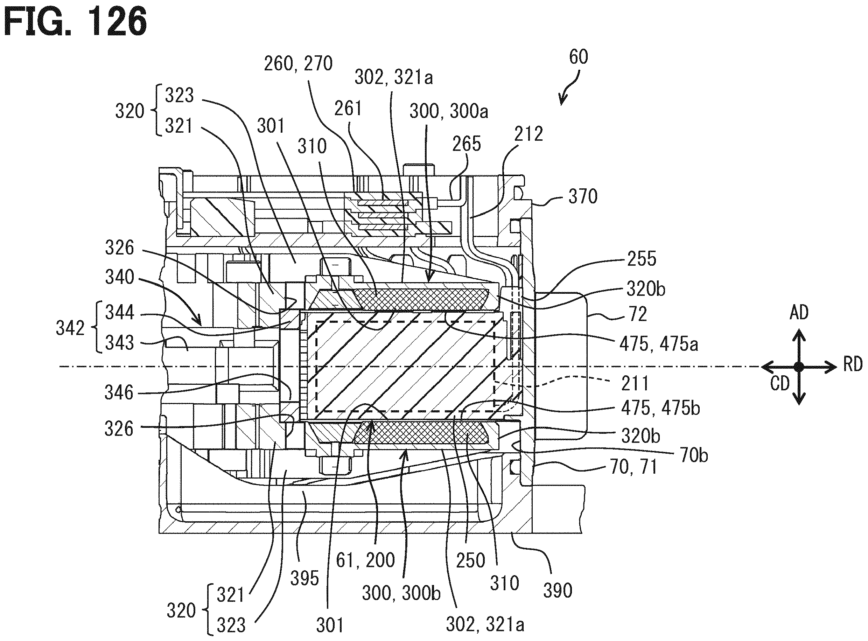

In FIGS. 126 and 127, the axial gap 475 is included in the stator region 471. The axial gap 475 is opened to both the radially outer side and the radially inner side in the stator region 471. The axial gap 475 includes a gap outer peripheral end 476 and a gap inner peripheral end 477. The gap outer peripheral end 476 is an outer peripheral end of the axial gap 475 and is opened toward the radially outer side. The gap outer peripheral end 476 communicates with the opposite region 472 through the outer peripheral region 473. The gap inner peripheral end 477 is an inner peripheral end of the axial gap 475 and is opened toward the radially inner side. The gap inner peripheral end 477 and the opposite region 472 are in a state of being partitioned by at least one of the rotor 300 and the shaft flange 342.

In the shaft 340, the shaft main body 341 is in a state of penetrating the stator 200 in the axial direction AD. The shaft main body 341 is fixed to the rotor 300 and rotates together with the rotor 300 about the motor axis Cm. The shaft main body 341 corresponds to the rotation shaft portion. The shaft flange 342 supports the rotor 300 and corresponds to a shaft support portion. The rim 344 partitions the stator region 471 into a radially inner side and a radially outer side, and corresponds to a support partition portion. The rim 344 is located radially inward with respect to the axial gap 475. The axial gap 475 is included in a region of the stator region 471 on the radially inner side of the rim 344.

The gap inner peripheral end 477 communicates with the opposite region 472 through the holder adjustment hole 326. The holder adjustment hole 326 is formed on the radially outer side of the rim 344. The holder adjustment hole 326 is formed between the rim 344 and the gap inner peripheral end 477 in the radial direction RD. The configuration in which the holder adjustment hole 326 is formed on the radially outer side of the rim 344 includes a configuration in which a part of the holder adjustment hole 326 is aligned with the rim 344 in the axial direction AD as in the present embodiment. That is, as long as at least a part of the holder adjustment hole 326 penetrates the magnet holder 320 on the radially outer side relative to the rim 344, the holder adjustment hole 326 is formed on the radially outer side of the rim 344. The holder adjustment hole 326 is located closer to the axial gap 475 than the rim 344 is. The holder adjustment hole 326 corresponds to a rotor inner peripheral hole and a gap-side hole.

The gap inner peripheral end 477 communicates with the opposite region 472 through a holder center hole 324, the flange vent hole 346, and the rim inner peripheral hole 349 in addition to the holder adjustment hole 326. The holder center hole 324 is formed in the rotor 300.

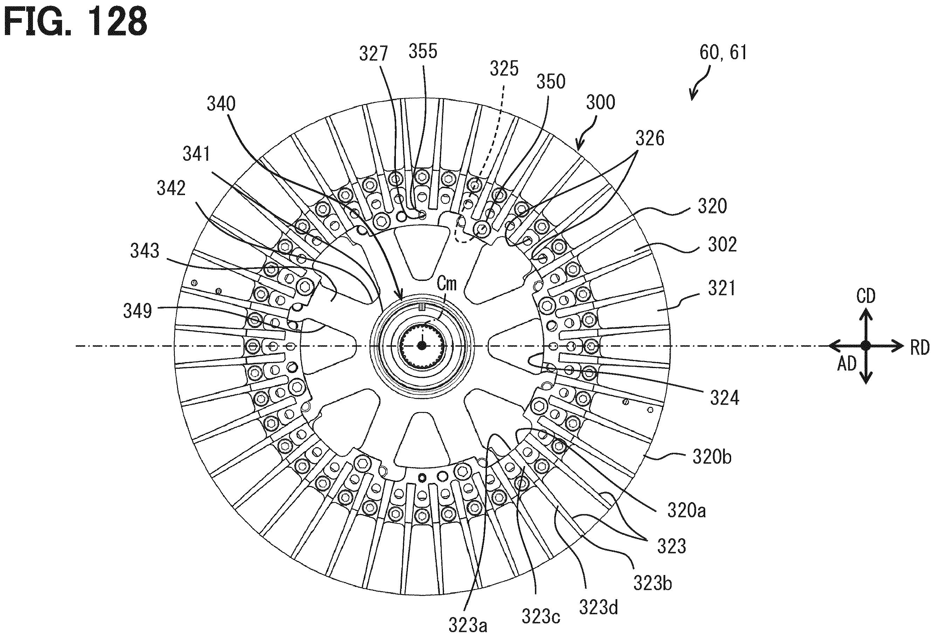

The holder center hole 324 shown in FIGS. 127 and 128 penetrates the magnet holder 320 in the axial direction AD. The holder center hole 324 establishes communication between the stator region 471 and the opposite region 472. The holder center hole 324 is formed at a center of the magnet holder 320. The holder center hole 324 is located at a position away from any of the magnet 310 and the holder adjustment hole 326 toward the radially inner side. The holder center hole 324 is located radially inward with respect to the rim 344. The shaft main body 341 is in a state of penetrating the rotor 300 in the axial direction AD when being inserted into the holder center hole 324. The holder center hole 324 is formed between the shaft main body 341 and the rim 344 in the radial direction RD. The holder center hole 324 corresponds to a rotor inner peripheral hole and a shaft-portion-side hole.

The stator region 471 and the opposite region 472 communicate with each other through the holder fixing holes 325 and the holder pin holes 327. Among the multiple holder fixing holes 325, the holder fixing hole 325 into which the holder fixing tool 350 is not inserted establishes communication between the opposite region 472 and the stator region 471 which is on the radially inner side of the rim 344, similarly to the holder center hole 324. Among the multiple holder pin holes 327, the holder pin hole 327 into which the positioning pin 355 is not inserted establishes communication between the opposite region 472 and the stator region 471 which is on the radially inner side of the rim 344, similarly to the holder center hole 324. The holder fixing hole 325 and the holder pin hole 327 correspond to a rotor inner peripheral hole and the shaft-portion-side hole. The holder center hole 324, the holder fixing hole 325, and the holder pin hole 327 may be referred to as the holder center hole 324 and the like.

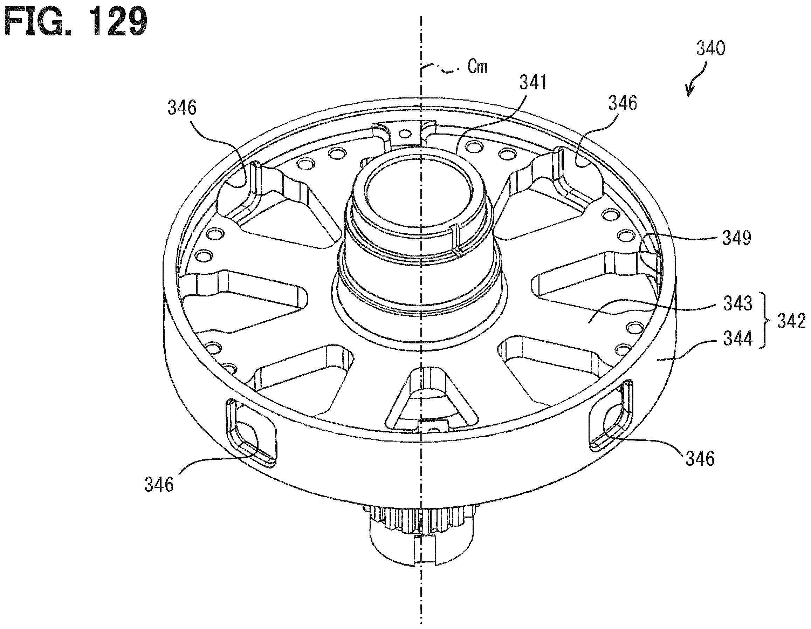

The flange vent hole 346 shown in FIGS. 127 and 129 penetrates the rim 344 to establish communication between the gap inner peripheral end 477 and the holder center hole 324 and the like. The flange vent hole 346 is located between the gap inner peripheral end 477 and the holder center hole 324 in the radial direction RD. The flange vent hole 346 corresponds to a partition communication hole.

The rim inner peripheral hole 349 penetrates the shaft flange 342 in the axial direction AD. The rim inner peripheral hole 349 is formed on the radially inner side of the rim 344. The rim inner peripheral hole 349 is formed between the shaft main body 341 and the rim 344 in the radial direction RD. The rim inner peripheral hole 349 is located at a position aligned with the holder center hole 324 and the like in the axial direction AD. The rim inner peripheral hole 349 is located at a position aligned with the flange vent hole 346 in the radial direction RD. The rim inner peripheral hole 349 establishes communication between the holder center hole 324 and the like and the flange vent hole 346. The rim inner peripheral hole 349 corresponds to a support through hole.

The spoke 343 connects the shaft main body 341 and the rim 344 via the rim inner peripheral hole 349. The spoke 343 supports the rim 344 in a state of being fixed to the shaft main body 341. The multiple spokes 343 are arranged in the circumferential direction CD with respect to the rim inner peripheral hole 349. The spoke 343 is provided between the flange vent holes 346 adjacent to each other in the circumferential direction CD. The spoke 343 extends in a frame shape in the radial direction RD and corresponds to the support frame.

As shown in FIGS. 126 and 127, the stator region 471, the opposite region 472, the outer peripheral region 473, and the axial gap 475 exist with respect to each of the first rotor 300a and the second rotor 300b. A first opposite region 472a, a first outer peripheral region 473a, and a first axial gap 475a exist with respect to the first rotor 300a. A second opposite region 472b, a second outer peripheral region 473b, and a second axial gap 475b exist with respect to the second rotor 300b. The stator region 471 is a space between the first rotor 300a and the second rotor 300b, and exists in common between the first rotor 300a and the second rotor 300b. The stator 200 is in a state of being accommodated in the stator region 471.

The first axial gap 475a is a gap between the first rotor 300a and the stator 200, and corresponds to the axial gap. The first opposite region 472a is a space between the first rotor 300a and the rear frame 370, and corresponds to the opposite space. The first outer peripheral region 473a is a space between the first rotor 300a and the motor inner peripheral surface 70b, and corresponds to the outer peripheral space. The gap outer peripheral end 476 of the first axial gap 475a communicates with the first opposite region 472a through the first outer peripheral region 473a. The gap inner peripheral end 477 of the first axial gap 475a communicates with the first opposite region 472a through the holder adjustment hole 326 of the first rotor 300a. The gap inner peripheral end 477 of the first axial gap 475a communicates with the first opposite region 472a through the holder center hole 324 and the like of the first rotor 300a and the flange vent hole 346.

The second axial gap 475b is a gap between the second rotor 300b and the stator 200, and corresponds to the axial gap. The second opposite region 472b is a space between the second rotor 300b and the drive frame 390, and corresponds to the opposite space. The second outer peripheral region 473b is a space between the second rotor 300b and the motor inner peripheral surface 70b, and corresponds to the outer peripheral space. The gap outer peripheral end 476 of the second axial gap 475b communicates with the second opposite region 472b through the second outer peripheral region 473b. The gap inner peripheral end 477 of the second axial gap 475b communicates with the second opposite region 472b through the holder adjustment hole 326 of the second rotor 300b. The gap inner peripheral end 477 of the second axial gap 475b communicates with the second opposite region 472b through the holder center hole 324 and the like of the second rotor 300b and the flange vent hole 346.

The drive frame 390 is provided on the housing main body 71 to cover the second rotor 300b from a second opposite region 472b side. The drive frame 390 is fixed to the motor housing 70 by being fixed to the housing main body 71. The drive frame 390 corresponds to a rotor cover portion.

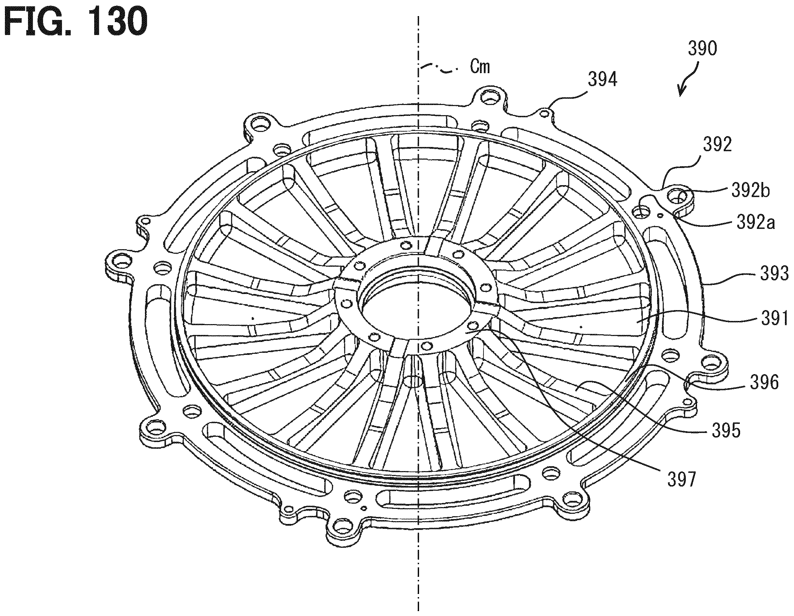

As shown in FIGS. 127 and 130, the drive frame 390 includes drive frame ribs 395, an outer peripheral rib 396, and an inner peripheral rib 397. The ribs 395 to 397 protrude from the frame main body 391 toward the second rotor 300b in the axial direction AD. The ribs 395 to 397 are projection portions provided on the frame main body 391. Each of the drive frame ribs 395 extends along the frame main body 391 in the radial direction RD. The outer peripheral rib 396 extends along an outer peripheral end of the frame main body 391 in the circumferential direction CD. The inner peripheral rib 397 extends along the inner peripheral end of the frame main body 391 in the circumferential direction CD. The outer peripheral rib 396 and the inner peripheral rib 397 are formed in an annular shape. The drive frame rib 395 is in a state of spanning the outer peripheral rib 396 and the inner peripheral rib 397. The frame main body 391 corresponds to a cover main body, and the drive frame rib 395 corresponds to a cover rib.

When the rotor 300 rotates, the gas is stirred and flows due to the holder ribs 323 in an internal space of the motor housing 70. A gas flow generated by the holder rib 323 includes an air flow that flows to circulate around the rotor 300 in a direction orthogonal to the circumferential direction CD. The air flow is sent radially outward from the holder rib 323 toward the outer peripheral region 473 in the opposite region 472. The air flow reaching the outer peripheral region 473 flows into the axial gap 475 from the gap outer peripheral end 476 and flows out from the gap inner peripheral end 477. The air flow flowing out from the axial gap 475 returns to the outer peripheral region 473 through the holder adjustment hole 326, the holder center hole 324, or the like. The air flow passing through the holder center hole 324 and the like flows out from the axial gap 475, and then reaches the holder center hole 324 and the like through the flange vent hole 346 and the rim inner peripheral hole 349.

A path through which the air flow returns to the outer peripheral region 473 through the holder adjustment hole 326 may be referred to as a first circulation path. A path through which the air flow returns to the outer peripheral region 473 through the holder center hole 324 may be referred to as a second circulation path.

The air flow circulating around the rotor 300 includes air flows Fm1 to Fm4. As the first rotor 300a rotates, the air flows Fm1 and Fm2 flows to circulate around the first rotor 300a in the direction orthogonal to the circumferential direction CD. The air flows Fm1 and Fm2 flow from the first opposite region 472a into the first axial gap 475a through the first outer peripheral region 473a. Thereafter, the air flow Fm1 returns to the first opposite region 472a from the first axial gap 475a through the holder adjustment hole 326. Meanwhile, the air flow Fm2 returns to the first opposite region 472a from the first axial gap 475a through the flange vent hole 346, the rim inner peripheral hole 349, the holder center hole 324, and the like.

As the second rotor 300b rotates, the air flows Fm3 and Fm4 flows to circulate around the second rotor 300b in the direction orthogonal to the circumferential direction CD. The air flows Fm3 and Fm4 flow from the second opposite region 472b into the second axial gap 475b through the second outer peripheral region 473b. Thereafter, the air flow Fm3 returns to the second opposite region 472b from the second axial gap 475b through the holder adjustment hole 326. Meanwhile, the air flow Fm4 returns to the second opposite region 472b from the second axial gap 475b through the flange vent hole 346, the rim inner peripheral hole 349, the holder center hole 324, and the like.

In the second opposite region 472b, a heat radiation effect from the air flows Fm3 and Fm4 to the drive frame 390 is further enhanced by the drive frame ribs 395. In the second opposite region 472b, the holder ribs 323 move relative to the drive frame ribs 395 in the circumferential direction CD as the second rotor 300b rotates, and thus the air flows Fm3 and Fm4 are easily stirred. The air flows Fm3 and Fm4 easily flow between two drive frame ribs 395 adjacent to each other in the circumferential direction CD to swirl in the direction orthogonal to the axial direction AD. For example, the air flows Fm3 and Fm4 flow along one of the drive frame ribs 395 toward the radially inner side, make a U-turn at the inner peripheral rib 397, and flow along the other of the drive frame ribs 395 toward the radially outer side. Thereafter, the air flows Fm3 and Fm4 make a U-turn at the outer peripheral rib 396 and flow along the one of the drive frame ribs 395 toward the radially inner side again.

### <Configuration Group N>

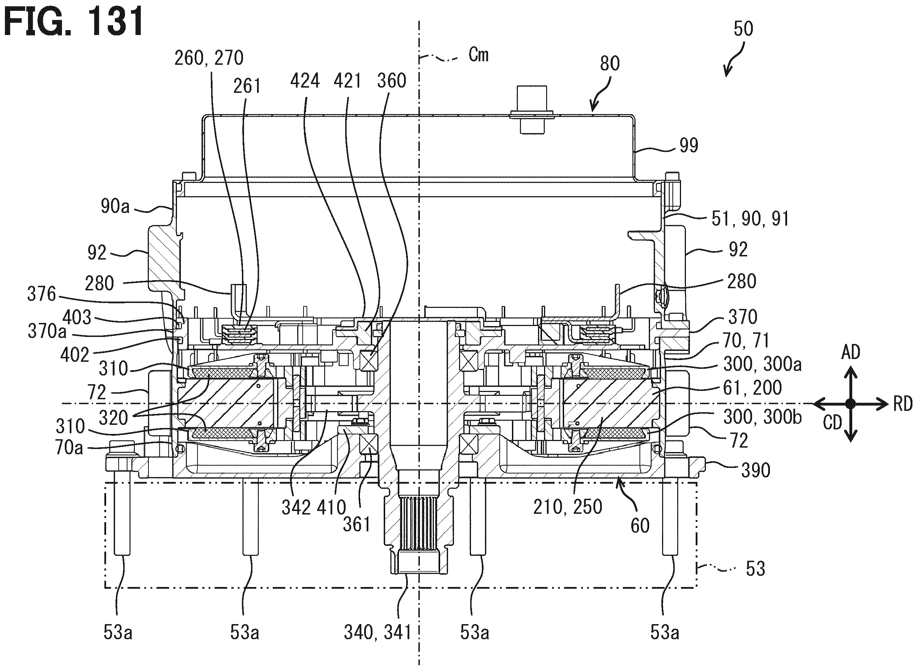

As shown in FIG. 131, the motor device unit 50 includes a motor seal portion 402 and an inverter seal portion 403. Each of the seal portions 402 and 403 is an elastically deformable seal member, and is made of a resin material or the like. The seal portions 402 and 403 are O-rings, for example. Each of the seal portions 402 and 403 is formed in an annular shape and extend along the circumferential direction CD.

The motor seal portion 402 is provided in the motor device 60. The motor seal portion 402 is in a state of being sandwiched between the motor housing 70 and the rear frame 370. The motor seal portion 402 is provided between the motor housing 70 and the rear frame 370, and closes a gap between the motor housing 70 and the rear frame 370. The motor seal portion 402 seals a boundary between the motor housing 70 and the rear frame 370 to prevent water or the like from entering the inside of the motor housing 70. The motor seal portion 402 extends along the motor outer peripheral surface 70a in an annular shape.

The housing main body 71 extends in an annular shape in the circumferential direction CD. The housing main body 71 is formed in a cylindrical shape as a whole. An outer peripheral surface of the housing main body 71 is the motor outer peripheral surface 70a. The housing main body 71 forms an outer peripheral wall of the motor housing 70 and corresponds to an electric machine outer peripheral wall. The housing main body 71 may be referred to as a motor outer peripheral wall. An inner space of the housing main body 71 forms an internal space of the motor housing 70. The motor outer peripheral surface 70a corresponds to an electric machine outer peripheral surface.

The rear frame 370 is fixed to the motor housing 70, and corresponds to a fixed target. The rear frame 370 is arranged on the housing main body 71 in the axial direction AD. The rear frame 370 is in a state of being sandwiched between the motor housing 70 and the inverter housing 90 in the axial direction AD. The rear frame 370 covers the inner space of the housing main body 71 from the axial direction AD, and corresponds to a cover member. The rear frame 370 is in a state of covering an internal space of the motor housing 70, the rotors 300a and 300b, and the stator 200 from an inverter device 80 side.

The rear frame 370 has a rear frame outer peripheral surface 370a. The rear frame outer peripheral surface 370a is an outer peripheral end of the rear frame 370 and is an end surface facing the radially outer side. The rear frame outer peripheral surface 370a extends in an annular shape in the circumferential direction CD. The rear frame outer peripheral surface 370a is located between the motor housing 70 and the inverter housing 90, and is exposed together with the outer peripheral surfaces 70a and 90a toward the radially outer side. The rear frame outer peripheral surface 370a is provided between the outer peripheral surfaces 70a and 90a in the axial direction AD. The rear frame outer peripheral surface 370a corresponds to a target outer peripheral surface.

The inverter seal portion 403 is in a state of being sandwiched between the motor device 60 and the inverter device 80. The inverter seal portion 403 is provided between the inverter housing 90 and the rear frame 370, and closes a gap between the inverter housing 90 and the rear frame 370. The inverter seal portion 403 seals a boundary between the inverter housing 90 and the rear frame 370 to restrict water or the like from entering the inside of the inverter housing 90. The inverter seal portion 403 extends in an annular shape along the outer peripheral surface 90a. The outer peripheral surface 90a may be referred to as the inverter outer peripheral surface 90a.

The inverter housing 90 has an inverter inner peripheral surface 90b. The inverter inner peripheral surface 90b is included in the inner surface of the motor housing 70, and extends in an annular shape in the circumferential direction CD as a whole. The housing main body 91 extends along the inverter inner peripheral surface 90b in an annular shape in the circumferential direction CD. The housing main body 91 is formed in a cylindrical shape as a whole. An outer peripheral surface of the housing main body 91 is the inverter outer peripheral surface 90a, and an inner peripheral surface thereof is the inverter inner peripheral surface 90b. On the housing main body 91, an outer peripheral wall of the inverter housing 90 is formed and may be referred to as an inverter outer peripheral wall. An inner space of the housing main body 91 forms the internal space of the inverter housing 90.

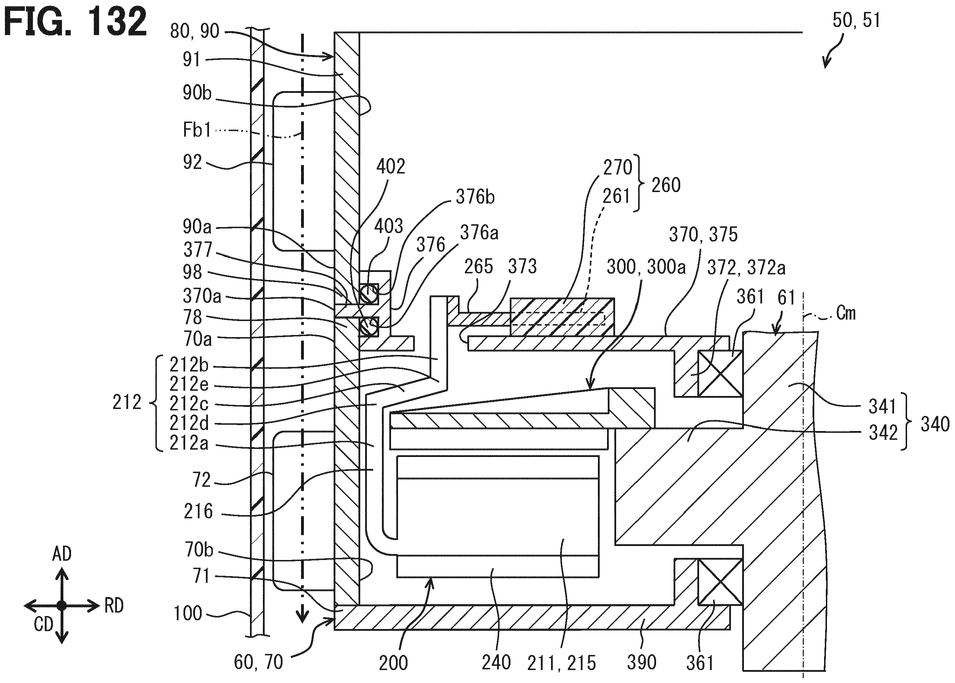

As shown in FIG. 132, the motor device 60 includes a motor seal holding portion 78 and a rear frame holding portion 376. The motor seal holding portion 78 and the rear frame holding portion 376 hold the motor seal portion 402, and positional deviation of the motor seal portion 402 is restricted. The motor seal portion 402 is sandwiched between the motor seal holding portion 78 and the rear frame holding portion 376, and closes a gap between the holding portions 78 and 376.

The motor seal holding portion 78 is included in the motor housing 70. The motor seal holding portion 78 is provided in the housing main body 71. In the present embodiment, the motor seal holding portion 78 and the housing main body 71 are integrally formed. The motor seal holding portion 78 is included in the housing main body 71, and forms, for example, an end portion of the housing main body 71 on an inverter device 80 side. An outer surface of the motor seal holding portion 78 is included in the motor outer peripheral surface 70a. Therefore, the motor outer peripheral surface 70a is located on the radially outer side of the motor seal holding portion 78. The motor seal holding portion 78 corresponds to a seal holding portion.

The rear frame 370 includes a rear frame main body 375, a rear frame holding portion 376, and a rear frame exposed portion 377. The rear frame main body 375 extends in the direction orthogonal to the axial direction AD and is formed in a plate shape. The rear frame main body 375 forms a main part of the rear frame 370. In the rear frame 370, for example, a busbar support portion 371, a bearing support portion 372, and a frame opening portion 373 are provided on the rear frame main body 375. The rear frame main body 375 extends in an annular shape along the motor inner peripheral surface 70b in the circumferential direction CD. The rear frame main body 375 is provided, for example, at a position entering the radially inner side of the motor housing 70.

The rear frame holding portion 376 is provided on the rear frame main body 375. The rear frame holding portion 376 is located at a position near an outer peripheral end of the rear frame main body 375. The rear frame holding portion 376 extends in an annular shape along the motor inner peripheral surface 70b in the circumferential direction CD. The rear frame holding portion 376 protrudes from the rear frame main body 375 in the axial direction AD. The rear frame holding portion 376 is in a state of spanning the motor housing 70 and the inverter housing 90 in the axial direction AD. The rear frame holding portion 376 overlaps the inner peripheral surfaces 70b and 90b and is in a state of protruding from the inner peripheral surfaces 70b and 90b toward the radially inner side. The rear frame holding portion 376 is provided at a position away from the frame opening portion 373 toward the radially outer side. The rear frame holding portion 376 corresponds to a target holding portion.

The rear frame holding portion 376 is provided at a position aligned with the motor seal holding portion 78 in the radial direction RD. The rear frame holding portion 376 is located on the radially inner side of the motor seal holding portion 78 with the motor seal portion 402 interposed therebetween. The rear frame holding portion 376 and the motor seal holding portion 78 are in a state of pressing the motor seal portion 402 in the radial direction RD. The motor seal portion 402 is elastically deformed in a manner of being crushed in the radial direction RD by pressing forces of the rear frame holding portion 376 and the motor seal holding portion 78. The motor seal portion 402 is in a state of being in close contact with the rear frame holding portion 376 and the motor seal holding portion 78 by a restoring force accompanying the elastic deformation.

The rear frame holding portion 376 has a motor-side rear frame groove 376a and an inverter-side rear frame groove 376b. The rear frame grooves 376a and 376b are recess portions recessed toward the radially inner side and are opened toward the radially outer side. The rear frame grooves 376a and 376b extend in a groove shape along the motor inner peripheral surface 70b in the circumferential direction CD. Each of the rear frame grooves 376a and 376b is provided to make one round in the circumferential direction CD around the rear frame holding portion 376. The rear frame grooves 376a and 376b are arranged in the axial direction AD.

The motor-side rear frame groove 376a is provided at a position aligned with the motor seal holding portion 78 in the radial direction RD. The motor-side rear frame groove 376a is a recess portion into which the motor seal portion 402 can enter. The motor seal portion 402 closes the gap between the motor seal holding portion 78 and the rear frame holding portion 376 in a state of entering the inside of the motor-side rear frame groove 376a. The motor-side rear frame groove 376a restricts positional deviation of the motor seal portion 402 with respect to the motor seal holding portion 78 and the rear frame holding portion 376. The motor seal portion 402 is in close contact with both the rear frame holding portion 376 and the motor seal holding portion 78 by the restoring force accompanying the elastic deformation of the motor seal portion 402. Specifically, the motor seal portion 402 is in close contact with the motor inner peripheral surface 70b and an inner surface of the motor-side rear frame groove 376a. The motor-side rear frame groove 376a corresponds to a target recess portion.

The inverter device 80 includes an inverter seal holding portion 98. The inverter seal holding portion 98 and the rear frame holding portion 376 hold the inverter seal portion 403 and restrict positional deviation of the inverter seal portion 403. The inverter seal portion 403 is in a state of being sandwiched between the inverter seal holding portion 98 and the rear frame holding portion 376. The inverter seal portion 403 is provided between the inverter seal holding portion 98 and the rear frame holding portion 376, and closes the gap between the holding portions 98 and 376.

The inverter seal holding portion 98 is included in the inverter housing 90. The inverter seal holding portion 98 is provided on the housing main body 91. In the present embodiment, the inverter seal holding portion 98 and the housing main body 91 are integrally formed. The inverter seal holding portion 98 is provided on the housing main body 91, and forms, for example, an end portion of the housing main body 91 on a motor device 60 side. An outer surface of the inverter seal holding portion 98 is included in the outer peripheral surface 90a. Therefore, the inverter outer peripheral surface 90a is located on the radially outer side of the inverter seal holding portion 98.

The rear frame holding portion 376 and the inverter-side rear frame groove 376b are provided at positions aligned with the inverter seal holding portion 98 in the radial direction RD. The inverter-side rear frame groove 376b is a recess portion into which the inverter seal portion 403 can enter. The inverter seal portion 403 closes the gap between the inverter seal holding portion 98 and the rear frame holding portion 376 in a state of entering the inside the inverter-side rear frame groove 376b. The inverter-side rear frame groove 376b restricts the positional deviation of the inverter seal portion 403 with respect to the inverter seal holding portion 98 and the rear frame holding portion 376. The inverter seal portion 403 is in close contact with both the rear frame holding portion 376 and the inverter seal holding portion 98 by the restoring force accompanying the elastic deformation of the inverter seal portion 403. Specifically, the inverter seal portion 403 is in close contact with the inner peripheral surface 90b and an inner surface of the inverter-side rear frame groove 376b.

The rear frame exposed portion 377 is a portion of the rear frame 370 that enters between the motor seal holding portion 78 and the inverter seal holding portion 98. The rear frame exposed portion 377 extends from the rear frame main body 375 toward the radially outer side and forms the rear frame outer peripheral surface 370a. In the present embodiment, the rear frame exposed portion 377 extends from the rear frame main body 375 toward the radially outer side with the rear frame holding portion 376 interposed therebetween. The rear frame exposed portion 377 extends toward the radially outer side from a portion of the rear frame holding portion 376 between the motor-side rear frame groove 376a and the inverter-side rear frame groove 376b. The rear frame holding portion 376 connects the rear frame main body 375 and the rear frame exposed portion 377.

In the motor device 60, the motor outer peripheral surface 70a and the rear frame outer peripheral surface 370a are continuously arranged in the axial direction AD. The motor outer peripheral surface 70a and the rear frame outer peripheral surface 370a are flush with each other and form the same surface. The motor outer peripheral surface 70a and the rear frame outer peripheral surface 370a are located at positions aligned with each other in the radial direction RD. The motor outer peripheral surface 70a and the rear frame outer peripheral surface 370a are continuously arranged in the axial direction AD even at positions slightly deviated in the radial direction RD. In this way, no step surface is formed at a boundary between the motor outer peripheral surface 70a and the rear frame outer peripheral surface 370a.

Similarly to the motor outer peripheral surface 70a, the inverter outer peripheral surface 90a is arranged continuously with the rear frame outer peripheral surface 370a in the axial direction AD. The outer peripheral surface 90a and the rear frame outer peripheral surface 370a are flush with each other and form the same surface. The outer peripheral surface 90a and the rear frame outer peripheral surface 370a are located at positions aligned with each other in the radial direction RD. The outer peripheral surface 90a and the rear frame outer peripheral surface 370a are continuously arranged in the axial direction AD even if being slightly deviated in the radial direction RD. In this way, no step surface is formed at a boundary between the inverter outer peripheral surface 90a and the rear frame outer peripheral surface 370a.

The electric power lead-out wire 212 has a crooked shape to avoid the rear frame holding portion 376 toward the radially inner side. In the electric power lead-out wire 212, the outer peripheral lead-out portion 212a is located at a position aligned with the rear frame holding portion 376 in the axial direction AD. The outer peripheral lead-out portion 212a extends toward the rear frame holding portion 376 in the axial direction AD. The intersection lead-out portion 212c is located at a position separated from the rear frame holding portion 376 toward the first rotor 300a in the radial direction RD. The intersection lead-out portion 212c extends toward the radially inner side to pass between the rear frame holding portion 376 and the first rotor 300a. The intersection lead-out portion 212c is in a state of protruding radially inward with respect to the rear frame holding portion 376. The intersection lead-out portion 212c corresponds to a through lead-out portion. The inner peripheral lead-out portion 212b is located at a position aligned with the rear frame holding portion 376 in the radial direction RD. The inner peripheral lead-out portion 212b is located at a position away from the rear frame holding portion 376 toward the radially inner side.

The motor device unit 50 has a duct flow channel 105. The duct flow channel 105 is formed between the unit housing 51 and the unit duct 100, and is a flow channel through which the gas flows. The unit duct 100 covers the motor housing 70 and the inverter housing 90 from outer peripheral sides of the motor fins 72 and the inverter fins 92. The unit duct 100 is located at a position away from the motor outer peripheral surface 70a and the inverter outer peripheral surface 90a toward the radially outer side. The unit duct 100 is separated from the outer peripheral surfaces 70a and 90a toward the radially outer side by at least a distance of the fins 72 and 92. The separation space serves as the duct flow channel 105. The unit duct 100 is in a state of being in contact with or close to the fins 72 and 92. The unit duct 100 corresponds to an outer peripheral duct, and the duct flow channel 105 corresponds to an outer peripheral flow channel.

The gas flowing outside the motor device unit 50 includes a gas flowing along the outer peripheral surfaces 70a, 90a, and 370a as an air flow Fb1. The air flow Fb1 flows through the duct flow channel 105 in the axial direction AD from the inverter device 80 toward the motor device 60. The air flow Fb1 flows along the fins 72 and 92, thereby heat of the fins 72 and 92 is released to the air flow Fb1.

The air flow Fb1 passes through the boundary between the motor outer peripheral surface 70a and the rear frame outer peripheral surface 370a in the axial direction AD. At the boundary, the motor outer peripheral surface 70a and the rear frame outer peripheral surface 370a are continuous surfaces, and thus the air flow Fb1 is less likely to be disturbed. The air flow Fb1 passes through the boundary between the inverter outer peripheral surface 90a and the rear frame outer peripheral surface 370a in the axial direction AD. At the boundary, the inverter outer peripheral surface 90a and the rear frame outer peripheral surface 370a are continuous surfaces, and thus the air flow Fb1 is less likely to be disturbed.

Next, a method of manufacturing the motor device unit 50 will be described. A process of manufacturing the motor device unit 50 includes the process of manufacturing the motor device 60 and the process of manufacturing the inverter device 80. In the process of manufacturing the motor device 60, the operator prepares the motor housing 70, the rear frame 370, and the motor seal portion 402 as a preparation process. In the preparation process, the rotor 300, the stator 200, and the like are in a state of being accommodated inside the motor housing 70.

After the preparation process, the operator performs a process of temporarily fixing the rear frame 370 to the motor housing 70. In the process, the operator attaches the motor seal portion 402 to the rear frame 370. The operator inserts the motor seal portion 402 into the motor-side rear frame groove 376a. Then, the operator temporarily fixes the rear frame 370 to the motor housing 70 such that the motor seal portion 402 is in close contact with the motor seal holding portion 78.

After the preparation process, the operator performs a process of temporarily fixing the rear frame 370 to the inverter housing 90. In the process, the operator attaches the inverter seal portion 403 to the rear frame 370. The operator inserts the inverter seal portion 403 into the inverter-side rear frame groove 376b. Then, the operator temporarily fixes the rear frame 370 to the inverter housing 90 such that the inverter seal portion 403 is in close contact with the inverter seal holding portion 98.

After the temporary fixing, the operator fixes the motor housing 70, the inverter housing 90, and the rear frame 370 by fixing tools such as bolts. Thereafter, the operator performs work of attaching the unit duct 100 to the motor housing 70 and the inverter housing 90.

The motor device unit 50 is mounted on, for example, a flight vehicle. The flight vehicle is an electric flight vehicle such as an electric aircraft. In the electric flight vehicle, the motor device unit 50 drives a rotary blade such as a flight rotor to rotate. The motor device unit 50 is a propulsion device for propelling the flight vehicle. The motor device 60 is a driving source for rotating the rotary blade.

### <Configuration Group A>

According to the present embodiment described above, the neutral point busbar 290 is provided at a position separated from the busbar protection portion 270 that has the electrical insulation property and protects the electric power busbar 261. In the configuration, the neutral point busbar 290 and the electric power busbar 261 are certainly not in contact with each other, and the neutral point busbar 290 and the busbar protection portion 270 are also not in contact with each other. Therefore, a decrease in the insulation reliability of an electrical insulation state between the neutral point busbar 290 and the electric power busbar 261 can be reduced due to separation between the neutral point busbar 290 and the busbar protection portion 270. Therefore, since the neutral point busbar 290 and the busbar protection portion 270 are separated from each other, the electrical insulation reliability of the motor device 60 can be enhanced.

According to the present embodiment, the electric power busbar 261 is provided in one of the stator-side space S1 and the inverter-side space S2 arranged in the axial direction AD, and the neutral point busbar 290 is provided in the other space. Specifically, the electric power busbar 261 is provided in the inverter-side space S2, and the neutral point busbar 290 is provided in the stator-side space S1. Moreover, the stator-side space S1 and the inverter-side space S2 are partitioned by the rear frame 370. In the configuration, the rear frame 370 restricts contact between the neutral point busbar 290 and the electric power busbar 261. In this way, the rear frame 370 can reduce the decrease in the insulation reliability of the electrical insulation state between the neutral point busbar 290 and the electric power busbar 261. Therefore, the electrical insulation reliability of the motor device 60 can be enhanced by the rear frame 370.

According to the present embodiment, the neutral point busbar 290 and the busbar protection portion 270 are provided at positions separated from each other in the axial direction AD. In the configuration, a separation distance between the neutral point busbar 290 and the busbar protection portion 270 can be increased as much as possible. Therefore, the insulation reliability between the neutral point busbar 290 and the electric power busbar 261 is enhanced, and insufficiency in the separation distance between the neutral point busbar 290 and the busbar protection portion 270 can be prevented.

According to the present embodiment, the motor device 60 is a rotary electric machine corresponding to both the axial gap-type and the double rotor-type. That is, the first rotor 300a and the second rotor 300b are arranged along the motor axis Cm with the stator 200 interposed therebetween. In the configuration, the axial gap type allows the motor device 60 to be decreased in size, and the double rotor type allows motor output to be increased. Further, in the configuration, the Halbach array is used for the array of the magnets 310 in each of the first rotor 300a and the second rotor 300b. Therefore, in the motor device 60, a back yoke can be easily omitted. The coil 211 is formed by winding the coil wire 220 having the multiple wires 223. Therefore, copper loss of the coil wire 220 generated in the coil 211 can be reduced.

According to the present embodiment, two coil portions 215 adjacent to each other in the circumferential direction CD are different in the number of turns. In the configuration, in the two coil portions 215, the coil wires 220 can be easily led out in opposite directions in the radial direction RD. Therefore, in the coil 211, it is easy to lead out one of the electric power lead-out wire 212 and the neutral lead-out wire 213 toward the radially outer side and lead out the other toward the radially inner side. Therefore, it is possible to enhance the insulation reliability of the electrical insulation state between the electric power lead-out wire 212 and the neutral lead-out wire 213.

According to the present embodiment, a connection portion between the electric power busbar 261 and the relay terminal 280 is supported by the terminal base 285. In the configuration, even if the electric power busbar 261 vibrates relative to the relay terminal 280, a stress generated due to the vibration is easily reduced by the terminal base 285. Therefore, vibration resistance of the relay terminal 280 and the electric power busbar 261 that form the output line 143 can be enhanced. Therefore, even if the motor device 60 vibrates relative to the inverter device 80, it is possible to reduce the occurrence of an abnormality in the output line 143 formed by the relay terminal 280 and the electric power busbar 261.

For example, in a configuration which is different from that of the present embodiment and in which the electric power busbar 261 is directly connected to the inverter device 80 side with no relay terminal 280 interposed therebetween, the electric power busbar 261 is in a state of spanning the inverter device 80 and the motor device 60. Therefore, when vibration of the motor device 60 relative to the inverter device 80 occurs, there is a concern that the stress concentrates on the electric power busbar 261 and an abnormality occurs in the electric power busbar 261. That is, there is a concern that an abnormality occurs in the output line 143 formed by the electric power busbar 261.

According to the present embodiment, one relay terminal 280 is disposed in each of the multiple divided regions RE. In the configuration, it is possible to secure a sufficiently large separation distance between two relay terminals 280 adjacent to each other in the circumferential direction CD. Therefore, even if heat is generated at the relay terminal 280 due to a current flowing through the relay terminal 280, the heat is easily released from the relay terminal 280. Therefore, occurrence of an abnormality in the motor device 60 due to the heat generated on the relay terminal 280 can be reduced.

According to the present embodiment, the rear frame 370 includes the busbar support portion 371 and the bearing support portion 372. In the configuration, two devices such as the electric power busbar 261 and the first bearing 360 can be supported by one member such as the rear frame 370. Therefore, the number of components constituting the motor device 60 can be reduced.

For example, a configuration different from that of the present embodiment is assumed in which the electric power busbar 261 and the first bearing 360 are respectively supported by independent dedicated members. In the configuration, it is necessary to respectively use the dedicated members for the electric power busbar 261 and the first bearing 360, and it is also necessary to fix the dedicated members on the motor housing 70 or the like. Therefore, in the configuration, there is a concern that the number of components constituting the motor device 60 increases.

According to the present embodiment, the resolver 421 is provided on the side opposite to the neutral point busbar 290 with the rear frame 370 interposed therebetween in the axial direction AD. In the configuration, a separation distance between the resolver 421 and the neutral point busbar 290 can be sufficiently secured. Therefore, even if the electromagnetic wave is generated by the current or the like flowing through the neutral point busbar 290, the resolver 421 is less likely to be influenced by the electromagnetic wave. For example, the noise is less likely to be generated in the detection signal of the resolver 421 as the neutral point busbar 290 is energized.

### <Configuration Group B>

According to the present embodiment, in the rotor 300, the pair of axially inward magnets 312a and 312b adjacent to each other in the circumferential direction CD are oriented to be inclined with respect to the motor axis Cm in a manner of facing the stator 200 in the axial direction AD. The pair of peripheral magnets 311a and 311b adjacent to each other with the pair of axially inward magnets 312a and 312b interposed therebetween in the circumferential direction CD are oriented to face each other in the circumferential direction CD. In the configuration, magnetic flux generated by the pair of peripheral magnets 311a and 311b and the pair of axially inward magnets 312a and 312b is concentrated on the stator 200, and thus a magnetic field on the stator 200 tends to be strengthened. Therefore, the energy efficiency of the motor device 60 can be improved.

According to the present embodiment, the pair of axially inward magnets 312a and 312b are oriented to be inclined with respect to the motor axis Cm in a manner of facing the stator 200 in the axial direction AD and facing each other in the circumferential direction CD. In the configuration, the magnetic flux generated by the pair of peripheral magnets 311a and 311b and the pair of axially inward magnets 312a and 312b is easily concentrated toward the inner boundary BI in the circumferential direction CD. By concentrating the magnetic flux in this way, the magnetic field on the stator 200 side can be strengthened.

According to the present embodiment, in the rotor 300, the pair of axially outward magnets 313a and 313b adjacent to each other in the circumferential direction CD are provided on opposite sides with the first peripheral magnet 311a or the second peripheral magnet 311b interposed therebetween. The pair of axially outward magnets 313a and 313b are oriented to be inclined with respect to the motor axis Cm in a manner of facing the side opposite to the stator 200 in the axial direction AD and facing opposite sides in the circumferential direction CD. In the configuration, the magnetic flux on the side opposite to the stator 200 in the axial direction AD is diffused, and thus the magnetic field on the stator 200 tends to be strengthened. Therefore, the energy efficiency of the motor device 60 can be further improved.

According to the present embodiment, the first rotor 300a and the second rotor 300b are point-symmetrically provided such that the pair of axially inward magnets 312a and 312b provided in one rotor and the pair of axially outward magnets 313a and 313b provided in the other rotor are aligned in the axial direction AD. In the configuration, the magnetic flux passing through the stator 200 in the axial direction AD is likely to concentrate on the inner boundary BI and the outer boundary BO in the circumferential direction CD. Therefore, the magnetic field on the stator 200 side can be strengthened.

According to the present embodiment, the fixing block 330 fixes the magnet 310 to the magnet holder 320 such that the block tapered surface 330a is overlapped with the inner peripheral tapered surface 316d and the magnet 310 is sandwiched between the block tapered surface 330a and the magnet holder 320. In the configuration, the magnet 310 can be firmly fixed to the magnet holder 320 by the fixing block 330 by using the fact that the block tapered surface 330a and the inner peripheral tapered surface 316d are inclined with respect to the motor axis Cm.

According to the present embodiment, the multiple magnet units 316 arranged in the circumferential direction CD in the rotor 300 include the inclined magnet units 317 and the parallel magnet units 318. In the configuration, in the process of manufacturing the rotor 300, the operator can insert, as the last one magnet unit 316 to be arranged in the magnet holder 320, the parallel magnet unit 318 between two inclined magnet units 317 adjacent to each other in the circumferential direction CD. Therefore, all the magnet units 316 can be appropriately fixed to the magnet holder 320.

According to the present embodiment, the pressing force F3 is applied to the rotor 300 on the side opposite to the magnet 310 via the rim tip portion 344a serving as a fulcrum in the radial direction RD such that the bending stress F2 is generated in the rotor 300 against the attraction force F1 on the magnet 310. In the configuration, deformation of the rotor 300 in which the peripheral portion of the magnet 310 approaches the stator 200 and the rotor 300 is warped can be reduced by the holder fixing tool 350. Therefore, a problem such as a decrease in the efficiency of the motor 61 due to deformation of the rotor 300 can be prevented.

According to the present embodiment, the portion of the rotor 300 to which the holder fixing tool 350 is fixed and the portion of the shaft flange 342 to which the holder fixing tool 350 is fixed are separated in the axial direction AD. Therefore, even if the pressing force F3 is insufficient with respect to the attraction force F1, the shortage of the pressing force F3 can be eliminated by increasing the pressing force F3 by the holder fixing tool 350.

According to the present embodiment, the holder fixing hole 325 of the first rotor 300a into which the first holder fixing tool 350a is inserted and the holder fixing hole 325 of the second rotor 300b into which the second holder fixing tool 350b is inserted are located at positions separated from each other in the circumferential direction CD. In the configuration, it is unnecessary to insert both the first holder fixing tool 350a and the second holder fixing tool 350b into one hole of the shaft flange 342 from opposite sides in the axial direction AD. Therefore, it is unnecessary for the shaft flange 342 to be thick enough to allow both the first holder fixing tool 350a and the second holder fixing tool 350b to be inserted into one hole. Therefore, the shaft flange 342 can be made thinner and reduced in weight.

### <Configuration Group C>

According to the present embodiment, in the motor housing 70, the coil protection portion 250 is provided in a state of being overlapped with the inner peripheral surface 70b. In the configuration, the heat of the coil 211 is easily transferred to the motor housing 70 via the coil protection portion 250. Moreover, in the motor housing 70, the motor fins 72 are provided on the outer peripheral surface 70a. Therefore, the heat transferred from the coil protection portion 250 to the motor housing 70 is easily released to the outside by the motor fins 72. Therefore, a heat radiation effect of the motor device 60 can be enhanced.

According to the present embodiment, the coil protection portion 250 is in a state of entering between the multiple stator holding portions 171 from the radially inner side. In the configuration, a contact area between the coil protection portion 250 and the inner peripheral surface 70b can be increased by the stator holding portion 171. Therefore, the heat is easily transferred from the coil protection portion 250 to the stator holding portion 171, and as a result, the heat radiation effect of the motor housing 70 can be enhanced.

According to the present embodiment, the coil portion 215 and the axial holding portion 174 face each other in the radial direction RD. In the configuration, a separation distance between the coil portion 215 and the motor housing 70 in the radial direction RD can be reduced by the axial holding portion 174. That is, it is possible to reduce a thickness dimension of the coil protection portion 250 existing on the axial holding portions 174 in the radial direction RD. Therefore, the heat transferred from the coil portion 215 to the motor housing 70 is less likely to remain in the coil protection portion 250. Therefore, a decrease in the heat radiation effect of the motor housing 70 caused by the coil protection portion 250 can be reduced.

According to the present embodiment, the coil protection portion 250 is at least overlapped with the housing rough surface 177. In the configuration, since the coil protection portion 250 easily comes into close contact with the housing rough surface 177, the heat is easily transferred from the coil protection portion 250 to the motor housing 70. In the configuration, since the contact area between the coil protection portion 250 and the housing rough surface 177 tends to be large, the heat is easily transferred from the coil protection portion 250 to the motor housing 70. Therefore, the heat radiation effect of the motor housing 70 can be enhanced by the housing rough surface 177.

According to the present embodiment, the gap between the electric power lead-out wire 212 and the coil protection portion 250 is filled with the grommet 255 that protects the electric power lead-out wire 212. In the configuration, the deformation of the electric power lead-out wire 212 in which the electric power lead-out wire 212 is folded at the boundary portion between the embedded portion 255a and the exposed portion 255b can be reduced by the grommet 255. When the coil protection portion 250 is resin molded at the time of manufacturing the motor device 60, leakage of the molten resin from a periphery of the electric power lead-out wire 212 can be reduced by the grommet 255.

According to the present embodiment, since the bobbin 240 has the electrical insulation property, the electrical insulation state of the coil 211 can be optimized by the bobbin 240. Therefore, occurrence of partial discharge in the coil 211 can be reduced. Further, since the heat of the core 231 is released to the coil protection portion 250 via the bobbin 240, a heat radiation effect of the core unit 230 can be enhanced.

According to the present embodiment, the coil protection portion 250 is at least overlapped with the bobbin rough surface 247. In the configuration, since the coil protection portion 250 easily comes into close contact with the bobbin rough surface 247, the heat is easily transferred from the bobbin 240 to the coil protection portion 250. In the configuration, since the contact area between the coil protection portion 250 and the bobbin rough surface 247 tends to be large, the heat is easily transferred from the bobbin 240 to the coil protection portion 250. Therefore, the heat radiation effect of the motor device 60 can be enhanced by the bobbin rough surface 247.

According to the present embodiment, in the core 231, the core width gradually decreases toward the radially inner side. In the configuration, for example, as compared with the configuration in which the core width continuously decreases, a surface area of the core 231 is likely to increase, and the core 231 is likely to be in close contact with the bobbin 240. Therefore, the heat of the core 231 is easily transferred to the bobbin 240. Moreover, when the multiple core forming plate members 236 are stacked to manufacture the core 231, the types of the core forming plate members 236 can be reduced according to the number of stages in which the core width reduces. Therefore, an increase in cost for manufacturing the core forming plate members 236 can be reduced.

According to the present embodiment, the flange inner plate surface 243 of the bobbin 240 is provided with the flange recess portion 243a which is recessed for lead-out of the electric power lead-out wire 212 from the coil 211. In the configuration, a dead space is less likely to be generated between the flange inner plate surface 243 and the coil 211 on the side opposite to the flange recess portion 243a with the bobbin trunk portion 241 interposed therebetween in the circumferential direction CD. Therefore, the space factor of the coil 211 can be increased in the bobbin 240.

### <Configuration Group D>

According to the present embodiment, the inverter 81, and the rotor 300 and stator 200 which are aligned in the axial direction AD are accommodated in the unit housing 51. In the configuration, the motor device 60 is made thinner, and a size of the motor device unit 50 can be decreased. Moreover, the motor fins 72 and the inverter fins 92 are provided on the outer peripheral surface of the unit housing 51. Therefore, a heat radiation effect of the motor device unit 50 can be enhanced by the motor fins 72 and the inverter fins 92. Therefore, both the decrease in the size and the enhancement in the heat radiation effect of the motor device unit 50 can be achieved.

According to the present embodiment, the coil protection portion 250 is overlapped with the inner peripheral surface of the unit housing 51. In the configuration, the heat of the coil 211 is easily transferred to the unit housing 51 via the coil protection portion 250. Moreover, the motor fins 72 and the inverter fins 92 are provided on the outer peripheral surface of the unit housing 51. Therefore, the heat transferred from the coil protection portion 250 to the unit housing 51 is easily released to the outside by the motor fins 72 and the inverter fins 92. Therefore, the heat radiation effect of the motor device unit 50 can be enhanced.

According to the present embodiment, the motor housing 70 is made thinner by aligning the stator 200 and the rotor 300 in the axial direction AD, and in the unit housing 51, the motor housing 70 and the inverter housing 90 are aligned in the axial direction AD. Therefore, an increase in the size of the motor device unit 50 in the axial direction AD can be reduced by making the motor housing 70 thinner.

According to the present embodiment, the flange vent hole 346 provided in the shaft flange 342 penetrates the rim 344 in the radial direction RD and enables ventilation in the radial direction RD. In the configuration, the heat of the stator 200 is easily released through the flange vent holes 346 in the radial direction RD. Therefore, the heat radiation effect of the motor device 60 can be enhanced by the flange vent hole 346.

According to the present embodiment, the holder adjustment hole 326 for adjusting the balance of the rotor 300 penetrates the rotor 300 in the axial direction AD and enables ventilation in the axial direction AD. In the configuration, the heat of the stator 200 is easily released through the holder adjustment hole 326 in the axial direction AD. Therefore, the heat radiation effect of the motor device 60 can be enhanced by using the holder adjustment hole 326 for adjusting the balance of the rotor 300.

According to the present embodiment, the signal wiring 426 extending from the resolver 421 and the signal wiring 436 extending from the temperature sensor 431 are collected in the signal terminal block 440. In the configuration, the inverter wiring of the inverter device 80 is drawn into the signal terminal block 440, and thereby the inverter wiring can be electrically connected to both the resolver 421 and the temperature sensor 431. Therefore, when the operator connects the signal wiring of the motor device 60 and the signal wiring of the inverter device 80 at the time of manufacturing the motor device 60, a workload can be reduced.

According to the present embodiment, the dustproof cover 380 covers the frame opening portion 373. Therefore, the configuration in which the electric power lead-out wire 212 is led out from the frame opening portion 373 is implemented, and the dustproof cover 380 can prevent the foreign matter passing through the frame opening portion 373.

According to the present embodiment, in the motor housing 70, the flange hole 74a is formed in the connection flange 74 protruding from the housing main body 71. Therefore, a decrease in the rigidity of the housing main body 71 due to the flange hole 74a can be reduced. The flange hole 178a is formed in the fixing flange 178 protruding from the housing main body 71. Therefore, a decrease in the rigidity of the housing main body 71 due to the flange hole 178a can be reduced.

According to the present embodiment, in the drive frame 390, the first fixing hole 392a and the second fixing hole 392b are aligned in the radial direction RD. In the configuration, a stress applied from the motor housing 70 to the first fixing hole 392a and a stress applied from the speed reducer 53 to the second fixing hole 392b tend to cancel each other. Therefore, occurrence of an abnormality such as deformation on the drive frame 390 due to the stress from the motor housing 70 and the stress from the speed reducer 53 can be reduced.

### <Configuration Group E>

According to the present embodiment, the outer grommet portion 258 extends further toward the electric power busbar 261 than the outer peripheral lead-out portion 212a extends in the axial direction AD. In the configuration, regardless of a positional relationship between the outer peripheral lead-out portion 212a and the motor inner peripheral surface 70b, the electrical insulation property between the outer peripheral lead-out portion 212a and the motor housing 70 can be maintained by the outer grommet portion 258. For example, even if the position of the outer peripheral lead-out portion 212a is unintentionally deviated toward the electric power busbar 261 in the axial direction AD, the outer grommet portion 258 can reduce a decrease in the electrical insulation property between the outer peripheral lead-out portion 212a and the motor housing 70. Therefore, the electrical insulation reliability of the motor device 60 can be enhanced by the outer grommet portion 258.

Since the electrical insulation property between the outer peripheral lead-out portion 212a and the motor housing 70 is maintained by the outer grommet portion 258, the outer peripheral lead-out portion 212a and the motor inner peripheral surface 70b can be disposed at positions close to each other in the radial direction RD. Therefore, the motor housing 70 can be decreased in the size in the radial direction RD.

According to the present embodiment, the outer grommet portion 258 extends further toward the electric power busbar 261 than the outer peripheral bent portion 212d extends in the axial direction AD. In the configuration, an electrical insulation property between the outer peripheral bent portion 212d and the motor housing 70 can be maintained by the outer grommet portion 258 regardless of a bending degree and a position of the outer peripheral bent portion 212d.

According to the present embodiment, the outer grommet portion 258 is located at a position separated from the inner peripheral lead-out portion 212b toward the side opposite to the electric power busbar 261 in the axial direction AD. In the configuration, it is possible to prevent excessive lengthening of the outer grommet portion 258 toward the electric power busbar 261 in the axial direction AD. Moreover, since the inner peripheral lead-out portion 212b is provided on the inner side of the inner peripheral lead-out portion 212b in the radial direction RD, the electrical insulation property between the inner peripheral lead-out portion 212b and the motor inner peripheral surface 70b is less likely to decrease. Therefore, even if the outer grommet portion 258 does not enter between the inner peripheral lead-out portion 212b and the motor inner peripheral surface 70b, the electrical insulation property between the inner peripheral lead-out portion 212b and the motor housing 70 can be maintained.

According to the present embodiment, the outer peripheral lead-out portion 212a extends further toward the side opposite to the electric power busbar 261 than the outer grommet portion 258 extends in the axial direction AD. In the configuration, it is possible to prevent the excessive lengthening of the outer grommet portion 258 toward the side opposite to the electric power busbar 261 in the axial direction AD. Moreover, in a region on the side opposite to the electric power busbar 261 with the outer grommet portion 258 interposed therebetween in the axial direction AD, the electrical insulation property between the outer peripheral lead-out portion 212a and the motor housing 70 can be maintained by the coil protection portion 250 or the like different from the outer grommet portion 258.

According to the present embodiment, the outer grommet portion 258 extends further toward both sides in the circumferential direction CD than the outer peripheral lead-out portion 212a extends. Therefore, for example, even if the position of the outer peripheral lead-out portion 212a is unintentionally deviated in the circumferential direction CD, the outer grommet portion 258 can reduce the decrease in the electrical insulation property between the outer peripheral lead-out portion 212a and the motor housing 70.

According to the present embodiment, in the circumferential direction CD, the width dimension Wa1 of the outer grommet portion 258 is larger than the width dimension Wa3 of the outer peripheral lead-out portion 212a. Therefore, it is possible to implement a configuration in which the outer grommet portion 258 extends further toward both sides in the circumferential direction CD than the outer peripheral lead-out portion 212a extends.

According to the present embodiment, the grommet 255 including the outer grommet portion 258 is a member for maintaining a state in which the molten resin seals the coil 211. In the configuration, the grommet 255 has two functions, that is, a function of assisting the coil protection portion 250 to seal the coil 211 and a function of maintaining the electrical insulation property between the outer peripheral lead-out portion 212a and the motor housing 70. Therefore, for example, it is possible to reduce the number of components of the motor device 60 as compared with a configuration in which a dedicated component for maintaining the electrical insulation property between the outer peripheral lead-out portion 212a and the motor housing 70 is provided.

According to the present embodiment, since the first rotor 300a and the second rotor 300b are arranged with the stator 200 interposed therebetween in the axial direction AD, the motor device 60 can be decreased in the size in the axial direction AD. Moreover, since the electrical insulation property between the outer peripheral lead-out portion 212a and the motor housing 70 is maintained by the outer grommet portion 258, the motor device 60 can be decreased in the size in the radial direction RD. Therefore, the motor device 60 can be decreased in the size in both the axial direction AD and the radial direction RD.

According to the present embodiment, the outer grommet portion 258 extends further toward the electric power busbar 261 than the inner grommet portion 257 extends in the axial direction AD. In the configuration, the inner grommet portion 257 is located at a position farther from the electric power busbar 261 than is the outer grommet portion 258 in the axial direction AD. Therefore, a decrease in a degree of freedom related to the disposition of the electric power lead-out wire 212 such as the position of the intersection lead-out portion 212c due to the presence of the inner grommet portion 257 can be reduced. Therefore, the electrical insulation property of the motor device 60 can be further enhanced by the outer grommet portion 258 while increasing the degree of freedom in disposing the electric power lead-out wire 212.

For example, a configuration different from that of the present embodiment is assumed in which the inner grommet portion 257 extends toward the electric power busbar 261 to the same position as the outer grommet portion 258 in the axial direction AD. In the configuration, the inner grommet portion 257 restricts the disposition of the outer peripheral bent portion 212d at a position aligned with the outer grommet portion 258 in the radial direction RD.

### <Configuration Group F>

According to the present embodiment, the holder rib 323 of the first rotor 300a rotates together with the holder main body 321 to blow air toward the electric power lead-out wire 212. In the configuration, the air sent from the holder rib 323 can be applied as cooling air to the electric power lead-out wire 212 that generates heat when the electric power lead-out wire 212 is energized. That is, air flow generated by the holder rib 323 can be applied to the electric power lead-out wire 212. Therefore, since the cooling air is generated by the holder rib 323 by utilizing the rotation of the first rotor 300a, the electric power lead-out wire 212 can be positively cooled by the cooling air. Therefore, an effect of cooling the motor device 60 can be enhanced by the first rotor 300a.

Further, since the electric power lead-out wire 212 is cooled by the cooling air generated by the holder rib 323, it is possible to reduce a temperature rise of the busbar unit 260 connected to the electric power lead-out wire 212. For example, temperature rises of the lead-out connection portion 266, the busbar lead-out wire 265, and the electric power busbar 261 can be reduced. Therefore, occurrence of an abnormality in the busbar protection portion 270, the lead-out connection portion 266, and the like due to an excessive increase in temperatures of the busbar protection portion 270, the lead-out connection portion 266, and the like can be reduced.

Further, since the cooling air can be generated by the holder rib 323 of the first rotor 300a, it is unnecessary to provide a dedicated cooling fan for generating the cooling air. Therefore, since there is no dedicated cooling fan, the motor device 60 can be decreased in size and weight. Since there is no dedicated cooling fan, the number of components constituting the motor device 60 can be reduced.

According to the present embodiment, the holder rib 323 is provided on the holder main body 321 such that air is sent toward the radially outer side. In the configuration, the air flow generated by the holder rib 323 tends to hit the electric power lead-out wire 212 passing through the radially outer side of the first rotor 300a. Therefore, it is possible to implement a configuration in which the electric power lead-out wire 212 is easily cooled by the cooling air generated by the holder rib 323.

According to the present embodiment, the multiple holder ribs 323 are arranged in the circumferential direction CD. In the configuration, since the multiple holder ribs 323 rotate as the first rotor 300a rotates, an amount of the cooling air hitting the electric power lead-out wire 212 tends to be large. Therefore, an effect of cooling the electric power lead-out wire 212 based on the holder ribs 323 can be enhanced.

According to the present embodiment, the tip portion of the holder rib 323 includes the rib tapered portion 323d that is inclined with respect to the holder main body 321 to face the radially outer side. For example, the rib tapered portion 323d is inclined with respect to the main body outer plate surface 321a. In the configuration, the cooling air generated by the rib tapered portion 323d tends to be larger toward the radially inner side. Therefore, the rib tapered portion 323d allows the cooling air to flow toward the radially outer side as a whole, thus easily hitting the electric power lead-out wire 212. Therefore, the effect of cooling the electric power lead-out wire 212 based on the holder rib 323 can be enhanced by the rib tapered portion 323d.

According to the present embodiment, the tip portion of the holder rib 323 includes the rib parallel portion 323c extending parallel to the holder main body 321. For example, the rib parallel portion 323c extends parallel to the main body outer plate surface 321a. In the configuration, a protrusion dimension of the holder rib 323 from the holder main body 321 is made uniform by the rib parallel portion 323c. Therefore, the cooling air generated by the holder rib 323 can be increased as much as possible. Therefore, the effect of cooling the electric power lead-out wire 212 based on the holder rib 323 can be enhanced by the rib parallel portion 323c.

According to the present embodiment, at least a part of the holder rib 323 is provided at a position of the first rotor 300a aligned with the magnet 310 in the axial direction AD. In the configuration, the cooling air generated by the holder rib 323 easily flows along the holder rib 323. The cooling air easily cools the magnet 310 by flowing along the magnet 310 with the holder main body 321 interposed therebetween. Therefore, the cooling effect based on the holder rib 323 can be imparted to the magnet 310.

According to the present embodiment, the holder rib 323 extends from the holder outer peripheral end 320b toward the radially inner side along the holder main body 321. In the configuration, the cooling air can be generated by the holder rib 323 at a position as close as possible to the electric power lead-out wire 212 in the radial direction RD. Therefore, the effect of cooling the electric power lead-out wire 212 based on the holder rib 323 can be enhanced by a positional relationship between the holder main body 321 and the holder rib 323.

According to the present embodiment, in the electric power lead-out wire 212, the aligned lead-out portion such as the inner peripheral lead-out portion 212b, the intersection lead-out portion 212c, the inner peripheral bent portion 212e, and the like is located at a position aligned with the holder rib 323 in the axial direction AD. In the configuration, since the cooling air generated by the holder rib 323 and flowing in the axial direction AD easily hits the aligned lead-out portion, the effect of cooling the aligned lead-out portion by the cooling air can be enhanced.

According to the present embodiment, the frame opening portion 373 through which the electric power lead-out wire 212 is inserted is provided at a position aligned with the holder rib 323 in the axial direction AD. In the configuration, the cooling air generated by the holder rib 323 flows out from the frame opening portion 373, thus hitting the electric power lead-out wire 212. Therefore, the effect of cooling the electric power lead-out wire 212 based on the holder rib 323 can be enhanced by the frame opening portion 373.

According to the present embodiment, the lead-out connection portion 266 to which the electric power lead-out wire 212 and the busbar lead-out wire 265 are connected is provided at a position aligned with the frame opening portion 373 in the axial direction AD. In the configuration, the cooling air generated by the holder rib 323 and flowing out from the frame opening portion 373 hits the lead-out connection portion 266. Therefore, the effect of cooling the lead-out connection portion 266 based on the holder rib 323 can be enhanced.

According to the present embodiment, the electric power busbar 261 is fixed to the rear frame 370. In the configuration, the cooling air generated by the holder rib 323 and flowing along the rear frame 370 cools the electric power busbar 261 via the rear frame 370. Therefore, the cooling effect based on the holder rib 323 can be indirectly imparted to the electric power busbar 261.

### <Configuration Group G>

According to the present embodiment, the fixing block 330 is fixed to the magnet holder 320 in a state of being caught by the inner peripheral tapered surface 316d from the axial gap 475 side. In the configuration, by using the inner peripheral tapered surface 316d, the magnet unit 316 can be fixed to the magnet holder 320 by the fixing block 330 without causing the fixing block 330 to protrude from the first unit surface 316g toward the axial gap 475. By preventing the fixing block 330 from protruding toward the axial gap 475 in this way, the axial gap 475 can be made as small as possible. As a result, by reducing leakage magnetic flux from the axial gap 475, a magnetic field generated in the axial gap 475 can be strengthened.

Moreover, the inner peripheral tapered surface 316d extends along an outer peripheral end of the first unit surface 316g in the magnet unit 316. In the configuration, by simply aligning the fixing block 330 with the magnet unit 316 in the direction orthogonal to the axial direction AD, it is possible to implement a configuration in which the fixing block 330 is caught by the inner peripheral tapered surface 316d. Therefore, there is no need for the fixing block 330 to cover the first unit surface 316g from the axial gap 475 side. Therefore, blocking of the magnetic flux by the fixing block 330 in the axial gap 475 and weakening of the magnetic field generated in the axial gap 475 can be reduced.

As described above, since the magnetic field generated in the axial gap 475 is strengthened, the energy efficiency of the motor device 60 can be improved.

Since the magnet unit 316 is fixed to the magnet holder 320 by utilizing the inclination of the inner peripheral tapered surface 316d, for example, it is unnecessary to form a recess portion such as a groove in the peripheral edge surface of the magnet unit 316. Therefore, complication of a shape of the magnet unit 316 can be avoided. By simplifying the shape of the magnet unit 316 in this way, the number of man-hours required to process the magnet unit 316 can be reduced. Therefore, a cost required for manufacturing the magnet unit 316 can be reduced.

Further, since the fixing block 330 is fixed to the magnet holder 320 in the state of being caught by the inner peripheral tapered surface 316d, it is unnecessary to use a dedicated member different from the fixing block 330 to fix the magnet unit 316. Therefore, the number of components used for fixing the magnet unit 316 to the magnet holder 320 can be reduced. Therefore, it is possible to reduce a cost required for manufacturing the rotor 300 and to reduce a weight of the rotor 300.

According to the present embodiment, the block tapered surface 330a is caught to overlap with the inner peripheral tapered surface 316d. In the configuration, the block tapered surface 330a and the inner peripheral tapered surface 316d can be in surface contact with each other. Therefore, it is possible to implement a configuration in which the positional deviation of the magnet unit 316 with respect to the fixing block 330 is less likely to occur.

According to the present embodiment, the fixing block 330 is provided only on the radially inner side of the radially outer side and the radially inner side of the magnet unit 316. In the configuration, since the fixing block 330 is not provided on the radially outer side of the magnet unit 316, a portion of the rotor 300 on the radially outer side of the magnet unit 316 can be shortened in the radial direction RD. Therefore, it is possible to reduce an increase in a size of the rotor 300 in the radial direction RD.

For example, a configuration different from that of the present embodiment is assumed in which the fixing block 330 is provided on the radially outer side of the magnet unit 316. In the configuration, it is necessary to dispose the axial gap 475 on the radially inner side by an amount corresponding to the fixing block 330. In this case, there is a concern that the gap area decreases, the magnetic field is weakened, and output of the motor device 60 decreases. Meanwhile, according to the present embodiment, since the fixing block 330 is not provided on the radially outer side of the magnet unit 316, the gap area can be made as large as possible. Therefore, the magnetic field in the axial gap 475 can be made as strong as possible, and as a result, the output of the motor device 60 can be increased.

Since the fixing block 330 is provided on the radially inner side of the magnet unit 316, application of a load, which is generated due to the inertia of the rotor 300, from the magnet unit 316 to the fixing block 330 toward the radially outer side can be avoided. Since the fixing block 330 is provided on the radially inner side of the magnet unit 316, it is possible to reduce a size and a weight of a portion of the magnet holder 320 on the radially outer side of the magnet unit 316. Therefore, it is possible to reduce an increase in inertia as the rotor 300 rotates.

According to the present embodiment, in the magnet unit 316, the unit outer peripheral end 316b is caught by the outer peripheral engagement portion 322. The multiple magnet units 316 include the inclined magnet units 317 and the parallel magnet units 318. In the configuration, in the process of manufacturing the rotor 300, it is possible to avoid that the last one magnet unit 316 cannot be caught by the outer peripheral engagement portion 322 when the operator arranges the multiple magnet units 316 in the circumferential direction CD. Specifically, by setting the last one to be the parallel magnet unit 318, the parallel magnet unit 318 can be caught by the outer peripheral engagement portion 322 while being inserted between two magnet units 316 adjacent to each other in the circumferential direction CD.

For example, when the operator sets the last one of the magnet units 316 to be the inclined magnet unit 317, the inclined magnet unit 317 cannot be caught by the outer peripheral engagement portion 322 while being inserted between two magnet units 316 adjacent to each other in the circumferential direction CD. This is because the width dimension of the unit outer peripheral end 316b to which the inclined magnet unit 317 is included is larger than a separation distance between the two magnet units 316 radially inward with respect to the outer peripheral engagement portion 322.

According to the present embodiment, the outer peripheral engagement portion 322 is in a state of being caught by the outer peripheral tapered surface 316e from the axial gap 475 side. In the configuration, by using the outer peripheral tapered surface 316e, the magnet unit 316 can be caught by the outer peripheral engagement portion 322 without causing the outer peripheral engagement portion 322 to protrude from the first unit surface 316g toward the axial gap 475. By preventing the outer peripheral engagement portion 322 from protruding toward the axial gap 475, the axial gap 475 can be made as small as possible.

According to the present embodiment, the multiple fixing blocks 330 are arranged in the circumferential direction CD. In the configuration, the weight of the rotor 300 can be reduced by reducing the size of the fixing block 330 such that a gap is formed between two fixing blocks 330 adjacent to each other in the circumferential direction CD.

According to the present embodiment, in the magnet fixing tool 335, the fixing head portion 337 is caught by the magnet holder 320 from the side opposite to the axial gap 475. In the configuration, it is possible to implement a configuration in which the fixing head portion 337 does not protrude from the fixing block 330 toward the axial gap 475. In the configuration, by simply adjusting a length of the fixing shaft portion 336, it is possible to implement a configuration in which the fixing shaft portion 336 does not protrude from the fixing block 330 toward the axial gap 475. Therefore, by preventing the magnet fixing tool 335 from protruding toward the axial gap 475, the axial gap 475 can be made as small as possible. In other words, by implementing a configuration in which the magnet fixing tool 335 does not interfere with the stator 200, the axial gap 475 can be reliably secured.

Further, by adjusting the screwing amount of the fixing shaft portion 336 into the block hole 333, strength of pressing the fixing block 330 against the magnet unit 316 can be adjusted. By pressing the fixing block 330 against the magnet unit 316 by an axial force of the magnet fixing tool 335 in this way, it is possible to accurately determine a position of the magnet unit 316 and firmly fix the magnet unit 316 to the magnet holder 320.

According to the present embodiment, the holder receiving surface 328a and the block receiving surface 330b are inclined with respect to the motor axis Cm, and thus serve as adjustment surfaces capable of adjusting the position of the fixing block 330 in the radial direction RD. In the configuration, for example, when the position of the fixing block 330 is adjusted in the radial direction RD according to the size and shape of the magnet unit 316, the holder receiving surface 328a and the block receiving surface 330b can be brought into contact with each other by shifting the fixing block 330 in the axial direction AD. That is, between the magnet unit 316 and the holder receiving portion 328, the fixing block 330 is well fitted with respect to the magnet unit 316 and the holder receiving portion 328. Therefore, even if the size, shape, and the like of the multiple magnet units 316 vary to some extent due to manufacturing errors or the like, these magnet units 316 can be fixed by the fixing blocks 330.

According to the present embodiment, the holder receiving surface 328a and the block receiving surface 330b are overlapped with each other. In the configuration, the holder receiving surface 328a and the block receiving surface 330b can be brought into surface contact with each other. Therefore, it is possible to implement a configuration in which positional deviation of the fixing block 330 with respect to the holder receiving portion 328 is less likely to occur.

According to the present embodiment, the position of the magnet unit 316 in the circumferential direction CD is determined by the magnet protrusion 483. In the configuration, it is unnecessary to determine the position of the magnet unit 316 in the circumferential direction CD by the fixing block 330. That is, it is unnecessary to provide, on the fixing block 330, a portion for determining the position of the magnet unit 316 in the circumferential direction CD. Therefore, complication of a shape of the fixing block 330 is prevented.

According to the present embodiment, the Halbach array is used for the array of the magnets 310. In the configuration, it is unnecessary to provide the back yoke on the side opposite to the axial gap 475 with the magnets 310 interposed therebetween. Therefore, complication of the shape of the magnet holder 320 and increase in the weight of the rotor 300 can be prevented.

### <Configuration Group H>

According to the present embodiment, the connection bent portion 212f is provided at a position away from the first coil end portion 211a on the first rotor 300a side toward the second coil end portion 211b in the axial direction AD. In the configuration, even if the embedded portion 255a does not cover the connection bent portion 212f, the embedded portion 255a can be disposed at a position as far as possible from the first rotor 300a in the axial direction AD. Therefore, it is possible to prevent that the embedded portion 255a extends to protrude toward the first rotor 300a relative to the coil 211 in the axial direction AD. It is possible to prevent that the coil protection portion 250 extends toward the first rotor 300a in order to embed the embedded portion 255a in the coil protection portion 250. Therefore, it is possible to reduce an increase in a size of the coil protection portion 250 in the axial direction AD. That is, the size of the coil protection portion 250 can be decreased in the axial direction AD. Accordingly, it is possible to reduce an increase in the size of the motor device 60 in the axial direction AD, and as a result, the decrease the size of the motor device 60 can be achieved.

In the present embodiment, since the coil protection portion 250 is molded, there is a concern that the electric power lead-out wire 212 may be unintentionally deformed by the injection pressure of the molten resin. Meanwhile, according to the present embodiment, the portion of the electric power lead-out wire 212 embedded in the coil protection portion 250 is covered by the embedded portion 255a. In the configuration, since the injection pressure of the molten resin is applied to the embedded portion 255a, deformation of the electric power lead-out wire 212 caused by the injection pressure of the molten resin can be prevented by the embedded portion 255a.

According to the present embodiment, the connection bent portion 212f is provided at a position closer to the second coil end portion 211b than to the first coil end portion 211a on the first rotor 300a in the axial direction AD. In the configuration, a separation distance between the first coil end portion 211a and the connection bent portion 212f in the axial direction AD is larger than 1/2 of a length dimension of the coil 211. Therefore, in the embedded portion 255a, a portion covering the electric power lead-out wire 212 between the first coil end portion 211a and the connection bent portion 212f can be made sufficiently long in the axial direction AD. Therefore, coming out of the embedded portion 255a from the coil protection portion 250 due to shortness of the embedded portion 255a can be reliably prevented. In this way, the increase in the size of the coil protection portion 250 in the axial direction AD can be reduced while preventing unintentionally coming out of the grommet 255 from the coil protection portion 250.

According to the present embodiment, the connection bent portion 212f is provided on the second coil end portion 211b. In the configuration, the separation distance between the first coil end portion 211a and the connection bent portion 212f in the axial direction AD can be maximized. Therefore, the embedded portion 255a can be reliably prevented from coming out from the coil protection portion 250.

According to the present embodiment, the embedded portion 255a extends toward the second coil end portion 211b beyond the first coil end portion 211a in the axial direction AD. Therefore, the embedded portion 255a can be embedded to a position as deep as possible in the coil protection portion 250. Since the embedded portion 255a is deeply embedded in the coil protection portion 250 in this way, the embedded portion 255a can be reliably prevented from coming out from the coil protection portion 250.

Moreover, the connection bent portion 212f is provided at a position away from the embedded portion 255a toward the second coil end portion 211b in the axial direction AD. In the configuration, it is unnecessary to cover a crooked portion of the electric power lead-out wire 212, that is, the connection bent portion 212f, by the embedded portion 255a. Therefore, it is possible to reduce difficulty of work of attaching the grommet 255 to the electric power lead-out wire 212. In addition, by attaching the embedded portion 255a to the crooked portion of the electric power lead-out wire 212, it is possible to prevent the grommet 255 from deforming into an unintended shape. For example, it is possible to prevent that the cylinder portion 461 deforms in an unintended shape, and that the adhesion of the fastening cylinder portion 461 to the electric power lead-out wire 212 decreases unintentionally.

According to the present embodiment, the embedded portion 255a extends toward the second coil end portion 211b beyond the protection axis Cp in the axial direction AD. In the configuration, the embedded portion 255a is embedded to a sufficiently deep position in the coil protection portion 250. Therefore, the embedded portion 255a can be reliably prevented from unintentionally coming out from the coil protection portion 250.

According to the present embodiment, in the grommet 255, the fastening cylinder portion 461 covers the electric power lead-out wire 212 in a state of being in close contact with the electric power lead-out wire 212. In the configuration, unintentional positional deviation of the grommet 255 with respect to the electric power lead-out wire 212 can be reduced by the fastening cylinder portion 461. When the coil protection portion 250 is molded, the fastening cylinder portion 461 can restrict leaking of the molten resin from the inside of the grommet 255.

Moreover, in the grommet 255, the expanded cylinder portion 462 covers the electric power lead-out wire 212 in a state of being separated from the electric power lead-out wire 212. In the configuration, in the fastening cylinder portion 461 and the expanded cylinder portion 462, only the fastening cylinder portion 461 is in close contact with the electric power lead-out wire 212. Therefore, for example, as compared to a configuration which is different from that of the present embodiment and in which the entire grommet 255 is in close contact with the electric power lead-out wire 212, it is possible to reduce a workload when attaching the grommet 255 to the electric power lead-out wire 212. For example, it is possible to reduce difficulty of work of inserting the electric power lead-out wire 212 through the grommet hole 450.

Further, in the grommet 255, at least a part of the expanded cylinder portion 462 is embedded in the coil protection portion 250. In the configuration, when the coil protection portion 250 is molded, the molten resin easily enters the inside of the expanded cylinder portion 462. Therefore, since the molten resin is present both inside and outside the expanded cylinder portion 462, the expanded cylinder portion 462 can be prevented from being excessively deformed by the injection pressure of the molten resin.

According to the present embodiment, in the coil protection portion 250, the protection entry portion 252 is in a state of entering between the expanded cylinder portion 462 and the electric power lead-out wire 212. In the configuration, in the coil protection portion 250, the protection entry portion 252 tends be in close contact with the inner peripheral surface of the expanded cylinder portion 462, and the protection main body 251 tends to be in close contact with the outer peripheral surface of the expanded cylinder portion 462. Therefore, the expanded cylinder portion 462 can be prevented from unintentionally coming out from the coil protection portion 250.

According to the present embodiment, the length dimension Lb1 of the fastening cylinder portion 461 is smaller than the length dimension Lb2 of the expanded cylinder portion 462 in the axial direction AD. In the configuration, the length of the fastening cylinder portion 461, which is a portion of the grommet 255 in close contact with the electric power lead-out wire 212, can be prevented from being excessively long. Therefore, an increase in difficulty of work of attaching the grommet 255 to the electric power lead-out wire 212 by the operator caused by a large contact area at which the fastening cylinder portion 461 is in close contact with the electric power lead-out wire 212 can be avoided.

According to the present embodiment, in the embedded portion 255a, the grommet groove 466 is engaged with the coil protection portion 250. Therefore, the embedded portion 255a can be prevented from coming out from the coil protection portion 250 by engagement between the grommet groove 466 and the coil protection portion 250.

According to the present embodiment, the protection engagement portion 253 in the coil protection portion 250 is engaged with the grommet groove 466 by entering the inside of the grommet groove 466. Therefore, it is possible to implement a configuration in which the grommet groove 466 and the protection engagement portion 253 are engaged with each other. In the grommet 255, since an engagement portion engaged with the protection engagement portion 253 is the grommet groove 466, the engagement portion does not need to protrude outward from the grommet 255. Therefore, unintended deformation, breakage, and the like in the engagement portion of the grommet 255 during manufacturing the motor device 60 can be reduced. In this way, by engaging the protection engagement portion 253 with the grommet groove 466 in which unintended deformation, breakage, and the like is less likely to occur, the grommet 255 can be reliably prevented from coming out from the coil protection portion 250.

### <Configuration Group I>

According to the present embodiment, the rim 344 that supports the rotor 300 against the attraction force F1 between the coil 211 and the magnet 310 is located at a position away from the shaft main body 341 toward the radially outer side. In the configuration, the rim 344 can be disposed at a position as close as possible to the magnet 310. Therefore, the rim 344 can reduce deformation of the rotor 300 in the axial direction AD in a direction in which the magnet 310 is attracted to the coil 211. That is, warpage of the magnet holder 320 can be reduced by the rim 344. Therefore, in the motor device 60, an abnormality due to the deformation of the rotor 300 can be prevented from occurring.

Examples of the abnormality caused by the deformation of the rotor 300 include contact of the rotor 300 with the stator 200 and excessive deformation of the rotor 300. Therefore, according to the present embodiment, the rim 344 can reduce the contact of the rotor 300 with the stator 200, the excessive deformation of the rotor 300, and the like.

According to the present embodiment, the rim 344 is provided at a position in which the distance LI5 to the magnet 310 is smaller than the distance LI6 to the shaft main body 341. In the configuration, the smaller the distance LI5 is than the distance LI6, the closer the rim 344 is provided to the magnet 310. In this way, since a portion of the rotor 300 between the rim 344 and the magnet 310 is shortened in the radial direction, deformation of the portion is less likely to occur.

According to the present embodiment, the rim 344 is provided at a position in which the distance LI1 to the holder outer peripheral end 320b is smaller than the distance LI2 to the motor axis Cm. In the configuration, the smaller the distance LI1 is than the distance LI2, the closer the rim 344 is provided to the holder outer peripheral end 320b. In the rotor 300, the magnet 310 is provided between the rim 344 and the holder outer peripheral end 320b. Therefore, in the rotor 300, the portion between the rim 344 and the magnet 310 is shortened by shortening a portion between the rim 344 and the holder outer peripheral end 320b. Therefore, deformation of the portion of the rotor 300 between the rim 344 and the magnet 310 is less likely to occur.

According to the present embodiment, the rotor 300 formed in the annular shape is provided at a position away from the shaft main body 341 toward the radially outer side. In the configuration, a width dimension of the rotor 300 in the radial direction RD can be set as small as possible. Moreover, the rim 344 is provided between the holder inner peripheral end 320a and the magnet 310 with respect to the rotor 300. In the configuration, in the rotor 300 in which the width dimension in the radial direction RD is set as small as possible, the portion between the rim 344 and the magnet 310 can be further shortened in the radial direction RD. Therefore, the portion of the rotor 300 between the rim 344 and the magnet 310 can be reliably prevented from being deformed.

According to the present embodiment, the rim 344 extends in the axial direction AD to span the first rotor 300a and the second rotor 300b, and supports the rotors 300a and 300b against the attraction force F1 applied to each of the rotors 300a and 300b. In the configuration, a stress applied to the rim 344 by the attraction force F1 to the first rotor 300a is generated in a direction in which the rim 344 approaches the second rotor 300b. On the other hand, a stress applied to the rim 344 by the attraction force F1 to the second rotor 300b is generated in a direction in which the rim 344 approaches the first rotor 300a. As described above, the stress applied to the rim 344 by the attraction force F1 to the first rotor 300a and the stress applied to the rim 344 by the attraction force F1 to the second rotor 300b are likely to be canceled at the rim 344. Therefore, the shaft flange 342 can be prevented from being deformed in a direction in which the rim 344 moves in the axial direction AD by the attraction force F1 between the rotors 300a and 300b and the stator 200.

For example, a configuration different from that of the present embodiment is assumed in which the motor device 60 does not include the second rotor 300b. In the configuration, when the attraction force F1 is generated between the first rotor 300a and the stator 200, the attraction force F1 causes the rim 344, in addition to the first rotor 300a, to approach to the stator 200. Therefore, even if the deformation of the first rotor 300a is restricted by the rim 344, there is a concern that the shaft flange 342 is deformed such that the rim 344 approaches the stator 200.

In the present embodiment, the multiple spokes 343 are arranged in the circumferential direction CD. Therefore, for example, the weight of the shaft flange 342 can be reduced as compared with a configuration in which the rim 344 and the shaft main body 341 are connected by a plate-shaped member extending in the direction orthogonal to the axial direction AD. Moreover, as described above, since the stresses applied to the rim 344 by the attraction forces F1 of the rotors 300a and 300b are canceled, the spoke 343 is less likely to be deformed even though the weight of the shaft flange 342 is reduced by the multiple spokes 343.

According to the present embodiment, the spoke 343 is connected to a portion of the rim 344 between the first rotor 300a and the second rotor 300b. In the configuration, a portion of the rim 344 between the spoke 343 and the first rotor 300a can be made as short as possible in the axial direction AD. Therefore, deformation of the portion of the rim 344 between the spoke 343 and the first rotor 300a due to the attraction force F1 to the first rotor 300a can be prevented. The second rotor 300b can also achieve the same effect. For example, a portion of the rim 344 between the spoke 343 and the second rotor 300b can be made as short as possible in the axial direction AD. Therefore, deformation of the portion of the rim 344 between the spoke 343 and the second rotor 300b due to the attraction force F1 to the second rotor 300b can be prevented.

According to the present embodiment, the holder fixing tool 350 is provided at a position away from the rim 344 to a side opposite to the magnet in the radial direction RD. In the configuration, a withstand load of the holder fixing tool 350 can be improved by utilizing "the principle of leverage" with the rim tip portion 344a as a fulcrum. Therefore, the fixing between the rotor 300 and the spoke 343 by the holder fixing tool 350 can be prevented from being released by the attraction force F1.

According to the present embodiment, the bending stress F2 against the attraction force F1 is generated by the pressing force F3 applied to the rotor 300 by the holder fixing tool 350. Therefore, by taking balance between the rigidity of the magnet holder 320 and the attraction force F1, the magnet holder 320 can be prevented from being held in a crooked shape such that the magnet 310 approaches the stator 200. For example, an original shape of the magnet holder 320 can be maintained by canceling the attraction force F1 and the bending stress F2.

According to the present embodiment, the rim 344 is integrally molded with the shaft main body 341. In the configuration, it is unnecessary to retrofit and fix the rim 344 to the shaft main body 341 later by welding, bolts, or the like. Therefore, the fixing between the rim 344 and the shaft main body 341 is not released by the generation of the attraction force F1 or the like. The occurrence of the abnormality in the motor device 60 can be reduced by integral molding of the rim 344 and the shaft main body 341.

### <Configuration Group K>

According to the present embodiment, the resolver 421 is in a state of entering between the electric power busbar 261 and the shaft main body 341. In the configuration, a space between the electric power busbar 261 and the shaft main body 341 can be used as an accommodation space for accommodating the resolver 421. In this way, an increase in the size of the motor device 60 in the axial direction AD can be reduced since at least a part of the resolver 421 and the electric power busbar 261 are arranged in the radial direction RD.

Moreover, the resolver 421 is provided at a position away from the electric power busbar 261 inward in the radial direction RD. In the configuration, an influence caused by the current flowing through the electric power busbar 261 is less likely to reach the resolver 421. Examples of the influence include that noise is generated in the detection signal of the resolver 421 due to a magnetic field generated by the current flowing through the electric power busbar 261. Since the resolver 421 and the electric power busbar 261 are away from each other in this way, the noise is less likely to be generated in the detection signal of the resolver 421. Therefore, a decrease in the detection accuracy of the resolver 421 as the electric power busbar 261 is energized can be reduced.

As described above, it is possible to improve the detection accuracy of the resolver 421 while achieving the decrease in the size of the motor device 60.

According to the present embodiment, the electric power busbar 261 and the resolver 421 are arranged in the radial direction RD along the rear frame 370. In the configuration, both the resolver 421 and the electric power busbar 261 can be fixed to the rear frame 370 while implementing a state in which the resolver 421 enters between the electric power busbar 261 and the shaft main body 341.

According to the present embodiment, the resolver 421 is provided on the side opposite to the stator 200 and the rotor 300 with the rear frame 370 interposed therebetween. In the configuration, the rear frame 370 restricts the influence caused by the stator 200 and rotor 300 from reaching the resolver 421. Examples of the influence caused by the stator 200 include that noise is generated in the detection signal of the resolver 421 due to a magnetic field generated by the current flowing through the coil 211. Examples of the influence caused by the rotor 300 include that noise is generated in the detection signal of the resolver 421 due to a magnetic field generated by the magnet 310. In this way, since the rear frame 370 is provided between the resolver 421 and the stator 200 and between the resolver 421 and the rotor 300, the noise is less likely to be generated in the detection signal of the resolver 421. Therefore, a decrease in the detection accuracy of the resolver 421 due to the presence of the stator 200 and the rotor 300 can be reduced.

According to the present embodiment, the electric power busbar 261 is provided at a position closer to the housing main body 71 than the resolver 421 is in the radial direction RD. In the configuration, the electric power busbar 261 can be disposed at a position as far as possible from the resolver 421 in the radial direction RD. Therefore, the decrease in the detection accuracy of the resolver 421 as the electric power busbar 261 is energized can be reduced by a positional relationship between the electric power busbar 261 and the resolver 421.

According to the present embodiment, the electric power busbar 261 is provided at a position aligned with the coil portion 215 in the axial direction AD. In the configuration, the electric power busbar 261 can be disposed at a position as close as possible to the coil portion 215. Therefore, for example, it is unnecessary to draw around the electric power lead-out wire 212 to pass through a position close to the resolver 421. Therefore, the influence of the current flowing through the electric power lead-out wire 212 is less likely to reach the resolver 421. Examples of the influence include that noise is generated in the detection signal of the resolver 421 due to a magnetic field generated by the current flowing through the electric power lead-out wire 212. In this way, by arranging the electric power busbar 261 and the coil portion 215 in the axial direction AD, the noise can be prevented from being generated in the detection signal of the resolver 421.

According to the present embodiment, the neutral point busbar 290 is provided at a position away from the resolver 421 in the axial direction AD. In the configuration, the influence caused by the current flowing through the neutral point busbar 290 is less likely to reach the resolver 421. Examples of the influence include that noise is generated in the detection signal of the resolver 421 due to a magnetic field generated by the current flowing through the neutral point busbar 290. In this way, since the resolver 421 and the neutral point busbar 290 are away from each other, the noise is less likely to be generated in the detection signal of the resolver 421. Therefore, the decrease in the detection accuracy of the resolver 421 as the neutral point busbar 290 is energized can be reduced.

According to the present embodiment, the neutral point busbar 290 is provided on the side opposite to the resolver 421 with the spoke 343 interposed therebetween in the axial direction AD. In the configuration, the spoke 343 restricts the influence caused by the current flowing through the neutral point busbar 290 from reaching the resolver 421. Therefore, even if the resolver 421 is disposed at a position as close as possible to the neutral point busbar 290 in the axial direction AD, the decrease in the detection accuracy of the resolver 421 can be reduced by the spoke 343. Therefore, both the decrease in the size of the motor device 60 in the axial direction AD and improvement in the detection accuracy of the resolver 421 can be achieved by the spoke 343.

According to the present embodiment, the neutral point busbar 290 is provided on the side opposite to the resolver 421 with the first rotor 300a interposed therebetween in the axial direction AD. In the configuration, the first rotor 300a restricts the influence caused by the current flowing through the neutral point busbar 290 from reaching the resolver 421. Therefore, even if the resolver 421 is disposed at a position as close as possible to the neutral point busbar 290 in the axial direction AD, the decrease in the detection accuracy of the resolver 421 can be reduced by the first rotor 300a. Therefore, both the decrease in the size of the motor device 60 in the axial direction AD and the improvement in the detection accuracy of the resolver 421 can be achieved by the first rotor 300a.

According to the present embodiment, the neutral point busbar 290 is provided between the electric power busbar 261 and the resolver 421 in the radial direction RD. In the configuration, the electric power busbar 261 and the resolver 421 are located at positions away from each other in the radial direction RD to an extent that the neutral point busbar 290 is disposed between the electric power busbar 261 and the resolver 421. Therefore, the decrease in the detection accuracy of the resolver 421 as the electric power busbar 261 is energized can be reduced by a positional relationship between the electric power busbar 261 and the resolver 421 with the neutral point busbar 290 as a reference.

According to the present embodiment, the neutral point busbar 290 is provided between the first rotor 300a and the second rotor 300b in the axial direction AD. In the configuration, regardless of whether the resolver 421 is provided on the first rotor 300a side or the second rotor 300b side, a configuration in which the rotor 300 is disposed between the resolver 421 and the neutral point busbar 290 can be implemented. Therefore, a configuration in which the decrease in the detection accuracy of the resolver 421 as the neutral point busbar 290 is energized is reduced by the rotor 300 is implemented, and it is possible to increase a degree of freedom related to the position of the neutral point busbar 290.

According to the present embodiment, since the Halbach array is used for the array of the magnets 310, the magnetic flux extending from the magnets 310 is less likely to leak to the outside of the magnet holder 320. In this way, the leakage magnetic flux from the rotor 300 can be reduced by the Halbach array. Therefore, a configuration in which the magnetic field generated by the magnet 310 is less likely to reach the resolver 421 can be implemented by the Halbach array. Therefore, the decrease in the detection accuracy of the resolver 421 due to the magnetic field of the magnet 310 can be reduced.

### <Configuration Group L>

According to the present embodiment, the magnet grinding surface such as the first magnet surface 310g is a surface ground to span the multiple magnet pieces 505 and to extend in a planar shape. In the configuration, generation of a step in the boundary between two magnet pieces 505 adjacent to each other on the magnet grinding surface is prevented by grinding. Therefore, the shape accuracy of the magnet grinding surface such as the first magnet surface 310g can be improved. An effect that the shape accuracy can be improved is imparted to the magnet side surface 310c, the inner peripheral tapered surface 310d, the outer peripheral tapered surface 310e, the first magnet surface 310g, and the second magnet surface 310h as the magnet grinding surfaces.

Since the shape accuracy of the magnet grinding surface is improved in this way, a decrease in the energy efficiency of the motor device 60 can be reduced. For example, the first magnet surface 310g is provided in the first rotor surface 301 forming the axial gap 475. Therefore, due to the high shape accuracy of the first magnet surface 310g, the axial gap 475 can be made as small as possible. By making the axial gap 475 as small as possible, the energy efficiency of the motor device 60 can be improved.

For example, a configuration different from that of the present embodiment is assumed in which the shape accuracy of the first magnet surface 310g is low. In the configuration, there is a concern that an unintended step is generated on the first magnet surface 310g. Therefore, it is necessary to set the axial gap 475 to be large such that the step of the first magnet surface 310g does not come into contact with the stator 200. Therefore, since the axial gap 475 is large, a magnetic field generated between the stator 200 and the rotor 300 is reduced, and the energy efficiency of the motor device 60 is decreased.

The second magnet surface 310h is a surface that is overlapped with the main body inner plate surface 321b of the magnet holder 320. Therefore, when the shape accuracy of the second magnet surface 310h is high, the positional accuracy of the magnet 310 with respect to the magnet holder 320 is high. Thus, the second magnet surface 310h prevents the magnet 310 from protruding toward the axial gap 475, and thus the axial gap 475 can be made as small as possible.

For example, a configuration different from that of the present embodiment is assumed in which the shape accuracy of the second magnet surface 310h is low. In the configuration, there is a concern that an unintended step is generated on the second magnet surface 310h. Therefore, when the step of the second magnet surface 310h abuts the main body inner plate surface 321b, the magnet 310 tends to protrude from the magnet holder 320 toward the axial gap 475. Thus, it is necessary to set the axial gap 475 to be large such that the magnet 310 does not come into contact with the stator 200, and the energy efficiency of the motor device 60 is decreased.

Further, the magnet side surface 310c is a surface that is overlapped with the magnet side surface 310c of the adjacent magnet 310. Therefore, when the shape accuracy of the magnet side surface 310c is high, the two magnet side surfaces 310c adjacent to each other tends to be in close contact with each other via the magnet boundary 501. Thus, since a gap is less likely to be formed between two adjacent magnets 310, weakening of the magnetic field due to the leakage magnetic flux from the gap can be prevented. In this way, by strengthening the magnetic field generated by the multiple magnets 310, the energy efficiency of the motor device 60 can be improved.

According to the present embodiment, the multiple member grinding surfaces such as the first piece surfaces 505g are arranged on the same plane to form the magnet grinding surface such as the first magnet surface 310g. Therefore, even if a member grinding surface includes multiple magnet grinding surfaces, generation of a step between two adjacent magnet grinding surfaces can be reduced. That is, a configuration in which the magnet grinding surface spans the multiple magnet pieces 505 and extends in a planar shape can be implemented.

According to the present embodiment, since one magnet 310 is formed by stacking multiple magnet pieces 505, an eddy current is less likely to be generated in the magnet 310. Moreover, the thickness dimensions of the magnet pieces 505 are the same for the multiple magnet pieces 505. In the configuration, the difficulty of generating the eddy current in the magnet 310 can be reduced to the same extent in the multiple magnets 310. Therefore, the loss caused by the eddy current can be reduced in the entire magnet 310. In other words, the eddy current loss generated in the magnet 310 is easily managed.

According to the present embodiment, the magnet 310 has a shape in which the stacking direction in which the multiple magnets 310 are stacked is a longitudinal direction and a direction orthogonal to the stacking direction is a short direction. Therefore, a plate surface of the magnet piece 505 can be made as small as possible. Therefore, the strip magnet 512 used for manufacturing the magnet 310 can be decreased in the size. By decreasing the size of the strip magnet 512, a workload, a cost, and the like when manufacturing the magnet 310 can be reduced. For example, by decreasing the size of the strip magnet 512, the difficulty of the work of manufacturing the strip magnet 512 from the sintered block 511 in the strip process can be reduced. By decreasing the size of the strip magnets 512, the difficulty of the work of bonding the multiple strip magnets 512 in the magnet base material process can be reduced.

According to the present embodiment, the unit grinding surface such as the first unit surface 316g is a surface ground to span the magnet grinding surfaces such as the first magnet surfaces 310g and to extend in a planar shape. In the configuration, for example, generation of a step in the unit inner boundary 501a on the first unit surface 316g is prevented by grinding. Therefore, the shape accuracy of the first unit surface 316g can be improved. Similarly to the first unit surface 316g, the effect of improving the shape accuracy can be achieved on the unit side surface 316c, the inner peripheral tapered surface 316d, the outer peripheral tapered surface 316e, and the second unit surface 316h.

As described above, by increasing the shape accuracy of the unit grinding surface, the decrease in the energy efficiency of the motor device 60 can be reduced. For example, the first unit surface 316g is included in the first rotor surface 301 forming the axial gap 475. Therefore, since the shape accuracy of the first unit surface 316g is high, the axial gap 475 can be made as small as possible.

For example, a configuration different from that of the present embodiment is assumed in which the shape accuracy of the first unit surface 316g is low. In the configuration, there is a concern that an unintended step is generated on the first unit surface 316g. Therefore, it is necessary to set the axial gap 475 to be large such that the step of the first unit surface 316g does not come into contact with the stator 200.

The second unit surface 316h is a surface that is overlapped with the main body inner plate surface 321b of the magnet holder 320. Therefore, when the shape accuracy of the second unit surface 316h is high, the positional accuracy of the magnet unit 316 with respect to the magnet holder 320 is high. Thus, the second unit surface 316h prevents the magnet unit 316 from protruding toward the axial gap 475, and thus the axial gap 475 can be made as small as possible.

For example, a configuration different from that of the present embodiment is assumed in which the shape accuracy of the second unit surface 316h is low. In the configuration, there is a concern that an unintended step is generated on the second unit surface 316h. Therefore, when the step of the second unit surface 316h abuts the main body inner plate surface 321b, the magnet 310 tends to protrude from the magnet holder 320 toward the axial gap 475.

Further, the unit side surface 316c is a surface that is overlapped with the unit side surface 316c of the adjacent magnet unit 316. Therefore, when the shape accuracy of the unit side surface 316c is high, the two adjacent unit side surfaces 316c tends to be in close contact with each other via the unit outer boundary 501b. Thus, since a gap is less likely to be formed between two adjacent magnet units 316, weakening of the magnetic field due to the leakage magnetic flux from the gap can be prevented. In this way, by strengthening the magnetic field generated by the multiple magnet units 316, the energy efficiency of the motor device 60 can be improved.

According to the present embodiment, in the inclined magnet unit 317 and the parallel magnet unit 318, the respective magnet pieces 505 of the multiple magnets 310 extend in the direction orthogonal to the unit center line C316. In the configuration, angles of the magnet pieces 505 with respect to the unit center line C316 are common to one another in the multiple magnets 310. Therefore, it is unnecessary to individually set the angles of the magnet pieces 505 with respect to the unit center line C316 in the multiple magnets 310. Therefore, it is easy to manage an orientation direction of each of the multiple magnets 310. Accordingly, in a process of manufacturing the magnet unit 316, a workload when individually setting the orientation direction for each of the multiple magnets 310 can be reduced.

According to the present embodiment, the two magnets 310 adjacent to each other with the unit inner boundary 501a interposed therebetween are oriented to face the same side in the circumferential direction CD. In the configuration, in the two magnets 310 adjacent to each other with the unit inner boundary 501a interposed therebetween, the repulsive force is less likely to be generated. Therefore, in the process of manufacturing the magnet unit 316, the operator does not need to bond the magnets 310 against the repulsive force generated between the two magnets 310. That is, when the operator bonds the two magnets 310, the bonding of the magnets 310 is less likely to be released by the repulsive force generated between the two magnets 310. Therefore, a workload when the two magnets 310 are bonded can be reduced.

According to the present embodiment, the two magnets 310 adjacent to each other with the unit outer boundary 501b interposed therebetween are oriented to face opposite sides in the circumferential direction CD. In the configuration, in the two magnets 310 adjacent to each other with the unit outer boundary 501b interposed therebetween, the repulsive force is likely to be generated. In this way, since the two magnets 310, which are a combination in which the repulsive force is likely to be generated, are adjacent to each other with the unit outer boundary 501b interposed therebetween, it is unnecessary to set the two magnets 310 adjacent to each other with the unit inner boundary 501a interposed therebetween to the combination in which the repulsive force is likely to be generated. Therefore, in the process of manufacturing the magnet unit 316, it is unnecessary to bond the two magnets 310 which are the combination in which the repulsive force is likely to be generated. Therefore, a workload when manufacturing the magnet unit 316 can be reduced.

According to the present embodiment, in the process of manufacturing the magnet 310, the magnet base material 513 is ground such that the magnet plane such as the first magnet surface 310g spanning the multiple strip magnets 512 and extending in a planar shape is formed on the magnet base material 513. In the configuration, generation of a step in a boundary between two adjacent strip magnets 512 in the magnet plane is reduced by grinding the magnet base material 513. Therefore, the shape accuracy of the magnet plane such as the first magnet surface 310g can be improved. An effect that the shape accuracy can be improved is imparted to the magnet side surface 310c, the inner peripheral tapered surface 310d, the outer peripheral tapered surface 310e, the first magnet surface 310g, and the second magnet surface 310h as the magnet planes. Since the shape accuracy of the magnet plane is improved in this way, a decrease in the energy efficiency of the motor device 60 can be reduced.

According to the present embodiment, the strip magnet 512 is manufactured by the sintering process and the strip process. After the sintering process and the strip process, the unit base material 514 is ground in the magnet side surface process, the first shaping process, and the second shaping process. That is, the grinding is performed in which the multiple strip magnets 512 forming the unit base material 514 are collectively ground. Therefore, it is unnecessary to grind the strip magnets 512 in the sintering process and the strip process. In this way, since the multiple strip magnets 512 are collectively ground, the number of man-hours for grinding can be reduced as compared with a configuration in which the multiple strip magnets 512 are individually ground. Therefore, the workload when manufacturing the magnet 310 and the magnet unit 316 can be reduced.

### <Configuration Group M>

According to the present embodiment, in the axial gap 475, the gap outer peripheral end 476 communicates with the opposite region 472 through the outer peripheral region 473, and the gap inner peripheral end 477 communicates with the opposite region 472 through the holder adjustment hole 326, the holder center hole 324, or the like. In the configuration, the gas easily flows into the axial gap 475 from one of the gap outer peripheral end 476 and the gap inner peripheral end 477, and the gas in the axial gap 475 easily flows out from the other. That is, the gas easily passes through the axial gap 475 in the radial direction RD. Therefore, heat generated between the stator 200 and the rotor 300 is easily released from the axial gap 475 together with the gas flowing into the axial gap 475. Therefore, heat can be prevented from being accumulated between the stator 200 and the rotor 300. Accordingly, the effect of cooling the motor device 60 can be enhanced.

In the motor device 60, the magnetic field generated by the magnet 310 and the coil 211 is strengthened in a region between the magnet 310 and the coil 211. Therefore, in the region between the magnet 310 and the coil 211, the heat is likely to be generated due to the strong magnetic field or the like. Since the axial gap 475 includes the region between the magnet 310 and the coil 211, the heat is easily generated in the axial gap 475. Therefore, the fact that the gas easily passes through the axial gap 475 in the radial direction RD is effective in enhancing the effect of cooling the motor device 60.

According to the present embodiment, the holder rib 323 of the rotor 300 rotates together with the holder main body 321 to generate the air flow in the opposite region 472. In the configuration, since the air flow generated by the holder rib 323 easily flows in the radial direction RD, a configuration in which the air flow easily passes through the axial gap 475 in the radial direction RD is implemented.

The holder rib 323 extends along the holder main body 321 in the radial direction RD in a state of protruding from the holder main body 321 in the axial direction AD. In the configuration, deformation of a bulge or a dent of the magnet holder 320 in the axial direction AD can be restricted by the holder rib 323. Therefore, the holder rib 323 can prevent the magnet holder 320 from being deformed to be crooked in the axial direction AD by an attraction force acting between the magnet 310 and the coil 211. Therefore, the holder rib 323 can be imparted with two functions, that is, a function of reducing the deformation of the rotor 300 and a function of generating the air flow in the opposite region 472. Accordingly, for example, as compared with a configuration in which portions having the two functions are separately provided in the rotor 300, a shape of the rotor 300 can be prevented from becoming complicated. In addition, as compared with a configuration in which a dedicated member for generating the air flow in the opposite region 472 is provided separately from the rotor 300, the number of components constituting the motor device 60 can be reduced.

According to the present embodiment, the holder adjustment holes 326 are aligned with the holder rib 323 of the rotor 300 in the circumferential direction CD. In the configuration, the air flow generated by the gas stirred by the holder rib 323 as the rotor 300 rotates easily passes through the holder adjustment holes 326. Therefore, the air flow passing through the axial gap 475 through the holder adjustment holes 326 can be increased. Therefore, a heat radiation effect of the axial gap 475 obtained by the air flow passing through the axial gap 475 can be enhanced.

According to the present embodiment, the multiple holder adjustment holes 326 each provided between two holder ribs 323 adjacent to each other in the circumferential direction CD are arranged in the circumferential direction CD. In the configuration, the amount of gas stirred by the holder rib 323 and passing through the holder adjustment holes 326 can be increased. Therefore, the heat radiation effect exerted by the gas passing through the axial gap 475 can be enhanced.

According to the present embodiment, the drive frame rib 395 is aligned with the holder rib 323 in the axial direction AD with the second opposite region 472b interposed therebetween and extends in the radial direction RD. In the configuration, the holder rib 323 moves relative to the drive frame rib 395 as the second rotor 300b rotates, and thus the gas is easily agitated in the second opposite region 472b. Therefore, the gas flowing out from the axial gap 475 to the second opposite region 472b easily releases heat to the drive frame 390. Moreover, in the second opposite region 472b, a surface area of the drive frame 390 is increased by the drive frame rib 395, and thus the heat of the gas flowing out from the axial gap 475 is easily transferred to the drive frame 390.

In the configuration, the drive frame rib 395 moves relative to the holder rib 323 in the circumferential direction CD, an air flow flowing along the frame main body 391 in a manner of swirling in a direction orthogonal to the axial direction AD is likely to be generated. Therefore, the gas flowing out from the axial gap 475 easily releases heat in the drive frame 390 by flowing in the manner of swirling along the frame main body 391.

The drive frame rib 395 extends along the frame main body 391 in the radial direction RD in a state of protruding from the frame main body 391 in the axial direction AD. Therefore, the drive frame rib 395 can prevent the drive frame 390 from deforming to bulge or dent in the axial direction AD. Therefore, by providing the drive frame rib 395 on the frame main body 391, the frame main body 391 can be made thinner.

According to the present embodiment, the holder adjustment hole 326 is formed between the rim 344 and the axial gap 475 in the radial direction RD. In the configuration, together with the air flows Fm1 and Fm3 flowing out from the axial gap 475 to the opposite region 472 through the holder adjustment holes 326, the heat present on the radially outer side of the rim 344 is released to the opposite region 472. Therefore, the holder adjustment hole 326 can prevent the heat from accumulating on the radially outer side of the rim 344.

According to the present embodiment, the holder center hole 324, the holder fixing hole 325, and the holder pin hole 327 are formed between the rim 344 and the shaft main body 341 in the radial direction RD. In the configuration, together with the air flows Fm2 and Fm4 flowing out from the axial gap 475 to the opposite region 472 through the holder center hole 324, the holder fixing hole 325, or the holder pin hole 327, the heat present on the radially inner side of the rim 344 is released to the opposite region 472. Therefore, the holder center hole 324, the holder fixing hole 325, and the holder pin hole 327 can prevent the heat from being accumulated on the radially inner side of the rim 344.

According to the present embodiment, the flange vent hole 346 penetrates the rim 344 in the radial direction RD. In the configuration, the air flows Fm2 and Fm4 flowing out from the axial gap 475 can reach the holder center hole 324, the holder fixing hole 325, and the holder pin hole 327 through the flange vent hole 346. Therefore, a configuration in which the air flows Fm2 and Fm4 are released to the opposite region 472 through the holder center hole 324, the holder fixing hole 325, and the holder pin hole 327 can be implemented.

According to the present embodiment, the rim inner peripheral hole 349 penetrates the shaft flange 342 in the axial direction AD. In the configuration, the air flows Fm2 and Fm4 passing through the flange vent hole 346 can reach the holder center hole 324, the holder fixing hole 325, and the holder pin hole 327 through the rim inner peripheral hole 349. Moreover, the spoke 343 connects the shaft main body 341 and the rim 344 via the rim inner peripheral hole 349. Therefore, a configuration in which the shaft main body 341 supports the rim 344 can be implemented while implementing the configuration in which the air flows Fm2 and Fm4 can reach the holder center hole 324, the holder fixing hole 325, and the holder pin hole 327 through the rim inner peripheral hole 349.

### <Configuration Group N>

According to the present embodiment, the motor outer peripheral surface 70a is arranged continuously with the rear frame outer peripheral surface 370a in the axial direction AD. In the configuration, the air flow Fb1 flowing in the axial direction AD is less likely to be disturbed when passing through the boundary between the motor outer peripheral surface 70a and the rear frame outer peripheral surface 370a. Further, the motor outer peripheral surface 70a is provided outside the motor seal holding portion 78 in the radial direction RD. In the configuration, the air flow Fb1 flowing in the axial direction AD is less likely to be disturbed when passing through the motor seal holding portion 78. Therefore, a reduction in the amount of gas flowing along the motor fins 72 due to disturbance of the air flow Fb1 and a decrease in the heat radiation effect of the motor fins 72 can be prevented. Therefore, the heat radiation effect of the motor device 60 can be enhanced.

According to the present embodiment, the motor seal portion 402 is provided on the radially inner side of the housing main body 71. In the configuration, it is unnecessary to provide the motor seal portion 402 to be radially outward with respect to the motor inner peripheral surface 70b and the rear frame outer peripheral surface 370a. Therefore, since the housing main body 71 covers the motor seal portion 402 from the radially outer side, the motor seal portion 402 is less likely to protrude toward the radially outer side. Therefore, a configuration in which the motor outer peripheral surface 70a and the rear frame outer peripheral surface 370a are continuously arranged in the axial direction AD can be implemented.

According to the present embodiment, the electric power lead-out wire 212 has a crooked shape to pass through the radially inner side of the motor seal portion 402. In the configuration, a configuration in which the electric power lead-out wire 212 and the motor seal portion 402 do not interfere with each other is implemented, and it is unnecessary to change a position of the motor seal portion 402 to the radially outer side. That is, a configuration in which the electric power lead-out wire 212 does not interfere with the motor seal holding portion 78 and the rear frame holding portion 376 is implemented, and it is unnecessary to change the positions of the motor seal holding portion 78 and the rear frame holding portion 376 to the radially outer side. Therefore, an increase in the size of the motor housing 70 in the radial direction RD can be reduced while implementing the configuration in which the motor outer peripheral surface 70a and the rear frame outer peripheral surface 370a are continuously arranged in the axial direction AD.

According to the present embodiment, in the electric power lead-out wire 212, the outer peripheral lead-out portion 212a and the inner peripheral lead-out portion 212b extend in the axial direction AD, whereas the intersection lead-out portion 212c extends toward the radially inner side to pass between the motor seal holding portion 78 and the first rotor 300a. Therefore, a configuration in which the electric power lead-out wire 212 is crooked to pass through the radially inner side of the motor seal portion 402 can be implemented.

According to the present embodiment, the rear frame holding portion 376 restricts the positional deviation of the motor seal portion 402. In the configuration, it is unnecessary for the motor seal holding portion 78 to restrict the positional deviation of the motor seal portion 402. Therefore, it is unnecessary to form the motor seal holding portion 78 in a dedicated shape for restricting the positional deviation of the motor seal portion 402. Accordingly, versatility of the motor seal holding portion 78 can be enhanced, and as a result, versatility of the motor housing 70 can be enhanced.

According to the present embodiment, the motor seal holding portion 78 sandwiches, with the rear frame holding portion 376, the motor seal portion 402 which is provided to enter the motor-side rear frame groove 376a. In the configuration, the motor seal portion 402 enters the motor-side rear frame groove 376a, and thus a configuration in which the rear frame holding portion 376 restricts the positional deviation of the motor seal portion 402 can be implemented.

According to the present embodiment, the rear frame holding portion 376 is provided on the radially inner side of the motor seal holding portion 78. In the configuration, the rear frame holding portion 376 does not need to protrude from the motor outer peripheral surface 70a toward the radially outer side. Therefore, the rear frame outer peripheral surface 370a and the motor outer peripheral surface 70a can be arranged in the axial direction AD such that the rear frame outer peripheral surface 370a does not protrude from the motor outer peripheral surface 70a toward the radially outer side.

In the present embodiment, the motor seal holding portion 78 and the rear frame holding portion 376 are in a state of sandwiching the motor seal portion 402 in the radial direction RD. Therefore, the motor seal portion 402 can be prevented from protruding from the motor seal holding portion 78 and the rear frame holding portion 376 in the radial direction RD.

In the present embodiment, the duct flow channel 105 is formed by the unit duct 100 covering the motor housing 70 from the outer peripheral side of the motor fin 72. Therefore, when the air flow Fb1 is disturbed in the duct flow channel 105, there is a concern that the air flow Fb1 decreases and the heat radiation effect of the motor fins 72 based on the air flow Fb1 decreases. Meanwhile, according to the present embodiment, the motor outer peripheral surface 70a and the rear frame outer peripheral surface 370a are continuously arranged in the axial direction AD, and the motor outer peripheral surface 70a is located on the radially outer side of the motor seal holding portion 78, and thus the disturbance of the air flow Fb1 can be reduced. Therefore, in the configuration in which the duct flow channel 105 is formed by the unit duct 100, a decrease in the heat radiation effect of the motor fins 72 can be reduced.

In the present embodiment, the rear frame 370 is fixed, as a fixed target, to the motor housing 70. In the configuration, since the rear frame outer peripheral surface 370a and the motor outer peripheral surface 70a are continuously arranged in the axial direction AD, the air flow Fb1 can be prevented from being disturbed at a boundary between the rear frame 370 and the motor housing 70.

According to the present embodiment, the motor device 60 is mounted on a flight vehicle as a driving source for driving and rotating the rotary blade. In the configuration, safety related to flight of the flight vehicle can be enhanced by enhancing the heat radiation effect of the motor device 60.

### <Second Embodiment>

In a second embodiment, the motor device 60 includes only one rotor 300. That is, the motor device 60 is a single-rotor-type rotary electric machine. For example, one rotor 300 is provided between the stator 200 and the inverter device 80 in the axial direction AD. The rotor 300 may be provided on the side opposite to the inverter device 80 with the stator 200 interposed therebetween in the axial direction AD.

The motor device 60 may include multiple stators 200. For example, the motor device 60 may include two stators 200. The motor device 60 is a double stator-type rotary electric machine. The motor device 60 and the inverter device 80 may be provided to be separated from each other. For example, the motor housing 70 and the inverter housing 90 may be provided independently of each other. Further, the unit duct 100 may not be provided for the motor device unit 50.

### <Configuration Group E>

### <Third Embodiment>

In the first embodiment described above, the outer peripheral lead-out portion 212a extends further toward the side opposite to the electric power busbar 261 than the outer grommet portion 258 extends in the axial direction AD. Meanwhile, in a third embodiment, the outer grommet portion 258 extends further toward the side opposite to the electric power busbar 261 than the outer peripheral lead-out portion 212a extends in the axial direction AD. Configurations, operations, and effects not particularly described in the third embodiment are the same as those in the first embodiment described above. In the third embodiment, differences from the first embodiment described above will be mainly described.

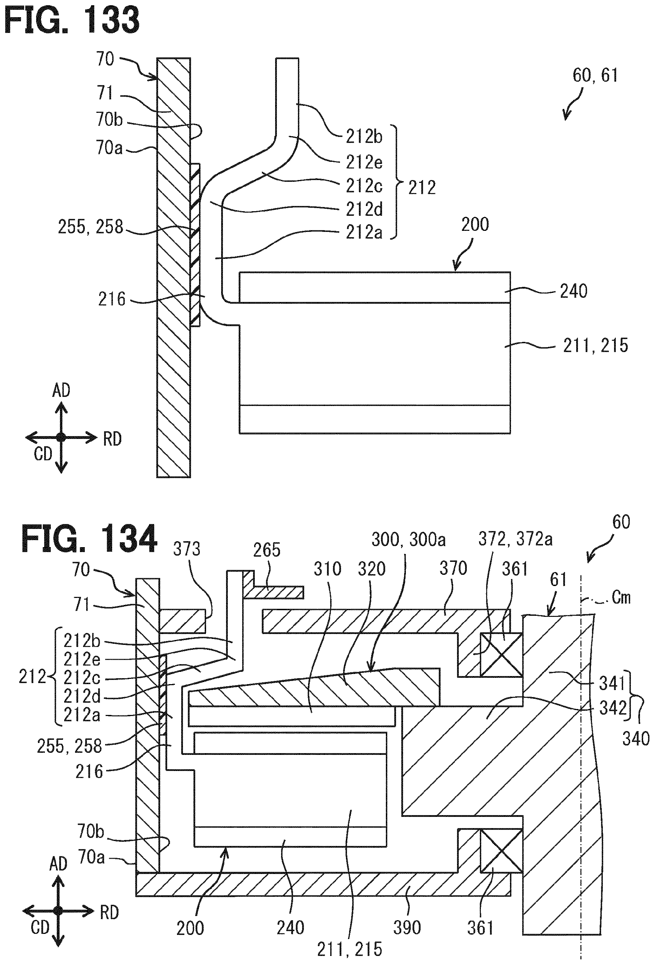

As shown in FIG. 133, the outer grommet portion 258 extends further toward the side opposite to the inner peripheral lead-out portion 212b than the outer peripheral lead-out portion 212a extends in the axial direction AD. In the axial direction AD, an end portion of the outer grommet portion 258 on the coil 211 side is closer to the coil 211 than an end portion of the outer peripheral lead-out portion 212a on the coil 211 side is. In the axial direction AD, a length dimension of the outer grommet portion 258 is larger than a length dimension of the outer peripheral lead-out portion 212a. In FIG. 133, similarly to FIG. 87, illustrations of the grommet main body 256 and the inner grommet portion 257 of the grommet 255 and the like are omitted.

According to the present embodiment, the outer grommet portion 258 extends further toward the side opposite to the electric power busbar 261 than the outer peripheral lead-out portion 212a extends in the axial direction AD. In the configuration, in a region on the side opposite to the electric power busbar 261 with the outer peripheral lead-out portion 212a interposed therebetween in the axial direction AD, the electrical insulation property between the outer peripheral lead-out portion 212a and the motor housing 70 can be maintained by the outer grommet portion 258. For example, even if a position of the outer peripheral lead-out portion 212a is unintentionally deviated toward the side opposite to the electric power busbar 261 in the axial direction AD, the outer grommet portion 258 can reduce a decrease in the electrical insulation property between the outer peripheral lead-out portion 212a and the motor housing 70.

### <Fourth Embodiment>

In the first embodiment described above, the coil 211 is protected by the coil protection portion 250. Meanwhile, in a fourth embodiment, the coil 211 is not protected by the coil protection portion 250. Configurations, operations, and effects not particularly described in the fourth embodiment are the same as those in the first embodiment described above. In the fourth embodiment, differences from the first embodiment described above will be mainly described.

As shown in FIG. 134, the motor device 60 does not include the coil protection portion 250. That is, the coil protection portion 250 is not provided for the coil 211. In the configuration, the coil 211 is imparted with the electrical insulation property by the covering portion 222 of the coil wire 220. In FIG. 134, an illustration of the second rotor 300b is omitted in addition to illustrations of the grommet main body 256 and the inner grommet portion 257 of the grommet 255. At least a part of the coil 211 may be protected by the coil protection portion 250.

In FIG. 134, an illustration of the second rotor 300b is omitted. The motor device 60 may include only one of the first rotor 300a and the second rotor 300b. That is, the motor device 60 may be a single-rotor-type rotary electric machine.

The electric power lead-out wire 212 is led out from an end portion of the coil portion 215 on the electric power busbar 261 side in the axial direction AD. The electric power lead-out wire 212 may be led out from an intermediate position on the coil portion 215 in the axial direction AD.

### <Fifth Embodiment>

In the first embodiment described above, the grommet 255 includes the inner grommet portion 257. Meanwhile, in a fifth embodiment, the grommet 255 does not include the inner grommet portion 257. Configurations, operations, and effects not particularly described in the fifth embodiment are the same as those in the first embodiment described above. In the fifth embodiment, differences from the first embodiment described above will be mainly described.

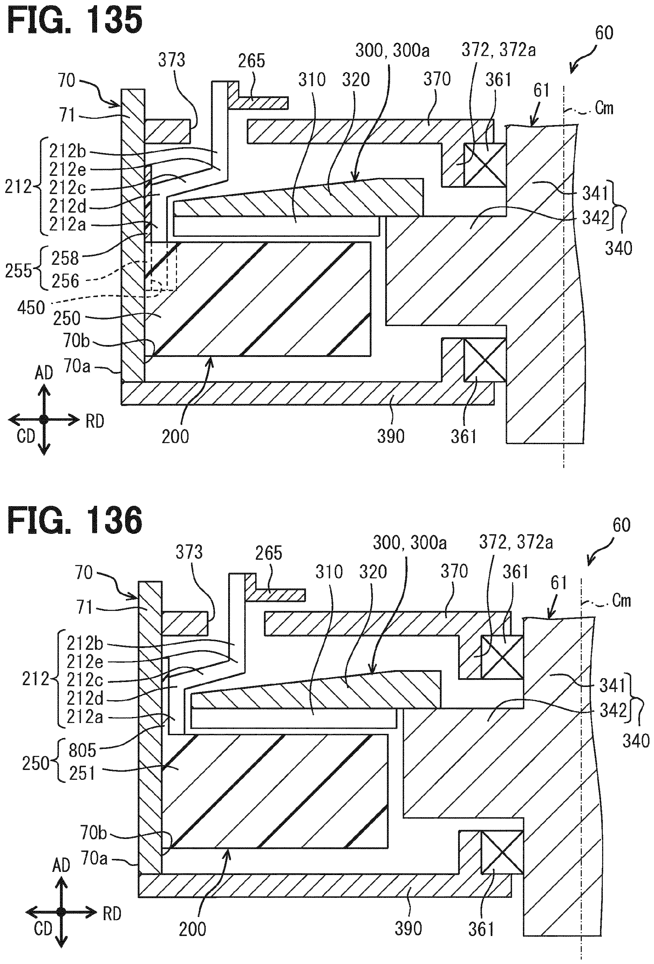

As shown in FIG. 135, the grommet 255 includes the grommet main body 256 and the outer grommet portion 258, and does not include the inner grommet portion 257. In the configuration, the grommet hole 450 also penetrates the grommet main body 256 in the axial direction AD. In the grommet 255, when the coil protection portion 250 is manufactured, the molten resin does not enter the grommet hole 450 in the grommet main body 256. Therefore, in the process of manufacturing the coil protection portion 250, leakage of the molten resin from the grommet hole 450 is restricted.

### <Sixth Embodiment>

In the first embodiment described above, the outer grommet portion 258 enters between the outer peripheral lead-out portion 212a and the motor inner peripheral surface 70b. Meanwhile, in a sixth embodiment, a part of the coil protection portion 250 enters between the outer peripheral lead-out portion 212a and the motor inner peripheral surface 70b. Configurations, operations, and effects not particularly described in the sixth embodiment are the same as those in the first embodiment described above. In the sixth embodiment, differences from the first embodiment described above will be mainly described.

As shown in FIG. 136, the coil protection portion 250 includes a protection main body 251 and a protection extending portion 805. The protection main body 251 covers the coil 211 to protect the coil 211. The protection extending portion 805 is a portion of the coil protection portion 250 which extends from the protection main body 251 in the axial direction AD. The protection extending portion 805 extends from the protection main body 251 toward the electric power busbar 261 in the axial direction AD. The protection extending portion 805 is in a state of entering between the outer peripheral lead-out portion 212a and the motor inner peripheral surface 70b. The protection extending portion 805 is included in the coil protection portion 250 and thus has the electrical insulation property. The protection extending portion 805 corresponds to an outer insulation portion and a lead-out wire insulation portion. The protection extending portion 805 is included in the sealing resin portion corresponding to the coil protection portion 250.

The protection extending portion 805 has a configuration similar to that of the outer grommet portion 258 of the first embodiment described above. For example, the protection extending portion 805 extends further toward the electric power busbar 261 than the outer peripheral lead-out portion 212a extends in the axial direction AD. The protection extending portion 805 may extend to any extent as long as the protection extending portion 805 extends further toward the electric power busbar 261 than the outer peripheral lead-out portion 212a extends in the axial direction AD. For example, the protection extending portion 805 may not reach the intersection lead-out portion 212c in the axial direction AD, and may extend further toward the electric power busbar 261 than is the inner peripheral bent portion 212e.

The protection extending portion 805 is individually provided for each of the multiple electric power lead-out wires 212. The protection extending portion 805 extends further toward both sides in the circumferential direction CD than the outer peripheral lead-out portion 212a extends. In the circumferential direction CD, a width dimension of the protection extending portion 805 is larger than the width dimension Wa3 of the outer peripheral lead-out portion 212a. The protection extending portion 805 may extend in the circumferential direction CD to span the multiple electric power lead-out wires 212.

The protection extending portion 805 is provided on an outer peripheral side of the outer peripheral lead-out portion 212a, and is not provided on an inner peripheral side of the outer peripheral lead-out portion 212a. That is, the protection extending portion 805 protects the outer peripheral lead-out portion 212a from the outer peripheral side, and does not protect the outer peripheral lead-out portion 212a from the inner peripheral side. The protection extending portion 805 does not enter between the outer peripheral lead-out portion 212a and the first rotor 300a.

According to the present embodiment, the protection extending portion 805 serving as the outer insulation portion is included in the coil protection portion 250. In the configuration, when the motor device 60 is manufactured, the protection extending portion 805 can be molded in the process of molding the coil protection portion 250. Therefore, for example, as compared with a configuration in which the protection extending portion 805 is manufactured in a process different from that of the coil protection portion 250, the number of processes for manufacturing the protection extending portion 805 can be eliminated. As compared with a configuration in which a separate member such as the grommet 255 that is independent of the coil protection portion 250 is used instead of the protection extending portion 805, the number of components constituting the motor device 60 can be reduced.

According to the present embodiment, the protection extending portion 805 extends further toward the electric power busbar 261 than the outer peripheral lead-out portion 212a extends in the axial direction AD. In the configuration, regardless of the positional relationship between the outer peripheral lead-out portion 212a and the motor inner peripheral surface 70b, the electrical insulation property between the outer peripheral lead-out portion 212a and the motor housing 70 can be maintained by the protection extending portion 805. For example, even if the position of the outer peripheral lead-out portion 212a is unintentionally deviated toward the electric power busbar 261 in the axial direction AD, the protection extending portion 805 can reduce the decrease in the electrical insulation property between the outer peripheral lead-out portion 212a and the motor housing 70.

On the other hand, the protection extending portion 805 is not provided between the outer peripheral lead-out portion 212a and the first rotor 300a in the radial direction RD. In the configuration, the decrease in the degree of freedom related to the disposition of the electric power lead-out wire 212 such as the position of the intersection lead-out portion 212c due to the protection extending portion 805 can be prevented. Therefore, the electrical insulation reliability of the motor device 60 can be increased by the protection extending portion 805 while enhancing the degree of freedom in disposition of the electric power lead-out wire 212.

In the present embodiment, a part of the coil protection portion 250 may be provided on the radially inner side of the outer peripheral lead-out portion 212a. For example, a part of the coil protection portion 250 is configured to enter between the outer peripheral lead-out portion 212a and the first rotor 300a. In the configuration, the part of the coil protection portion 250 protects the outer peripheral lead-out portion 212a from the inner peripheral side.

### <Seventh Embodiment>

In the sixth embodiment described above, the protection extending portion 805 enters between the outer peripheral lead-out portion 212a and the motor inner peripheral surface 70b. Meanwhile, in a seventh embodiment, an outer peripheral insulating layer 801 enters between the outer peripheral lead-out portion 212a and the motor inner peripheral surface 70b. Configurations, operations, and effects not particularly described in the seventh embodiment are the same as those in the first embodiment described above. In the seventh embodiment, differences from the first embodiment described above will be mainly described.

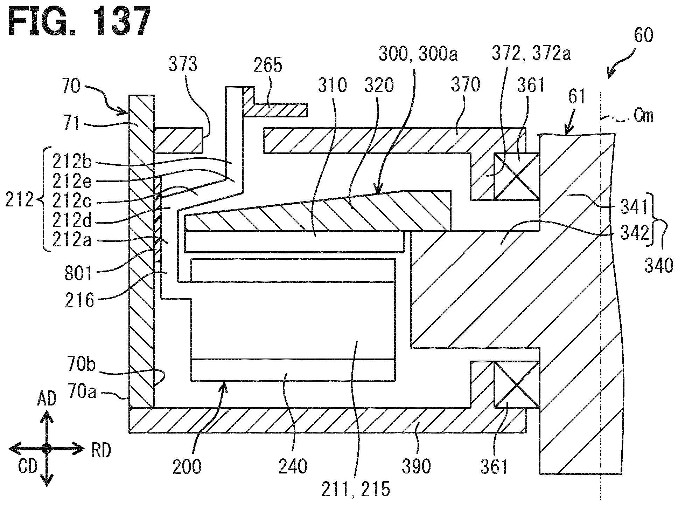

As shown in FIG. 137, the motor device 60 includes the outer peripheral insulating layer 801. The outer peripheral insulating layer 801 is in a state of entering between the outer peripheral lead-out portion 212a and the motor inner peripheral surface 70b. The outer peripheral insulating layer 801 is provided between the outer peripheral lead-out portion 212a and the motor inner peripheral surface 70b in the radial direction RD. The outer peripheral insulating layer 801 has an electrical insulation property. The outer peripheral insulating layer 801 is made of an insulating paint applied to the motor inner peripheral surface 70b. The insulating paint is a paint having an electrical insulation property. The outer peripheral insulating layer 801 is a paint layer formed by solidifying the insulating paint applied to the motor inner peripheral surface 70b. The outer peripheral insulating layer 801 corresponds to the outer insulation portion and the lead-out wire insulation portion.

The outer peripheral insulating layer 801 may not be made of the insulating paint as long as the outer peripheral insulating layer 801 has the electrical insulation property. For example, the outer peripheral insulating layer 801 may be manufactured by a resin material, a rubber material, or the like in a film shape, a sheet shape, or the like, and then fixed to the motor inner peripheral surface 70b by an adhesive or the like.

The outer peripheral insulating layer 801 has a configuration similar to that of the outer grommet portion 258 of the first embodiment described above. For example, the outer peripheral insulating layer 801 extends further toward the electric power busbar 261 than the outer peripheral lead-out portion 212a extends in the axial direction AD. The outer peripheral insulating layer 801 may extend to any extent as long as the outer peripheral insulating layer 801 extends further toward the electric power busbar 261 than the outer peripheral lead-out portion 212a extends in the axial direction AD. For example, the outer peripheral insulating layer 801 may not reach the intersection lead-out portion 212c in the axial direction AD, and may extend further toward the electric power busbar 261 than is the inner peripheral bent portion 212e.

The outer peripheral insulating layer 801 is individually provided for each of the multiple electric power lead-out wires 212. The outer peripheral insulating layer 801 extends further toward both sides in the circumferential direction CD than the outer peripheral lead-out portion 212a extends. In the circumferential direction CD, a width dimension of the outer peripheral insulating layer 801 is larger than the width dimension Wa3 of the outer peripheral lead-out portion 212a. The outer peripheral insulating layer 801 may extend in the circumferential direction CD to span the multiple electric power lead-out wires 212.

The outer peripheral insulating layer 801 is provided on the outer peripheral side of the outer peripheral lead-out portion 212a, and is not provided on the inner peripheral side of the outer peripheral lead-out portion 212a. That is, the outer peripheral insulating layer 801 protects the outer peripheral lead-out portion 212a from the outer peripheral side, and does not protect the outer peripheral lead-out portion 212a from the inner peripheral side. The outer peripheral insulating layer 801 does not enter between the outer peripheral lead-out portion 212a and the first rotor 300a.

According to the present embodiment, the outer peripheral insulating layer 801 serving as the outer insulation portion is made of the insulating paint applied to the motor inner peripheral surface 70b. In the configuration, when the motor device 60 is manufactured, a position, a size, and a shape of the outer peripheral insulating layer 801 can be set by a position and a range on the motor inner peripheral surface 70b to which the insulating paint is applied. Therefore, a degree of freedom related to disposition of the outer peripheral insulating layer 801 can be increased. Therefore, the outer peripheral insulating layer 801 can be disposed such that the electrical insulation property between the outer peripheral lead-out portion 212a and the motor housing 70 is enhanced.

According to the present embodiment, the outer peripheral insulating layer 801 extends further toward the electric power busbar 261 than the outer peripheral lead-out portion 212a extends in the axial direction AD. In the configuration, regardless of the positional relationship between the outer peripheral lead-out portion 212a and the motor inner peripheral surface 70b, the electrical insulation property between the outer peripheral lead-out portion 212a and the motor housing 70 can be maintained by the outer peripheral insulating layer 801. For example, even if the position of the outer peripheral lead-out portion 212a is unintentionally deviated toward the electric power busbar 261 in the axial direction AD, the outer peripheral insulating layer 801 can reduce the decrease in the electrical insulation property between the outer peripheral lead-out portion 212a and the motor housing 70.

On the other hand, the outer peripheral insulating layer 801 is not provided between the outer peripheral lead-out portion 212a and the first rotor 300a in the radial direction RD. In the configuration, the decrease in the degree of freedom related to the disposition of the electric power lead-out wire 212 such as the position of the intersection lead-out portion 212c due to the outer peripheral insulating layer 801 can be reduced. Therefore, the electrical insulation reliability of the motor device 60 can be increased by the outer peripheral insulating layer 801 while enhancing the degree of freedom in disposition of the electric power lead-out wires 212.

In the present embodiment, an inner peripheral insulating layer similar to the outer peripheral insulating layer 801 may be provided on the radially inner side of the outer peripheral lead-out portion 212a. For example, the inner peripheral insulating layer is configured to enter between the outer peripheral lead-out portion 212a and the first rotor 300a. In the configuration, the inner peripheral insulating layer protects the outer peripheral lead-out portion 212a from the inner peripheral side. The inner peripheral insulating layer is formed by applying an insulating paint to the outer peripheral lead-out portion 212a.

### <Configuration Group F>

### <Eighth Embodiment>

In an eighth embodiment, a vent hole different from the frame opening portion 373 is formed in the rear frame 370. Configurations, operations, and effects not particularly described in the eighth embodiment are the same as those in the first embodiment described above. In the eighth embodiment, differences from the first embodiment described above will be mainly described.

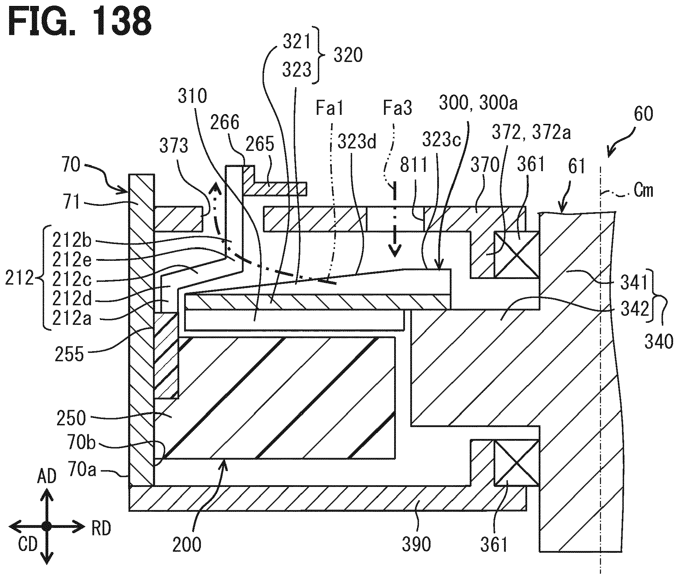

As shown in FIG. 138, the rear frame 370 has rear frame vent holes 811. Each of the rear frame vent holes 811 penetrates the rear frame 370 in the axial direction AD. The rear frame vent hole 811 is an opening portion formed in the rear frame 370. The rear frame vent hole 811 is located at a position on the rear frame 370 separated from the frame opening portion 373. The rear frame vent hole 811 is located at a position separated from the frame opening portion 373 toward the radially inner side, for example. Multiple rear frame vent holes 811 are arranged in the circumferential direction CD. For example, the rear frame vent hole 811 and the frame opening portion 373 are arranged in the radial direction RD.

The rear frame vent hole 811 is a vent hole through which air can pass. The air passing through the rear frame vent hole 811 includes the air flow generated by the holder rib 323. For example, when the air flow Fa1 generated by the holder rib 323 flows out from the frame opening portion 373, an air flow Fa3 flowing in from the rear frame vent hole 811 is likely to be generated. In this way, the air flow Fa3 is generated, and thus the air flow Fa1 is likely to be generated. Therefore, the effect of cooling the electric power lead-out wire 212 by the air flow Fa1 can be enhanced by the air flow Fa3. In FIG. 138, illustrations of the electric power busbar 261, the first rotor 300a, and the like are omitted.

When the air flows Fa1 and Fa3 are generated, the cooling air generated by the holder rib 323 easily circulates through the frame opening portion 373 and the rear frame vent hole 811. For example, the cooling air sent by the holder rib 323 flows out, as the air flow Fa1, to the outside of the rear frame 370 through the frame opening portion 373, then flows into, as the air flow Fa3, the inside of the rear frame 370 through the rear frame vent hole 811, and returns to the holder rib 323. In this way, the cooling air circulates between the inside and the outside of the rear frame 370.

### <Ninth Embodiment>

In a ninth embodiment, a vent hole is formed in the drive frame 390. Configurations, operations, and effects not particularly described in the ninth embodiment are the same as those in the first embodiment described above. In the ninth embodiment, differences from the first embodiment described above will be mainly described.

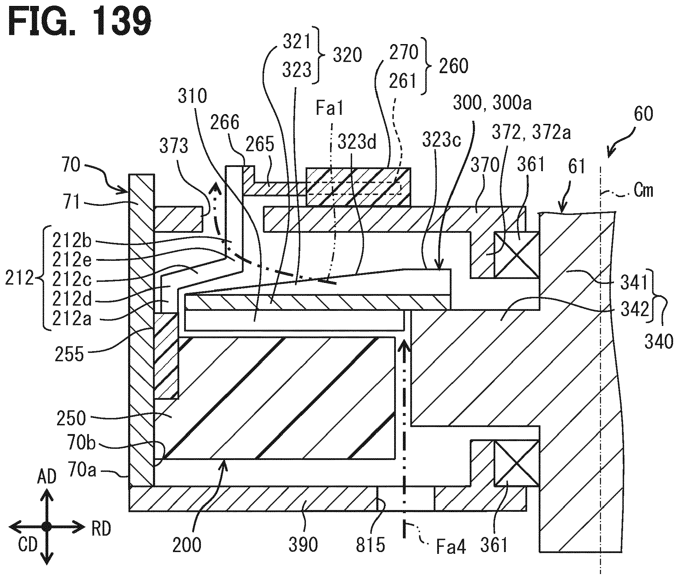

As shown in FIG. 139, the drive frame 390 has drive frame vent holes 815. Each of the drive frame vent holes 815 penetrates the drive frame 390 in the axial direction AD. The drive frame vent hole 815 is an opening portion formed in the drive frame 390. The drive frame vent hole 815 is located at a position on the drive frame 390 separated from the shaft main body 341 toward the radially outer side. The drive frame vent hole 815 is formed, for example, in a position aligned with the inner peripheral end of the coil protection portion 250 in the axial direction AD. Multiple drive frame vent holes 815 are arranged in the circumferential direction CD.

The drive frame vent hole 815 is a vent hole through which air can pass. The air passing through the drive frame vent hole 815 includes the air flow generated by the holder rib 323. For example, when the air flow Fa1 generated by the holder rib 323 flows out from the frame opening portion 373, an air flow Fa4 flowing in from the drive frame vent hole 815 is likely to be generated. In this way, the air flow Fa4 is generated, and thus the air flow Fa1 is likely to be generated. Therefore, the effect of cooling the electric power lead-out wire 212 by the air flow Fa1 can be enhanced by the air flow Fa4. In FIG. 139, illustrations of the electric power busbar 261, the first rotor 300a, and the like are omitted.

When the air flows Fa1 and Fa4 are generated, the cooling air generated by the holder rib 323 easily circulates through the frame opening portion 373 and the drive frame vent hole 815. For example, the cooling air sent by the holder rib 323 flows out, as the air flow Fa1, to the outside of the rear frame 370 through the frame opening portion 373, and then flows into, as the air flow Fa4, the inside of the drive frame 390 through the drive frame vent hole 815. The cooling air passes through the shaft flange 342 and the magnet holder 320 and returns to the holder rib 323. The cooling air passes between two spokes 343 adjacent to each other in the circumferential direction CD to pass through the shaft flange 342, and passes the holder fixing hole 325 to pass through the magnet holder 320, for example. In this way, the cooling air circulates inside and outside the motor housing 70, the rear frame 370, and the drive frame 390.

### <Tenth Embodiment>

In the first embodiment described above, the holder rib 323 has both the rib parallel portion 323c and the rib tapered portion 323d. Meanwhile, in a tenth embodiment, the holder rib 323 includes the rib tapered portion 323d, and does not include the rib parallel portion 323c. Configurations, operations, and effects not particularly described in the tenth embodiment are the same as those of the first embodiment described above. In the tenth embodiment, differences from the first embodiment described above will be mainly described.

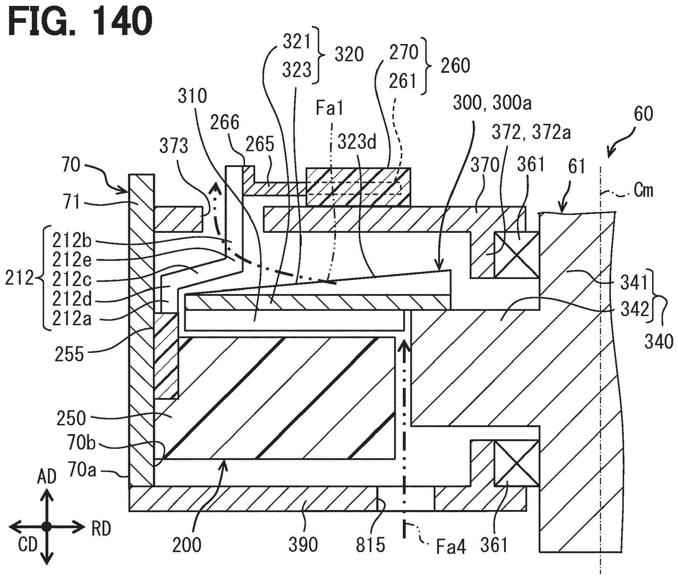

As shown in FIG. 140, the holder rib 323 includes only the rib tapered portion 323d in the rib parallel portion 323c and the rib tapered portion 323d. The rib tapered portion 323d extends in the axial direction AD to span the rib inner peripheral end 323a and the rib outer peripheral end 323b. In the holder rib 323, the entire tip portion is the rib tapered portion 323d. The rib tapered portion 323d is in a state of spanning the holder inner peripheral end 320a and the holder outer peripheral end 320b.

### <Eleventh Embodiment>

In the tenth embodiment, the holder rib 323 includes the rib tapered portion 323d, and does not include the rib parallel portion 323c. Meanwhile, in an eleventh embodiment, the holder rib 323 includes the rib parallel portion 323c, and does not include the rib tapered portion 323d. Configurations, operations, and effects not particularly described in the eleventh embodiment are the same as those in the first embodiment described above. In the eleventh embodiment, differences from the first embodiment described above will be mainly described.

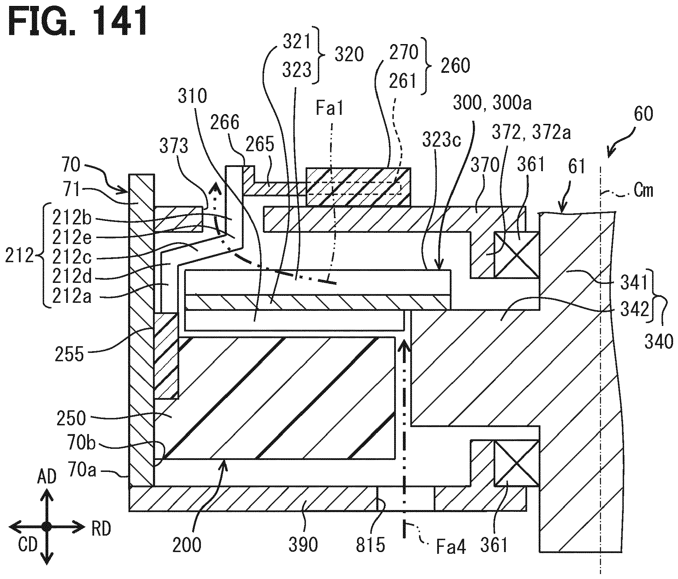

As shown in FIG. 141, the holder rib 323 includes only the rib parallel portion 323c in the rib parallel portion 323c and the rib tapered portion 323d. The rib parallel portion 323c extends in the axial direction AD to span the rib inner peripheral end 323a and the rib outer peripheral end 323b. In the holder rib 323, the entire tip portion is the rib parallel portion 323c. The rib parallel portion 323c is in a state of spanning the holder inner peripheral end 320a and the holder outer peripheral end 320b.

### <Configuration Group G>

### <Twelfth Embodiment>

In a twelfth embodiment, the rotor 300 may include a yoke. Configurations, operations, and effects not particularly described in the twelfth embodiment are the same as those in the first embodiment described above. In the twelfth embodiment, differences from the first embodiment described above will be mainly described.

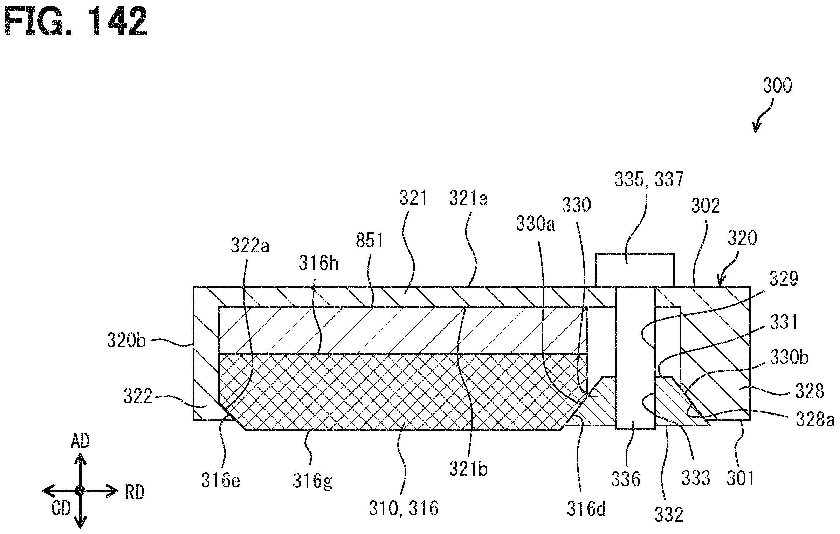

As shown in FIG. 142, the rotor 300 includes a back yoke 851. The back yoke 851 is a yoke and is made of a ferromagnetic material. The back yoke 851 is provided between the holder main body 321 and the magnet 310. The back yoke 851 is provided, for example, between the main body inner plate surface 321b and the first unit surface 316g. The back yoke 851 is formed in a plate shape and extends in the direction orthogonal to the axial direction AD. The back yoke 851 is in a state of being overlapped with the second unit surface 316h. The back yoke 851 is provided for all the magnets 310. Multiple back yokes 851 may be arranged in the circumferential direction CD similarly to the magnets 310, or the back yoke 851 may extend in the circumferential direction CD to span the multiple magnets 310.

In a configuration in which the array of the magnets 310 is not the Halbach array, a yoke such as the back yoke 851 is preferably provided for the magnet 310. In the configuration, the magnetic field generated in the axial gap 475 can be strengthened by the yoke.

### <Thirteenth Embodiment>

In the first embodiment described above, one fixing block 330, as a fixing member, fixes one magnet unit 316 to the magnet holder 320. Meanwhile, in a thirteenth embodiment, one fixing member fixes multiple magnet units 316 to the magnet holder 320. Configurations, operations, and effects not particularly described in the thirteenth embodiment are the same as those in the first embodiment described above. In the thirteenth embodiment, differences from the first embodiment described above will be mainly described.

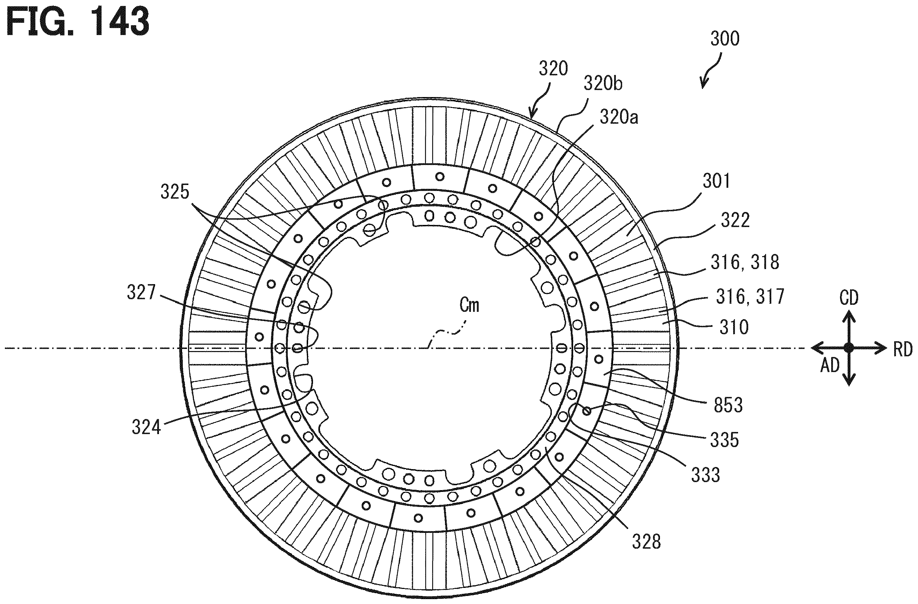

As shown in FIG. 143, the rotor 300 includes collection blocks 853. Similarly to the fixing block 330 of the first embodiment described above, the collection block 853 fixes the magnet unit 316 to the magnet holder 320. Similarly to the fixing block 330, the collection block 853 has the block tapered surface 330a, the block receiving surface 330b, the block facing surface 330c, the block inner end surface 331, the block outer end surface 332, and the block hole 333.

The collection block 853 extends in the circumferential direction CD to span multiple magnet units 316. The collection block 853 spans, for example, two magnet units 316. The collection block 853 spans one inclined magnet unit 317 and one parallel magnet unit 318. Multiple collection blocks 853 are arranged in the circumferential direction CD. A size and a shape of the collection block 853 are the same those of multiple fixing blocks 330. The collection block 853 has such a size and a shape that the two fixing blocks 330 of the first embodiment are integrated. The collection block 853 corresponds to the fixing member and a collection member.

As in the first embodiment described above, the collection block 853 is fixed to the magnet holder 320 by the magnet fixing tool 335. For example, one collection block 853 is fixed to the magnet holder 320 by one magnet fixing tool 335. One block hole 333 is formed in one collection block 853. One collection block 853 may be fixed to the magnet holder 320 by multiple magnet fixing tools 335. In this case, multiple block holes 333 are formed in one collection block 853.

According to the present embodiment, the collection block 853 is provided to span the multiple magnet units 316, and fixes the multiple magnet units 316 to the magnet holder 320. In the configuration, the number of the collection blocks 853 can be reduced relative to the number of the magnet units 316. The number of the magnet fixing tools 335 can be reduced according to the number of the collection blocks 853. Therefore, the number of components constituting the rotor 300 can be reduced. Therefore, in the process of manufacturing the rotor 300, a workload when the collection block 853 is fixed to the magnet holder 320 can be reduced. A weight of the rotor 300 can be reduced.

### <Fourteenth Embodiment>

In the first embodiment described above, multiple fixing blocks 330 are attached to the magnet holder 320 as the fixing members. Meanwhile, in the thirteenth embodiment, one fixing member is attached to the magnet holder 320. Configurations, operations, and effects not particularly described in the fourteenth embodiment are the same as those in the first embodiment described above. In the fourteenth embodiment, differences from the first embodiment described above will be mainly described.

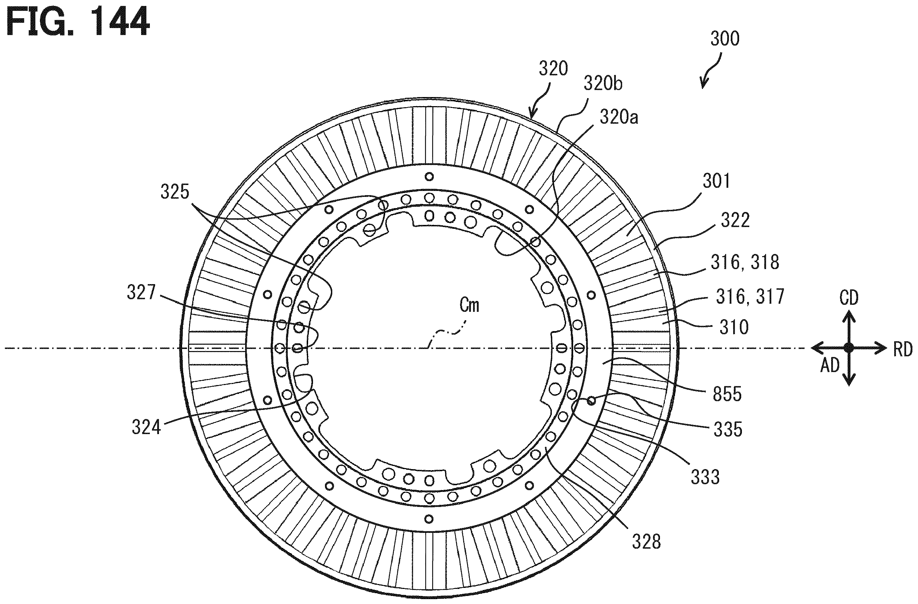

As shown in FIG. 144, the rotor 300 includes a block ring 855. Similarly to the fixing block 330 of the first embodiment, the block ring 855 fixes the magnet unit 316 to the magnet holder 320. Similarly to the fixing block 330, the block ring 855 has the block tapered surface 330a, the block receiving surface 330b, the block inner end surface 331, the block outer end surface 332, and the block hole 333. On the other hand, the block ring 855 does not have the block facing surface 330c.

The block ring 855 extends in the circumferential direction CD to span multiple magnet units 316. The block ring 855 is formed in an annular shape. The block ring 855 spans all the magnet units 316. The block ring 855 has such a size and a shape that all the fixing blocks 330 of the first embodiment are integrated. The block ring 855 corresponds to the fixing member and the collection member.

As in the first embodiment described above, the block ring 855 is fixed to the magnet holder 320 by the magnet fixing tool 335. For example, the block ring 855 is fixed to the magnet holder 320 by the multiple magnet fixing tools 335. The multiple block holes 333 are formed in the block ring 855.

According to the present embodiment, the block ring 855 is provided to span multiple magnet units 316, and fixes the multiple magnet units 316 to the magnet holder 320. In the configuration, the number of the block rings 855 can be reduced relative to the number of the magnet units 316. That is, the number of the block rings 855 can be reduced to one. The number of the magnet fixing tools 335 can be reduced according to the number of the block rings 855. Therefore, as in the thirteenth embodiment described above, the workload when manufacturing the rotor 300, the weight of the rotor 300, and the like can be reduced.

### <Configuration Group H>

### <Fifteenth Embodiment>

In the first embodiment described above, the grommet 255 includes the outer grommet portion 258. Meanwhile, in a fifteenth embodiment, the grommet 255 does not include the outer grommet portion 258. Configurations, operations, and effects not particularly described in the fifteenth embodiment are the same as those in the first embodiment described above. In the fifteenth embodiment, differences from the first embodiment described above will be mainly described.

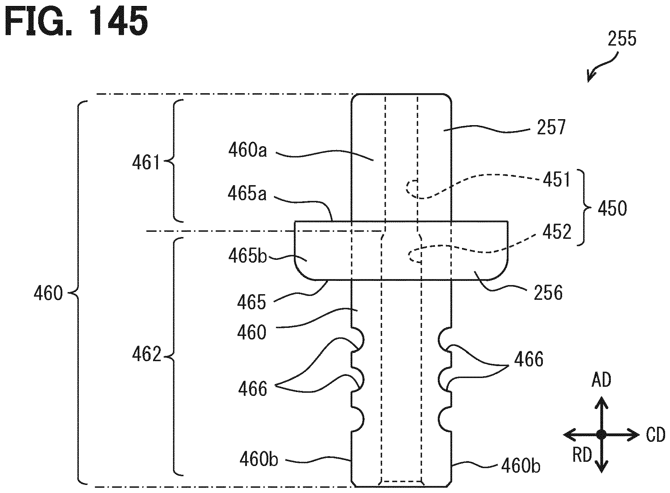

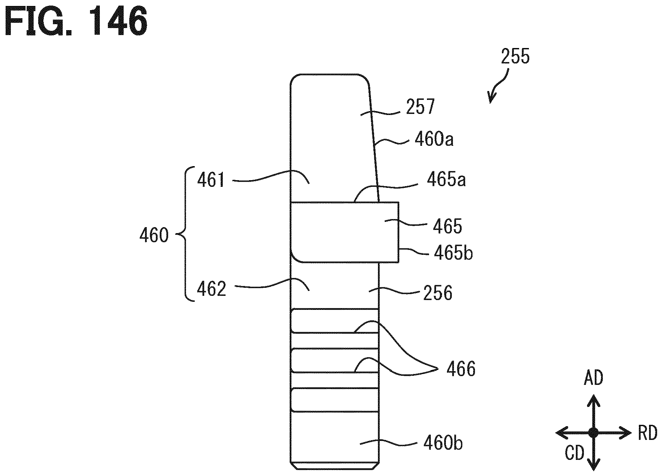

As shown in FIGS. 145 and 146, in the grommet 255, the outer grommet portion 258 is not provided. In the present embodiment, in the grommet 255, the exposed portion 255b does not include the outer grommet portion 258. In the present embodiment, the inner grommet portion 257 is in a state of being overlapped with the motor inner peripheral surface 70b.

In the configuration in which the grommet 255 includes the outer grommet portion 258, the outer grommet portion 258 may have any shape. For example, an extension dimension of the outer grommet portion 258 from the grommet rib 465 in the axial direction AD may be smaller than that of the inner grommet portion 257. A width dimension of the outer grommet portion 258 in the circumferential direction CD may be smaller than that of the inner grommet portion 257.

### <Configuration Group I>

### <Sixteenth Embodiment>

In the first embodiment described above, the rim 344 and the shaft main body 341 are integrally molded. Meanwhile, in a sixteenth embodiment, the rim 344 is retrofitted and fixed to the shaft main body 341. Configurations, operations, and effects not particularly described in the sixteenth embodiment are the same as those in the first embodiment described above. In the sixteenth embodiment, differences from the first embodiment described above will be mainly described.

In the shaft 340, the shaft flange 342 is retrofitted and fixed to the shaft main body 341. Accordingly, a configuration in which the rim 344 is retrofitted and fixed to the shaft main body 341 is implemented. The shaft main body 341 and the shaft flange 342 are separate members, and are fixed by welding, bolts, or the like.

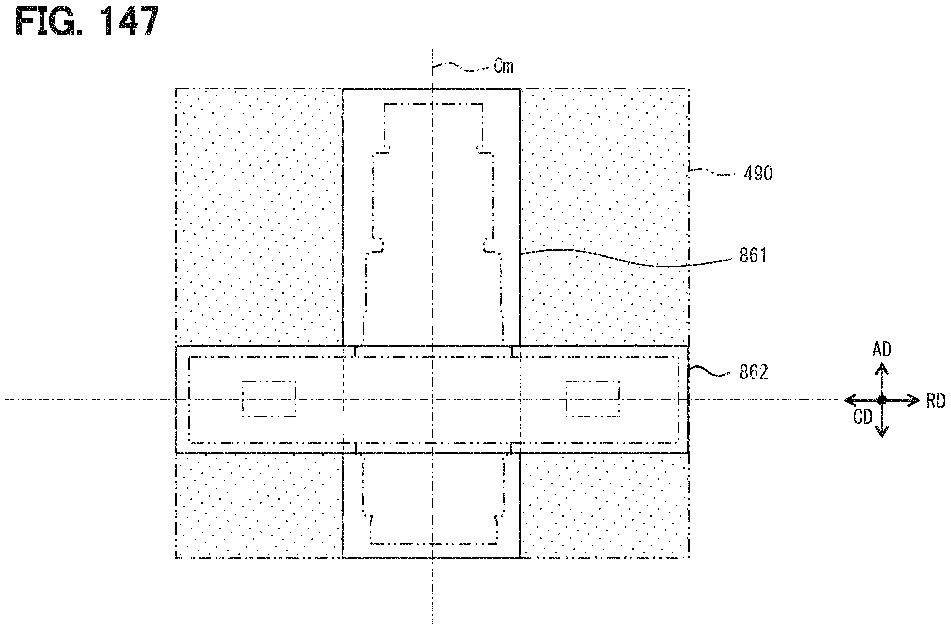

In the process of manufacturing the shaft 340, the operator prepares a first base material 861 and a second base material 862 as shown in FIG. 147 as a preparation process. The first base material 861 is a base material for manufacturing the shaft main body 341. The first base material 861 is, for example, a columnar member extending in the axial direction AD. The second base material 862 is a base material for manufacturing the shaft flange 342. The second base material 862 is, for example, a plate-shaped member extending in the direction orthogonal to the axial direction AD. The first base material 861 and the second base material 862 are, for example, the same material. The first base material 861 and the second base material 862 may be different materials. In FIG. 147, the first base material 861 and the second base material 862 are illustrated to be overlapped, but the first base material 861 and the second base material 862 are independent and separate members.

After the preparation process, the operator machines shapes of the first base material 861 and the second base material 862 in a machining process. The operator performs cutting processing on the first base material 861 to manufacture the shaft main body 341 from the first base material 861. The operator performs cutting processing on the second base material 862 to manufacture the shaft flange 342 from the second base material 862.

According to the present embodiment, the rim 344 is retrofitted and fixed to the shaft main body 341. In the configuration, the rim 344 and the shaft main body 341 can be manufactured from different base materials. Therefore, when the shaft 340 is manufactured, by separately preparing base materials having shapes respectively suitable for the rim 344 and the shaft main body 341, a yield of the material tends to be improved. Therefore, a material cost for manufacturing the shaft 340 can be reduced.

In the present embodiment, the first base material 861 may have a shape and a size that match the shaft main body 341. The second base material 862 may have a shape and a size that match the shaft flange 342. As compared with the configuration in which the shaft base material 490 is used to manufacture the shaft 340 as in the first embodiment described above, in the present embodiment, for example, there is no need to use a dot-hatched portion shown in FIG. 147 as the base material. Therefore, a material cost of the base material can be reduced by an amount corresponding to the hatched portion.

### <Configuration Group J>

### <Seventeenth Embodiment>

In a seventeenth embodiment, positional deviation of the stator 200 with respect to the motor housing 70 is restricted by a part of the motor housing 70. Configurations, operations, and effects not particularly described in the seventeenth embodiment are the same as those in the first embodiment described above. In the seventeenth embodiment, differences from the first embodiment described above will be mainly described.

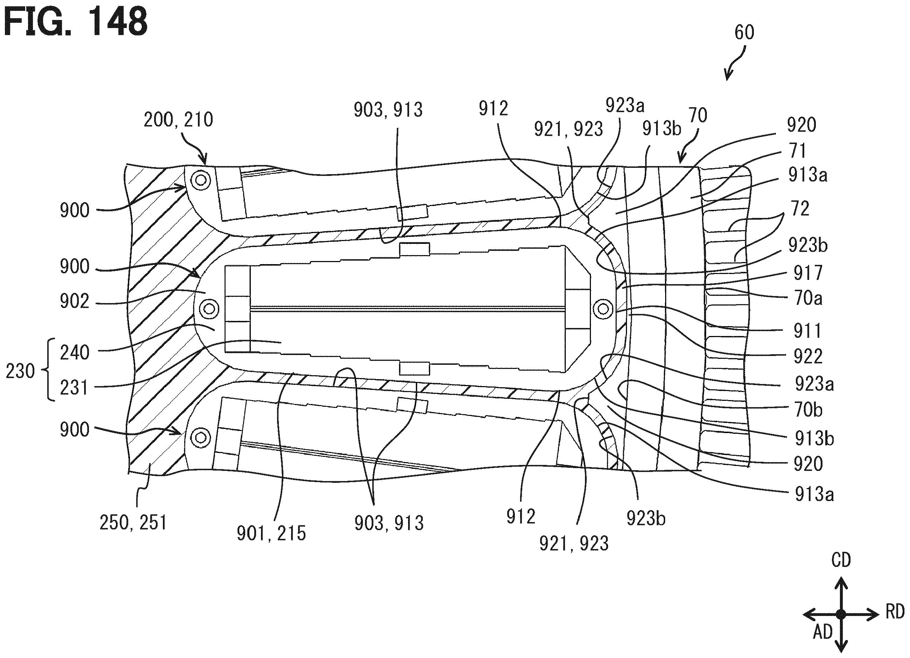

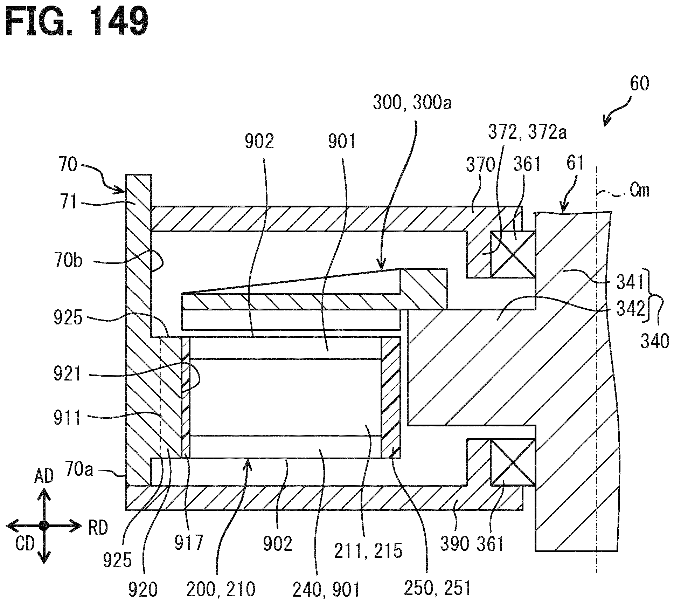

As shown in FIGS. 148 and 149, the stator 200 includes coil bodies 900. Each of the coil bodies 900 is provided in the coil unit 210. The coil body 900 includes the coil portion 215 and the core unit 230. Multiple coil bodies 900 are arranged along the motor inner peripheral surface 70b in the circumferential direction CD. The multiple coil bodies 900 are arranged in the circumferential direction CD, and thus the coils 211 of multiple phases are arranged in the circumferential direction CD. In FIG. 149, illustrations of the electric power lead-out wire 212, the second rotor 300b, and the like are omitted.

The coil body 900 has coil body end surfaces 902 and a coil body outer peripheral surface 903. The coil body end surfaces 902 and the coil body outer peripheral surface 903 are included in an outer surface of the coil body 900. The coil body end surfaces 902 are end surfaces of the coil body 900 and are arranged in pair in the axial direction AD. The coil body end surface 902 includes an end surface of the core 231 and an end surface of the bobbin 240. The pair of coil body end surfaces 902 correspond to a pair of end surfaces.

The coil body outer peripheral surface 903 is an outer peripheral surface of the coil body 900 and extends in a winding direction of coil portion 215. The coil body outer peripheral surface 903 is provided between the pair of coil body end surfaces 902. The coil body outer peripheral surface 903 extends in the axial direction AD to span the pair of coil body end surfaces 902. The coil body outer peripheral surface 903 includes a coil outer peripheral surface 913 and an outer peripheral surface of the bobbin 240.

The coil body 900 has core teeth 901. A pair of core teeth 901 are arranged in the axial direction AD with the coil portion 215 interposed therebetween. In the axial direction AD, the coil portion 215 is provided between the pair of core teeth 901. The core teeth 901 extend in the direction orthogonal to the axial direction AD. The core tooth 901 forms the coil body end surface 902. The core tooth 901 includes a part of the core unit 230. The core tooth 901 includes, for example, the core flange 233 and the bobbin flange 242.

The coil portion 215 has the coil outer peripheral surface 913. The coil outer peripheral surface 913 is an outer peripheral surface of the coil portion 215 and extends in a winding direction of the coil portion 215. The coil outer peripheral surface 913 is included in the coil body outer peripheral surface 903. The coil outer peripheral surface 913 extends in the axial direction AD, and is in a state of spanning the pair of core teeth 901. The coil outer peripheral surface 913 and the end surface of the core tooth 901 are arranged to be continuous in the axial direction AD. Therefore, in FIG. 148, a reference numeral of the coil portion 215 is illustrated assuming that the coil portion 215 is located at a position overlapped with the core tooth 901. The coil outer peripheral surface 913 corresponds to an outer peripheral surface.

The coil portion 215 includes an outer peripheral ridge portion 911 and outer peripheral base portions 912. The outer peripheral ridge portion 911 is a radially outermost portion of the coil portion 215. The outer peripheral base portion 912 is a circumferentially outermost portion of the coil portion 215. A pair of the outer peripheral base portions 912 are arranged in the circumferential direction CD.

The coil outer peripheral surface 913 extends along the motor inner peripheral surface 70b in the axial direction AD. A portion of the coil outer peripheral surface 913 between the pair of outer peripheral base portions 912 is crooked to bulge toward the radially outer side. The coil outer peripheral surface 913 includes a first curved surface 913a and a second curved surface 913b. The first curved surface 913a and the second curved surface 913b are arranged in the circumferential direction CD. The first curved surface 913a and the second curved surface 913b are curved to bulge toward the radially outer side. The first curved surface 913a spans the outer peripheral ridge portion 911 and one of the pair of outer peripheral base portions 912. The second curved surface 913b spans the outer peripheral ridge portion 911 and the other outer peripheral base portions 912. The first curved surface 913a is curved to bulge toward one side in the circumferential direction CD, and the second curved surface 913b is curved to bulge toward the other side in the circumferential direction CD.

As described above, outer peripheral surfaces of the core teeth 901 are arranged continuously with the coil outer peripheral surface 913 in the axial direction AD. Therefore, the core tooth 901 has portions corresponding to the outer peripheral ridge portion 911 and the outer peripheral base portions 912. The outer peripheral surface of the core tooth 901 includes a portion corresponding to the first curved surface 913a and a portion corresponding to the second curved surface 913b.

The motor housing 70 includes displacement restriction portions 920. The displacement restriction portion 920 protrudes from the motor inner peripheral surface 70b to the radially inner side. The displacement restriction portion 920 extends along the motor inner peripheral surface 70b in the axial direction AD. The displacement restriction portions 920 are arranged along the motor inner peripheral surface 70b in the circumferential direction CD. The displacement restriction portion 920 is integrally molded with the housing main body 71 and corresponds to an integral restriction portion. The motor housing 70 is conductive. In the motor housing 70, both the housing main body 71 and the displacement restriction portion 920 are conductive. In the present embodiment, the displacement restriction portion 920 is provided in the motor housing 70 instead of the stator holding portion 171.

The displacement restriction portion 920 includes a restriction ridge portion 921 and a restriction base portion 922. The restriction ridge portion 921 is a radially innermost portion of the displacement restriction portion 920. The restriction base portion 922 is a radially outermost portion of the displacement restriction portion 920. In the circumferential direction CD, a width dimension of the restriction ridge portion 921 is smaller than a width dimension of the displacement restriction portion 920. In the displacement restriction portion 920, a width dimension in the circumferential direction CD gradually decreases toward the radially inner side. A pair of restriction base portions 922 are arranged in the circumferential direction CD with the restriction ridge portion 921 interposed therebetween. The restriction ridge portion 921 is provided in the middle of the pair of restriction base portions 922 in the circumferential direction CD. The restriction ridge portion 921 and the restriction base portions 922 extend along the motor inner peripheral surface 70b in the axial direction AD.

The displacement restriction portion 920 is provided at a position in the circumferential direction CD to straddle two coil bodies 900 adjacent to each other in the circumferential direction CD. The two coil bodies 900 adjacent to each other in the circumferential direction CD may be simply referred to as "two coil bodies 900". The displacement restriction portion 920 extends toward the radially inner side to enter between two coil bodies 900. In the displacement restriction portion 920, the restriction ridge portion 921 is located at a position between two coil bodies 900. The restriction ridge portion 921 is located at a position aligned with the curved surfaces 913a and 913b in the circumferential direction CD with respect to two coil bodies 900. The restriction ridge portion 921 is located at a position between the outer peripheral ridge portion 911 and the outer peripheral base portion 912 in the radial direction RD with respect to two coil bodies 900. In the displacement restriction portion 920, the restriction base portion 922 is located at a position aligned with the outer peripheral ridge portion 911 in the radial direction RD.

The displacement restriction portion 920 restricts displacement of the coil portion 215 relative to the motor housing 70. The displacement restriction portion 920 is in a state of being caught by the coil portion 215, and thus restricts movement of the coil portion 215 in the circumferential direction CD relative to the displacement restriction portion 920. The displacement restriction portion 920 corresponds to an electric machine restriction portion.

The displacement restriction portion 920 has a displacement restriction surface 923. The displacement restriction surface 923 is a radially inner surface in an outer surface of the displacement restriction portion 920. The displacement restriction surface 923 faces the radially inner side as a whole. The displacement restriction surface 923 extends along the motor inner peripheral surface 70b in the axial direction AD. The displacement restriction surface 923 corresponds to a restriction surface.

The displacement restriction surface 923 includes a first restriction surface 923a and a second restriction surface 923b. The first restriction surface 923a and the second restriction surface 923b are arranged in the circumferential direction CD. The first restriction surface 923a and the second restriction surface 923b are crooked to be recessed toward the radially outer side. The first restriction surface 923a spans the restriction ridge portion 921 and one of the pair of restriction base portions 922. The first restriction surface 923a is provided at a position aligned with the second curved surface 913b of the coil portion 215 in the radial direction RD. The first restriction surface 923a faces the second curved surface 913b. The first restriction surface 923a is curved to extend along the second curved surface 913b. A gap between the first restriction surface 923a and the second curved surface 913b is substantially uniform in both the circumferential direction CD and the axial direction AD. A size of the gap between the first restriction surface 923a and the second curved surface 913b is, for example, a separation distance between the first restriction surface 923a and the second curved surface 913b in a direction orthogonal to the first restriction surface 923a.

The second restriction surface 923b spans the restriction ridge portion 921 and the restriction base portion 922, which is on a side opposite to the first restriction surface 923a, in the pair of restriction base portions 922. The second restriction surface 923b is provided at a position aligned with the first curved surface 913a of the coil portion 215 in the radial direction RD. The second restriction surface 923b faces the first curved surface 913a. The second restriction surface 923b is curved to extend along the first curved surface 913a. A gap between the second restriction surface 923b and the first curved surface 913a is substantially uniform in both the circumferential direction CD and the axial direction AD. A size of the gap between the second restriction surface 923b and the first curved surface 913a is, for example, a separation distance between the second restriction surface 923b and the first curved surface 913a in a direction orthogonal to the second restriction surface 923b.

The displacement restriction surface 923 is in a state of being caught by the coil outer peripheral surface 913, and thus the displacement restriction portion 920 restricts relative displacement of the coil portion 215 with respect to the motor housing 70. For example, the first restriction surface 923a is in a state of being caught by at least a part of the second curved surface 913b, and thus restricts displacement of the coil portion 215. The second restriction surface 923b is in a state of being caught by at least a part of the first curved surface 913a, and thus restricts the displacement of the coil portion 215.

The multiple displacement restriction portions 920 are integrated. Two displacement restriction portions 920 adjacent to each other in the circumferential direction CD are connected to each other. In two displacement restriction portions 920 adjacent to each other in the circumferential direction CD, the restriction base portions 922 thereof are connected to each other. The multiple displacement restriction portions 920 extend, as a whole, in an annular shape along the motor inner peripheral surface 70b in the circumferential direction CD.

The displacement restriction portion 920 has restriction end surfaces 925. The restriction end surfaces 925 are end surfaces of the displacement restriction portion 920, and are arranged in a pair in the axial direction AD. The restriction end surfaces 925 are included in the outer surface of the displacement restriction portion 920. The restriction end surface 925 extends in the direction orthogonal to the axial direction AD.

As shown in FIG. 149, the displacement restriction portion 920 extends in the axial direction AD to span the pair of coil body end surfaces 902. In the axial direction AD, a length dimension of the displacement restriction portion 920 is substantially equal to a length dimension between the coil body end surfaces 902. The pair of restriction end surfaces 925 are provided at positions aligned with the pair of coil body end surfaces 902 in the radial direction RD. The displacement restriction portion 920 extends in the axial direction AD to span the pair of core teeth 901. The displacement restriction portion 920 extends to protrude further toward the core tooth 901 than the coil portion 215 protrudes in the axial direction AD.

As shown in FIGS. 148 and 149, a part of the coil protection portion 250 is in a state of entering between the displacement restriction portion 920 and the coil body 900. The coil protection portion 250 is made of a resin material containing fillers. The resin material for forming the coil protection portion 250 is, for example, a thermosetting resin such as an epoxy-based resin. The coil protection portion 250 is made of a resin material so as to have a high electrical insulation property, a high strength, and a high thermal conduction property. Examples of the fillers in the coil protection portion 250 include alumina. The coil protection portion 250 is in close contact with both the coil body 900 and the motor housing 70. Accordingly, the coil protection portion 250 fixes the coil body 900 to the motor housing 70.

The coil protection portion 250 includes a protection outer peripheral portion 917. The protection outer peripheral portion 917 is a portion of the coil protection portion 250 which enters between the displacement restriction portion 920 and the coil body 900. The protection outer peripheral portion 917 is in a state of entering a gap between the displacement restriction surface 923 and the coil outer peripheral surface 913. The protection outer peripheral portion 917 is provided in the entire gap between the displacement restriction surface 923 and the coil outer peripheral surface 913. The protection outer peripheral portion 917 is in a state of being in close contact with the displacement restriction surface 923 and the coil outer peripheral surface 913, and fixing the displacement restriction portion 920 and the coil body 900.

The protection outer peripheral portion 917 extends from the protection main body 251. The protection outer peripheral portion 917 extends along the displacement restriction surface 923 in the circumferential direction CD. The protection outer peripheral portion 917 is in a state of spanning multiple displacement restriction portions 920. The protection outer peripheral portion 917 extends along the displacement restriction surface 923 in the axial direction AD. Similarly to the displacement restriction portion 920, the protection outer peripheral portion 917 is in a state of spanning the pair of coil body end surfaces 902. The coil body 900, the displacement restriction portion 920, and the protection outer peripheral portion 917 are arranged in the radial direction RD.

The protection outer peripheral portion 917 has the thermal conduction property as a part of the coil protection portion 250. The protection outer peripheral portion 917 releases heat transferred from the coil body 900 to the displacement restriction portion 920. The protection outer peripheral portion 917 corresponds to a gap heat radiation portion. A thickness of the protection outer peripheral portion 917 is substantially uniform in both the circumferential direction CD and the axial direction AD. The thickness of the protection outer peripheral portion 917 is, for example, substantially the same as the size of the gap between the displacement restriction surface 923 and the coil outer peripheral surface 913 in the direction orthogonal to the displacement restriction surface 923. Therefore, a mode in which the heat is transferred from the coil body 900 to the motor housing 70 via the protection outer peripheral portion 917 is easily made uniform in the entire circumferential direction CD. Therefore, a heat radiation effect of the protection outer peripheral portion 917 is less likely to vary in the circumferential direction CD.

Next, a process of manufacturing the motor housing 70 in the method of manufacturing the motor device 60 will be described. The operator molds the motor housing 70 by integrally forming the housing main body 71 and the displacement restriction portion 920. The operator manufactures the motor housing 70 by, for example, cutting a base material. The operator prepares the base material as a preparation process. The base material is a metal material such as aluminum. After the preparation process, the operator manufactures the motor housing 70 from the base material by cutting the base material in a machining process. The motor housing 70 may be manufactured by casting.

According to the present embodiment, the displacement restriction portion 920 extends from the housing main body 71 toward the radially inner side to enter between two coil portions 215 adjacent to each other in the circumferential direction CD. In the configuration, movement of the coil portion 215 in the circumferential direction CD relative to the motor housing 70 is restricted by hooking between the coil portion 215 and the displacement restriction portion 920. For example, the coil portion 215 and the displacement restriction portion 920 are in a state of being caught by each other via the protection outer peripheral portion 917. Therefore, the displacement restriction portion 920 can prevent the stator 200 from being displaced to rotate in the circumferential direction CD with respect to the motor housing 70.

Moreover, the displacement restriction portion 920 is in a state of approaching the coil portion 215 by extending toward the radially inner side. In the configuration, heat of the coil portion 215 is easily transferred to the displacement restriction portion 920. Therefore, the heat of the coil portion 215 is easily released to the outside via the motor housing 70. Therefore, the heat radiation effect of the motor device 60 can be improved while preventing the positional deviation of the stator 200 in the motor device 60.

In the motor device 60, the rotor 300 and the stator 200 are arranged in the axial direction AD, thereby achieving high output. For this reason, an external force generated in a direction in which the stator 200 is rotated in the circumferential direction CD as the rotor 300 is driven to rotate tends to be applied to the stator 200. Therefore, there is a concern that the stator 200 is displaced to rotate in the circumferential direction CD relative to the motor housing 70. Meanwhile, according to the present embodiment, since the displacement of the coil portion 215 in the circumferential direction CD is restricted by the displacement restriction portion 920 as described above, the displacement of the stator 200 can be reduced. In this way, it is effective to apply a configuration in which the displacement of the coil portion 215 is restricted by the displacement restriction portion 920 to the axial gap-type motor device 60.

According to the present embodiment, the protection outer peripheral portion 917 is provided in a gap between the coil portion 215 and the displacement restriction portion 920, and releases the heat from the coil portion 215 to the displacement restriction portion 920. Therefore, a heat transfer property from the coil portion 215 to the displacement restriction portion 920 can be enhanced by the protection outer peripheral portion 917. Therefore, the heat radiation effect of the motor housing 70 can be enhanced by the displacement restriction portion 920 and the protection outer peripheral portion 917.

According to the present embodiment, the protection outer peripheral portion 917 is in close contact with the coil portion 215 and the displacement restriction portion 920. In the configuration, both a heat transfer property from the coil portion 215 to the protection outer peripheral portion 917 and a heat transfer property from the protection outer peripheral portion 917 to the displacement restriction portion 920 can be improved. In the configuration, displacement of the coil portion 215 relative to the displacement restriction portion 920 can be restricted by the protection outer peripheral portion 917. Therefore, both a heat radiation effect from the coil portion 215 to the displacement restriction portion 920 and a positional deviation prevention effect of the coil portion 215 with respect to the displacement restriction portion 920 can be enhanced by the protection outer peripheral portion 917.

According to the present embodiment, the displacement restriction surface 923 extends to overlap with the coil outer peripheral surface 913. In the configuration, the gap between the displacement restriction surface 923 and the coil outer peripheral surface 913 can be made as small as possible. Therefore, the heat is easily transferred from the coil outer peripheral surface 913 to the displacement restriction surface 923. Therefore, since the displacement restriction surface 923 and the coil outer peripheral surface 913 are arranged to overlap with each other, the heat radiation effect of the motor device 60 can be enhanced.

According to the present embodiment, the displacement restriction portion 920 extends in the axial direction AD to span the pair of coil body end surfaces 902. In the configuration, the heat released from the entire coil body 900 in the axial direction AD is easily transferred to the entire displacement restriction portion 920. Therefore, the effect of releasing the heat of the coil body 900 to the outside via the motor housing 70 can be enhanced by the displacement restriction portion 920.

According to the present embodiment, the displacement restriction portion 920 extends in the axial direction AD to span the pair of core teeth 901. In the configuration, heat released from the pair of core teeth 901 is easily transferred to the displacement restriction portion 920. Therefore, the effect of releasing the heat of the core teeth 901 to the outside via the motor housing 70 can be enhanced by the displacement restriction portion 920.

According to the present embodiment, in the motor housing 70, the housing main body 71 and the displacement restriction portion 920 are integrally formed. In the configuration, the displacement restriction portion 920 is not displaced relative to the housing main body 71. Therefore, the displacement restriction portion 920 can reliably prevent the coil portion 215 from being displaced relative to the housing main body 71.

### <Eighteenth Embodiment>

In the seventeenth embodiment described above, the electric machine outer peripheral wall and the displacement restriction portion are integrally formed in the electric machine housing. Meanwhile, in an eighteenth embodiment, the displacement restriction portion is retrofitted to the electric machine outer peripheral wall in the electric machine housing. Configurations, operations, and effects not particularly described in the eighteenth embodiment are the same as those in the seventeenth embodiment described above. In the eighteenth embodiment, differences from the seventeenth embodiment described above will be mainly described.

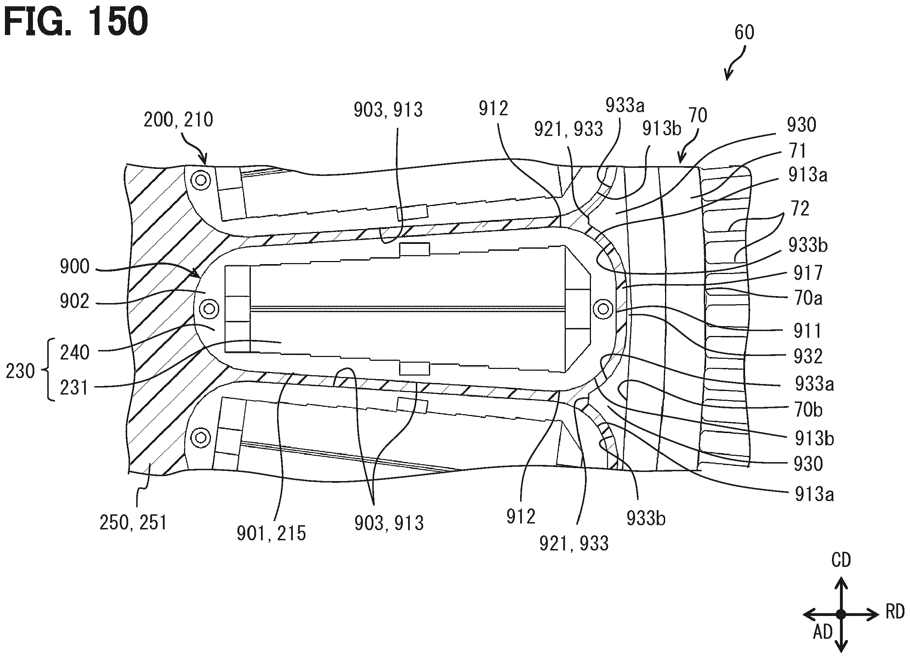

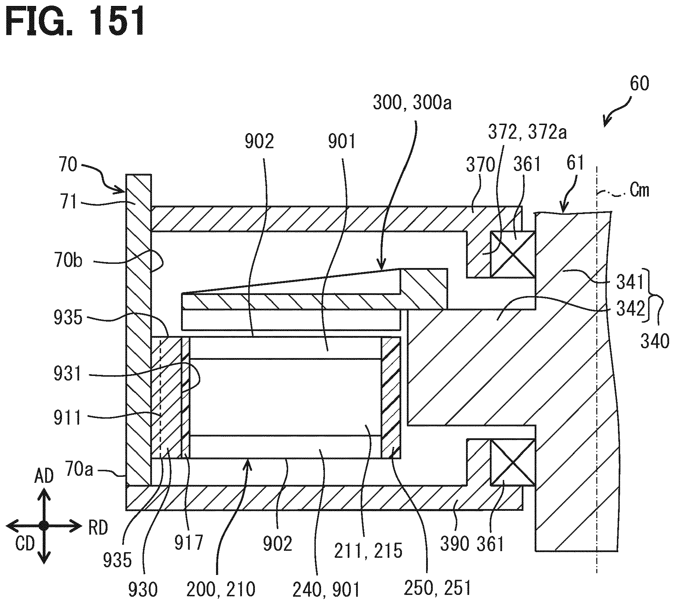

As shown in FIGS. 150 and 151, the motor housing 70 includes a retrofit restriction portion 930 instead of the displacement restriction portion 920. The retrofit restriction portion 930 is retrofitted to the housing main body 71. The housing main body 71 and the retrofit restriction portion 930 are separate members independent of each other, and are fixed by a fixing tool such as a screw. The retrofit restriction portion 930 is fixed to the housing main body 71 so as not to be displaced relative to the housing main body 71. For example, the retrofit restriction portion 930 and the housing main body 71 are configured to be engaged with each other. In the configuration, relative displacement of the retrofit restriction portion 930 with respect to the housing main body 71 is restricted by the engagement portion.

A thermal conduction property of the retrofit restriction portion 930 is lower than the thermal conduction property of the housing main body 71. For example, thermal conductivity of the retrofit restriction portion 930 is lower than thermal conductivity of the housing main body 71. The thermal conduction property of a material for forming the retrofit restriction portion 930 is lower than the thermal conduction property of the material for forming the housing main body 71. An electrical insulation property of the retrofit restriction portion 930 is higher than an electrical insulation property of the housing main body 71. For example, an electrical insulation property of the material for forming the retrofit restriction portion 930 is higher than an electrical insulation property of the material for forming the housing main body 71. In the motor housing 70, the housing main body 71 is made of, for example, aluminum, and the retrofit restriction portion 930 is made of, for example, alumina.

The retrofit restriction portion 930 is different from the displacement restriction portion 920 in that the retrofit restriction portion 930 is retrofitted to the housing main body 71, and has a configuration similar to that of the displacement restriction portion 920 in terms of shape and the like. The retrofit restriction portion 930 includes a restriction ridge portion 931, a restriction base portion 932, a retrofit restriction surface 933, and a restriction end surface 935. The retrofit restriction surface 933 has a first restriction surface 933a and a second restriction surface 933b. The restriction ridge portion 931, the restriction base portion 932, the retrofit restriction surface 933, and the restriction end surface 935 have configurations similar to those of the restriction ridge portion 921, the restriction base portion 922, the displacement restriction surface 923, and the restriction end surface 925 of the seventeenth embodiment described above. The first restriction surface 933a and the second restriction surface 933b have configurations similar to those of the first restriction surface 923a and the second restriction surface 923b of the seventeenth embodiment described above. The retrofit restriction portion 930 corresponds to the electric machine restriction portion, and the retrofit restriction surface 933 corresponds to the restriction surface.

According to the present embodiment, the retrofit restriction portion 930 extends from the housing main body 71 toward the radially inner side to enter between two coil portions 215 adjacent to each other in the circumferential direction CD. In the configuration, movement of the coil portion 215 in the circumferential direction CD relative to the motor housing 70 is restricted by hooking between the coil portion 215 and the retrofit restriction portion 930. For example, the coil portion 215 and the retrofit restriction portion 930 are in a state of being caught by each other via the protection outer peripheral portion 917. Therefore, the retrofit restriction portion 930 can prevent the stator 200 from being displaced to rotate in the circumferential direction CD with respect to the motor housing 70.

Moreover, the retrofit restriction portion 930 is disposed at a position close to the coil portion 215 by extending toward the radially inner side. In the configuration, the heat of the coil portion 215 is easily transferred to the retrofit restriction portion 930. Therefore, a configuration in which the heat of the coil portion 215 is easily released to the outside via the motor housing 70 is implemented. Therefore, as in the seventeenth embodiment, the heat radiation effect of the motor device 60 can be enhanced while preventing the positional deviation of the stator 200 in the motor device 60.

According to the present embodiment, the protection outer peripheral portion 917 is provided in a gap between the coil portion 215 and the retrofit restriction portion 930, and releases the heat from the coil portion 215 to the retrofit restriction portion 930. Therefore, a heat transfer property from the coil portion 215 to the retrofit restriction portion 930 can be enhanced by the protection outer peripheral portion 917. Therefore, the heat radiation effect of the motor housing 70 can be enhanced by the retrofit restriction portion 930 and the protection outer peripheral portion 917.

According to the present embodiment, the protection outer peripheral portion 917 is in close contact with the coil portion 215 and the retrofit restriction portion 930. In the configuration, both the heat transfer property from the coil portion 215 to the protection outer peripheral portion 917 and a heat transfer property from the protection outer peripheral portion 917 to the retrofit restriction portion 930 can be improved. In the configuration, displacement of the coil portion 215 relative to the retrofit restriction portion 930 can be restricted by the protection outer peripheral portion 917. Therefore, both a heat radiation effect from the coil portion 215 to the retrofit restriction portion 930 and a positional deviation prevention effect of the coil portion 215 with respect to the retrofit restriction portion 930 can be enhanced by the protection outer peripheral portion 917.

According to the present embodiment, the retrofit restriction surface 933 extends to overlap with the coil outer peripheral surface 913. In the configuration, a gap between the retrofit restriction surface 933 and the coil outer peripheral surface 913 can be made as small as possible. Therefore, the heat is easily transferred from the coil outer peripheral surface 913 to the retrofit restriction surface 933. Therefore, since the retrofit restriction surface 933 and the coil outer peripheral surface 913 are disposed to overlap with each other, the heat radiation effect of the motor device 60 can be enhanced.

According to the present embodiment, the retrofit restriction portion 930 extends in the axial direction AD to span the pair of coil body end surfaces 902. In the configuration, the heat released from the entire coil body 900 in the axial direction AD is easily transferred to the entire retrofit restriction portion 930. Therefore, the effect of releasing the heat of the coil body 900 to the outside via the motor housing 70 can be enhanced by the retrofit restriction portion 930.

According to the present embodiment, the retrofit restriction portion 930 extends in the axial direction AD to span the pair of core teeth 901. In the configuration, the heat released from the pair of core teeth 901 is easily transferred to the retrofit restriction portion 930. Therefore, the effect of releasing the heat of the core teeth 901 to the outside via the motor housing 70 can be enhanced by the retrofit restriction portion 930.

According to the present embodiment, in the motor housing 70, the retrofit restriction portion 930 is retrofitted and fixed to the housing main body 71. In the configuration, the retrofit restriction portion 930 can be made of a material different from that of the housing main body 71. That is, a degree of freedom in selecting the material for forming the retrofit restriction portion 930 can be increased. Therefore, even if the degree of freedom in selecting the material for forming the housing main body 71 is limited by a reason specific to the housing main body 71, it is possible to avoid that the degree of freedom in selecting the material for form ing the retrofit restriction portion 930 is limited by a reason specific to the housing main body 71. Therefore, a positional deviation effect of the stator 200 and the heat radiation effect of the motor device 60 can be further enhanced by characteristics of the material for forming the retrofit restriction portion 930.

According to the present embodiment, the electrical insulation property of the retrofit restriction portion 930 is higher than the electrical insulation property of the housing main body 71. Therefore, while the housing main body 71 is electrically ground, the electrical insulation of the stator 200 with respect to the housing main body 71 can be secured by the retrofit restriction portion 930.

In the present embodiment, there is a concern that the larger a cross-sectional area of an electrically conductive portion of the motor housing 70, the greater an eddy current loss generated in the motor housing 70. For example, in a configuration which is different from that of the present embodiment and in which both the housing main body 71 and the retrofit restriction portion 930 are conductive, a cross-sectional area of the electrically conductive portion of the motor housing 70 is large, so that an eddy current loss tends to be large. Meanwhile, according to the present embodiment, the housing main body 71 is conductive, whereas the retrofit restriction portion 930 has the electrical insulation property. Therefore, the cross-sectional area of the electrically conductive portion of the motor housing 70 is reduced by an area of the retrofit restriction portion 930. Therefore, the eddy current loss generated in the motor housing 70 can be reduced.

### <Nineteenth Embodiment>

In the seventeenth embodiment described above, the motor device 60 includes the coil protection portion 250. Meanwhile, in a nineteenth embodiment, the motor device 60 does not include the coil protection portion 250. Configurations, operations, and effects not particularly described in the nineteenth embodiment are the same as those in the seventeenth embodiment described above. In the nineteenth embodiment, differences from the seventeenth embodiment described above will be mainly described.

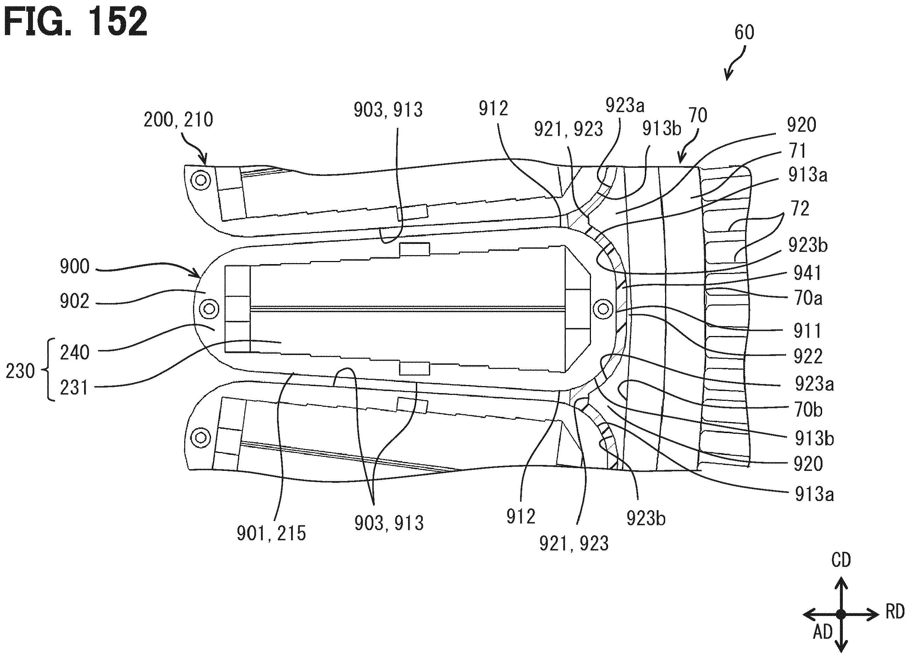

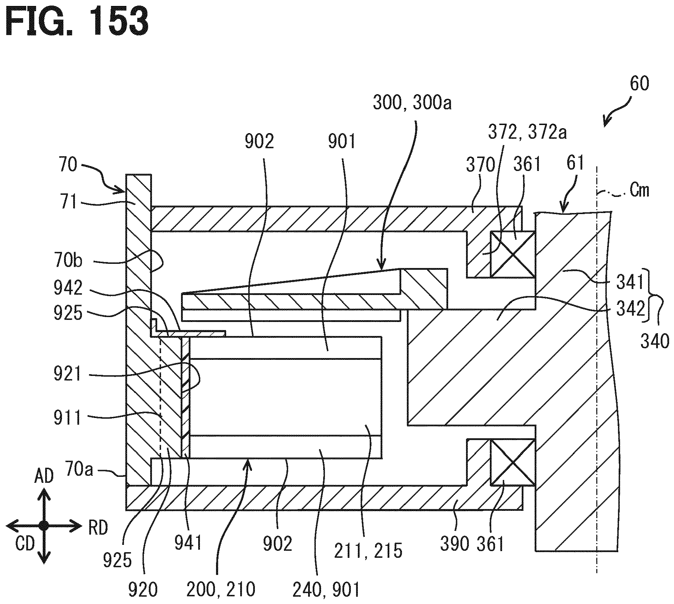

As shown in FIGS. 152 and 153, the motor device 60 includes an outer peripheral heat radiation portion 941 instead of the coil protection portion 250. Similarly to the coil protection portion 250, the outer peripheral heat radiation portion 941 is made of a resin material or the like. Similarly to the protection outer peripheral portion 917 of the seventeenth embodiment described above, the outer peripheral heat radiation portion 941 enters between the displacement restriction portion 920 and the coil body 900. The outer peripheral heat radiation portion 941 is provided, for example, in the entire gap between the displacement restriction surface 923 and the coil outer peripheral surface 913. The outer peripheral heat radiation portion 941 is in a state of being in close contact with the displacement restriction surface 923 and the coil outer peripheral surface 913, and fixing the displacement restriction portion 920 and the coil body 900. The outer peripheral heat radiation portion 941 corresponds to the gap heat radiation portion.

The outer peripheral heat radiation portion 941 extends along the displacement restriction surface 923 in the circumferential direction CD. The outer peripheral heat radiation portion 941 is in a state of spanning multiple displacement restriction portions 920. The outer peripheral heat radiation portion 941 extends along the displacement restriction surface 923 in the axial direction AD. Similarly to the displacement restriction portion 920, the outer peripheral heat radiation portion 941 is in a state of spanning the pair of coil body end surfaces 902. The coil body 900, the displacement restriction portion 920, and the outer peripheral heat radiation portion 941 are arranged in the radial direction RD.

The outer peripheral heat radiation portion 941 has a thermal conduction property as a part of the coil protection portion 250. The outer peripheral heat radiation portion 941 releases the heat transferred from the coil body 900 to the displacement restriction portion 920. The outer peripheral heat radiation portion 941 corresponds to the gap heat radiation portion. A thickness of the outer peripheral heat radiation portion 941 is substantially uniform in both the circumferential direction CD and the axial direction AD. The thickness of the outer peripheral heat radiation portion 941 is, for example, substantially the same as the size of the gap between the displacement restriction surface 923 and the coil outer peripheral surface 913 in the direction orthogonal to the displacement restriction surface 923. Therefore, a mode in which the heat is transferred from the coil body 900 to the motor housing 70 via the outer peripheral heat radiation portion 941 is easily made uniform in the entire circumferential direction CD. Therefore, the heat radiation effect of the outer peripheral heat radiation portion 941 is less likely to vary in the circumferential direction CD.

The outer peripheral heat radiation portion 941 has the thermal conduction property, and the heat from the coil portion 215 is easily transferred. The gap heat radiation portion has thermal conductivity higher than air, for example. The outer peripheral heat radiation portion 941 is formed by, for example, a heat radiation sheet. The heat radiation sheet is a member having a thermal conduction property and formed in a sheet shape. The outer peripheral heat radiation portion 941 has an electric insulation property.

As shown in FIG. 153, the motor device 60 includes coil support portions 942. Each of the coil support portions 942 supports the coil body 900. The coil support portion 942 is fixed to both the motor housing 70 and the coil body 900. The coil support portion 942 is in a state of connecting the coil body 900 and the motor housing 70. The coil support portion 942 is provided at a position aligned with the displacement restriction portion 920 in the axial direction AD, and is fixed to the housing main body 71 by a screw or the like. The coil support portion 942 extends toward the radially inner side to straddle the displacement restriction portion 920 and the coil body 900 in the axial direction AD. The coil support portion 942 is fixed to the coil body 900 by a screw or the like. The coil support portion 942 includes a portion overlapping with the core tooth 901, for example, and is fixed to the coil body 900 by fixing the portion to the core tooth 901. Multiple coil support portions 942 are arranged in the circumferential direction CD. In the motor device 60, at least one coil body 900 is fixed to the motor housing 70 by the coil support portion 942.

According to the present embodiment, the outer peripheral heat radiation portion 941 is provided in the gap between the coil portion 215 and the displacement restriction portion 920, and releases the heat from the coil portion 215 to the displacement restriction portion 920. Therefore, the heat transfer property from the coil portion 215 to the displacement restriction portion 920 can be enhanced by the outer peripheral heat radiation portion 941. Therefore, the heat radiation effect of the motor housing 70 can be enhanced by the displacement restriction portion 920 and the outer peripheral heat radiation portion 941.

### <Configuration Group L>

### <Twentieth Embodiment>

In the first embodiment described above, each of the inner peripheral tapered surface 316d and the outer peripheral tapered surface 316e in the magnet unit 316 is formed by multiple magnet pieces 505. Meanwhile, in a twentieth embodiment, each of the inner peripheral tapered surface 316d and the outer peripheral tapered surface 316e is formed by one magnet piece 505. Configurations, operations, and effects not particularly described in the twentieth embodiment are the same as those in the first embodiment described above. In the twentieth embodiment, differences from the first embodiment described above will be mainly described.

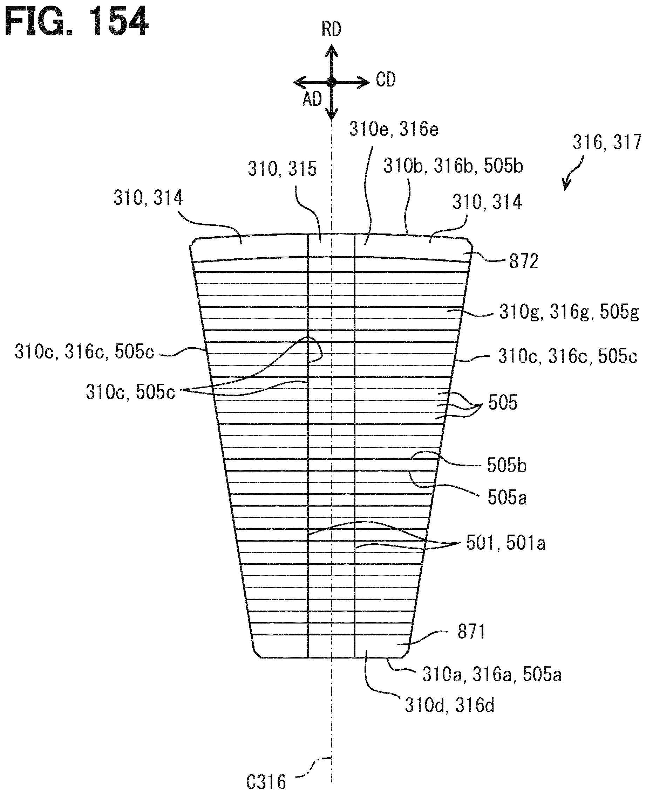

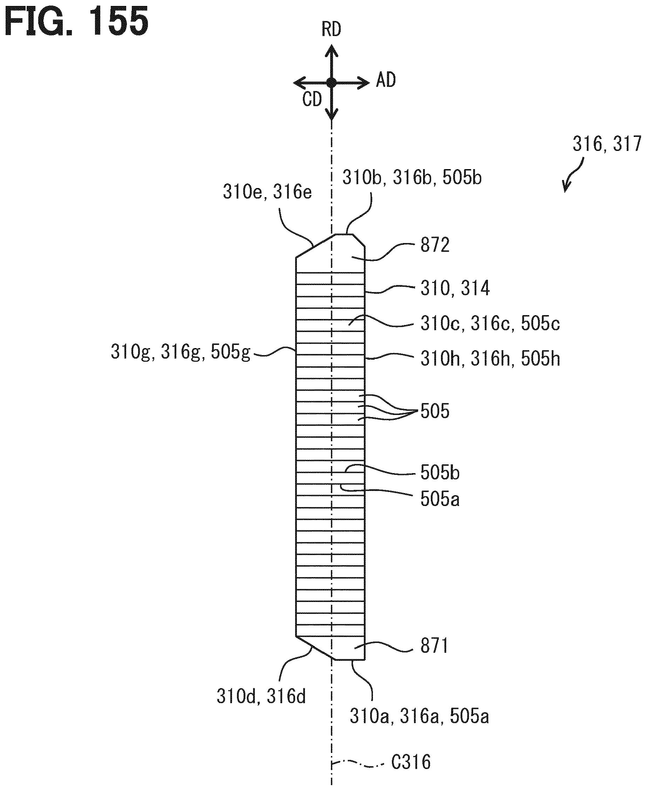

As shown in FIGS. 154 and 155, the magnet unit 316 includes an inner peripheral end piece 871 and an outer peripheral end piece 872. The inner peripheral end piece 871 and the outer peripheral end piece 872 are the magnet pieces 505. Each of the multiple magnet pieces 505 of the magnet unit 316 includes the inner peripheral end piece 871 and the outer peripheral end piece 872.

The inner peripheral end piece 871 is the magnet piece 505 disposed on the radially outermost side among the multiple magnet pieces 505. The inner peripheral end piece 871 corresponds to an outermost member. In the magnet unit 316, only the inner peripheral end piece 871 among the multiple magnet pieces 505 has the unit inner peripheral end 316a. That is, the inner peripheral tapered surface 316d is formed on only the inner peripheral end piece 871 among the multiple magnet pieces 505. The inner peripheral tapered surface 316d is formed on only one magnet piece 505 called the inner peripheral end piece 871.

The outer peripheral end piece 872 is the magnet piece 505 disposed on the radially innermost side among the multiple magnet pieces 505. The outer peripheral end piece 872 corresponds to an outermost member. In the magnet unit 316, only the outer peripheral end piece 872 among the multiple magnet pieces 505 has the unit outer peripheral end 316b. That is, the outer peripheral tapered surface 316e is formed on only the outer peripheral end piece 872 among the multiple magnet pieces 505. The outer peripheral tapered surface 316e is formed on only one magnet piece 505 called the outer peripheral end piece 872.

Thickness dimensions of the inner peripheral end piece 871 and the outer peripheral end piece 872 in the radial direction RD are larger than the thickness dimensions of the magnet pieces 505 other than the pieces 871 and 872. The thickness dimension of the inner peripheral end piece 871 in the radial direction RD is equal to or larger than a width dimension of the inner peripheral tapered surface 310d. The thickness dimension of the outer peripheral end piece 872 in the radial direction RD is equal to or larger than the width dimension of the outer peripheral tapered surface 310e.

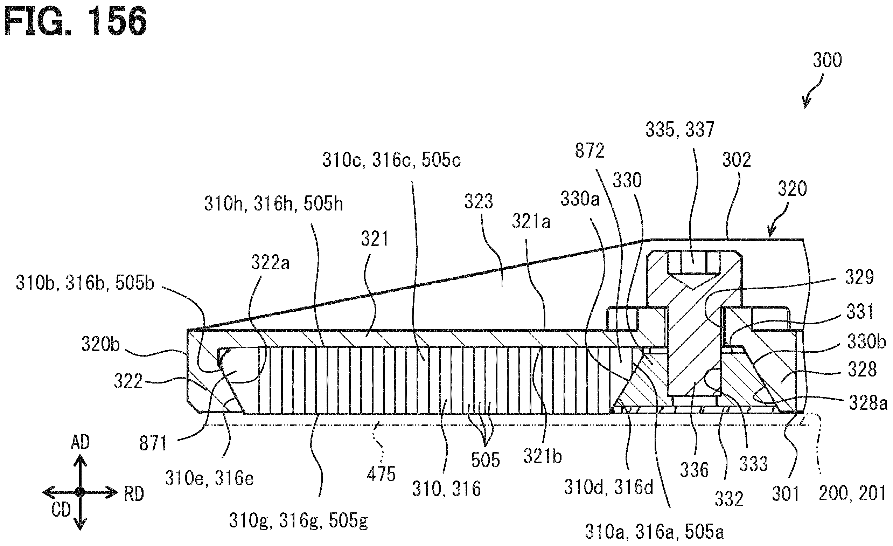

As shown in FIG. 156, in the magnet 310, the inner peripheral end piece 871 and the outer peripheral end piece 872 are in a state of being caught by the magnet holder 320 and the fixing block 330. Only the outer peripheral end piece 872 among the multiple magnet pieces 505 is caught by the outer peripheral engagement portion 322. The outer peripheral end piece 872 is in contact with the engagement tapered surface 322a. Among the multiple magnet pieces 505 of the magnet 310, the magnet pieces 505 other than the outer peripheral end piece 872 are not caught by the outer peripheral engagement portion 322.

Only the inner peripheral end piece 871 among the multiple magnet pieces 505 is caught by the fixing block 330. The inner peripheral end piece 871 is in contact with the block tapered surface 330a. Among the multiple magnet pieces 505 of the magnet 310, the magnet pieces 505 other than the inner peripheral end piece 871 are not caught by the fixing block 330.

According to the present embodiment, among the multiple magnet pieces 505 of the magnet 310, only the inner peripheral end piece 871 provided on the radially innermost side has the inner peripheral tapered surface 310d. In the configuration, a boundary between two adjacent magnet pieces 505 does not exist on the inner peripheral tapered surface 310d. Therefore, a step generated on reinforced portions of the two magnet pieces 505 does not exist on the inner peripheral tapered surface 310d. Therefore, the inner peripheral tapered surface 310d can be reliably flattened. Accordingly, the shape accuracy of the inner peripheral tapered surface 310d can be improved.

According to the present embodiment, among the multiple magnet pieces 505 of the magnet 310, only the inner peripheral end piece 871 is caught by the fixing block 330. In the configuration, since the shape accuracy of the inner peripheral tapered surface 310d formed on the inner peripheral end piece 871 is high, the positional accuracy between the inner peripheral end piece 871 and the fixing block 330 is high. Therefore, the magnet 310 can be prevented from being deviated with respect to the fixing block 330. For example, the magnet 310 can be prevented from being deviated with respect to the fixing block 330 and unintentionally protruding toward the axial gap 475.

According to the present embodiment, among the multiple magnet pieces 505 of the magnet 310, only the outer peripheral end piece 872 provided on the radially outermost side in the radial direction has the outer peripheral tapered surface 316e. In the configuration, a boundary between two adjacent magnet pieces 505 does not exist on the outer peripheral tapered surface 310e. Therefore, a step generated on the boundary between the two magnet pieces 505 does not exist on the outer peripheral tapered surface 310e. Therefore, the outer peripheral tapered surface 310e can be reliably flattened. Accordingly, the shape accuracy of the outer peripheral tapered surface 310e can be improved.

According to the present embodiment, among the multiple magnet pieces 505 of the magnet 310, only the outer peripheral end piece 872 is caught by the outer peripheral engagement portion 322. In the configuration, since the shape accuracy of the outer peripheral tapered surface 310e formed on the outer peripheral end piece 872 is high, the positional accuracy between the outer peripheral end piece 872 and the outer peripheral engagement portion 322 is high. Therefore, the magnet 310 can be prevented from being deviated with respect to the outer peripheral engagement portion 322. For example, the magnet 310 can be prevented from being deviated with respect to the outer peripheral engagement portion 322 and unintentionally protruding toward the axial gap 475.

### <Twenty-First Embodiment>

In the first embodiment described above, the magnet piece 505 extends in the direction orthogonal to the unit center line C316. Meanwhile, in a twenty-first embodiment, the magnet piece 505 extends in a direction orthogonal to the magnet center line C310. Configurations, operations, and effects not particularly described in the twenty-first embodiment are the same as those in the first embodiment described above. In the twenty-first embodiment, differences from the first embodiment described above will be mainly described.

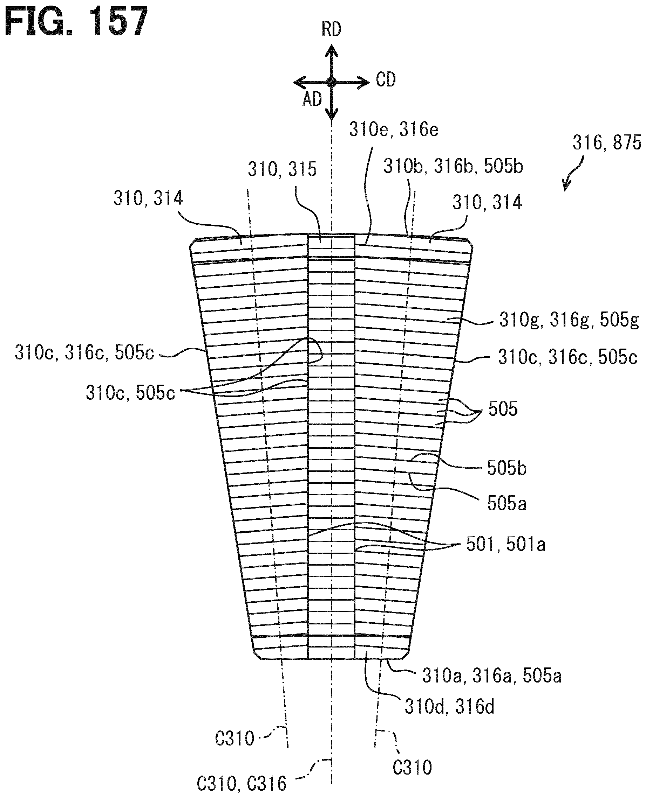

As shown in FIG. 157, multiple magnet units 316 include individual units 875. In the individual unit 875, the magnet piece 505 extends in a direction orthogonal to the magnet center line C310. In the parallel magnet 315 of the individual unit 875, the magnet piece 505 extends in a direction orthogonal to both the unit center line C316 and the magnet center line C310 as in the first embodiment. In the inclined magnet 314 of the individual unit 875, the magnet pieces 505 extend in the direction orthogonal to the magnet center line C310. In the individual unit 875, the magnet center line C310 is inclined with respect to the unit center line C316. Therefore, the magnet piece 505 of the inclined magnet 314 is inclined with respect to the magnet piece 505 of the parallel magnet 315.

In the individual units 875, the magnet center line C310 of one of the two inclined magnets 314 is inclined with respect to the magnet center line C310 of the other. The magnet pieces 505 of one of the two inclined magnets 314 are inclined with respect to the magnet pieces 505 of the other.

According to the present embodiment, in the individual unit 875, in each of the multiple magnets 310, the magnet piece 505 extends in the direction orthogonal to the magnet center line C310. In the configuration, an angle of the magnet piece 505 with respect to the magnet center line is individually set for the multiple magnets 310. Therefore, a degree of freedom related to orientation directions set for the multiple magnets 310 can be increased.

### <Twenty-Second Embodiment>

In the first embodiment described above, two magnets 310 adjacent to each other with the unit outer boundary 501b interposed therebetween are oriented in a direction in which a repulsive force is likely to be generated. Meanwhile, in a twenty-second embodiment, the two magnets 310 adjacent to each other with the unit outer boundary 501b interposed therebetween are oriented in a direction in which a repulsive force is less likely to be generated. Configurations, operations, and effects not particularly described in the twenty-second embodiment are the same as those in the first embodiment described above. In the twenty-second embodiment, differences from the first embodiment described above will be mainly described.

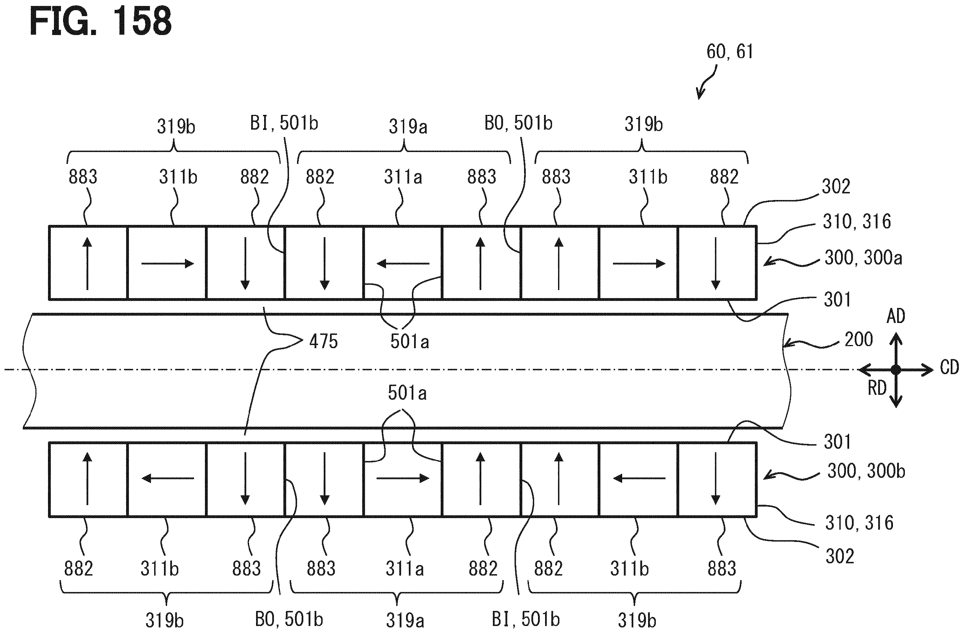

As shown in FIG. 158, the multiple magnets 310 in the rotor 300 include axially inward magnets 882 and axially outward magnets 883. In the present embodiment, the axially inward magnets 882 are provided in the rotor 300 instead of the first axially inward magnet 312a and the second axially inward magnet 312b of the first embodiment described above. The axially outward magnets 883 are provided in the rotor 300 instead of the first axially outward magnet 313a and the second axially outward magnet 313b of the first embodiment described above. In the present embodiment, the peripheral magnets 311a and 311b, the axially inward magnets 882, and the axially outward magnets 883 are disposed to strengthen the magnetic force on the stator 200. The peripheral magnets 311a and 311b, the axially inward magnets 882, and the axially outward magnets 883 are arranged in the Halbach array.

Multiple axially inward magnets 882 and multiple axially outward magnets 883 are arranged in the circumferential direction CD. Two axially inward magnets 882 and two axially outward magnets 883 are alternately arranged in the circumferential direction CD. The first peripheral magnet 311a or the second peripheral magnet 311b is provided between the axially inward magnet 882 and the axially outward magnet 883.

The axially inward magnet 882 is oriented toward the stator 200 in the axial direction AD. The axially inward magnet 882 is oriented parallel to the motor axis Cm. The axially outward magnet 883 is oriented to face a side opposite to the stator 200 in the axial direction AD. The axially outward magnet 883 is oriented parallel to the motor axis Cm. Orientations of the axially inward magnet 882 and the axially outward magnet 883 are orthogonal to orientations of the first peripheral magnet 311a and the second peripheral magnet 311b.

The first orientation unit 319a includes the axially inward magnet 882 and the axially outward magnet 883 instead of the first axially inward magnet 312a and the first axially outward magnet 313a of the first embodiment described above. In the first orientation unit 319a, the first peripheral magnet 311a is located between the axially inward magnet 882 and the axially outward magnet 883. The second orientation unit 319b includes the axially inward magnet 882 and the axially outward magnet 883 instead of the second axially inward magnet 312b and the second axially outward magnet 313b of the first embodiment described above. In the second orientation unit 319b, the second peripheral magnet 311b is located between the axially inward magnet 882 and the axially outward magnet 883.

The multiple unit outer boundaries 501b include a boundary between the axially inward magnet 882 of the first orientation unit 319a and the axially inward magnet 882 of the second orientation unit 319b. In the unit outer boundary 501b at which two axially inward magnets 882 are adjacent to each other, a repulsive force is less likely to be generated in the two axially inward magnets 882. The multiple unit outer boundaries 501b include a boundary between the axially outward magnet 883 of the first orientation unit 319a and the axially outward magnet 883 of the second orientation unit 319b. In the unit outer boundary 501b at which two axially outward magnets 883 are adjacent to each other, a repulsive force is less likely to be generated in the two axially outward magnets 883.

In the present embodiment, regardless of a configuration in which the inclined magnet unit 317 is either the first orientation unit 319a or the second orientation unit 319b, one of the two inclined magnets 314 of the inclined magnet unit 317 is the axially inward magnet 882, and the other is the axially outward magnet 883. Similarly, one of the parallel magnets 315 at both ends of the parallel magnet unit 318 is the axially inward magnet 882, and the other is the axially outward magnet 883.

In the first orientation unit 319a and the second orientation unit 319b, the width dimensions of the peripheral magnets 311a and 311b are smaller than the width dimension of the axially inward magnet 882 and the width dimension of the axially outward magnet 883.

### <Twenty-Third Embodiment>

In the first embodiment described above, the magnet unit 316 includes three magnets 310. Meanwhile, in a twenty-third embodiment, the magnet unit 316 includes two magnets 310. Configurations, operations, and effects not particularly described in the twenty-third embodiment are the same as those in the twenty-second embodiment described above. In the twenty-third embodiment, differences from the twenty-second embodiment described above will be mainly described.

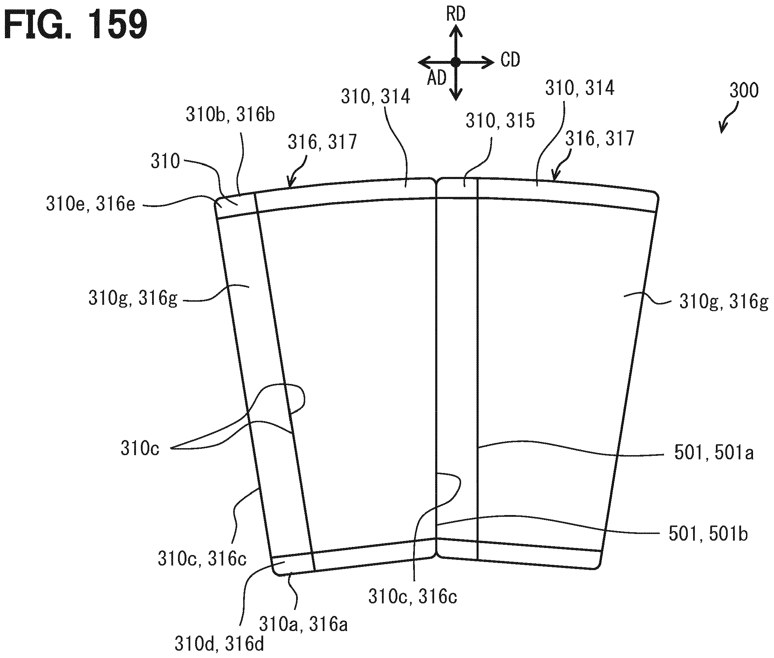

As shown in FIG. 159, the multiple magnet units 316 include the inclined magnet unit 317, and do not include the parallel magnet unit 318. The multiple inclined magnet units 317 have the same shape and size. In the configuration, in the process of manufacturing the rotor 300, the operator may prepare or manufacture only one type of inclined magnet unit 317, and does not need to prepare or manufacture multiple types of magnet units 316. Therefore, a cost for preparing or manufacturing the inclined magnet unit 317 can be reduced.

The inclined magnet unit 317 includes one inclined magnet 314 and one parallel magnet 315. The order of arrangement of the inclined magnet 314 and the parallel magnet 315 is the same in the multiple inclined magnet units 317. For example, in each of the multiple inclined magnet units 317, the inclined magnet 314 is disposed on one side in the circumferential direction CD, and the parallel magnet 315 is disposed on the other side. In the circumferential direction CD, the inclined magnets 314 and the parallel magnets 315 are alternately arranged one by one. The multiple inclined magnets 314 have the same shape and size. The multiple parallel magnets 315 have the same shape and size. In the configuration, in the process of manufacturing the rotor 300, the operator may prepare or manufacture only one type of the inclined magnet 314 and one type of the parallel magnet 315, and does not need to prepare or manufacture multiple types of the inclined magnets 314 and multiple types of the parallel magnets 315. Therefore, a cost for preparing or manufacturing the inclined magnet 314 and the parallel magnet 315 can be reduced.

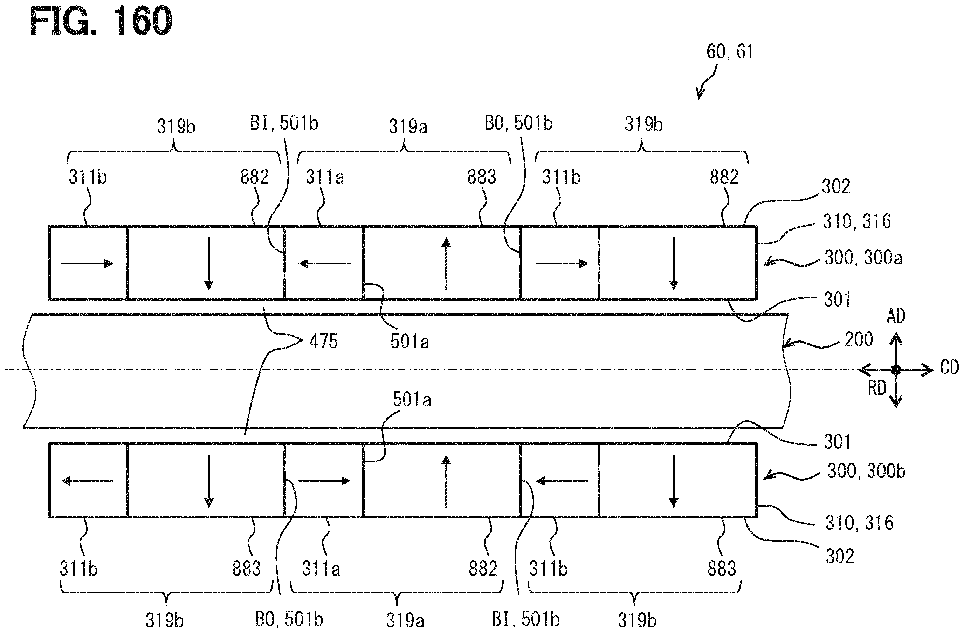

In the present embodiment, as in the twenty-second embodiment described above, the two magnets 310 adjacent to each other with the unit outer boundary 501b interposed therebetween are oriented in a direction in which the repulsive force is less likely to be generated. As shown in FIG. 160, the multiple magnets 310 of the rotor 300 include the axially inward magnets 882 and the axially outward magnets 883. In the circumferential direction CD, the axially inward magnets 882 and the axially outward magnets 883 are alternately arranged one by one. As in the twenty-second embodiment described above, the first peripheral magnet 311a or the second peripheral magnet 311b is provided between the axially inward magnet 882 and the axially outward magnet 883.

The first orientation unit 319a and the second orientation unit 319b each include two magnets 310. The first orientation unit 319a includes the first peripheral magnet 311a and the axially outward magnet 883, and does not include the axially inward magnet 882. The second orientation unit 319b includes the second peripheral magnet 311b and the axially inward magnet 882, and does not include the axially outward magnet 883.

The multiple unit outer boundaries 501b include a boundary between the axially outward magnet 883 of the first orientation unit 319a and the second peripheral magnet 311b of the second orientation unit 319b. At the unit outer boundary 501b in which the axially outward magnet 883 and the second peripheral magnet 311b are adjacent to each other, a repulsive force is less likely to be generated. The multiple unit outer boundaries 501b include a boundary between the first peripheral magnet 311a of the first orientation unit 319a and the axially inward magnet 882 of the second orientation unit 319b. At the unit outer boundary 501b in which the first peripheral magnet 311a and the axially inward magnet 882 are adjacent to each other, a repulsive force is less likely to be generated.

In the first orientation unit 319a, the width dimension of the first peripheral magnet 311a is smaller than the width dimension of the axially outward magnet 883. In the second orientation unit 319b, the width dimension of the 331b is smaller than that of the axially inward magnet 882.

### <Configuration Group N>

### <Twenty-Fourth Embodiment>

In the first embodiment described above, the motor seal holding portion 78 and the rear frame holding portion 376 are in a state of pressing the motor seal portion 402 in the radial direction RD. Meanwhile, in a twenty-fourth embodiment, the motor seal holding portion 78 and the rear frame holding portion 376 are in a state of pressing the motor seal portion 402 in the axial direction AD. Configurations, operations, and effects not particularly described in the twenty-fourth embodiment are the same as those in the first embodiment described above. In the twenty-fourth embodiment, differences from the first embodiment described above will be mainly described.

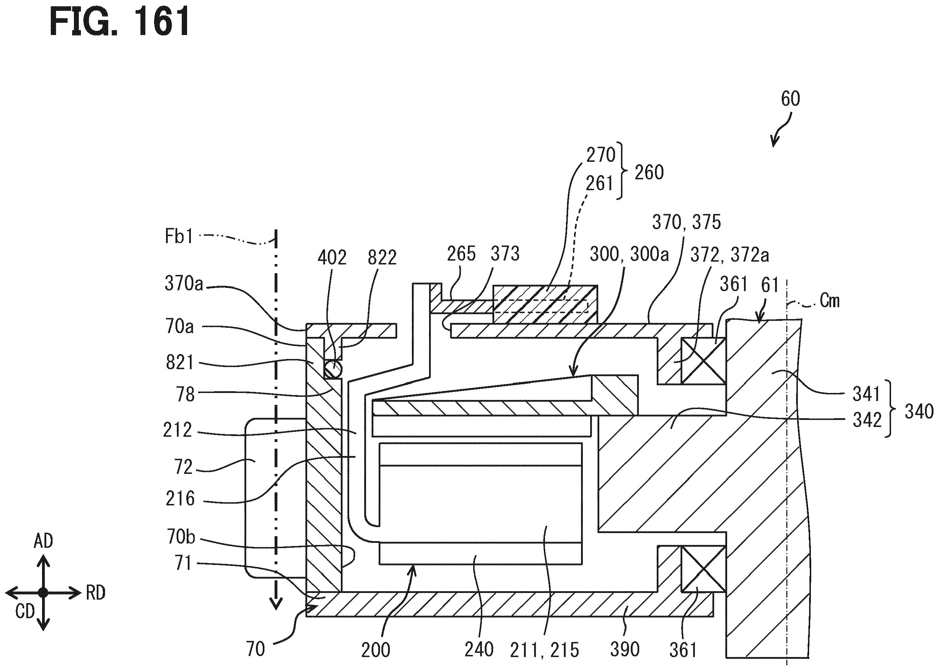

As shown in FIG. 161, the motor housing 70 includes a motor outer peripheral projection portion 821. In FIG. 161, illustrations of the inverter device 80, the unit duct 100, and the like are omitted.

The motor outer peripheral projection portion 821 is a projection portion provided in the motor seal holding portion 78 in the housing main body 71. The motor outer peripheral projection portion 821 protrudes from the housing main body 71 toward the rear frame 370 in the axial direction AD. The motor outer peripheral projection portion 821 is provided on the radially outer side of the motor seal holding portion 78. The motor outer peripheral projection portion 821 is provided at a position separated from the motor inner peripheral surface 70b toward the radially outer side. In the housing main body 71, a portion between the motor outer peripheral projection portion 821 and the motor inner peripheral surface 70b is the motor seal holding portion 78. The motor outer peripheral projection portion 821 extends from the motor outer peripheral surface 70a in the axial direction AD. The motor outer peripheral projection portion 821 extends in an annular shape along the motor outer peripheral surface 70a in the circumferential direction CD. In the present embodiment, the motor outer peripheral projection portion 821 is located on the radially outer side of the motor seal holding portion 78, and thus the motor outer peripheral surface 70a is located on the radially outer side of the motor seal holding portion 78 as in the first embodiment described above.

In the present embodiment, the motor outer peripheral projection portion 821 and the housing main body 71 are integrally formed. The motor outer peripheral projection portion 821 is provided on the housing main body 71, and forms, for example, an end portion of the housing main body 71 on the inverter device 80 side. An outer surface of the motor outer peripheral projection portion 821 is included in the motor outer peripheral surface 70a. In the motor housing 70, the motor seal holding portion 78 and the motor outer peripheral projection portion 821 are formed by a notch provided in the housing main body 71.

The rear frame 370 includes a rear frame inner peripheral portion 822. Unlike the rear frame holding portion 376 of the first embodiment described above, the rear frame inner peripheral portion 822 is provided at a position aligned with the motor seal holding portion 78 in the axial direction AD. Unlike the rear frame holding portion 376 of the first embodiment described above, the rear frame inner peripheral portion 822 has no motor-side rear frame groove 376a.

The rear frame inner peripheral portion 822 is provided on the rear frame main body 375. The rear frame inner peripheral portion 822 is located at a position near the outer peripheral end of the rear frame main body 375. The rear frame inner peripheral portion 822 extends in an annular shape along the motor inner peripheral surface 70b in the circumferential direction CD. The rear frame inner peripheral portion 822 protrudes from the rear frame main body 375 toward the motor seal holding portion 78 in the axial direction AD. The rear frame inner peripheral portion 822 is provided on the radially inner side of the motor outer peripheral projection portion 821.

The rear frame inner peripheral portion 822 is located at a position aligned with the motor seal holding portion 78 in the axial direction AD with the motor seal portion 402 interposed therebetween. The rear frame inner peripheral portion 822 and the motor seal holding portion 78 are in a state of pressing the motor seal portion 402 in the axial direction AD. The motor seal portion 402 is elastically deformed to be crushed in the axial direction AD by pressing forces of the rear frame inner peripheral portion 822 and the motor seal holding portion 78. The motor seal portion 402 is in a state of being in close contact with the rear frame inner peripheral portion 822 and the motor seal holding portion 78 by a restoring force accompanying the elastic deformation.

The motor outer peripheral projection portion 821 restricts positional deviation of the motor seal portion 402 toward the radially outer side. The motor outer peripheral projection portion 821 restricts positional deviation of the rear frame inner peripheral portion 822 toward the radially outer side. The motor outer peripheral projection portion 821 is a positioning portion that determines a position of the rear frame inner peripheral portion 822 in the radial direction RD.

According to the present embodiment, the motor seal holding portion 78 and the rear frame inner peripheral portion 822 are in a state of sandwiching the motor seal portion 402 in the axial direction AD. Therefore, the motor seal portion 402 can be prevented from protruding from the motor seal holding portion 78 and the rear frame inner peripheral portion 822 in the axial direction AD. Moreover, movement of the motor seal portion 402 toward the radially outer side is restricted by the motor outer peripheral projection portion 821. Therefore, the motor seal portion 402 can be prevented from protruding from the motor seal holding portion 78 and the rear frame inner peripheral portion 822 toward the radially outer side.

In the present embodiment, a target holding portion such as the rear frame inner peripheral portion 822 holds the motor seal portion 402 between the target holding portion and the motor seal holding portion 78 in a manner of entering the inside of the motor housing 70. In this case, the motor seal holding portion 78 may hold the motor seal portion 402 between the motor seal holding portion 78 and the target holding portion such as the rear frame inner peripheral portion 822 in a manner of entering the inside of the rear frame 370.

### <Twenty-Fifth Embodiment>

In the twenty-fourth embodiment described above, movement of the motor seal portion 402 toward the radially outer side is restricted by the motor housing 70. Meanwhile, in a twenty-fifth embodiment, movement of the motor seal portion 402 toward the radially inner side is restricted by the motor housing 70. Configurations, operations, and effects not particularly described in the twenty-fifth embodiment are the same as those in the first embodiment described above. In the twenty-fifth embodiment, differences from the first embodiment described above will be mainly described.

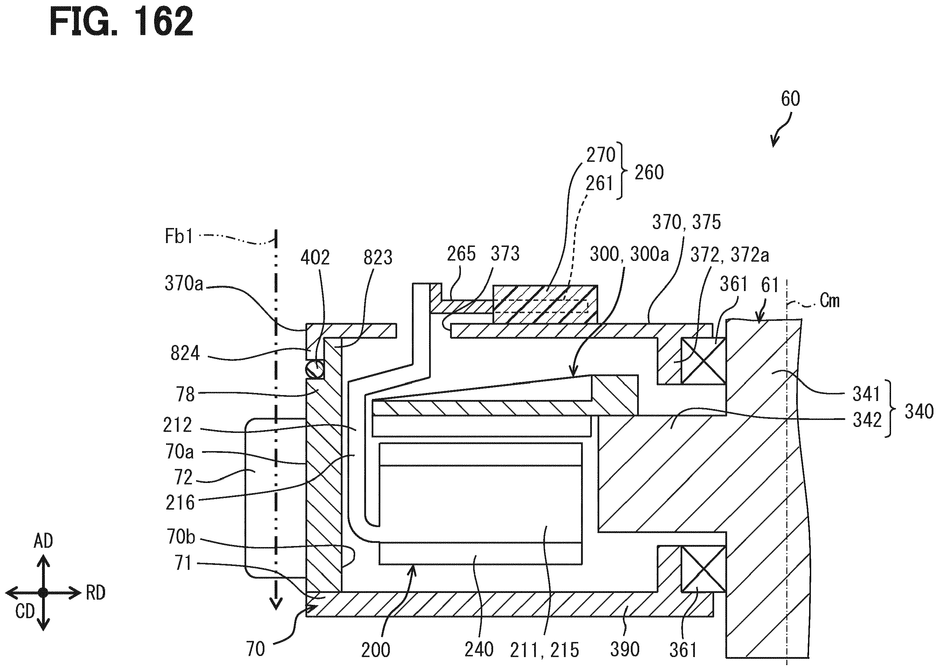

As shown in FIG. 162, the motor housing 70 includes a motor inner peripheral projection portion 823. In FIG. 162, illustrations of the inverter device 80, the unit duct 100, and the like are omitted.

The motor inner peripheral projection portion 823 is a projection portion provided on the motor seal holding portion 78 in the housing main body 71. The motor inner peripheral projection portion 823 protrudes from the housing main body 71 toward the rear frame 370 in the axial direction AD. The motor inner peripheral projection portion 823 is provided on the radially inner side of the motor seal holding portion 78. The motor inner peripheral projection portion 823 is provided at a position away from the motor outer peripheral surface 70a toward the radially inner side. In the housing main body 71, a portion between the motor inner peripheral projection portion 823 and the motor outer peripheral surface 70a is the motor seal holding portion 78. The motor inner peripheral projection portion 823 extends from the motor inner peripheral surface 70b in the axial direction AD. The motor inner peripheral projection portion 823 extends in an annular shape along the motor inner peripheral surface 70b in the circumferential direction CD. In the present embodiment, since the motor seal holding portion 78 forms the motor outer peripheral surface 70a, the motor outer peripheral surface 70a is located on the radially outer side of the motor seal holding portion 78 as in the first embodiment described above.

In the present embodiment, the motor inner peripheral projection portion 823 and the housing main body 71 are integrally formed. The motor inner peripheral projection portion 823 is provided on the housing main body 71, and forms, for example, an end portion of the housing main body 71 on the inverter device 80 side. An outer surface of the motor inner peripheral projection portion 823 is included in the motor inner peripheral surface 70b. In the motor housing 70, the motor seal holding portion 78 and the motor inner peripheral projection portion 823 are formed by a notch provided in the housing main body 71.

The rear frame 370 has a rear frame outer peripheral portion 824. Similarly to the rear frame inner peripheral portion 822 of the twenty-fourth embodiment described above, the rear frame outer peripheral portion 824 is provided at a position aligned with the motor seal holding portion 78 in the axial direction AD. Similarly to the rear frame holding portion 376 of the twenty-fourth embodiment described above, the rear frame outer peripheral portion 824 has no motor-side rear frame groove 376a.

The rear frame outer peripheral portion 824 is provided on the rear frame main body 375. The rear frame outer peripheral portion 824 is provided at the outer peripheral end of the rear frame main body 375 and forms the rear frame outer peripheral surface 370a. Therefore, the rear frame outer peripheral portion 824 is also the rear frame exposed portion 377. The rear frame outer peripheral portion 824 extends in an annular shape along the motor outer peripheral surface 70a in the circumferential direction CD. The rear frame outer peripheral portion 824 protrudes from the rear frame main body 375 toward the motor seal holding portion 78 in the axial direction AD. The rear frame outer peripheral portion 824 is provided on the radially outer side of the motor inner peripheral projection portion 823.

The rear frame outer peripheral portion 824 is located at a position aligned with the motor seal holding portion 78 in the axial direction AD with the motor seal portion 402 interposed therebetween. The rear frame outer peripheral portion 824 and the motor seal holding portion 78 are in a state of pressing the motor seal portion 402 in the axial direction AD. The motor seal portion 402 is elastically deformed to be crushed in the axial direction AD by pressing forces of the rear frame outer peripheral portion 824 and the motor seal holding portion 78. The motor seal portion 402 is in a state of being in close contact with the rear frame outer peripheral portion 824 and the motor seal holding portion 78 by a restoring force accompanying the elastic deformation.

In the present embodiment, the motor outer peripheral surface 70a and the rear frame outer peripheral surface 370a are arranged continuously in the axial direction AD with the motor seal portion 402 interposed therebetween. A seal outer peripheral surface of the motor seal portion 402 is flush with the motor outer peripheral surface 70a and the rear frame outer peripheral surface 370a. The seal outer peripheral surface is a radially outer surface of the motor seal portion 402. The seal outer peripheral surface and the outer peripheral surfaces 70a and 370a are aligned in the radial direction RD. The seal outer peripheral surface and the outer peripheral surfaces 70a and 370a are continuously arranged in the axial direction AD even at positions slightly deviated in the radial direction RD. In this way, no step surface is formed between the motor outer peripheral surface 70a and the seal outer peripheral surface, and no step surface is formed between the rear frame outer peripheral surface 370a and the seal outer peripheral surface. A configuration in which the motor outer peripheral surface 70a and the seal outer peripheral surface are aligned in the axial direction AD is provided in a configuration in which the motor outer peripheral surface 70a is provided outside the motor seal portion 402.

The motor inner peripheral projection portion 823 restricts the positional deviation of the motor seal portion 402 toward the radially inner side. The motor inner peripheral projection portion 823 restricts the positional deviation of the rear frame outer peripheral portion 824 toward the radially inner side. The motor inner peripheral projection portion 823 is a positioning portion that determines a position of the rear frame outer peripheral portion 824 in the radial direction RD.

According to the present embodiment, the motor seal holding portion 78 and the rear frame outer peripheral portion 824 are in a state of sandwiching the motor seal portion 402 in the axial direction AD. Therefore, the motor seal portion 402 can be prevented from protruding from the motor seal holding portion 78 and the rear frame outer peripheral portion 824 in the axial direction AD. Moreover, movement of the motor seal portion 402 toward the radially inner side is restricted by the motor inner peripheral projection portion 823. Therefore, the motor seal portion 402 can be prevented from protruding from the motor seal holding portion 78 and the rear frame outer peripheral portion 824 toward the radially outer side.

In the present embodiment, the target holding portion such as the rear frame outer peripheral portion 824 holds the motor seal portion 402 between the target holding portion and the motor seal holding portion 78 in a manner of entering the inside of the motor housing 70. In this case, the motor seal holding portion 78 may hold the motor seal portion 402 between the motor seal holding portion 78 and the target holding portion such as the rear frame outer peripheral portion 824 in a manner of entering the inside of the rear frame 370.

### <Twenty-Sixth Embodiment>

In the first embodiment described above, the fixed target to be fixed to the motor housing 70 is the rear frame 370. Meanwhile, in a twenty-sixth embodiment, a fixed target to be fixed to the motor housing 70 is the inverter housing 90. Configurations, operations, and effects not particularly described in the twenty-sixth embodiment are the same as those in the first embodiment described above. In the twenty-sixth embodiment, differences from the first embodiment described above will be mainly described.

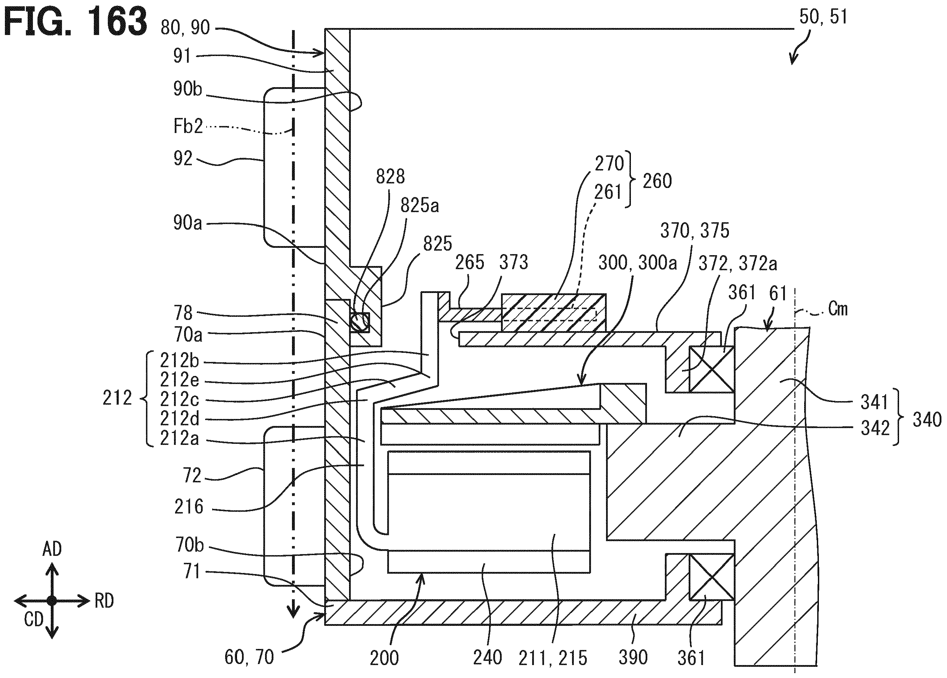

As shown in FIG. 163, the motor housing 70 and the inverter housing 90 are fixed to each other without interposing the rear frame 370 therebetween. Specifically, the housing main body 71 of the motor housing 70 and the housing main body 91 of the inverter housing 90 are adjacent to each other in the axial direction AD without interposing the rear frame 370 therebetween. Respective end portions of the housing main bodies 71 and 91 are in contact with each other. The inverter device 80 can convert electric power supplied to the motor device 60, and corresponds to an electric power conversion device. The inverter housing 90 extends along the motor housing 70 in the circumferential direction CD, and corresponds to a device housing. The housing main body 91 extends along the housing main body 71 of the motor housing 70 in the circumferential direction CD. The housing main body 91 may be referred to as the inverter outer peripheral wall.

The motor device unit 50 includes an inverter inner peripheral holding portion 825 and a housing seal portion 828. The inverter inner peripheral holding portion 825 is provided on the inverter device 80. Similarly to the seal portions 402 and 403 of the first embodiment described above, the housing seal portion 828 is an elastically deformable seal member and is made of a resin material or the like. The housing seal portion 828 is, for example, an O-ring. The housing seal portion 828 is formed in an annular shape and extends along the circumferential direction CD.

The housing seal portion 828 is in a state of being sandwiched between the motor housing 70 and the inverter housing 90. The housing seal portion 828 closes a gap between the motor housing 70 and the inverter housing 90. The housing seal portion 828 extends along the motor outer peripheral surface 70a in an annular shape.

The motor seal holding portion 78 and the inverter inner peripheral holding portion 825 hold the housing seal portion 828, and restrict positional deviation of the housing seal portion 828. The housing seal portion 828 is sandwiched between the motor seal holding portion 78 and the inverter inner peripheral holding portion 825, and closes a gap between the holding portions 78 and 825.

The inverter inner peripheral holding portion 825 is provided on the inverter housing 90. The inverter inner peripheral holding portion 825 is provided on the housing main body 91. The inverter inner peripheral holding portion 825 is provided on an inner peripheral side of the housing main body 91. The inverter inner peripheral holding portion 825 protrudes from the inverter inner peripheral surface 90b to the radially inner side and extends from the housing main body 91 toward the motor housing 70 in the axial direction AD. The inverter inner peripheral holding portion 825 is in a state of spanning the housing main bodies 71 and 91 in the axial direction AD. The inverter inner peripheral holding portion 825 is overlapped with the motor inner peripheral surface 70b. The inverter inner peripheral holding portion 825 corresponds to the target holding portion.

The inverter inner peripheral holding portion 825 is provided at a position aligned with the motor seal holding portion 78 in the radial direction RD. The inverter inner peripheral holding portion 825 is located on the radially inner side of the motor seal holding portion 78 with the housing seal portion 828 interposed therebetween. The inverter inner peripheral holding portion 825 and the motor seal holding portion 78 are in a state of pressing the housing seal portion 828 in the radial direction RD. The housing seal portion 828 is elastically deformed to be crushed in the radial direction RD by pressing forces of the inverter inner peripheral holding portion 825 and the motor seal holding portion 78. The housing seal portion 828 is in a state of being in close contact with the inverter inner peripheral holding portion 825 and the motor seal holding portion 78 by a restoring force accompanying the elastic deformation.

The inverter inner peripheral holding portion 825 has an inverter inner peripheral groove 825a. The inverter inner peripheral groove 825a is a recess portion recessed toward the radially inner side and is opened toward the radially outer side. The inverter inner peripheral groove 825a extends in a groove shape along the motor inner peripheral surface 70b in the circumferential direction CD. The inverter inner peripheral groove 825a is provided to make one round in the circumferential direction CD around the inverter inner peripheral holding portion 825.

The inverter inner peripheral groove 825a is provided at a position aligned with the motor seal holding portion 78 in the radial direction RD. The inverter inner peripheral groove 825a is a recess portion into which the housing seal portion 828 can enter. The housing seal portion 828 closes a gap between the motor seal holding portion 78 and the inverter inner peripheral holding portion 825 in a state of entering the inside of the inverter inner peripheral groove 825a. The inverter inner peripheral holding portion 825 restricts the positional deviation of the housing seal portion 828 with respect to the motor seal holding portion 78 and the inverter inner peripheral holding portion 825. The housing seal portion 828 is in close contact with both the inverter inner peripheral holding portion 825 and the motor seal holding portion 78 by a restoring force accompanying the elastic deformation of the housing seal portion 828. Specifically, the housing seal portion 828 is in close contact with the motor inner peripheral surface 70b and an inner surface of the inverter inner peripheral groove 825a. The inverter inner peripheral groove 825a corresponds to the target recess portion.

In the motor device unit 50, the motor outer peripheral surface 70a and the inverter outer peripheral surface 90a are continuously arranged in the axial direction AD. The motor outer peripheral surface 70a and the inverter outer peripheral surface 90a are flush with each other and form the same surface. The motor outer peripheral surface 70a and the inverter outer peripheral surface 90a are aligned in the radial direction RD. The motor outer peripheral surface 70a and the inverter outer peripheral surface 90a are continuously arranged in the axial direction AD even at positions slightly deviated in the radial direction RD. In this way, no step surface is formed at the boundary between the motor outer peripheral surface 70a and the inverter outer peripheral surface 90a. The inverter outer peripheral surface 90a corresponds to the target outer peripheral surface.

The electric power lead-out wire 212 has a crooked shape to avoid the inverter inner peripheral holding portion 825 toward the radially inner side. In the electric power lead-out wire 212, the outer peripheral lead-out portion 212a is located at a position aligned with the inverter inner peripheral holding portion 825 in the axial direction AD. The outer peripheral lead-out portion 212a extends toward the inverter inner peripheral holding portion 825 in the axial direction AD. The intersection lead-out portion 212c is located at a position separated from the inverter inner peripheral holding portion 825 toward the first rotor 300a in the radial direction RD. The intersection lead-out portion 212c extends toward the radially inner side to pass between the inverter inner peripheral holding portion 825 and the first rotor 300a. The intersection lead-out portion 212c is in a state of protruding radially inward with respect to the inverter inner peripheral holding portion 825 protrudes. The inner peripheral lead-out portion 212b is located at a position aligned with the inverter inner peripheral holding portion 825 in the radial direction RD. The inner peripheral lead-out portion 212b is located at a position away from the inverter inner peripheral holding portion 825 toward the radially inner side.

The gas flowing outside the motor device unit 50 includes a gas flowing along the outer peripheral surfaces 70a and 90a as an air flow Fb2. The air flow Fb2 passes through the boundary between the motor outer peripheral surface 70a and the inverter outer peripheral surface 90a in the axial direction AD. At the boundary, the motor outer peripheral surface 70a and the inverter outer peripheral surface 90a are continuous surfaces, and thus the air flow Fb2 is less likely to be disturbed.

According to the present embodiment, the motor outer peripheral surface 70a is arranged continuously with the inverter outer peripheral surface 90a in the axial direction AD. In the configuration, the air flow Fb2 flowing in the axial direction AD is less likely to be disturbed when passing through the boundary between the motor outer peripheral surface 70a and the inverter outer peripheral surface 90a. Further, since the motor outer peripheral surface 70a is provided outside the motor seal holding portion 78 in the radial direction RD, the air flow Fb2 is less likely to be disturbed when passing through the motor seal holding portion 78. Therefore, a reduction in the amount of gas flowing along the motor fins 72 due to disturbance of the air flow Fb2 and a decrease in the heat radiation effect of the motor fins 72 can be prevented.

According to the present embodiment, the housing seal portion 828 is in a state of entering the inverter inner peripheral groove 825a from the radially outer side. Therefore, the positional deviation of the housing seal portion 828 in the axial direction AD can be restricted by the inverter inner peripheral groove 825a.

According to the present embodiment, the inverter inner peripheral holding portion 825 is provided on the radially inner side of the motor inner peripheral surface 70b. In the configuration, the inverter inner peripheral holding portion 825 does not need to protrude from the motor outer peripheral surface 70a toward the radially outer side. Therefore, the inverter outer peripheral surface 90a and the motor outer peripheral surface 70a can be arranged in the axial direction AD such that the inverter outer peripheral surface 90a does not protrude from the motor outer peripheral surface 70a toward the radially outer side.

According to the present embodiment, the inverter inner peripheral holding portion 825 is provided on the radially inner side of the motor seal holding portion 78. In the configuration, similarly to the configuration in which the inverter inner peripheral holding portion 825 is provided on the radially inner side of the motor inner peripheral surface 70b, the inverter inner peripheral holding portion 825 does not need to protrude from the motor outer peripheral surface 70a toward the radially outer side. Therefore, the inverter outer peripheral surface 90a and the motor outer peripheral surface 70a can be arranged continuously in the axial direction AD such that the inverter outer peripheral surface 90a does not protrude from the motor outer peripheral surface 70a to the radially outer side.

In the present embodiment, the motor seal holding portion 78 and the inverter inner peripheral holding portion 825 are in a state of sandwiching the housing seal portion 828 in the radial direction RD. Therefore, the housing seal portion 828 can be prevented from protruding from the motor seal holding portion 78 and the inverter inner peripheral holding portion 825 in the radial direction RD.

According to the present embodiment, the inverter housing 90 is fixed to the motor housing 70 as a fixed target. In the configuration, since the inverter outer peripheral surface 90a and the motor outer peripheral surface 70a are continuously arranged in the axial direction AD, the air flow Fb2 can be prevented from being disturbed at a boundary between the inverter device 80 and the motor device 60.

### <Twenty-Seventh Embodiment>

In the twenty-sixth embodiment described above, a part of the inverter housing 90 protrudes from the motor inner peripheral surface 70b to the radially inner side. Meanwhile, in a twenty-seventh embodiment, a part of the motor housing 70 protrudes from the motor inner peripheral surface 70b to the radially inner side. Configurations, operations, and effects not particularly described in the twenty-seventh embodiment are the same as those in the twenty-sixth embodiment described above. In the twenty-seventh embodiment, differences from the twenty-sixth embodiment described above will be mainly described.

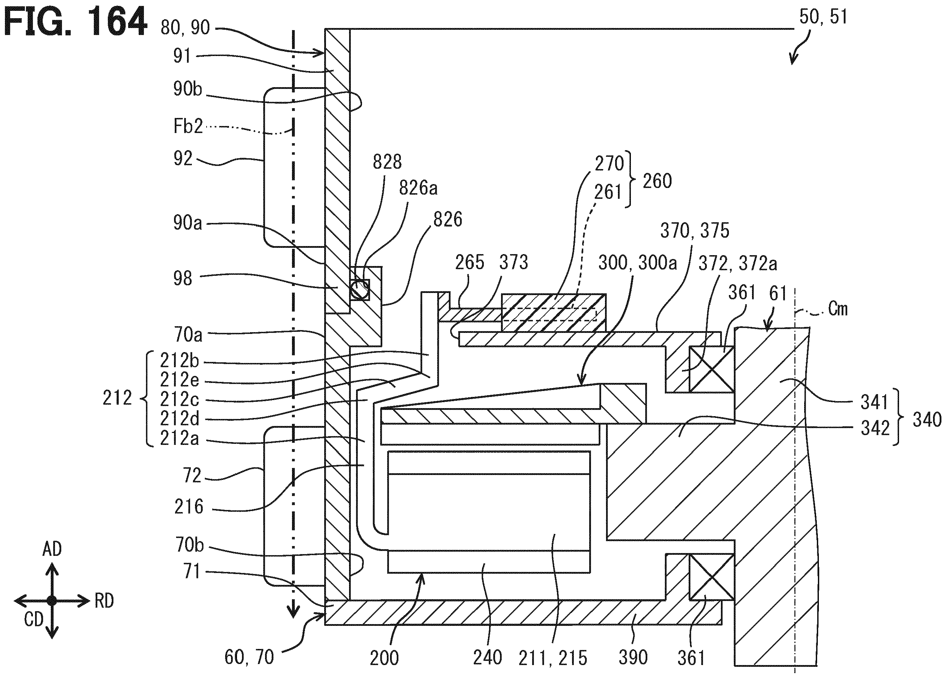

As shown in FIG. 164, the motor device unit 50 includes a motor inner peripheral holding portion 826 instead of the inverter inner peripheral holding portion 825 of the twenty-sixth embodiment described above. The motor inner peripheral holding portion 826 is provided on the motor device 60. As in the first embodiment described above, the inverter housing 90 includes the inverter seal holding portion 98.

The inverter seal holding portion 98 and the motor inner peripheral holding portion 826 hold the housing seal portion 828, and restrict positional deviation of the housing seal portion 828. The housing seal portion 828 is sandwiched between the inverter seal holding portion 98 and the motor inner peripheral holding portion 826, and closes a gap between the holding portions 98 and 826. The motor inner peripheral holding portion 826 corresponds to the seal holding portion.

The motor inner peripheral holding portion 826 is provided on the motor housing 70. The motor inner peripheral holding portion 826 is provided in the housing main body 71. The motor inner peripheral holding portion 826 is provided on the inner peripheral side of the housing main body 71. The motor inner peripheral holding portion 826 protrudes from the motor inner peripheral surface 70b to the radially inner side and extends from the housing main body 71 toward the inverter housing 90 in the axial direction AD. The motor inner peripheral holding portion 826 is in a state of spanning the housing main bodies 71 and 91 in the axial direction AD. The motor inner peripheral holding portion 826 is overlapped with the inverter inner peripheral surface 90b.

The motor inner peripheral holding portion 826 is provided at a position aligned with the inverter seal holding portion 98 in the radial direction RD. The motor inner peripheral holding portion 826 is located on the radially inner side of the inverter seal holding portion 98 with the housing seal portion 828 interposed therebetween. The motor inner peripheral holding portion 826 and the inverter seal holding portion 98 are in a state of pressing the housing seal portion 828 in the radial direction RD. The housing seal portion 828 is elastically deformed to be crushed in the radial direction RD by pressing forces of the motor inner peripheral holding portion 826 and the inverter seal holding portion 98. The housing seal portion 828 is in a state of being in close contact with the motor inner peripheral holding portion 826 and the inverter seal holding portion 98 by the restoring force accompanying the elastic deformation.

The motor inner peripheral holding portion 826 has a motor inner peripheral groove 826a. The motor inner peripheral groove 826a is a recess portion recessed toward the radially inner side and is opened toward the radially outer side. The motor inner peripheral groove 826a extends in a groove shape along the inverter inner peripheral surface 90b in the circumferential direction CD. The motor inner peripheral groove 826a is provided to make one round in the circumferential direction CD around the motor inner peripheral holding portion 826.

The motor inner peripheral groove 826a is provided at a position aligned with the inverter seal holding portion 98 in the radial direction RD. The motor inner peripheral groove 826a is a recess portion into which the housing seal portion 828 can enter. The housing seal portion 828 closes a gap between the inverter seal holding portion 98 and the motor inner peripheral holding portion 826 in a state of entering the inside of the motor inner peripheral groove 826a. The motor inner peripheral holding portion 826 restricts the positional deviation of the housing seal portion 828 with respect to the inverter seal holding portion 98 and the motor inner peripheral holding portion 826. The housing seal portion 828 is in close contact with both the motor inner peripheral holding portion 826 and the inverter seal holding portion 98 by the restoring force accompanying the elastic deformation of the housing seal portion 828. Specifically, the housing seal portion 828 is in close contact with the inverter inner peripheral surface 90b and an inner surface of the motor inner peripheral groove 826a.

The electric power lead-out wire 212 has a crooked shape to avoid the motor inner peripheral holding portion 826 toward the radially inner side. In the electric power lead-out wire 212, the outer peripheral lead-out portion 212a is located at a position aligned with the motor inner peripheral holding portion 826 in the axial direction AD. The outer peripheral lead-out portion 212a extends toward the motor inner peripheral holding portion 826 in the axial direction AD. The intersection lead-out portion 212c is located at a position separated from the motor inner peripheral holding portion 826 toward the first rotor 300a in the radial direction RD. The intersection lead-out portion 212c extends toward the radially inner side to pass between the motor inner peripheral holding portion 826 and the first rotor 300a. The intersection lead-out portion 212c is in a state of protruding radially inward with respect to the motor inner peripheral holding portion 826 protrudes. The inner peripheral lead-out portion 212b is located at a position aligned with the motor inner peripheral holding portion 826 in the radial direction RD. The inner peripheral lead-out portion 212b is located at a position away from the motor inner peripheral holding portion 826 toward the radially inner side.

According to the present embodiment, the motor outer peripheral surface 70a is provided outside the motor inner peripheral holding portion 826. In the configuration, the air flow Fb2 flowing in the axial direction AD is less likely to be disturbed when passing through the inverter seal holding portion 98. Therefore, the decrease in the heat radiation effect of the motor fins 72 caused by the motor inner peripheral holding portion 826 can be prevented.

According to the present embodiment, the housing seal portion 828 is in a state of entering the motor inner peripheral groove 826a from the radially outer side. Therefore, the positional deviation of the housing seal portion 828 in the axial direction AD can be restricted by the motor inner peripheral groove 826a.

According to the present embodiment, the motor inner peripheral holding portion 826 protrudes radially inward with respect to the motor inner peripheral surface 70b protrudes. In the motor housing 70, by thinning the housing main body 71 in the radial direction RD, a configuration in which the inverter inner peripheral holding portion 825 protrudes radially inward with respect to the motor inner peripheral surface 70b protrudes can be implemented. Therefore, the configuration in which the motor outer peripheral surface 70a and the inverter outer peripheral surface 90a are continuously arranged in the axial direction AD and the motor outer peripheral surface 70a is located on the radially outer side of the motor seal holding portion 78 is implemented, and the housing main body 71 can be made thinner.

In the present embodiment, the inverter seal holding portion 98 and the motor inner peripheral holding portion 826 are in a state of sandwiching the housing seal portion 828 in the radial direction RD. Therefore, the housing seal portion 828 can be prevented from protruding from the inverter seal holding portion 98 and the motor inner peripheral holding portion 826 in the radial direction RD.

### <Twenty-Eighth Embodiment>

In the twenty-sixth embodiment described above, the fixed target to be fixed to the motor housing 70 is the inverter housing 90. Meanwhile, in a twenty-eighth embodiment, a fixed target to be fixed to the motor housing 70 is a motor housing of another motor device. Configurations, operations, and effects not particularly described in the twenty-eighth embodiment are the same as those in the twenty-sixth embodiment described above. In the twenty-eighth embodiment, differences from the twenty-sixth embodiment described above will be mainly described.

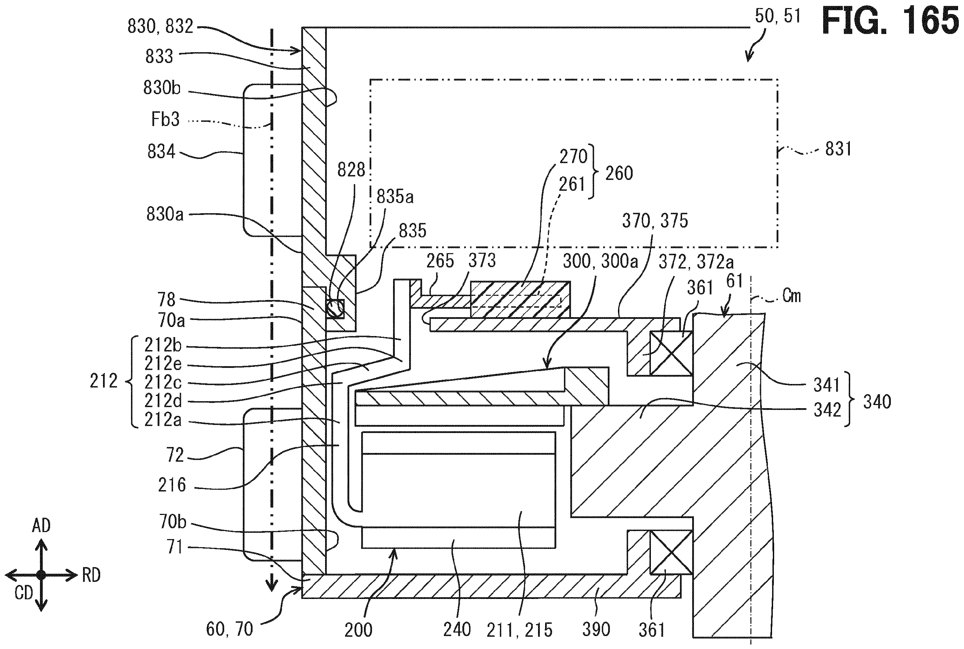

As shown in FIG. 165, the motor device unit 50 includes a second motor device 830 as another motor device. The second motor device 830 corresponds to another rotary electric machine. The second motor device 830 has a configuration similar to that of the motor device 60. For example, the second motor device 830 includes a second motor 831 and a second motor housing 832. Similarly to the motor 61, the second motor 831 includes a rotor, a stator, and the like. The second motor 831 is, for example, an axial gap-type and double rotor-type rotary electric machine. The second motor 831 is accommodated in the second motor housing 832. The second motor housing 832 corresponds to a housing.

The second motor housing 832 includes a second housing main body 833 and second motor fins 834. The second housing main body 833 has a configuration similar to that of the housing main body 71 and the second motor fin 834 has a configuration similar to that of the motor fin 72. The second housing main body 833 forms a second motor outer peripheral surface 832a and a second motor inner peripheral surface 832b of the second motor housing 832. The second motor fins 834 are provided on the second motor outer peripheral surface 832a.

In the present embodiment, the housing seal portion 828 is in a state of being sandwiched between the motor housing 70 and the second motor housing 832. The housing seal portion 828 closes a gap between the motor housing 70 and the second motor housing 832. The housing seal portion 828 extends in an annular shape along the second motor outer peripheral surface 832a.

The second motor housing 832 includes a second inner peripheral holding portion 835. The motor seal holding portion 78 and the second inner peripheral holding portion 835 hold the housing seal portion 828 and restrict positional deviation of the housing seal portion 828. The housing seal portion 828 is sandwiched between the motor seal holding portion 78 and the second inner peripheral holding portion 835, and closes a gap between the holding portions 78 and 835.

The second inner peripheral holding portion 835 is provided on the second motor housing 832. The second inner peripheral holding portion 835 is provided on the second housing main body 833. The second inner peripheral holding portion 835 is provided on the inner peripheral side of the second housing main body 833. The second inner peripheral holding portion 835 protrudes from the second motor inner peripheral surface 832b toward the radially inner side and extends from the second housing main body 833 toward the motor housing 70 in the axial direction AD. The second inner peripheral holding portion 835 is in a state of spanning the housing main bodies 71 and 833 in the axial direction AD. The second inner peripheral holding portion 835 is overlapped with the motor inner peripheral surface 70b. The second inner peripheral holding portion 835 corresponds to a target holding portion.

The second inner peripheral holding portion 835 is provided at a position aligned with the motor seal holding portion 78 in the radial direction RD. The second inner peripheral holding portion 835 is located on the radially inner side of the motor seal holding portion 78 with the housing seal portion 828 interposed therebetween. The second inner peripheral holding portion 835 and the motor seal holding portion 78 are in a state of pressing the housing seal portion 828 in the radial direction RD. The housing seal portion 828 is elastically deformed to be crushed in the radial direction RD by pressing forces of the second inner peripheral holding portion 835 and the motor seal holding portion 78. The housing seal portion 828 is in a state of being in close contact with the second inner peripheral holding portion 835 and the motor seal holding portion 78 by a restoring force accompanying the elastic deformation.

The second inner peripheral holding portion 835 has a second inner peripheral groove 835a. The second inner peripheral groove 835a is a recess portion recessed toward the radially inner side and is opened toward the radially outer side. The second inner peripheral groove 835a extends in a groove shape along the motor inner peripheral surface 70b in the circumferential direction CD. The second inner peripheral groove 835a is provided to make one round in the circumferential direction CD around the second inner peripheral holding portion 835.

The second inner peripheral groove 835a is provided at a position aligned with the motor seal holding portion 78 in the radial direction RD. The second inner peripheral groove 835a is a recess portion into which the housing seal portion 828 can enter. The housing seal portion 828 closes the gap between the motor seal holding portion 78 and the second inner peripheral holding portion 835 in a state of entering the inside of the second inner peripheral groove 835a. The second inner peripheral holding portion 835 restricts the positional deviation of the housing seal portion 828 with respect to the motor seal holding portion 78 and the second inner peripheral holding portion 835. The housing seal portion 828 is in close contact with both the second inner peripheral holding portion 835 and the motor seal holding portion 78 by the restoring force accompanying the elastic deformation of the housing seal portion 828. Specifically, the housing seal portion 828 is in close contact with the motor inner peripheral surface 70b and an inner surface of the second inner peripheral groove 835a. The second inner peripheral groove 835a corresponds to the target recess portion.

In the motor device unit 50, the motor outer peripheral surface 70a and the second motor outer peripheral surface 832a are continuously arranged in the axial direction AD. The motor outer peripheral surface 70a and the second motor outer peripheral surface 832a are flush with each other and form the same surface. The motor outer peripheral surface 70a and the second motor outer peripheral surface 832a are aligned in the radial direction RD. The motor outer peripheral surface 70a and the second motor outer peripheral surface 832a are continuously arranged in the axial direction AD even at positions slightly deviated in the radial direction RD. In this way, no step surface is formed at the boundary between the motor outer peripheral surface 70a and the second motor outer peripheral surface 832a. The second motor outer peripheral surface 832a corresponds to the target outer peripheral surface.

The electric power lead-out wire 212 has a crooked shape to avoid the second inner peripheral holding portion 835 toward the radially inner side. In the electric power lead-out wire 212, the outer peripheral lead-out portion 212a is located at a position aligned with the second inner peripheral holding portion 835 in the axial direction AD. The outer peripheral lead-out portion 212a extends toward the second inner peripheral holding portion 835 in the axial direction AD. The intersection lead-out portion 212c is located at a position separated from the second inner peripheral holding portion 835 toward the first rotor 300a in the radial direction RD. The intersection lead-out portion 212c extends toward the radially inner side to pass between the second inner peripheral holding portion 835 and the first rotor 300a. The intersection lead-out portion 212c is in a state of protruding radially inward with respect to the second inner peripheral holding portion 835 protrudes. The inner peripheral lead-out portion 212b is located at a position aligned with the second inner peripheral holding portion 835 in the radial direction RD. The inner peripheral lead-out portion 212b is located at a position away from the second inner peripheral holding portion 835 toward the radially inner side.

The gas flowing outside the motor device unit 50 includes a gas flowing along the outer peripheral surfaces 70a and 832a as an air flow Fb3. The air flow Fb3 passes through the boundary between the motor outer peripheral surface 70a and the second motor outer peripheral surface 832a in the axial direction AD. At the boundary, the motor outer peripheral surface 70a and the second motor outer peripheral surface 832a are continuous surfaces, and thus the air flow Fb3 is less likely to be disturbed.

According to the present embodiment, the motor outer peripheral surface 70a is arranged continuously with the second motor outer peripheral surface 832a in the axial direction AD. In the configuration, the air flow Fb3 flowing in the axial direction AD is less likely to be disturbed when passing through the boundary between the motor outer peripheral surface 70a and the second motor outer peripheral surface 832a. Further, since the motor outer peripheral surface 70a is provided outside the motor seal holding portion 78 in the radial direction RD, the air flow Fb3 is less likely to be disturbed when passing through the motor seal holding portion 78. Therefore, a reduction in the amount of gas flowing along the motor fins 72 due to disturbance of the air flow Fb3 and a decrease in the heat radiation effect of the motor fins 72 can be prevented.

According to the present embodiment, the housing seal portion 828 is in a state of entering the second inner peripheral groove 835a from the radially outer side. Therefore, the positional deviation of the housing seal portion 828 in the axial direction AD can be restricted by the second inner peripheral groove 835a.

According to the present embodiment, the second inner peripheral holding portion 835 is provided on the radially inner side of the motor inner peripheral surface 70b. In the configuration, the second inner peripheral holding portion 835 does not need to protrude from the motor outer peripheral surface 70a toward the radially outer side. Therefore, the second motor outer peripheral surface 832a and the motor outer peripheral surface 70a can be arranged in the axial direction AD such that the second motor outer peripheral surface 832a does not protrude from the motor outer peripheral surface 70a toward the radially outer side.

According to the present embodiment, the second inner peripheral holding portion 835 is provided on the radially inner side of the motor seal holding portion 78. In the configuration, similarly to the configuration in which the second inner peripheral holding portion 835 is provided on the radially inner side of the motor inner peripheral surface 70b, the second inner peripheral holding portion 835 does not need to protrude from the motor outer peripheral surface 70a toward the radially outer side. Therefore, the second motor outer peripheral surface 832a and the motor outer peripheral surface 70a can be arranged continuously in the axial direction AD such that the second motor outer peripheral surface 832a does not protrude from the motor outer peripheral surface 70a toward the radially outer side.

In the present embodiment, the motor seal holding portion 78 and the second inner peripheral holding portion 835 are in a state of sandwiching the housing seal portion 828 in the radial direction RD. Therefore, the housing seal portion 828 can be prevented from protruding from the motor seal holding portion 78 and the second inner peripheral holding portion 835 in the radial direction RD.

According to the present embodiment, the second motor housing 832 is fixed to the motor housing 70 as a fixed target. In the configuration, since the second motor outer peripheral surface 832a and the motor outer peripheral surface 70a are continuously arranged in the axial direction AD, the air flow Fb3 can be prevented from being disturbed at a boundary between the second motor device 830 and the motor device 60.

### <Twenty-Ninth Embodiment>

In a twenty-ninth embodiment, the motor device 60 includes a blowing device. Configurations, operations, and effects not particularly described in the twenty-ninth embodiment are the same as those in the first embodiment described above. In the twenty-ninth embodiment, differences from the first embodiment described above will be mainly described.

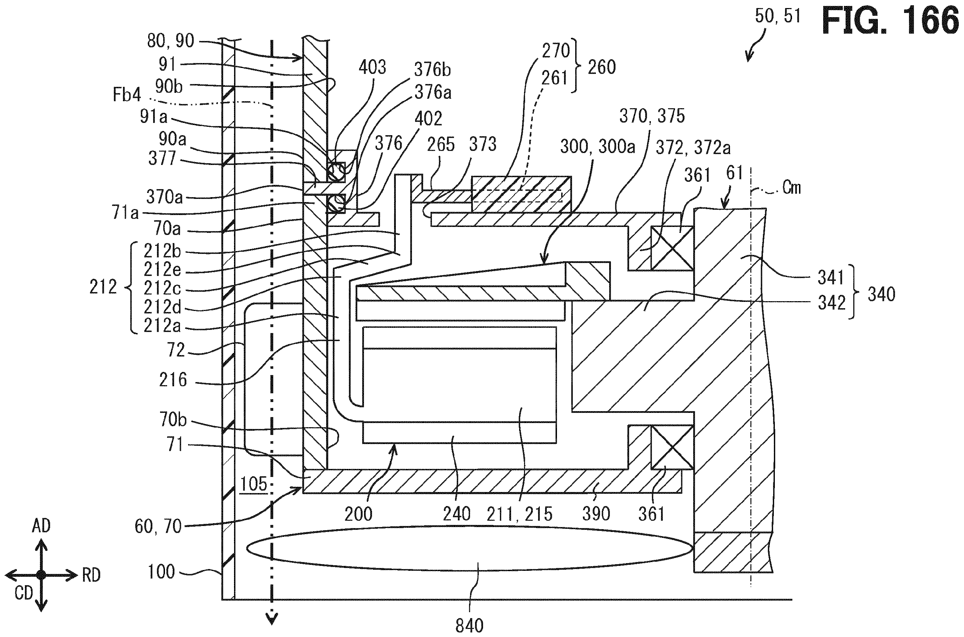

As shown in FIG. 166, the motor device 60 includes a blower fan 840. The blower fan 840 is aligned with the motor housing 70 in the axial direction AD. The blower fan 840 blows air such that a gas flows along the motor outer peripheral surface 70a in the axial direction AD. The blower fan 840 is provided, for example, on a side opposite to the inverter device 80 with the motor device 60 interposed therebetween in the axial direction AD. The blower fan 840 blows the air such that, for example, an air flow Fa4 flows from the inverter outer peripheral surface 90a toward the motor outer peripheral surface 70a. The blower fan 840 can cool the motor device 60 from the outer peripheral side by blowing the air. The blower fan 840 corresponds to the blowing device.

The blower fan 840 blows the air by rotating. The blower fan 840 is driven to rotate by the motor device 60. The blower fan 840 is attached to the shaft 340 and rotates together with the shaft 340. The blower fan 840 cools the motor device 60 while being driven by the motor device 60. The blower fan 840 is accommodated in the unit duct 100. In the unit duct 100, the air flow Fa4 flows through the duct flow channel 105 due to the air blowing of the blower fan 840.

According to the present embodiment, the air flow Fa4 flows along the motor outer peripheral surface 70a in the axial direction AD due to the air blowing of the blower fan 840. Therefore, as the air flow Fa4, a gas flowing along the motor fin 72 and the motor outer peripheral surface 70a is likely to be increased. Therefore, a heat radiation effect of the motor fins 72 and motor outer peripheral surface 70a can be enhanced by the blower fan 840.

### <Thirtieth Embodiment>

In the twenty-seventh embodiment described above, the motor outer peripheral surface 70a and the inverter outer peripheral surface 90a are continuously arranged in the axial direction AD. Meanwhile, in a thirtieth embodiment, the motor outer peripheral surface 70a is provided radially inward with respect to the inverter outer peripheral surface 90a. Configurations, operations, and effects not particularly described in the thirtieth embodiment are the same as those in the twenty-seventh embodiment described above. In the thirtieth embodiment, differences from the twenty-seventh embodiment described above will be mainly described.

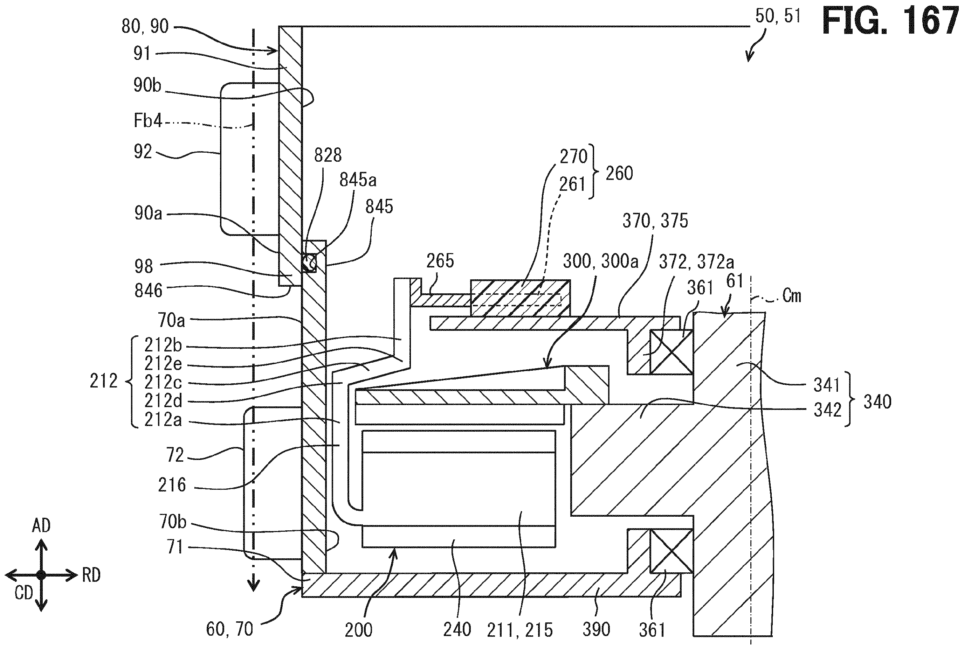

As shown in FIG. 167, the motor housing 70 is in a state of being located on the radially inner side of the inverter housing 90. The inverter housing 90 includes an inverter step surface 846. The inverter step surface 846 is formed by an end surface of the inverter housing 90 on the motor device 60 side. The inverter step surface 846 extends in the direction orthogonal to the axial direction AD. The inverter step surface 846 is in a state of spanning the motor outer peripheral surface 70a and the inverter outer peripheral surface 90a in the radial direction RD. The inverter step surface 846 faces the motor outer peripheral surface 70a in the axial direction AD. The inverter step surface 846 is provided at the boundary between the motor outer peripheral surface 70a and the inverter outer peripheral surface 90a in the axial direction AD.

The motor housing 70 includes a motor overlapping holding portion 845. The inverter housing 90 includes the inverter seal holding portion 98 as in the twenty-seventh embodiment described above. The motor overlapping holding portion 845 and the inverter seal holding portion 98 holds the housing seal portion 828, and restrict positional deviation of the housing seal portion 828. The housing seal portion 828 is sandwiched between the motor overlapping holding portion 845 and the inverter seal holding portion 98, and closes a gap between the holding portions 845 and 98. The motor overlapping holding portion 845 corresponds to the seal holding portion.

The motor overlapping holding portion 845 is provided on the motor housing 70. The motor overlapping holding portion 845 is provided on the housing main body 71. In the present embodiment, the motor overlapping holding portion 845 and the housing main body 71 are integrally formed. The motor overlapping holding portion 845 is provided on the housing main body 71, and forms, for example, an end portion of the housing main body 71 on the inverter device 80 side. An outer peripheral surface of the motor overlapping holding portion 845 is included in the motor outer peripheral surface 70a and the inner peripheral surface of the motor overlapping holding portion 845 is included in the motor inner peripheral surface 70b. The motor overlapping holding portion 845 is overlapped with the inverter inner peripheral surface 90b.

The motor overlapping holding portion 845 is provided at a position aligned with the inverter seal holding portion 98 in the radial direction RD. The motor overlapping holding portion 845 is located on the radially inner side of the inverter seal holding portion 98 with the housing seal portion 828 interposed therebetween. The motor overlapping holding portion 845 and the inverter seal holding portion 98 are in a state of pressing the housing seal portion 828 in the radial direction RD. The housing seal portion 828 is elastically deformed to be crushed in the radial direction RD by pressing forces of the motor overlapping holding portion 845 and the inverter seal holding portion 98. The housing seal portion 828 is in a state of being in close contact with the motor overlapping holding portion 845 and the inverter seal holding portion 98 by a restoring force accompanying the elastic deformation.

The motor overlapping holding portion 845 has a motor overlapping groove 845a. The motor overlapping groove 845a is a recess portion recessed toward the radially inner side and is opened toward the radially outer side. The motor overlapping groove 845a extends in a groove shape along the inverter inner peripheral surface 90b in the circumferential direction CD. The motor overlapping groove 845a is provided to make one round in the circumferential direction CD around the motor overlapping holding portion 845.

The motor overlapping groove 845a is provided at a position aligned with the inverter seal holding portion 98 in the radial direction RD. The motor overlapping groove 845a is a recess portion into which the housing seal portion 828 can enter. The housing seal portion 828 closes a gap between the inverter seal holding portion 98 and the motor overlapping holding portion 845 in a state of entering the inside of the motor overlapping groove 845a. The motor overlapping holding portion 845 restricts positional deviation of the housing seal portion 828 with respect to the inverter seal holding portion 98 and the motor overlapping holding portion 845. The housing seal portion 828 is in close contact with both the motor overlapping holding portion 845 and the inverter seal holding portion 98 by the restoring force accompanying the elastic deformation of the housing seal portion 828. Specifically, the housing seal portion 828 is in close contact with the inverter inner peripheral surface 90b and an inner surface of the motor overlapping groove 845a.

In the present embodiment, a gas flows from the inverter outer peripheral surface 90a toward the motor outer peripheral surface 70a in the axial direction AD. For example, a blowing device such as the blower fan 840 that is driven such that the gas flows from the inverter outer peripheral surface 90a toward the motor outer peripheral surface 70a is provided. A gas flow from the inverter outer peripheral surface 90a toward the motor outer peripheral surface 70a includes an air flow Fb4. The air flow Fb4 flowing along the inverter outer peripheral surface 90a reaches the motor outer peripheral surface 70a over the inverter step surface 846. For the air flow Fb4, the inverter step surface 846 faces a downstream side. An orientation of the inverter step surface 846 is set so as not to hinder the flow of the air flow Fb4.

According to the present embodiment, the motor outer peripheral surface 70a is provided to be separated from the inverter outer peripheral surface 90a toward the radially inner side. In the configuration, it can be avoided that the air flow Fb4 flowing from the inverter outer peripheral surface 90a toward the motor outer peripheral surface 70a in the axial direction AD hits the inverter step surface 846. Therefore, even though the inverter step surface 846 is present between the motor outer peripheral surface 70a and the inverter outer peripheral surface 90a, the air flow Fb4 is less likely to be disturbed by the inverter step surface 846. Therefore, the heat radiation effect of the motor device 60 can be enhanced by the orientation of the inverter step surface 846.

### <Thirty-First Embodiment>

In the thirtieth embodiment described above, the motor outer peripheral surface 70a is provided radially inward with respect to the inverter outer peripheral surface 90a. Meanwhile, in a thirty-first embodiment, the inverter outer peripheral surface 90a is provided radially inward with respect to the motor outer peripheral surface 70a. Configurations, operations, and effects not particularly described in the thirty-first embodiment are the same as those in the thirtieth embodiment described above. In the thirty-first embodiment, differences from the thirtieth embodiment described above will be mainly described.

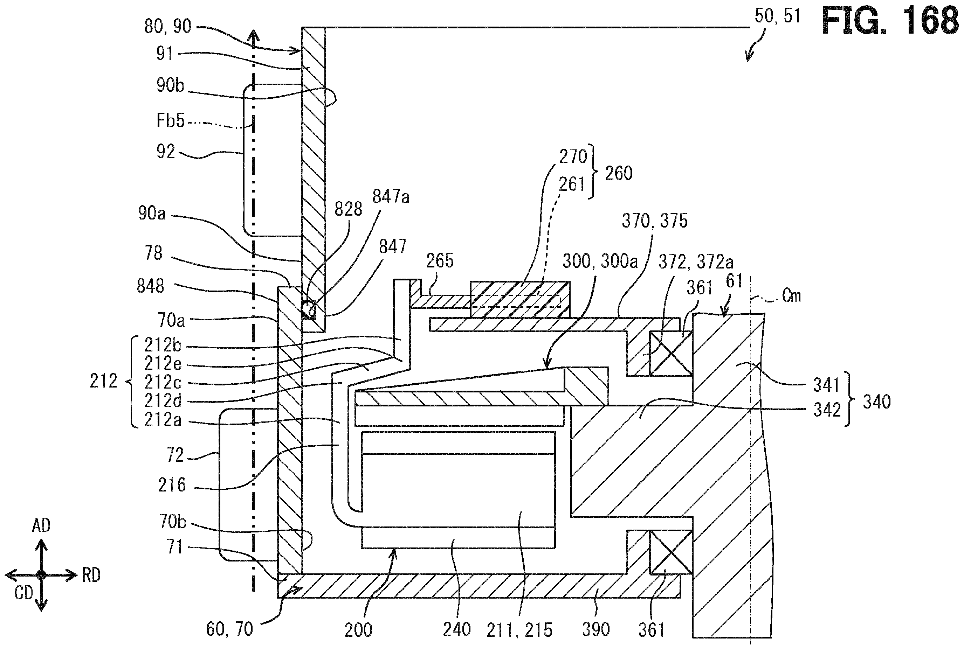

As shown in FIG. 168, the inverter housing 90 is in a state of entering the radially inner side of the motor housing 70. The motor housing 70 has a motor step surface 848. The motor step surface 848 is formed by an end surface of the motor housing 70 on the inverter device 80 side. The motor step surface 848 extends in the direction orthogonal to the axial direction AD. The motor step surface 848 is in a state of spanning the motor outer peripheral surface 70a and the inverter outer peripheral surface 90a in the radial direction RD. The motor step surface 848 faces the inverter outer peripheral surface 90a in the axial direction AD. The motor step surface 848 is provided at a boundary between the motor outer peripheral surface 70a and the inverter outer peripheral surface 90a in the axial direction AD.

The motor housing 70 includes an inverter overlapping holding portion 847. Similarly to the twenty-sixth embodiment described above, the inverter housing 90 includes the motor seal holding portion 78. The inverter overlapping holding portion 847 and the motor seal holding portion 78 hold the housing seal portion 828, and restrict positional deviation of the housing seal portion 828. The housing seal portion 828 is sandwiched between the inverter overlapping holding portion 847 and the motor seal holding portion 78, and closes a gap between the holding portions 847 and 78. The inverter overlapping holding portion 847 corresponds to the seal holding portion.

The inverter overlapping holding portion 847 is provided on the motor housing 70. The inverter overlapping holding portion 847 is provided on the housing main body 91. In the present embodiment, the inverter overlapping holding portion 847 and the housing main body 91 are integrally formed. The inverter overlapping holding portion 847 is provided on the housing main body 91, and forms, for example, an end portion of the housing main body 91 on the motor device 60 side. An outer peripheral surface of the inverter overlapping holding portion 847 is included in the inverter outer peripheral surface 90a and an inner peripheral surface of the inverter overlapping holding portion 847 is included in the inverter inner peripheral surface 90b. The inverter overlapping holding portion 847 is overlapped with the motor inner peripheral surface 70b.

The inverter overlapping holding portion 847 is provided at a position aligned with the motor seal holding portion 78 in the radial direction RD. The inverter overlapping holding portion 847 is located on the radially inner side of the motor seal holding portion 78 with the housing seal portion 828 interposed therebetween. The inverter overlapping holding portion 847 and the motor seal holding portion 78 are in a state of pressing the housing seal portion 828 in the radial direction RD. The housing seal portion 828 is elastically deformed to be crushed in the radial direction RD by pressing forces of the inverter overlapping holding portion 847 and the motor seal holding portion 78. The housing seal portion 828 is in a state of being in close contact with the inverter overlapping holding portion 847 and the motor seal holding portion 78 by a restoring force accompanying the elastic deformation.

The inverter overlapping holding portion 847 has an inverter overlapping groove 847a. The inverter overlapping groove 847a is a recess portion recessed toward the radially inner side and is opened toward the radially outer side. The inverter overlapping groove 847a extends in a groove shape along the motor inner peripheral surface 70b in the circumferential direction CD. The inverter overlapping groove 847a is provided to make one round in the circumferential direction CD around the inverter overlapping holding portion 847.

The inverter overlapping groove 847a is provided at a position aligned with the motor seal holding portion 78 in the radial direction RD. The inverter overlapping groove 847a is a recess portion into which the housing seal portion 828 can enter. The housing seal portion 828 closes a gap between the motor seal holding portion 78 and the inverter overlapping holding portion 847 in a state of entering the inside of the inverter overlapping groove 847a. The inverter overlapping holding portion 847 restricts positional deviation of the housing seal portion 828 with respect to the motor seal holding portion 78 and the inverter overlapping holding portion 847. The housing seal portion 828 is in close contact with both the inverter overlapping holding portion 847 and the motor seal holding portion 78 by the restoring force accompanying the elastic deformation of the housing seal portion 828. Specifically, the housing seal portion 828 is in close contact with the motor inner peripheral surface 70b and an inner surface of the inverter overlapping groove 847a.

In the present embodiment, a gas flows from the motor outer peripheral surface 70a toward the inverter outer peripheral surface 90a in the axial direction AD. For example, a blowing device such as the blower fan 840 that is driven such that the gas flows from the motor outer peripheral surface 70a toward the inverter outer peripheral surface 90a is provided. A gas flow from the motor outer peripheral surface 70a toward the inverter outer peripheral surface 90a includes an air flow Fb5. The air flow Fb5 flowing along the motor outer peripheral surface 70a reaches the inverter outer peripheral surface 90a over the motor step surface 848. For the air flow Fb5, the motor step surface 848 faces the downstream side. An orientation of the motor step surface 848 is set so as not to hinder the flow of the air flow Fb5.

According to the present embodiment, the motor outer peripheral surface 70a is provided to be separated from the inverter outer peripheral surface 90a toward the radially outer side. In the configuration, it can be avoided that the air flow Fb5 flowing from the motor outer peripheral surface 70a toward the inverter outer peripheral surface 90a in the axial direction AD hits the motor step surface 848. Therefore, even though the motor step surface 848 is present between the motor outer peripheral surface 70a and the inverter outer peripheral surface 90a, the air flow Fb5 is less likely to be disturbed by the motor step surface 848. Therefore, the heat radiation effect of the motor device 60 can be enhanced by the orientation of the motor step surface 848.

### <Other Embodiments>

The disclosure in the present description is not limited to the illustrated embodiments. The disclosure encompasses the illustrated embodiments and modifications thereof made by those skilled in the art. For example, the disclosure is not limited to the combination of components and elements described in the embodiments, and various modifications and implementations can be performed. The disclosure may be implemented in various combinations. The disclosure may have an additional portion that can be added to the embodiments. The disclosure encompasses the omission of components and elements of the embodiments. The disclosure encompasses the replacement or combination of components, elements between one embodiment and another embodiment. The disclosed technical scope is not limited to those described in the embodiments. The disclosed technical scope is indicated by the description of the claims, and should be construed to include all changes within the meaning and range equivalent to the description of the claims.

### <Configuration Group A>

In each of the embodiments described above, the busbar unit 260 and the neutral point busbar 290 may be separated from each other in at least one of the axial direction AD, the radial direction RD, and the circumferential direction CD. The electric power busbar 261 may not be protected by the busbar protection portion 270. In the configuration, when the neutral point busbar 290 is provided in the stator-side space S1 and the electric power busbar 261 is provided in the inverter-side space S2, the insulation reliability between the electric power busbar 261 and the neutral point busbar 290 is also less likely to be decreased. One of the electric power busbar 261 and the neutral point busbar 290 may be provided in the stator-side space S1, and the other may be provided in the inverter-side space S2.

### <Configuration Group B>

In each of the embodiments described above, the pair of axially inward magnets 312a and 312b may be oriented to face opposite sides in the circumferential direction CD as long as the pair of axially inward magnets 312a and 312b are oriented to be inclined with respect to the motor axis Cm. The pair of axially outward magnets 313a and 313b may be oriented to face each other in the circumferential direction CD as long as the pair of axially outward magnets 313a and 313b are oriented to be inclined with respect to the motor axis Cm. The pair of axially inward magnets 312a and 312b and the pair of axially outward magnets 313a and 313b may be inclined with respect to the motor axis Cm in the radial direction RD.

### <Configuration Group C>

In each of the embodiments described above, in the motor housing 70, the coil portion 215 may be disposed regardless of the position of the stator holding portion 171. For example, the coil portion 215 may be provided at a position deviated from the axial holding portion 174 in the circumferential direction CD. In the motor housing 70, as long as the coil protection portion 250 is in contact with the inner peripheral surface 70b, the stator holding portion 171 may not be provided on the inner peripheral surface 70b.

### <Configuration Group D>

In each of the embodiments described above, the motor device 60 and the inverter device 80 may share the housing. For example, the motor 61 and the inverter 81 may be accommodated in one housing. In the unit housing 51, at least one of the motor fin 72 and the inverter fin 92 may be provided. In the unit housing 51, the coil protection portion 250 may be provided at a position separated from the inner peripheral surface 70b.

### <Configuration Group E>

In each of the embodiments described above, the outer grommet portion 258 may extend further toward the electric power busbar 261 than the outer peripheral lead-out portion 212a extends in the axial direction AD. For example, in the first embodiment described above, the outer grommet portion 258 may extend further toward the electric power busbar 261 than the inner peripheral bent portion 212e extends in the axial direction AD. The outer grommet portion 258 may not extend further toward the electric power busbar 261 than the outer peripheral bent portion 212d extends in the axial direction AD. That is, the outer grommet portion 258 may not reach the intersection lead-out portion 212c in the axial direction AD.

In each of the embodiments described above, the intersection lead-out portion 212c may extend in the radial direction RD or in the circumferential direction CD as long as the intersection lead-out portion 212c intersects the outer peripheral lead-out portion 212a.

In each of the embodiments described above, the outer insulation portion such as the outer grommet portion 258 may not be fixed to the motor inner peripheral surface 70b as long as the outer insulation portion enters between the outer peripheral lead-out portion 212a and the motor inner peripheral surface 70b. For example, the outer insulation portion may be provided at a position separated from the motor inner peripheral surface 70b toward the radially inner side. The outer insulation portion may be provided at a position separated from the outer peripheral lead-out portion 212a toward the radially outer side. The modification regarding the positions relative to the motor inner peripheral surface 70b and the outer peripheral lead-out portion 212a is also applicable to a lead-out insulation portion and an outer protection portion, similarly to the outer insulation portion.

### <Configuration Group F>

In each of the embodiments described above, the holder rib 323 may be provided at any position with respect to the magnet 310 as long as at least a part of the holder rib 323 is located at a position aligned with the magnet 310 in the axial direction AD. For example, the holder rib 323 may extend further than the magnet 310 extends toward at least one of the radially inner side and the radially outer side. The holder rib 323 may not extend further than the magnet 310 extends on either the radially inner side or the radially outer side. Further, the magnet 310 may extend further than the holder rib 323 extends toward at least one of the radially inner side and the radially outer side.

In each of the embodiments described above, the holder rib 323 may have any shape as long as air can be sent toward the electric power lead-out wire 212. The holder rib 323 may have a shape that allows air to be sent in at least one of the radial direction RD and the axial direction AD. For example, in the holder rib 323, the rib tapered portion 323d may not be longer than the rib parallel portion 323c in the radial direction RD. The holder rib 323 may gradually become thinner or thicker in the axial direction AD from the holder main body 321 toward the tip portion. For example, the width dimension of the holder rib 323 in the circumferential direction CD may be gradually decreased toward the rib parallel portion 323c.

The multiple holder ribs 323 may not extend radially around the motor axis Cm. For example, the holder rib 323 may extend from the holder outer peripheral end 320b toward the radially inner side facing a position deviated from the motor axis Cm in the radial direction RD. Further, at least one holder rib 323 may be provided in the rotor 300.

In each of the embodiments described above, the holder rib 323 may be provided at any position with respect to the holder main body 321 as long as air can be sent toward the electric power lead-out wire 212. The holder rib 323 may be provided at a position separated from at least one of the holder inner peripheral end 320a and the holder outer peripheral end 320b in the radial direction RD. For example, the holder rib 323 is provided at a position separated from the holder outer peripheral end 320b toward the radially inner side. The holder rib 323 may protrude from at least one of the holder inner peripheral end 320a and the holder outer peripheral end 320b in the radial direction RD. For example, the holder rib 323 protrudes from the holder outer peripheral end 320b toward the radially outer side. The multiple holder ribs 323 may be arranged in the radial direction RD.

In each of the embodiments described above, the first rotor 300a may have any shape as long as the cooling air can be generated by the holder ribs 323. For example, the first rotor 300a may have a shape similar to a centrifugal fan, a sirocco fan, or an axial flow fan.

### <Configuration Group G>

In each of the embodiments described above, the magnet unit 316 may include at least one magnet 310. For example, in the configuration in which the magnet unit 316 includes only one magnet 310, the one magnet 310 corresponds to the magnet unit 316.

In each of the embodiments described above, the magnet fixing tool 335 may have any configuration as long as the fixing block 330 is fixed to the magnet holder 320. For example, the magnet fixing tool 335 may be screwed into the magnet holder 320 through the block hole 333. In this case, it is preferable that the fixing head portion 337 does not protrude from the fixing block 330 toward the axial gap 475.

In each of the embodiments described above, the fixing block 330 may have any shape as long as the fixing block 330 is in a state of being caught by the inner peripheral tapered surface 316d. For example, the fixing block 330 may not have the block tapered surface 330a. In the configuration, a part of the fixing block 330 may also be caught by the inner peripheral tapered surface 316d.

In each of the embodiments described above, the fixing block 330 may be provided on the radially outer side of the magnet unit 316. That is, the fixing block 330 may be provided on at least one of the radially outer side and the radially inner side of the magnet unit 316. Multiple fixing blocks 330 may be provided for one magnet unit 316. In other words, one magnet unit 316 may be fixed to the magnet holder 320 by the multiple fixing blocks 330.

In each of the embodiments described above, the fixing blocks 330 may be fixed to the magnet holder 320 in any configuration. For example, the fixing shaft portion 336 may be provided integrally with the fixing block 330. In the configuration, the fixing block 330 can be directly fixed to the magnet holder 320 by screwing the fixing shaft portion 336 into the block-purpose hole 329. The fixing block 330 and the magnet holder 320 may be fixed by a coupling tool such as a snap fit.

In each of the embodiments described above, the magnet unit 316 and the outer peripheral engagement portion 322 may have any shape as long as the magnet unit 316 is caught by the outer peripheral engagement portion 322. For example, as long as the magnet unit 316 is in a state of being caught by the engagement tapered surface 322a, the magnet unit 316 may not have the outer peripheral tapered surface 316e. In the configuration, a part of the magnet unit 316 may be caught by the outer peripheral tapered surface 316e. As long as the outer peripheral tapered surface 316e is in a state of being caught by the outer peripheral engagement portion 322, the outer peripheral engagement portion 322 may not have the engagement tapered surface 322a. In the configuration, the outer peripheral tapered surface 316e may be caught by a part of the outer peripheral engagement portion 322.

In each of the embodiments described above, the fixing block 330 and the holder receiving portion 328 may have any shape as long as the fixing block 330 is in a state of being received by the holder receiving portion 328. For example, the holder receiving portion 328 may not have the holder receiving surface 328a as long as the block receiving surface 330b is received by the holder receiving portion 328. In the configuration, the block receiving surface 330b may be received by a part of the holder receiving portion 328. The fixing block 330 may not have the block receiving surface 330b as long as the fixing block 330 is received by the holder receiving surface 328a. In the configuration, a part of the fixing block 330 may be received by the holder receiving surface 328a.

In each of the embodiments described above, the first rotor surface 301 may have any shape as long as the axial gap 475 is present between the first rotor surface 301 and the stator 200. For example, at least one of the outer peripheral engagement portion 322, the fixing block 330, the magnet fixing tool 335, and the holder receiving portion 328 may slightly protrude further toward the axial gap 475 than the magnet unit 316 protrudes.

In each of the embodiments described above, the positioning portion such as the magnet protrusion 483 may have any configuration as long as the position of the magnet unit 316 in the circumferential direction CD can be determined. For example, a recess portion may be provided in the second unit surface 316h or the like of the magnet unit 316, and the magnet protrusion 483 may be caught in the recess portion. The magnet protrusion 483 may be provided on at least one of the holder main body 321, the outer peripheral engagement portion 322, and the holder receiving portion 328. The magnet protrusion 483 may be provided on the fixing block 330.

In each of the embodiments described above, the multiple magnet units 316 may include at least one of the inclined magnet unit 317 and parallel magnet unit 318. For example, the multiple magnet units 316 may include only one parallel magnet unit 318, and all the remaining magnet units 316 may be the 317. In the configuration, the operator can also select the parallel magnet units 318 as the last one when arranging the multiple magnet units 316 on the magnet holder 320 in the process of manufacturing the rotor 300.

### <Configuration Group H>

In each of the embodiments described above, the connection bent portion 212f may be a portion of the electric power lead-out wire 212 which is bent to connect the coil 211 and the outer peripheral lead-out portion 212a. The connection bent portion 212f may have, for example, two bent portions. The connection bent portion 212f may be located at a position separated from the second coil end portion 211b as long as the connection bent portion 212f is located at a position separated from the first coil end portion 211a toward the second coil end portion 211b. For example, the connection bent portion 212f may be located between the protection axis Cp and the second coil end portion 211b in the axial direction AD. The connection bent portion 212f may be located between the protection axis Cp and the first coil end portion 211a in the axial direction AD.

In each of the embodiments described above, the connection bent portion 212f and the grommet 255 may not be away from each other in the axial direction AD. For example, a boundary between the connection bent portion 212f and the outer peripheral lead-out portion 212a may be disposed in an end portion of the grommet hole 450. Further, the connection bent portion 212f may enter the grommet hole 450.

In each of the embodiments described above, the grommet 255 may not extend beyond the protection axis Cp toward the second coil end portion 211b in the axial direction AD. The grommet 255 may not extend beyond the first coil end portion 211a toward the second coil end portion 211b.

In each of the embodiments described above, the grommet 255 may include at least the grommet cylinder 460. In a configuration in which the grommet 255 does not include the grommet rib 465, the grommet cylinder 460 may also be in close contact with the inner peripheral surface of the first recess portion 172a. Accordingly, at the time of manufacturing the coil protection portion 250, the leakage of the molten resin from between the outer surface of the grommet cylinder 460 and the inner surface of the first recess portion 172a can be prevented.

In each of the embodiments described above, in the grommet 255, as long as at least a part of the expanded cylinder portion 462 is embedded in the coil protection portion 250, the fastening cylinder portion 461 may or may not be embedded in the coil protection portion 250. The exposed portion 255b may include a part of the expanded cylinder portion 462. In the configuration, if the exposed portion 255b includes the fastening cylinder portion 461, the fastening cylinder portion 461 also prevents leakage of the molten resin from the grommet hole 450 during the manufacture of the coil protection portion 250.

In each of the embodiments described above, in the grommet 255, the embedded portion 255a may be shorter than the exposed portion 255b. The grommet 255 may not include the exposed portion 255b. That is, the grommet 255 may not protrude from the first protection end portion 250a. In the configuration, the fastening cylinder portion 461 is provided in the embedded portion 255a. In the grommet 255, the expanded cylinder portion 462 may be shorter than the fastening cylinder portion 461. The grommet 255 may not include the expanded cylinder portion 462.

In each of the embodiments described above, the grommet groove 466 may extend in a direction intersecting the axial direction AD. For example, the grommet groove 466 may be provided on the outer surface of the grommet 255 in a manner of extending in the circumferential direction CD. The recess portion such as the grommet groove 466 may not have a groove shape as long as the recess portion can be engaged with the coil protection portion 250. Further, the embedded engagement portion such as the grommet groove 466 may not be the recess portion as long as the embedded engagement portion can be engaged with the coil protection portion 250. For example, a projection portion provided on the outer surface of the grommet 255 may be engaged with the coil protection portion 250 as the embedded engagement portion.

In each of the embodiments described above, the electric power lead-out wire 212 may extend toward the second rotor 300b in the axial direction AD. In the configuration, the second rotor 300b corresponds to the rotor. As long as the electric power lead-out wire 212 extends toward the rotor such as the first rotor 300a in the axial direction AD, the motor device 60 may not have two rotors.

### <Configuration Group I>

In each of the embodiments described above, the rim 344 may have any configuration as long as the rim 344 supports the rotor 300 against the attraction force F1. For example, the rim 344 may not extend in an annular shape in the circumferential direction CD, and multiple rims 344 may be arranged in the circumferential direction CD. The rim 344 may not be provided at the outer peripheral end of the shaft flange 342, and may be provided at a position separated from the outer peripheral end of the shaft flange 342 toward the radially inner side. The rim 344 may be provided individually for each of the first rotor 300a and the second rotor 300b. For example, in addition to the rim 344, the shaft flange 342 may be provided individually for each of the first rotor 300a and the second rotor 300b.

In each of the embodiments described above, the rim 344 may be provided at any position as long as the rim 344 is located at a position away from the shaft main body 341 toward the magnet 310. For example, the rim 344 may be provided at a position in which the distance LI8 to the holder inner peripheral end 320a is smaller than the distance LI5 to the magnet 310.

In each of the embodiments described above, the rotation fixing portion such as the holder fixing tool 350 may have any configuration as long as the rotor 300 is fixed to the spoke 343. For example, the rotor 300 may be fixed to the spoke 343 by engaging an engagement portion provided in the rotor 300 with the flange fixing hole 345. In the configuration, the engagement portion provided on the rotor 300 corresponds to the rotation fixing portion.

### <Configuration Group J>

In each of the embodiments described above, the thermal conduction property of the retrofit restriction portion 930 may not be lower than the thermal conduction property of the housing main body 71. For example, in the eighteenth embodiment described above, the thermal conduction property of the retrofit restriction portion 930 may be higher than the thermal conduction property of the housing main body 71. In the configuration, the thermal conductivity of the retrofit restriction portion 930 is higher than the thermal conductivity of the housing main body 71. The thermal conduction property of the material for forming the retrofit restriction portion 930 is higher than the thermal conduction property of the material for forming the housing main body 71.

In the motor housing 70, the housing main body 71 is made of, for example, aluminum, and the retrofit restriction portion 930 is made of, for example, CFRP. When the thermal conduction property of CFRP is higher than the thermal conduction property of aluminum, CFRP may be referred to as a high heat transfer CFRP. In the motor housing 70 in which the housing main body 71 is made of aluminum and the retrofit restriction portion 930 is made of CFRP, the electrical insulation property of the retrofit restriction portion 930 is higher than the electrical insulation property of the housing main body 71.

In the configuration in which the thermal conduction property of the retrofit restriction portion 930 is higher than the thermal conduction property of the housing main body 71, the heat of the coil portion 215 is easily released to the retrofit restriction portion 930. Therefore, the heat radiation effect of releasing the heat of the coil portion 215 to the outside of the motor housing 70 can be enhanced by the retrofit restriction portion 930.

In each of the embodiments described above, the electric machine restriction portion may be provided in the electric machine housing in any manner. For example, as the electric machine restriction portion, both the displacement restriction portion 920 of the seventeenth embodiment described above and the retrofit restriction portion 930 of the eighteenth embodiment described above may be provided in the motor housing 70. The displacement restriction portion 920 and the retrofit restriction portion 930 may be arranged in the circumferential direction CD or in the axial direction AD.

In each of the embodiments described above, both the stator holding portion 171 and the electric machine restriction portion may be provided in the electric machine housing. For example, in the seventeenth embodiment described above, both the stator holding portion 171 and the displacement restriction portion 920 may be provided in the motor housing 70. The displacement restriction portion 920 may extend from the stator holding portion 171 toward the radially inner side.

In each of the embodiments described above, the shape and size of the electric machine restriction portion may be any shape and size. For example, in the seventeenth embodiment described above, the displacement restriction portion 920 may not be in a state of straddling the two coil bodies 900 in the circumferential direction CD. For example, the displacement restriction portion 920 may extend in a plate shape in the direction orthogonal to the circumferential direction CD. In the displacement restriction portion 920, the displacement restriction surface 923 extends in the direction orthogonal to the circumferential direction CD. The displacement restriction portion 920 may extend further in the axial direction AD than the coil body 900 extends, and may not reach the coil body end surface 902. Two displacement restriction portions 920 adjacent to each other in the circumferential direction CD may be separated from each other in the circumferential direction CD.

In each of the embodiments described above, the gap heat radiation portion may be provided in any manner. For example, the motor device 60 may include both the coil protection portion 250 of the first embodiment described above and the outer peripheral heat radiation portion 941 of the nineteenth embodiment described above. The gap heat radiation portion may not be provided. For example, in the seventeenth embodiment described above, the coil protection portion 250 may not include the protection outer peripheral portion 917.

In each of the embodiments described above, the electric machine restriction portion may have any thermal conduction property and electrical insulation property. For example, in the eighteenth embodiment described above, the thermal conduction property of the retrofit restriction portion 930 may not be higher than the thermal conduction property of the housing main body 71. For example, the thermal conduction property of the retrofit restriction portion 930 may be the same as the thermal conduction property of the housing main body 71. The electrical insulation property of the retrofit restriction portion 930 may not be higher than the electrical insulation property of the housing main body 71. For example, the electrical insulation property of the retrofit restriction portion 930 may be the same as the electrical insulation property of the housing main body 71.

### <Configuration Group K>

In each of the embodiments described above, the rotation detection unit may have any configuration as long as a rotation state of the shaft main body 341 can be detected. As the rotation detection unit, an MR sensor, an encoder, or the like may be used in addition to the resolver 421. The MR sensor is a magnetic sensor using a magnetoresistance effect element.

In each of the embodiments described above, the resolver 421 may be provided at any position in the axial direction AD as long as the resolver 421 is in a state of entering between the electric power busbar 261 and the shaft main body 341. For example, the resolver 421 may protrude toward at least one of one side and the other side in the axial direction AD from the electric power busbar 261. The resolver 421 may not protrude from the electric power busbar 261 in the axial direction AD.

In each of the embodiments described above, the electric power busbar 261 may be provided at any position in the radial direction RD as long as the electric power busbar 261 is provided at a position away from the resolver 421 toward the radially outer side. For example, the electric power busbar 261 may be provided at a position closer to the resolver 421 than to the motor inner peripheral surface 70b in the radial direction RD. The electric power busbar 261 may be provided at a position away from the coil portion 215 toward the radially inner side, or may be provided at a position away from the coil portion 215 toward the radially outer side.

In each of the embodiments described above, the electric power busbar 261 and the resolver 421 may be provided on a side of the rotor 300 facing the rear frame 370. That is, the electric power busbar 261 and the resolver 421 may be provided between the rear frame 370 and the rotor 300. At least one of the electric power busbar 261 and the resolver 421 may be provided on the rear frame 370. Further, the electric power busbar 261 and the resolver 421 may be provided on the drive frame 390. In the configuration, the drive frame 390 corresponds to an electric machine cover.

In each of the embodiments described above, the neutral point busbar 290 may be provided at any position in the axial direction AD as long as the neutral point busbar 290 is located at a position away from the resolver 421 in the axial direction AD. For example, the neutral point busbar 290 may be provided at a position closer to the first rotor 300a than to the second rotor 300b in the axial direction AD. The neutral point busbar 290 may be provided between the rear frame 370 and the first rotor 300a. The neutral point busbar 290 may be provided on a side opposite to the resolver 421 with both the first rotor 300a and the second rotor 300b interposed therebetween in the axial direction AD.

In each of the embodiments described above, the neutral point busbar 290 may be provided at any position in the radial direction RD as long as the neutral point busbar 290 is located at a position away from the resolver 421 in the axial direction AD. For example, the neutral point busbar 290 may be provided at a position aligned with the resolver 421 in the axial direction AD. The neutral point busbar 290 may be provided at a position away from the electric power busbar 261 toward the radially outer side in the radial direction RD.

In each of the embodiments described above, at least one of the electric power busbar 261 and the neutral point busbar 290 may be the energization busbar. For example, the electric power busbar 261 and the neutral point busbar 290 may be arranged in the radial direction RD. In the configuration, the resolver 421 may be in a state of entering the inside of both the electric power busbar 261 and the neutral point busbar 290.

### <Configuration Group L>

In each of the embodiments described above, the multiple magnet pieces 505 of one magnet 310 may have different thickness dimensions. For example, a thickness dimension of a specific magnet piece 505 among the multiple magnet pieces 505 may be larger or smaller. The twentieth embodiment described above is an example in which the thickness dimension of the specific magnet piece 505 such as the inner peripheral end piece 871 and an outer peripheral end piece 872 among the multiple magnet pieces 505 is larger. In the multiple magnets 310 of one magnet unit 316, the thickness dimensions of the magnet pieces 505 of the respective magnets 310 may be different. For example, the thickness dimension of the magnet piece 505 of the inclined magnet 314 may be different from the thickness dimension of the magnet piece 505 of the parallel magnet 315.

In each of the embodiments described above, as long as one magnet 310 includes the multiple magnet pieces 505, the shapes and sizes of the magnet pieces 505 may be set in any manner. For example, the thickness dimensions of the multiple magnet pieces 505 of one magnet 310 may be the same as the thickness dimension of the inner peripheral end piece 871 of the twentieth embodiment described above. The thickness dimensions of the multiple magnet pieces 505 of one magnet 310 may be the same as the thickness dimension of the outer peripheral end piece 872. Further, the multiple magnet pieces 505 of one magnet 310 may include at least one of the inner peripheral end piece 871 and the outer peripheral end piece 872.

In each of the embodiments described above, the magnet piece 505 may not be orthogonal to either the unit center line C316 or the magnet center line C310. For example, the magnet piece 505 may be inclined toward at least one of the circumferential direction CD and the axial direction AD with respect to at least one of the unit center line C316 and the magnet center line C310. In the magnet piece 505, the inner peripheral piece surface 505a and the outer peripheral piece surface 505b may be inclined to each other.

In each of the embodiments described above, the multiple magnet pieces 505 of one magnet 310 may be stacked in any direction. For example, in one magnet 310, the multiple magnet pieces 505 may be stacked in the axial direction AD or the circumferential direction CD.

In each of the embodiments described above, in one magnet 310, orientation directions of the magnet pieces 505 may not be the same among the multiple magnet pieces 505. That is, in one magnet 310, the magnetization directions of the magnet pieces 505 may be different among the multiple magnet pieces 505. In the configuration, the orientation of the magnet 310 may be set to a predetermined orientation. That is, one magnet 310 may have a specific magnetization direction as the magnetization direction.

In each of the embodiments described above, the magnet unit 316 may include at least one of the inclined magnet 314 and the parallel magnet 315. For example, the inclined magnet unit 317 may include any number of the inclined magnets 314 and parallel magnets 315 as long as the pair of unit side surfaces 316c are inclined to each other. The inclined magnet unit 317 may include only the inclined magnet 314 in the inclined magnet 314 and the parallel magnet 315, for example. The parallel magnet unit 318 may include any number of the inclined magnets 314 and the parallel magnets 315 as long as the pair of unit side surfaces 316c are parallel to each other. The parallel magnet unit 318 may include, for example, the inclined magnet 314. In the inclined magnet 314, a length dimension of the magnet inner peripheral end 310a in the circumferential direction CD may be larger than a length dimension of the magnet outer peripheral end 310b.

In each of the embodiments described above, as long as the multiple magnets 310 are arranged in the Halbach array, the combination of the shape, size, number, and orientation of the magnets 310 may be any combination. For example, between the first peripheral magnet 311a and the second peripheral magnet 311b in the circumferential direction CD, both the axially inward magnets 312a and 312b and the axially inward magnet 882 may be provided, or three or more axially inward magnets 882 may be provided. In the circumferential direction CD, the width dimension of the peripheral magnets 311a and 311b may be larger than those of at least one of the axially inward magnets 312a and 312b and the axially outward magnets 313a and 313b. Further, each of the first orientation unit 319a and the second orientation unit 319b may have only one magnet 310, or may have four or more magnets 310.

In each of the embodiments described above, the rotor 300 may not include the magnet unit 316 as long as the rotor 300 includes the multiple magnets 310. For example, in the rotor 300, all the magnets 310 may be individually fixed to the magnet holder 320 without being integrated into a unit.

In each of the embodiments described above, the operator may prepare the strip magnet 512 in any manner in the process of manufacturing the magnet 310. For example, in the preparation process of preparing the strip magnet 512, the sintered block 511 may be purchased and prepared. The operator manufactures the strip magnet 512 by performing the strip process using the prepared sintered block 511. The strip magnet 512 may be purchased and prepared.

In each of the embodiments described above, the magnetic base material 513 may be ground in any manner in a stage before the unit base material 514 is manufactured in the unit base material process. For example, in the magnet side surface process, at least the magnet side surface 310c may be formed on the magnet base material 513. In the magnet side surface process, the operator may form at least one of the inner peripheral tapered surface 310d, the outer peripheral tapered surface 310e, the first magnet surface 310g, and the second magnet surface 310h in addition to the magnet side surface 310c.

### <Configuration Group M>

In each of the embodiments described above, the axial gap 475 may have any shape as long as the axial gap 475 is a gap between the stator 200 and the rotor 300. For example, in the axial gap 475, a direction in which the gap outer peripheral end 476 is opened may not be the radially inner side. A direction in which the gap inner peripheral end 477 is opened may not be the radially outer side. For example, the gap outer peripheral end 476 and the gap inner peripheral end 477 may be opened in the axial direction AD.

In each of the embodiments described above, multiple rotor inner peripheral holes such as the holder adjustment holes 326 may be formed between two holder ribs 323 adjacent to each other in the circumferential direction CD. The rotor inner peripheral holes may not be formed between two holder ribs 323 adjacent to each other in the circumferential direction CD. The rotor inner peripheral hole formed between two holder ribs 323 adjacent to each other in the circumferential direction CD may be either the gap-side hole such as the holder adjustment hole 326 or the shaft-portion-side hole such as the holder center hole 324. At least one of the gap-side hole and the shaft-portion-side hole may be formed as the rotor inner peripheral hole.

In each of the embodiments described above, it is sufficient that at least one rotor inner peripheral hole such as the holder adjustment hole 326 is formed in the rotor 300. For example, in the configuration in which the holder center hole 324 is formed as the rotor inner peripheral hole, only one rotor inner peripheral hole may be formed. The rotor inner peripheral hole may be formed on at least one of the radially outer side and the radially inner side of the support partition portion such as the rim 344. For example, at least one of the holder adjustment hole 326 and the holder center hole 324 may be formed in the rotor 300. At least one of the holder center hole 324, the holder fixing hole 325, and the holder pin hole 327 may be provided as the shaft-portion-side hole.

In each of the embodiments described above, the rotor rib such as the holder rib 323 may be provided in any manner as long as the air flow is generated as the rotor 300 rotates. For example, the rotor rib may extend from the holder outer peripheral end 320b toward the radially outer side. The rotor rib may extend from the holder inner peripheral end 320a toward the radially inner side. Further, the rotor rib may be provided to extend from at least one of the holder main body 321 and the magnet 310 toward the stator 200. The rotor rib may not be provided as long as the air flow is generated as the rotor 300 rotates.

### <Configuration Group N>

In each of the embodiments described above, as long as the seal member is sandwiched between the motor housing 70 and the fixed target, the recess portion into which the seal member enters may be provided in either the motor housing 70 or the fixed target. The recess portion may not be provided in either the motor housing 70 or the fixed target. Further, as long as the gap between the motor housing 70 and the fixed target is closed by the seal member, the seal member may be in contact with any portion of each of the motor housing 70 and the fixed target.

In each of the embodiments described above, the multiple fixed targets may be fixed to the motor housing 70. For example, as the fixed target, both the rear frame 370 and the drive frame 390 may be fixed to the motor housing 70. In the configuration, the seal member is provided between the motor housing 70 and the drive frame 390.

### <Configuration Group A>

In a motor such as an axial gap motor, there is a concern that insulation reliability of an electrical insulation state between an electric power busbar and a neutral point busbar is decreased. In view of this concern, a rotary electric machine capable of enhancing the electrical insulation reliability is provided.

According to a feature A1, a neutral point busbar (290) is provided at a position separated from a busbar protection portion (270) that has an electrical insulation property and that protects an electric power busbar (261). In the configuration, the neutral point busbar (290) and the electric power busbar (261) are certainly not in contact with each other, and the neutral point busbar (290) and the busbar protection portion (270) are also not in contact with each other. Therefore, a decrease in the insulation reliability of an electrical insulation state between the neutral point busbar (290) and the electric power busbar (261) can be reduced due to separation between the neutral point busbar (290) and the busbar protection portion (270). Therefore, since the neutral point busbar (290) and the busbar protection portion (270) are separated from each other, the electrical insulation reliability of the rotary electric machine (60) can be enhanced.

According to a feature A10, an electric power busbar (261) is provided in one of a first space (S1) and a second space (S2) which are arranged in the axial direction (AD), and a neutral point busbar (290) is provided in the other space. Moreover, the first space (S1) and the second space (S2) are partitioned by a space partition portion (370). In the configuration, the space partition portion (370) restricts contact between the neutral point busbar (290) and the electric power busbar (261). In this way, the space partition portion (370) can reduce the decrease in the insulation reliability of the electrical insulation state between the neutral point busbar (290) and the electric power busbar (261). Therefore, the electrical insulation reliability of the rotary electric machine (60) can be enhanced by the space partition portion (370).

### [Feature A1]

A rotary electric machine (60) to be driven by supply of electric power includes:
a stator (200) including coils (211) of multiple phases;
a rotor (300, 300a, 300b) configured to rotate about a rotation axis (Cm) and aligned with the stator in an axial direction (AD) in which the rotation axis extends;
an electric power busbar (261) electrically connected to the coils and configured to supply the electric power to the coils;
a busbar protection portion (270) having an electrical insulation property and configured to protect the electric power busbar; and
a neutral point busbar (290) provided at a position separated from the busbar protection portion and electrically connected to a neutral point (65) in each of the coils of multiple phases.

### [Feature A2]

The rotary electric machine according to feature A1, further includes:
a space partition portion (370) extending in a direction orthogonal to the rotation axis and partitioning a first space (S1) in which the stator is accommodated and a second space (S2) in which the stator is not accommodated such that the first space and the second space are arranged along the rotation axis, and
the electric power busbar is provided in one of the first space and the second space, and the neutral point busbar is provided in the other space.

### [Feature A3]

In the rotary electric machine according to feature A1 or A2, the neutral point busbar and the busbar protection portion are provided at positions separated from each other in the axial direction.

### [Feature A4]

In the rotary electric machine according to any one of features A1 to A3,
a first rotor (300a) and a second rotor (300b) aligned with the first rotor with the stator interposed therebetween in the axial direction are provided as the rotor, and
the coil is formed by winding a coil wire (220) including multiple wires (223).

### [Feature A5]

In the rotary electric machine according to any one of features A1 to A4,
the coil is formed by multiple coil portions (215) around each of which a coil wire (220) is wound and which are arranged in a circumferential direction (CD) of the rotation axis, and
two of the coil portions adjacent to each other in the circumferential direction are different in the number of turns.

### [Feature A6]

The rotary electric machine according to any one of features A1 to A5, further includes:
a relay busbar (280) electrically connected to an electric power conversion unit (81) configured to convert the electric power and to supply the converted electric power to the electric power busbar; and
a terminal block (285) configured to support a connection portion between the electric power busbar and the relay busbar.

### [Feature A7]

In the rotary electric machine according to feature A6, when an area around the rotation axis is divided into multiple divided regions (RE) at equal intervals in a circumferential direction of the rotation axis, the relay busbar is provided to each of the multiple divided regions.

### [Feature A8]

The rotary electric machine according to any one of features A1 to A7, further includes:
a bearing (360) configured to rotatably support the rotor; and
a support frame (370) including a bearing support portion (372) configured to support the bearing and a busbar support portion (371) configured to support the busbar protection portion.

### [Feature A9]

The rotary electric machine according to any one of features A1 to A8, further includes:
an orthogonal frame (370) extending in a direction orthogonal to the rotation axis; and
a rotation detection unit (421) provided on a side opposite to the neutral point busbar with the orthogonal frame interposed therebetween in the axial direction and configured to detect a rotation angle of the rotor.

### [Feature A10]

A rotary electric machine (60) to be driven by supply of electric power includes:
a stator (200) including coils (211) of multiple phases;
a rotor (300, 300a, 300b) aligned with the stator in an axial direction (AD) in which a rotation axis (Cm) extends and configured to rotate about the rotation axis with respect to the stator;
an electric power busbar (261) electrically connected to the coils and configured to supply the electric power to the coils;
a neutral point busbar (290) electrically connected to a neutral point (65) in each of the multi-phase coils; and
a space partition portion (370) extending in a direction orthogonal to the rotation axis and partitioning a first space (S1) in which the stator is accommodated and a second space (S2) in which the stator is not accommodated such that the first space and the second space are arranged in the axial direction, and
the electric power busbar is provided in one of the first space and the second space, and the neutral point busbar is provided in the other space.

### <Configuration Group B>

In a motor such as an axial gap motor, there is a concern that the energy efficiency is decreased. In view of this concern, a rotary electric machine capable of improving the energy efficiency is provided.

According to a feature B1, magnetic flux generated by a pair of peripheral magnets (311a, 311b) and a pair of axially inward magnets (312a, 312b) is concentrated on the stator (200), and thus a magnetic field on the stator (200) tends to be strengthened. Therefore, the energy efficiency of a rotary electric machine (60) can be improved.

### [Feature B1]

A rotary electric machine (60) to be driven by supply of electric power includes:
a stator (200) including coils (211) of multiple phases; and
a rotor (300, 300a, 300b) configured to rotate about a rotation axis (Cm) and aligned with the stator in an axial direction (AD) in which the rotation axis extends;
the rotor includes multiple magnets (310, 311a, 311b, 312a, 312b, 313a, 313b) arranged in a circumferential direction (CD) of the rotation axis, and
the multiple magnets include
   a pair of axially inward magnets (312a, 312b) adjacent to each other in the circumferential direction and oriented to be inclined with respect to the rotation axis in a manner of facing the stator in the axial direction, and
   a pair of peripheral magnets (311a, 311b) adjacent to each other in the circumferential direction with the pair of axially inward magnets interposed therebetween and oriented to face each other in the circumferential direction.

### [Feature B2]

In the rotary electric machine according to feature B1, the pair of axially inward magnets are oriented to be inclined with respect to the rotation axis in the circumferential direction in a manner of facing the stator in the axial direction and facing each other in the circumferential direction.

### [Feature B3]

In the rotary electric machine according to feature B2,
the multiple magnets further include a pair of axially outward magnets (313a, 313b) provided on opposite sides of the pair of axially inward magnets with the peripheral magnets interposed therebetween in the circumferential direction and adjacent to each other in the circumferential direction, and
the pair of axially outward magnets are oriented to be inclined with respect to the rotation axis in the circumferential direction in a manner of facing a side opposite to the stator in the axial direction and facing opposite sides in the circumferential direction.

### [Feature B4]

In the rotary electric machine according to feature B3,
a pair of rotors are arranged in the axial direction with the rotor interposed therebetween, and
one of the rotors is provided point-symmetrically with respect to the other of the rotors such that the pair of axially inward magnets of the one rotor (300a) and the pair of axially outward magnets of the other rotor (300b) are aligned in the axial direction.

### [Feature B5]

In the rotary electric machine according to any one of features B1 to B4,
each of the magnets has a magnet inclined surface (316d) inclined with respect to the rotation axis, and
the rotor includes
   a magnet holder (320) overlapped with the magnet from one side in the axial direction, and
   a fixing support portion (330) having a support inclined surface (330a) inclined with respect to the rotation axis and configured to fix the magnet to the magnet holder such that the support inclined surface is overlapped with the magnet inclined surface and the magnet is sandwiched between the support inclined surface and the magnet holder.

### [Feature B6]

In the rotary electric machine according to any one of features B1 to B5,
the rotor includes multiple magnet units (316, 317, 318) each of which has a pair of unit side surfaces (316c) arranged in the circumferential direction, each of which includes at least one magnet, and which are arranged in the circumferential direction,
the multiple magnet units include
   an inclined magnet unit (317) having a pair of unit side surfaces which are relatively inclined to be away from each other toward an outside in a radial direction (RD) of a rotation axis, and
   a parallel magnet unit (318) having a pair of unit side surfaces which are parallel to each other.

### [Feature B7]

The rotary electric machine according to any one of features B1 to B6, further includes:
a shaft (340) including a shaft flange (342) which is aligned with the rotor in the axial direction and which is fixed to the rotor, and configured to rotate about the rotation axis together with the rotor; and
a pressing member (350) configured to apply a pressing force (F3) to the rotor on a side opposite to the magnets with the shaft flange as a fulcrum (344a) of the rotor in a radial direction (RD) of the rotation axis such that a bending stress (F2) is generated on the rotor in a direction in which the magnet is away from the coils against an attraction force (F1) between the magnets and the coils.

### [Feature B8]

In the rotary electric machine according to feature B7,
the pressing member is a fixing tool (350) configured to fix the rotor to the shaft flange, and
a portion (325) of the rotor to which the pressing member is fixed and a portion (345) of the shaft flange to which the pressing member is fixed are separated from each other in the axial direction.

### [Feature B9]

In the rotary electric machine according to any one of features B1 to B8,
a first rotor (300a) serving as the rotor is provided,
a second rotor (300b) serving as the rotor and aligned with the first rotor with the stator interposed therebetween in the axial direction is provided,
a shaft flange (342) is provided between the first rotor and the second rotor in the axial direction and rotates together with the first rotor and the second rotor about the rotation axis,
a first rotor hole (325a) is formed in the first rotor and extends in the axial direction,
a second rotor hole (325b) is formed in the second rotor at a position separated from the first rotor hole in the circumferential direction and extends in the axial direction,
a first shaft hole (345a) is formed in the shaft flange at a position aligned with the first rotor hole in the axial direction and extends in the axial direction,
a second shaft hole (345b) is formed in the shaft flange at a position aligned with the second rotor hole in the axial direction and extends in the axial direction,
a first fixing tool (350a) for fixing the first rotor to the shaft flange is inserted into the first rotor hole and the first shaft hole, and
a second fixing tool (350b) for fixing the second rotor to the shaft flange is inserted into the second rotor hole and the second shaft hole.

### <Configuration Group C>

In a motor such as an axial gap motor, there is a concern that a heat radiation effect is insufficient. In view of this concern, a rotary electric machine capable of enhancing the heat radiation effect is provided.

According to a feature C1, a coil protection portion (250) is provided in a state of being overlapped with an inner peripheral surface (70b) of an electric machine housing (70). In the configuration, heat of a coil (211) is easily transferred to the electric machine housing (70) via the coil protection portion (250). Moreover, radiation fins (72) are provided on an outer peripheral surface (70a) of the electric machine housing (70), and thus the heat transferred from the coil protection portion (250) to the electric machine housing (70) is easily released to the outside by the radiation fins (72). Therefore, the heat radiation effect of a rotary electric machine (60) can be enhanced.

### [Feature C1]

A rotary electric machine (60) to be driven by supply of electric power includes:
a stator (200) including coils (211) of multiple phases;
a rotor (300, 300a, 300b) configured to rotate about a rotation axis (Cm) and aligned with the stator in an axial direction (AD) in which the rotation axis extends;
an electric machine housing (70) accommodating the stator and the rotor; and
radiation fins (72) provided on an outer peripheral surface (70a) of the electric machine housing and configured to release heat, and
the stator includes a coil protection portion (250) provided in a state of being overlapped with an inner peripheral surface (70b) of the electric machine housing, having a thermal conduction property, and configured to protect the coils.

### [Feature C2]

In the rotary electric machine according to the feature C1,
the electric machine housing includes multiple projection portions (171, 172, 173, 174) provided on the inner peripheral surface, and
the coil protection portion is in a state of entering between the projection portions from an inner side in a radial direction (RD) of the rotation axis.

### [Feature C3]

In the rotary electric machine according to the feature C2,
the multiple projection portions include multiple axial projection portions (174) each of which extends in the axial direction and which are arranged in a circumferential direction (CD) of the rotation axis,
each of the coils is formed by multiple coil portions (215) around each of which a coil wire (220) is wound and which are arranged in the circumferential direction, and
the coil portion is provided at a position facing the axial projection portion in the radial direction (RD) of the rotation axis.

### [Feature C4]

In the rotary electric machine according to any one of features C1 to C3,
the inner peripheral surface includes a housing base surface (176) and a housing rough surface (177) rougher than the housing base surface, and
the coil protection portion is at least overlapped with the housing rough surface.

### [Feature C5]

The rotary electric machine according to any one of features C1 to C4 further includes a lead-out wire protection portion (255) that protects a coil lead-out wire (212) led out from a corresponding one of the coils through the coil protection portion and that fills a gap between the coil lead-out wire and the coil protection portion.

### [Feature C6]

In the rotary electric machine according to any one of features C1 to C5,
the stator includes a bobbin (240) which is protected by the coil protection portion together with a corresponding one of the coils, through which heat is released to the coil protection portion, which has an electrical insulation property, and around which the coil is wound.

### [Feature C7]

In the rotary electric machine according to feature C6,
the bobbin has a bobbin base surface (246) and a bobbin rough surface (247) rougher than the bobbin base surface, and
the coil protection portion is at least overlapped with the bobbin rough surface.

### [Feature C8]

In the rotary electric machine according to feature C6 or C7,
the stator includes a core (231) provided inside the bobbin and having a width in a circumferential direction (CD) of the rotation axis decreasing stepwise toward an inner side in a radial direction (RD) of the rotation axis.

### [Feature C9]

In the rotary electric machine according to any one of features C6 to C8,
the bobbin includes
   a bobbin trunk portion (241) around which the coil is wound, and
   a bobbin flange (242) having a flange surface (243) facing the coil and extending toward an outside from an outer peripheral surface (241a) of the bobbin trunk portion, and
a flange recess portion (243a) recessed to allow the coil lead-out wire (212), which is lead out from the coil, to pass therethrough is formed in the flange surface.

### <Configuration Group D>

In a motor such as an axial gap motor, there is a concern that a heat radiation effect of the motor is insufficient. Regarding the motor, it is conceivable to provide the motor integrally with an inverter to configure a unit. In the unit, it is also conceivable that the heat radiation effect of the unit is likely to be insufficient due to heat from the inverter and the like. In view of this concern, a rotary electric machine unit capable of implementing both a decrease in a size and an enhancement in the heat radiation effect is provided.

According to a feature D1, an electric power conversion unit (81), and a rotor (300, 300a, 300b) and a stator (200) which are aligned in the axial direction (AD) are accommodated in a unit housing (51). In the configuration, the rotary electric machine (60) is made thinner, and a size of a rotary electric machine unit (50) can be decreased. Moreover, since radiation fins (72, 92) are provided on an outer peripheral surface (70a, 90a) of the unit housing (51), a heat radiation effect of the rotary electric machine unit (50) can be enhanced by the radiation fins (72, 92). Therefore, a decrease in a size and an enhancement in the heat radiation effect of the rotary electric machine unit (50) can be implemented.

### [Feature D1]

A rotary electric machine unit (50) to be driven by supply of electric power includes:
a rotary electric machine (60) including a rotor (300, 300a, 300b) configured to rotate about a rotation axis (Cm) and a stator (200) aligned with the rotor in an axial direction (AD) in which the rotation axis extends;
an electric power conversion device (80) including an electric power conversion unit (81) configured to convert electric power to be supplied to the rotary electric machine;
a unit housing (51) forming both an outer peripheral surface (70a) of the rotary electric machine and an outer peripheral surface (90a) of the electric power conversion device and accommodating the rotor, the stator, and the electric power conversion unit; and
radiation fins (72, 92) provided on the outer peripheral surface (70a, 90a) of the unit housing and configured to release heat.

### [Feature D2]

In the rotary electric machine unit according to feature D1,
the stator includes
a coil (211) configured to allow a current to flow therethrough, and
a coil protection portion (250) provided in a state of being overlapped with an inner peripheral surface (70b) of the unit housing, having a thermal conduction property, and configured to protect the coil.

### [Feature D3]

In the rotary electric machine unit according to feature D1 or D2,
the rotary electric machine includes an electric machine housing (70) included in the unit housing, forming the outer peripheral surface of the rotary electric machine, and accommodating the rotor and the stator,
the electric power conversion device includes a device housing (90) included in the unit housing, forming the outer peripheral surface of the electric power conversion device, and accommodating the electric power conversion unit, and
in the unit housing, the electric machine housing and a device housing are aligned in the axial direction.

### [Feature D4]

The rotary electric machine unit according to any one of features D1 to D3, further includes:
a shaft (340) including a shaft flange (342) which is aligned with the rotor in the axial direction and which is fixed to the rotor, and configured to rotate about the rotation axis together with the rotor, and
the shaft flange includes
   an annular portion (344) provided on an inner side of the stator in a radial direction (RD) of the rotation axis and extending in an annular shape along the stator in a circumferential direction (CD) of the rotation axis, and
   a flange vent hole (345) penetrating the annular portion in the radial direction and configured to allow ventilation in the radial direction.

### [Feature D5]

The rotary electric machine unit according to any one of the features D1 to D4, further includes:
a balance adjustment hole (326) which is formed in the rotor and which adjusts a balance of the rotor, and
the balance adjustment hole penetrates the rotor in the axial direction and is formed on an inner side of the stator in the radial direction (RD) of the rotation axis to enable ventilation in the axial direction.

### [Feature D6]

The rotary electric machine unit according to any one of features D1 to D5, further includes:
a housing partition portion (370, 424) partitioning an inside of the unit housing into a rotary electric machine side and an electric power conversion unit side in the axial direction;
multiple state detection units (421, 431) configured to detect a state of the rotary electric machine; and
a wiring collecting portion (440) provided on an electric power conversion unit side of the housing partition portion and configured to collect detection wirings (426, 436) electrically connected to the multiple state detection units, respectively.

### [Feature D7]

The rotary electric machine unit according to feature D6, further includes:
a housing partition portion (370, 424) partitioning the inside of the unit housing into the rotary electric machine side and the electric power conversion unit side in the axial direction;
a partition opening portion (373) allowing a coil lead-out wire (212) led out from a coil (211) of the stator to be inserted therethrough and opening the housing partition portion in the axial direction; and
a partition cover portion (380) covering the partition opening portion.

### [Feature D8]

In the rotary electric machine unit according to any one of features D1 to D7,
the unit housing includes an electric machine housing (70) forming the outer peripheral surface of the rotary electric machine and accommodating the rotor and the stator, and
the electric machine housing includes
   a housing main body (71) forming the outer peripheral surface of the rotary electric machine,
   an electric machine flange (74, 178) protruding from the housing main body toward an outer side in a radial direction (RD) of the rotation axis, and
   an electric machine fixing hole (74a, 178a) formed in the electric machine flange and through which the electric machine housing is fixed to a predetermined housing fixing target (90, 390).

### [Feature D9]

In the rotary electric machine unit according to any one of features D1 to D8,
the unit housing includes
   an electric machine housing (70) forming the outer peripheral surface of the rotary electric machine and accommodating the rotor and the stator, and
   an electric machine cover portion (390) fixed to the electric machine housing and covering the rotor and the stator from one side in the axial direction, and
the electric machine cover portion includes
   a first fixing hole (392a) for fixing the electric machine cover portion to the electric machine housing, and
   a second fixing hole (392b) aligned with the first fixing hole in the radial direction (RD) of the rotation axis and for fixing the electric machine cover portion to a predetermined cover fixing target (53).

## Claims

1. A rotary electric machine (60) to be driven by supply of electric power, the rotary electric machine (60) comprising:
a stator (200) including coils (211) of a plurality of phases;
a rotor (300a) configured to rotate about a rotation axis (Cm) and aligned with the stator in an axial direction (AD) in which the rotation axis extends; and
a coil lead-out wire (212) led out from a corresponding one of the coils, extending in the axial direction through an outer peripheral side of the rotor, and electrically connected to a connection target (261) provided on an opposite side of the rotor from the coil in the axial direction, wherein
the rotor includes
a rotor plate portion (321) in a plate shape and extending along the stator in a direction orthogonal to the axial direction, and
a rotor rib (323) protruding from the rotor plate portion toward the connection target in the axial direction, extending along the rotor plate portion in a radial direction (RD) of the rotation axis, and configured to rotate together with the rotor plate portion to send a gas toward the coil lead-out wire.

2. The rotary electric machine according to claim 1, wherein
the rotor rib is provided on the rotor plate portion, such that a gas is sent toward an outer side in the radial direction.

3. The rotary electric machine according to claim 1 or 2, wherein
a plurality of the rotor ribs are arranged in a circumferential direction (CD) of the rotation axis.

4. The rotary electric machine according to any one of claims 1 to 3, wherein
a tip portion of the rotor rib includes a rib inclined portion (323d) inclined with respect to the rotor plate portion to face an outer side in the radial direction.

5. The rotary electric machine according to any one of claims 1 to 4, wherein
a tip portion of the rotor rib in the axial direction includes a rib parallel portion (323c) extending parallel to the rotor plate portion.

6. The rotary electric machine according to any one of claims 1 to 5, wherein
the rotor includes a magnet (310) provided on an opposite side of the rotor plate portion from the rotor rib in the axial direction, and
at least a part of the rotor rib is provided at a position aligned with the magnet in the axial direction.

7. The rotary electric machine according to any one of claims 1 to 6, wherein
the rotor rib extends along the rotor plate portion from an outer peripheral end (320b) of the rotor plate portion toward an inner side in the radial direction.

8. The rotary electric machine according to any one of claims 1 to 7, wherein
the rotor plate portion extends in a circumferential direction (CD) of the rotation axis, and
the rotor rib extends in the radial direction to span between an inner peripheral end (320a) of the rotor plate portion and an outer peripheral end (320b) of the rotor plate portion.

9. The rotary electric machine according to any one of claims 1 to 8, wherein
the coil lead-out wire includes an aligned lead-out portion (212b, 212c, 212e) provided on an opposite side of the rotor rib from the rotor plate portion in the axial direction and located at a position aligned with the rotor rib in the axial direction.

10. The rotary electric machine according to any one of claims 1 to 9, further comprising:
an intermediate plate portion (370) provided between the rotor and the connection target in the axial direction and in a plate shape extending in a direction orthogonal to the axial direction; and
a lead-out insertion hole (373) formed at a position aligned with the rotor rib in the axial direction, penetrating the intermediate plate portion, and inserted with the coil lead-out wire therethrough.

11. The rotary electric machine according to claim 10, further comprising:
a connection lead-out portion (265) led out from the connection target and electrically connecting the coil lead-out wire with the connection target, wherein
a connection portion (266), at which the coil lead-out wire and the connection lead-out portion are connected, is provided at a position aligned with the lead-out insertion hole in the axial direction.

12. The rotary electric machine according to claim 10 or 11, wherein
the connection target is fixed to the intermediate plate portion.
